(19) Europäisches Patentamt
European Patent Office
Office européen des brevets

(11) EP 2 071 473 A2

(12) **EUROPEAN PATENT APPLICATION**

(43) Date of publication:
**17.06.2009 Bulletin 2009/25**

(51) Int Cl.:
***G06F 17/11*** (2006.01)

(21) Application number: **08019504.3**

(22) Date of filing: **07.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.11.2007 US 986157 P**
**24.01.2008 US 19532**

(71) Applicant: **Triantafillidis, Trifon**
**55236 Panorama (GR)**

(72) Inventor: **Triantafillidis, Trifon**
**55236 Panorama (GR)**

(74) Representative: **Gesthuysen, von Rohr & Eggert**
**Patentanwälte**
**Huyssenallee 100**
**45128 Essen (DE)**

(54) **Method for solving minimax and linear programming problems**

(57) A novel method is disclosed for efficiently solving minimax problems, and in particular, for efficiently solving minimax problems wherein the corresponding matrix is large. In particular, the novel method solves minimax problems in $O(n^2 T)$ operation count, where denotes the problem size and T is reversely proportional to the required duality gap as one skilled in the art will understand, Further disclosed herein is a method for solving linear programming (LP) problems by converting such problems into minimax problems, and then using the novel minimax solution method disclosed herein.

fig. 3

Printed by Jouve, 75001 PARIS (FR)

**Description**

**Background**

Methods for solving minimax problems and linear programming problems are well known in the art. However, such methods can be inefficient. For example, in the worst case, the operation count for the Simplex algorithm is an exponential function of the problem size. Accordingly, only relatively small problems can be solved via this method. An improvement is Karmarkar's algorithm which is has a polynomial time bound. More specifically Karmarkar's algorithm requires an $O(n^{3.5} \ln L)$ operation count, where n denotes the problem size and L denotes the required accuracy in bits. It would be advantageous to have a more efficient method for minimax problems, particularly wherein A is a large matrix such as 250 x 250 or larger, e.g., thousands of rows by thousands of columns. Additionally, it would be advantageous to use such a method for efficiently solving LP problems.

Summary

A novel method is disclosed for efficiently solving minimax problems, and in particular, for efficiently solving minimax problems wherein the corresponding matrix is large, and applying the method to various technological areas. In particular, the novel method solves minimax problems in $O(n^2\,T)$ operation count, where n denotes the problem size and T is reversely proportional to the required duality gap as one skilled in the art will understand. Further disclosed herein is a method for solving linear programming (LP) problems by converting such problems into minimax problems, and then using the novel minimax solution method disclosed herein. Accordingly, both the novel minimax method and its corresponding LP solution method are effective for more efficiently solving minimax and LP problems in any technological area where such problems can be formulated, such as:

- in configuring an appropriate allocation of one or more resources, e.g., allocation of bandwidth on a network, allocation of personnel to a plurality of manufacturing tasks, allocation of electrical power within a power transmission grid, allocation of equipment for harvesting crops, etc.,
- providing schedules for, e.g., routing aircraft or other vehicles between various destinations, or for achieving an increase in manufacturing efficiency,
- providing more effective pattern recognition processes for recognizing, e.g., human faces, the quality of a food product, the identity of a military vehicle or weapon, etc.

Moreover, the increased efficiency of the novel minimax and LP processes disclosed herein can be applied to larger problems than heretofore have been able to be effectively solved.

For computing an efficient solution to a minimax problem represented by an m by n matrix $\mathbf{A} = [a_{i,j}]$, $1 \leq i \leq m$ and $1 \leq j \leq n$, in one embodiment, the present disclosure provides the following steps:

Step 1. accessing the matrix **A** from a data store operatively communicating one or more computer processors, wherein the entries of **A** are representative of evaluations of a plurality of different predetermined physical condititions of a predetermined physical system;
Step 2. storing in the data store an initial approximation $\mathbf{x} = (x_1, x_2, ..., x_n)$ for x*, and $\mathbf{y} = (y_1, y_2, ..., y_m)$ for **y\***, wherein **x\***, **y\*** denote the intermediate (and ultimately final) values for the minimax solution;
Step 3. determining at least one estimate *v* for an equilibrium point of the minimax problem, the estimate dependent upon **x, y,** and **A;**
Step 4. repeating the steps of **A** through F following;

(A) obtaining for **x** at least one adjustment Δ**x,** wherein Δ**x** is dependent on at least one positive difference between: (i) a predetermined function of entries of **A** and **y,** and (ii) v;
(B) computing, using at least one of computer processors, an updated value for **x** from a convex combination of **x** and Δ**x;**
(C) updating **x\*** with the updated value for **x** when a first predetermined condition holds, wherein the first condition is dependent upon **Ax** and **Az,** where **z** is determined from an instance of **x** obtained in a prior iteration of the steps **A** through F;
(D) obtaining for **y** at least one adjustment Δ**y,** wherein Δ**y** is dependent on at least one positive difference between: (i) *v*, and (ii) a predetermined function of entries of **A** and **x;**
(E) computing, using at least one of computer processors, an updated value for **y** from a convex combination of **y** and Δ**y;**
(F) updating **y\*** with the updated value for **y** when a second predetermined condition holds, wherein the second condition is dependent upon **y'A** and **z'A,** where **z** is determined from an instance of **y** obtained in a prior iteration of the steps **A** through F; and

Step 5. outputting information determined from the resulting values for **x\*** and **y\*** for, e.g., one of: moving of a physical component of the physical system, changing a computer display for representing the one physical condition, and allocating a collection of resources (e.g., financial assets, network bandwidth, etc. ).

Moreover, the computational complexity of Step 4 is O($m \times n \times T$), where $T$ is the number of iterations of the steps A through F above.

Other features and benefits of the one or more inventions disclosed herein are provided in the description following together with the accompanying figures. It is to be expressly understood that the present Summary provides only a brief description of the inventive aspects disclosed herein.

**Brief Description of the Drawings**

Fig. 1 shows a graph 104a of the duality gap versus the number of iterations (T) of the lines 11-30 of the Blubit algorithm disclosed hereinbelow, wherein the graph 104a was obtained from a large sample of square matrices whose values were randomly generated. Additionally shown is the graph 108a of the function 1/T, wherein the graph 108a bounds the graph 104a.

Fig. 2 shows a graph of the square root of the execution time of the Bluebit algorithm versus the matrix size for random square matrices. As it can be seen the graph is close to linear and therefore it is close to theoretical expectation.

Fig. 3 is a high level flowchart demonstrating the use of the novel Bluebit minimax algorithm, wherein the steps of this flowchart may be used in solving minimax problems in a large plurality of application domains.

Fig. 4 is a high level flowchart demonstrating the use of the novel conversion of linear programming problems to minimax problems, wherein the steps of this flowchart may be used in solving linear programming problems in a large plurality of application domains.

Fig. 5 illustrates the bandwidth allocation problem among multiple programs on each link of a VOD tree network.

Fig. 6 presents input for an example of the bandwidth allocation problem solved for illustration purposes.

FIG. 7 illustrates, for the description of Appendix B, a prior art decision system in which two classes in a training set are linearly separated by a decision boundary.

FIGS. 8 and 9 show, for the description of Appendix B, examples of non-linear decision boundaries obtained by using the maximum margin memory-based method.

FIG. 10 shows, for the description of Appendix B, some hardware components that may be used to implement the classification system of the embodiment of Appendix B, wherein the Bluebit minimax algorithm can be utilized.

FIG. 11 is a flow diagram, of programmed instructions executed by the processor of FIG. 10 to implement the principles of the embodiment of the application of the Bluebit algorithm disclosed in Appendix B, wherein the Bluebit minimax algorithm can be utilized.

FIG. 12 is a diagram depicting a general purpose computing device, for the description of Appendix C, constituting an exemplary system for implementing the boosting technique disclosed therein, wherein the Bluebit minimax algorithm can be utilized.

FIG. 13 is a flow diagram of the boosting process, for the description of Appendix C, and the method of the embodiment disclosed therein.

FIG. 14 is a continuation of the flow diagram of the boosting process of the shown in FIG. 13.

FIG. 15 is a continuation of the flow diagram of the boosting process shown in FIGS. 13 and 14.

FIG. 16 is a diagram illustrating the general detector-pyramid architecture of a face detection system and process employing the boosting process of the system and method for the description of Appendix C, wherein the Bluebit minimax algorithm can be utilized.

FIG. 17 is a diagram depicting three types of simple features shown relative to a sub-window.

FIG. 18 illustrates a voltage model and a constant-slew-rate-limit model.

FIG. 19 illustrates discrete approximation of a gradient waveform.

FIG. 20 illustrates piece-wise-linear approximation to quadratic constraints.

FIG. 21 illustrates piece-wise-linear approximation to a spherical surface.

FIGS. 22A-22C illustrate comparison of speed of different formulations for 1D, 2D and 3D, respectively.

FIGS. 23A-23D illustrate first-moment-nulled gradient design.

FIGS. 24A-24B illustrate echo-planar transition waveform design for gradient waveforms and slew-rates.

FIGS. 25A-25D illustrate spiral rewinder gradient design.

FIGS. 26A-26D illustrate moment-nulled spiral rewinder gradient design.

FIGS. 27A-27C illustrate "stack-of-spiral" rewinder gradient design.

FIG. 28 illustrates gradient power for different oblique gradient angles.

FIGS. 29A-29B illustrate on-axis echo-planar transition waveform design.

FIGS. 30A-30B illustrate off-axis echo-planar transition waveform design.

FIG. 31 is a graph illustrating voltage and current constraints and magnetic stimulation constraints for safe operation of a gradient amplifier.

## Detailed Description

Prior to describing the novel minimax method and its application, additional technical background material is provided in the following Problem Definition section.

## Problem Definition

The minimax theorem proved by John von Neumann in 1928 states that for every $m \times n$ matrix $\mathbf{A} \in \mathbb{R}^{m \times n}$ and probability vectors $\mathbf{x} \in \mathbb{R}^{n}$ and $y \in \mathbb{R}^{m}$ wherein

$$\mathbf{x} \in \mathcal{X} := \left\{ \mathbf{x} \in \mathbb{R}^{n} : \sum_{j=1}^{n} x_{j} = 1 \right\} \qquad (1.1)$$

$$\mathbf{y} \in \mathcal{Y} := \left\{ \mathbf{y} \in \mathbb{R}^{m} : \sum_{i=1}^{m} y_{i} = 1 \right\} \qquad (1.2)$$

the following relation holds

$$\max_{\mathbf{x} \in \mathcal{X}} \min_{\mathbf{y} \in \mathcal{Y}} \mathbf{y}'\mathbf{A}\mathbf{x} = \min_{\mathbf{y} \in \mathcal{Y}} \max_{\mathbf{x} \in \mathcal{X}} \mathbf{y}'\mathbf{A}\mathbf{x} \qquad (1.3)$$

where $\mathbf{y'}$ denotes the transpose of $\mathbf{y}$.

We call the vectors $\mathbf{x^*}$, $\mathbf{y^*}$ a minimax solution of $\mathbf{A}$ if they satisfy (1.3). The scalar $v^* = (\mathbf{y^*})'\mathbf{A}\mathbf{x^*}$ is the value at the equilibrium point and in a game theory context it is called the **game value.** For any other vectors $x \in \mathcal{X}$, $y \in \mathcal{Y}$ it will be

$$\mathbf{y}'\mathbf{A}\mathbf{x^*} \geq v^* = (\mathbf{y^*})'\mathbf{A}\mathbf{x^*} \geq (\mathbf{y^*})'\mathbf{A}\mathbf{x} \quad \forall \mathbf{x} \in \mathcal{X}, \forall \mathbf{y} \in \mathcal{Y} \qquad (1.4)$$

Finding one (not necessarily unique) pair of vectors $\mathbf{x^*}, \mathbf{y^*}$ satisfying (1.4) solves the minimax problem.

We call a **pure strategy** any probability vector for which

$$x_{j=k} = 1, \qquad x_{j \neq k} = 0, \qquad 1 \leq k \leq n \qquad (1.5)$$

$$y_{i=k} = 1, \qquad y_{i \neq k} = 0, \qquad 1 \leq k \leq m \qquad\qquad (1.6)$$

A pure strategy for **y** can always be applied in (1.3), therefore we may conclude that **x*** is not optimal unless

$$\rho^* = \min_{0 \leq i \leq m} \mathbf{A}\mathbf{x}^* = v^* \qquad\qquad (1.7)$$

and also for the same reason **y*** is not optimal unless

$$\gamma^* = \max_{1 \leq j \leq n} (\mathbf{y}^*)' \mathbf{A} = v^* \qquad\qquad (1.8)$$

therefore

$$\rho^* = \gamma^* = v^* \qquad\qquad (1.9)$$

It can be easily shown that the reverse statement is also true. If for any probability vectors x, y wherein

$$\rho = \min_{1 \leq i \leq m} \mathbf{A}\mathbf{x} = \max_{1 \leq j \leq n} \mathbf{y}' \mathbf{A} = \gamma \qquad\qquad (1.10)$$

then the vectors **x, y** provide a minimax solution.
Obviously for any pair of non optimal vectors **x, y** it will be

$$\rho = \min_{0 \geq i \geq m} \mathbf{A}\mathbf{x} \leq v^* \leq \max_{0 \geq j \geq n} \mathbf{y}' \mathbf{A} = \gamma \qquad\qquad (1.11)$$

with $\gamma > \rho$. We call the positive difference

$$d = \gamma - \rho \geq 0 \qquad\qquad (1.12)$$

the ***duality gap*** (for the matrix **A** and the vectors **x, y**). Any algorithm which gradually reduces the duality gap to zero, solves the minimax problem.

**The Novel Minmax Algorithm**

**Preliminaries**

Given a $m \times n$ matrix **A** = $[a_{i,j}]$ wherein a minimax solution for this matrix is to be computed, without loss of generality we will assume that **A** contains elements within the range [0,1], wherein not all $a_{i,j}$ are identical. If not all $a_{i,j}$ are in the range [0,1], and assuming on not all $a_{i,j}$ are identical, then apply a transformation to all matrix elements so that

$$a_{i,j} = \frac{a_{i,j} - a_{min}}{a_{max} - a_{min}}$$

where $a_{min}$, $a_{max}$ denote the minimum and the maximum of the matrix elements respectively. If not all $a_{i,j}$ are in the range [0,1], and not all $a_{i,j}$ are identical, then merely scale the entries of the matrix **A** so that all the entries are in the range [0,1]. Let **U** be a $m \times n$ matrix with every elements equal to 1. It can be easily shown that any matrix **B** in the form

$$B = c_1 \cdot (A + c_2 \cdot U)$$

shares the same minimax solutions as matrix **A.** Selecting suitable constants $c_1$, $c_2$ can ensure that all matrix elements will fall within the range [0,1].

**The Novel (Bluebit) Algorithm**

At a very high level, psuedo code (and a description thereof) for the novel minimax algorithm is as follows.

The algorithm accepts as input:

1) One matrix **A** with $m$ rows by $n$ columns, with elements in the range [0,1] (no less than 0 and not greater than 1) and,
2) One integer parameter $T > 0$ specifying the maximum number of iterations we would like to be performed.

The algorithm outputs are:

1) One $n$ dimensional probability vector x* (an ordered collection of $n$ nonnegative numbers whose sum is 1),
2) One $m$ dimensional probability vector y* (an ordered collection of $m$ nonnegative numbers whose sum is 1),
3) A positive real number $d$* representing the duality gap of the solution.

In one embodiment, the algorithm can be represented with the following high level step:

Step A. Initialize vectors **x** and **y** to initial probability distributions such as **x** = [1/n,1/n, ..., 1/n], and **y** = [1/m, 1/m, ..., 1/m]. However, other probability distributions may also be used such as [1/2n, 3/2n, 1/2n, ..., 1/2n] (assuming n is odd), and y = [1/2m, 3/2m, 1/2m, ..., 3/2m] (assuming m is even) or even random probability distributions.

Step B. An initial estimation of the game value or equilibrium point $v$* is computed as the value of the parameter $v$ as follows:

$$v = \frac{\max \mathbf{y}'\mathbf{A} + \min \mathbf{A}\mathbf{x}}{2}$$

where, as before, **y'** denotes the transpose of **y.**

Step C. Perform T number of iterations of the following steps:

(i) The product **y'A** is computed, and together with $v$ is used to compute an update vector $\Delta$**x** for the vector **x**, wherein when **x** is updated by $\Delta$**x,** the elements of **x** also sum to 1, and $\Delta$**x** moves the updated **x** towards the direction of increasing the product **y'Ax.** The movement of **x** toward the direction of increasing the product **y'Ax** can be seen since for **g** = **y'A,** the product **y'Ax** can be written as **g'x.** Therefore at iteration loop $t + 1$,

$$\mathbf{y}'\mathbf{A}\mathbf{x}_{t+1} = \mathbf{g}'\mathbf{x}_{t+1}$$
$$= \mathbf{g}'((1-d)\mathbf{x}_t + d\Delta\mathbf{x})$$
$$= (1-d)\mathbf{g}'\mathbf{x}_t + d\mathbf{g}'\Delta\mathbf{x}$$
$$= (1-d)\mathbf{y}'\mathbf{A}\mathbf{x}_t + d\mathbf{g}'\Delta\mathbf{x}$$

The condition for **y'Ax$_{t+1}$** > **y'Ax$_t$** is that **g'$\Delta$x** > **g'x$_t$.** This is true because **g'$\Delta$x** is a convex combination of $g_j$ across probability vector $\Delta$**x,** but $\Delta$**x** has been formed by selecting only those directions $\Delta x_j$ where $g_j > v$

and excluding the smaller $g_j$'s. Note that since $\mathbf{y'Ax_{t+1}}$ = (1- $d$)$\mathbf{y'Ax_t}$ + $\mathbf{dg'}\Delta\mathbf{x}$ = (1- $d$)$\mathbf{y'Ax_t}$ + $\mathbf{dy'A}\Delta\mathbf{x}$, and $\mathbf{y'Ax_{t+1}}$ > $\mathbf{y'Ax_t}$, when $d$ = 1, this implies that $\mathbf{y'A}\Delta\mathbf{x}$ > $\mathbf{y'Ax_t}$

(ii) The update direction $\Delta\mathbf{x}$ is combined with $\mathbf{x}$, and if the updated $\mathbf{x}$ produces a smaller duality gap (i.e., Step 13 hereinbelow), then $\mathbf{x^*}$ is set to $\mathbf{x}$.

(iii) The updated vector $\mathbf{x}$ is used to update the estimation of $v$.

(iv) The product $\mathbf{Ax}$ is computed, and together with $v$ is used to compute an update vector $\Delta\mathbf{y}$ for the vector $\mathbf{y}$, wherein when $\mathbf{y}$ is updated by $\Delta\mathbf{y}$, the elements of $\mathbf{y}$ also sum to $\mathbf{1}$, and $\Delta\mathbf{y}$ moves the updated $\mathbf{y}$ towards the direction of decreasing the product $\mathbf{y'Ax}$. That is, the movement of $\mathbf{y}$ toward the direction of deacreasing the product $\mathbf{y'Ax}$ can be seen since for $\mathbf{h}$ = $\mathbf{Ax}$, the product $\mathbf{y'Ax}$ can be written as $\mathbf{y'h}$. Therefore at iteration loop $t$ + 1,

$$y'_{t+1}\mathbf{Ax} = y'_{t+1}\mathbf{h}$$
$$= \big((1-d)\mathbf{y}_t + d\Delta\mathbf{y}\big)'\mathbf{h}$$
$$= (1-d)\mathbf{y}'_t\mathbf{h} + d\Delta\mathbf{y}'\mathbf{h}$$

$$= (1-d)\mathbf{y}'_t\mathbf{Ax} + d\Delta\mathbf{y}'\mathbf{h}$$

The condition for $\mathbf{y'_{t+1}Ax}$ < $\mathbf{y'_tAx}$ is that $\Delta\mathbf{y'h}$ < $\mathbf{y'_th}$. This is true because $\Delta\mathbf{y'h}$ is a convex combination of $h_i$ across probability vector $\Delta\mathbf{y}$, but $\Delta\mathbf{y}$ has been formed by selecting only those directions $\Delta\mathbf{y}_i$ where $h_i$ < $v$ and excluding the larger $h_i$'s. Accordingly, in a similar manner to (i) above, since $y_{t+1}$'$\mathbf{Ax}$ = (1 - $d$)$\mathbf{y'_tAx}$ + $d\Delta\mathbf{y'h}$ = (1- $d$)$\mathbf{y'_tAx}$ + $\mathbf{d}\Delta\mathbf{y'Ax}$, and $\mathbf{y'_{t+1}Ax}$ < $\mathbf{y'_tAx}$, when d = 1, this implies that $\Delta\mathbf{y'Ax}$, < $\mathbf{y'_tAx}$ .

(v) The update direction $\Delta\mathbf{y}$ is combined with $\mathbf{y}$, and if the updated $\mathbf{y}$ produces a smaller duality gap (i.e., Step 18 hereinbelow), then $\mathbf{y^*}$ is set to $\mathbf{y}$.

(vi) The updated vector y is used to update the estimation of v.

In more detail the algorithm can be represented by the following steps:

**Step 1:**　An initial n dimensional vector $\mathbf{x}$ is defined as, e.g., a uniform distribution. (i.e., all elements are set to the same value which is equal to 1/$n$). Set $\mathbf{x^*}$ = $\mathbf{x}$.

**Step 2:**　The matrix-vector product $\mathbf{Ax}$ is computed and stored in a $m$ dimensional vector denoted $\mathbf{h}$. Therefore, each element $h_i$ of the vector $\mathbf{h}$ will be equal to the sum of the elements of row $i$ of matrix $\mathbf{A}$, each such element multiplied by a corresponding element of the vector x. Therefore we set $h_i = \sum_{j=1}^{n} a_{i,j} \cdot x_j$.

**Step 3:**　The minimum element of the vector $\mathbf{h}$ is used to initialize the variables $\rho$ and $\rho_{max}$.

**Step 4:**　An initial $m$ dimensional vector $\mathbf{y}$ is defined as, e.g., a uniform distribution. (e.g., all elements are set to the same value which is equal to 1/$m$). Set $\mathbf{y^*}$ = $\mathbf{y}$.

**Step 5:**　The matrix-vector product $\mathbf{y'A}$ is computed and stored in a $n$ dimensional vector named $\mathbf{g}$. Therefore, each element $g_j$ of the vector $\mathbf{g}$ will be equal to the sum of the elements of column $j$ of matrix $\mathbf{A}$ each such element multiplied by a corresponding element of the vector $\mathbf{y}$. Therefore we set $g_j = \sum_{i=1}^{m} a_{ij} \cdot y_i$.

**Step 6:**　The maximum element of the vector $\mathbf{g}$ is used to initialize the variables $\gamma$ and $\gamma_{min}$.

**Step 7:**　An initial estimation of the game value v is computed as the middle point between $\gamma_{min}$ and $\rho_{max}$, that is $v = \frac{\gamma_{min} + \rho_{max}}{2}$. Note that $v$ is an estimation of $v^*$, and $v$ may be defined in other ways as well such as $v$ = $\mathbf{y'Ax} \cong (\mathbf{y^*})'\mathbf{Ax^*}$ = $v^*$.

**Step 8:**　Initiate a loop and repeat all the following steps 9 through 18 $T$ times

**Step 9:**　Compute an update direction $\Delta\mathbf{x}$ = ($\Delta x_1$, $\Delta x_2$, $\Delta x_3$, ..., $\Delta x_n$) for the vector $\mathbf{x}$. This is done by subtracting from each element $g_j$ of the vector $\mathbf{g}$ the value of $v$ to obtain the corresponding element $\Delta x_j$, 1≤j≤n. Then only the positive differences are selected and normalized so that the sum of the $\Delta x_j$, 1≤j≤n is equal to 1. Therefore, each element of the update vector $\Delta\mathbf{x}$ equals

$$\Delta x_j = \begin{cases} g_j - v & \text{if } g_j > v \\ 0 & \text{if } g_j \le v \end{cases}$$

and then $\Delta x_j$'s are normalized so that $\sum_{j=1}^{n} \Delta x_j = 1.$ Note that alternative definitions for $\Delta x_j$ are within the scope of the present disclosure, e.g.,

$$\Delta x_j = \begin{cases} f(g_j) & \text{if } g_j > v \\ 0 & \text{if } g_j \le v \end{cases}$$

where $f(g)$ is a strictly increasing function of g with the additional properties

$$f(v) = 0$$

and also

$$\sum_{j=1}^{n} [g_j > 0] f(g_j) = 1$$

A few examples of such functions which can be used for $f(g)$ are given below

$$f(g) = \frac{1}{\lambda}(g - v)$$

$$f(g) = \frac{1}{\lambda}(g - v)^2$$

$$f(g) = \frac{1}{\lambda}(g^2 - v^2)$$

$$f(g) = \frac{1}{\lambda}(\exp(g - v) - 1)$$

$$f(g) = \frac{1}{\lambda}(\exp(g) - \exp(v))$$

$$f(g) = \frac{1}{\lambda}\ln(1 + g - v)$$

$$f(g) = \frac{1}{\lambda} \ln \frac{g}{v}$$

In all the above occasions $\lambda$ represents a normalizing constant which ensures that

$$\sum_{j=1}^{n} \Delta x_j = \sum_{j=1}^{n} [g_j > 0] f(g_j) = 1$$

Further, note that in some embodiments, less than all of the $\Delta x_j$'s that can be computed as a function of a positive difference are computed. In particular, for each iteration of the loop commencing at step 8, various combinations of the $\Delta x_j$'s may be determined and the rest assigned zero. Thus, on a first loop iteration, $\Delta x_j$'s may be computed for j =1, 2, 3, ..., n until, e.g., three non-zero values are computed, and only these three nonzero values are used to compute the resulting normalized $\Delta$**x.**

Accordingly, on the second loop iteration, the $\Delta x_j$'s for any other indices for j that were not computed as nonzero in the first iteration may be used to compute the resulting second normalized instance of $\Delta$**x.** In a third loop iteration, $\Delta x_j$'s are computed for j =1, 2, 3, ..., n until, e.g., all non-zero values are computed, and used to compute the resulting normalized third version of $\Delta$**x.** Subsequently, additional loop iterations follow the pattern for computing $\Delta$**x** for the loop iterations one through three.

Accordingly, a fourth loop iteration, may compute $\Delta$**x** in the same manner as the first loop iteration.

**Step 10:** Combine the update direction $\Delta$**x** with **x.** This is done by updating the value of **x** as follows:

$$\mathbf{x} \leftarrow (1 - d) \cdot \mathbf{x} + d \cdot \Delta \mathbf{x}$$

where $d$ can be either equal to the current duality gap $d = \gamma - \rho$, or it can be set to a gradually minimized value such as $d = 1/t$ where $t$ is the current loop count.

**Step 11:** The value of the vector **h** = **Ax** is recomputed as in step 2.

**Step 12:** The value of $\rho$= min **h** is updated.

**Step 13:** If the value of $\rho$ is greater than $\rho_{max}$ then set $\rho_{max} = \rho$, and update the value of $v = \frac{\gamma_{min} + \rho_{max}}{2}$, and record **x\*** = **x** as the best up to now value for the vector **x** . If $\gamma_{min} = \rho_{max}$ then exit the algorithm with the values of **x\*, y\*** as an exact minimax solution with $d^* = 0$.

**Step 14:** Compute an update direction $\Delta$**y** for the vector **y**. This is done by subtracting from $v$ each element of the vector **h.** Then only the positive differences are selected and normalized so that the sum is equal to 1. Therefore at first each element of the update vector $\Delta$**x** equals to

$$\Delta y_i = \begin{cases} v - h_i & \text{if } h_i < v \\ 0 & \text{if } h_i \geq v \end{cases}$$

and then it is normalized so that $\sum_{i=1}^{n} \Delta y_i = 1$. Note that alternative definitions for $\Delta_{yi}$ are within the scope of the present disclosure, e.g.,

$$\Delta y_i = \begin{cases} f(h_i) & \text{if } h < v_i \\ 0 & \text{if } h_i \geq v \end{cases}$$

where $f(h_i)$ is a strictly decreasing function of $h_i$ with the additional properties

$$f(v) = 0$$

and also

$$\sum_{i=1}^{m} [h_i < 0] f(h_i) = 1$$

A few examples of such functions which can be used for $f(h)$ are given below

$$f(h) = \frac{1}{\lambda}(v - h)$$

$$f(h) = \frac{1}{\lambda}(v - h)^2$$

$$f(h) = \frac{1}{\lambda}(v^2 - h^2)$$

$$f(h) = \frac{1}{\lambda}(\exp(v - h) - 1)$$

$$f(h) = \frac{1}{\lambda}(\exp(v) - \exp(h))$$

$$f(h) = \frac{1}{\lambda}\ln(1 + v - h)$$

$$f(h) = \frac{1}{\lambda}\ln\frac{v}{h}$$

In all the above occasions $\lambda$ represents a normalizing constant which ensures that

$$\sum_{i=1}^{m} \Delta y_i = \sum_{i=1}^{m} [h_i < 0] f(h_i) = 1$$

Further, note that in some embodiments, less than all of the $\Delta y_i$'s that can be computed as a function of a positive difference are computed. In particular, for each iteration of the loop commencing at step 8, various

combinations of the $\Delta y_i$'s may be determined and the rest assigned zero. Thus, on a first loop iteration, $\Delta y_i$'s may be computed for i =1, 2, 3, ..., m until, e.g., three non-zero values are computed, and only these three nonzero values are used to compute the resulting normalized $\Delta \mathbf{y}$.

Accordingly, on the second loop iteration, the $\Delta y_i$'s for any other indices for j that were not computed as nonzero in the first iteration may be used to compute the resulting second normalized instance of $\Delta \mathbf{y}$. In a third loop iteration, $\Delta y_i$'s are computed for j =1, 2, 3, ..., m until, e.g., three non-zero values are computed, and only these three nonzero values are used to compute the resulting normalized third version of $\Delta \mathbf{y}$.

Subsequently, additional loop iterations follow the pattern for computing $\Delta \mathbf{x}$ for the loop iterations one through three. Accordingly, a fourth loop iteration, may compute $\Delta \mathbf{x}$ in the same manner as the first loop iteration.

**Step 15:** **Combine** the update direction direction $\Delta \mathbf{y}$ with $\mathbf{y}$. This is done by updating the value of y as

$$\mathbf{y} \leftarrow (1 - d) \cdot \mathbf{y} + d \cdot \Delta \mathbf{y}$$

where $d$ can be either equal to the current duality gap $d = \gamma - \rho$, or it can be set to a gradually minimized value such as $d = 1/t$ where t is the current loop count.

**Step 16:** The value of the vector $\mathbf{g} = \mathbf{y'A}$ is recomputed as in step 5.

**Step 17:** The value of $\gamma = \max \mathbf{g}$ is updated.

**Step 18:** If the value of $\gamma$ is less than $\gamma_{min}$ then set $\gamma_{min} = \gamma$, and update the value of $v = \dfrac{\gamma_{min} + \rho_{max}}{2}$, and record $y^* = y$ as the best up to now value for the vector y . If $\gamma_{min} = \rho_{max}$ then exit the algorithm with the values of $x^*$, $y^*$ as an exact minimax solution with $d^* = 0$.

**Step 19:** Compute the duality gap as $d^* = \gamma_{min} - \rho_{max}$. Accordingly, the novel minimax algorithm disclosed herein is computationally different from prior art minimax algorithms in that the presently disclosed algorithm:

(i) Iteratively computes the incremental adjustments $\Delta \mathbf{x}$ and $\Delta \mathbf{y}$ for obtaining approximations of $\mathbf{x}$ for $\mathbf{x^*}$, and $\mathbf{y}$ for $\mathbf{y}^*$;

(ii) Such incremental adjustments, $\Delta \mathbf{x}$ and $\Delta \mathbf{y}$, are respectively dependent on functions p(j) and q(i), wherein positive differences are computed, e.g., $p(j) = g_j - v$ and $q(i) = v - h_i$ (or other variations as disclosed hereinabove);

(iii) Such incremental adjustments $\Delta \mathbf{x}$ and $\Delta \mathbf{y}$ are combined with their respective approximations of $\mathbf{x}$ for $\mathbf{x^*}$, and $\mathbf{y}$ for $\mathbf{y^*}$, wherein the combining is dependent on a series of positive values that converge to zero as $\gamma$ and $\rho$ move closer together, and more preferably wherein a new (vector) value for $\mathbf{x}$ is determined as a convex combination of the current $\mathbf{x}$ and $\Delta \mathbf{x}$ (e.g., $\mathbf{x} \leftarrow (1 - d) \cdot x + d \cdot \Delta \mathbf{x}$, wherein $d$ is $0 < d = \gamma - \rho < 1$), and wherein a new (vector) value for y is determined as a convex combination of the current $\mathbf{y}$ and $\Delta \mathbf{y}$ (e.g., $\mathbf{y} \leftarrow (1 - d) \cdot y + d \cdot \Delta \mathbf{y}$, wherein d is $0 < d = \gamma - \rho < 1$).

A still further detailed computer psuedo-code implementation of the novel Bluebit algorithm follows, wherein a corresponding computer executable version is well within the skill of one of ordinary skill in the art. Moreover, such computer executable code may be distributed over a plurality computer processors that operatively communicate with one another and with a data storage for storing the matrix $\mathbf{A}$, the values of $\mathbf{x}$, $\mathbf{y}$, $\Delta \mathbf{x}$, $\Delta \mathbf{y}$, $\rho$, $\rho_{max}$, $\gamma$, and $\gamma_{min}$. In particular, a client computer node of a network may determine and transmit the matrix $\mathbf{A}$ and a requested number of iterations (T) to another computer on the network (e.g., a server) for performing the Bluebit minimax algorithm. Additionally, the client computer may specify the functions to be used in determining the initial values for x, and y as well as, e.g., functions for computing $v$, $\Delta x_j$, and $\Delta y_i$ as disclosed hereinabove.

One particular embodiment of the Bluebit algorithm follows. Note that the variables in the following computer psuedo-code have the same meanings has has been described hereinabove.

## Bluebit Algorithm

input: $m \times n$ matrix $\mathbf{A}$, number of iterations $T$

output: mixed strategies $\mathbf{y}^* \in \mathbb{R}^m$, $\mathbf{x}^* \in \mathbb{R}^n$, duality gap $d^*$

1    begin

2    $x_j^*, x_j \leftarrow \frac{1}{n} \ \forall \ 1 \leq j \leq n$

3    $y_i^*, y_i \leftarrow \frac{1}{m} \ \forall \ 1 \leq i \leq m$

4    $\mathbf{h} \leftarrow \mathbf{A}\mathbf{x}$

5    $\mathbf{g} \leftarrow \mathbf{y}'\mathbf{A}$

6    $\rho \leftarrow \min \mathbf{h}$

7    $\gamma \leftarrow \max \mathbf{g}$

8    $\rho_{max} \leftarrow \rho$

9    $\gamma_{min} \leftarrow \gamma$

10    $v \leftarrow \frac{\gamma_{min} + \rho_{max}}{2}$

11        **for** $t = 1$ **to** $T$ **do**

12        $\Delta x_j \leftarrow (g_j - v) \cdot [g_j > v]$

13        $\mathbf{x} \leftarrow (1 - \gamma + \rho) \cdot \mathbf{x} + (\gamma - \rho) \cdot \frac{\Delta \mathbf{x}}{\sum_{j=1}^{n} \Delta x_j}$

14        $\mathbf{h} \leftarrow \mathbf{Ax}$

15        $\rho \leftarrow \min \mathbf{h}$

16        **if** $\rho > \rho_{max}$ **then**

17        $\rho_{max} \leftarrow \rho$

18        $\mathbf{x}^* \leftarrow \mathbf{x}$

19        $v = \frac{\gamma_{min} + \rho_{max}}{2}$

20        **if** $\rho_{max} = \gamma_{min}$ **then goto Exit**

21        **endif**

22        $\Delta y_i \leftarrow (v - h_i) \cdot [h_i < v]$

3        $\mathbf{y} \leftarrow (1 - \gamma + \rho) \cdot \mathbf{y} + (\gamma - \rho) \cdot \frac{\Delta \mathbf{y}}{\sum_{i=1}^{m} \Delta y_i}$

13

```
24          g ← y′A

25          γ ← max g

26          if γ < γ_min then

27              γ_min ← γ

28              y* ← y

29              v ← (γ_min + ρ_max) / 2

30              if ρ_max = γ_min then goto Exit

31          endif

32      endfor

33  Exit:  d* = γ_min − ρ_max

34  end
```

**Description**

*Lines 2-3*

In the initialization part of the algorithm we initialize all elements of **x** and **x**\* to 1/*n* and all elements of **y** and **y**\* to 1/*m*.

*Lines 4-5*

Create **h, a** *m* dimensional vector as the result of the matrix-vector multiplication **Ax.** Therefore each element of **h** will be equal to

$$h_i = \sum_{j=1}^{n} a_{i,j} x_j \quad \forall \ 1 \le i \le m$$

In the same way create **g, a** $n$ dimensional vector being the result of the vector-matrix multiplication **y'A,** having each of its elements equal to

$$g_j = \sum_{i=1}^{m} a_{i,j} y_i \quad \forall \ 1 \le j \le n$$

### Lines 6-9

Set ρ to the minimum element of the vector **h** and γ to the maximum element of the vector **g**. We also initialize $\rho_{max}$ to ρ and $\gamma_{min}$ to γ.

### Line 10

Define $v$ as the average of $\gamma_{min}$, $\rho_{max}$.

### Line 11-30

Repeat for a number of $T$ iterations.

### Lines 12-13

Define a $n$-dimensional vector Δx with each $\Delta x_j$ equal to

$$\Delta x_j = \begin{cases} g_j - v & \text{if } g_j > v \\ 0 & \text{if } g_j \le v \end{cases}$$

then normalize Δx so that $\sum_{j=1}^{n} \Delta x_j = 1$ and we update **x** as follows:

$$\mathbf{x} \leftarrow (1 - d) \cdot \mathbf{x} + d \cdot \Delta \mathbf{x}$$

where $d = \gamma - \rho$ is the current duality gap.

### Lines 14-15

Compute the new value for **h** using the updated value of **x** and also we update the value of ρ as **min h.**

### Lines 16-21

If the previous update of **x** has achieved a better (bigger) ρ, then update the value of $\rho_{max}$, use this new value of $\rho_{max}$ to update $v$ and record **x\*** as the best up to now value for **x.** If $\rho_{max} = \gamma_{min}$ then exit the algorithm. In the second part of the iteration step, repeat the same actions for **y.**

*Lines 22-23*

Define a m-dimensional vector $\Delta y$ with each $\Delta y_i$ equal to

$$\Delta y_i = \begin{cases} v - h_i & \text{if } h_i < v \\ 0 & \text{if } h_i \geq v \end{cases}$$

then normalize $\Delta y$ so that $\sum_{i=1}^{m} \Delta y_i = 1$ and we update y as

$$\mathbf{y} \leftarrow (1 - d) \cdot \mathbf{y} + d \cdot \Delta \mathbf{y}$$

where $d = \gamma - \rho$ is the current duality gap.

**Lines 24-25**

Compute the new value for **g** using the updated value of **y** and also we update the value of $\gamma$ as max **g**

**Lines 26-31**

If the previous update of y has achieved a better (smaller) $\gamma$, then update the value of $\gamma_{min}$, use this new value of $\gamma_{min}$ to update $v$ and record **y\*** as the best up to now value for **y.** If $\rho_{max} = \gamma_{min}$ then exit the algorithm.

**Line 33**

The duality gap achieved is $\gamma_{min}$ - $\rho_{max}$

**Upper Bound for the Duality Gap**

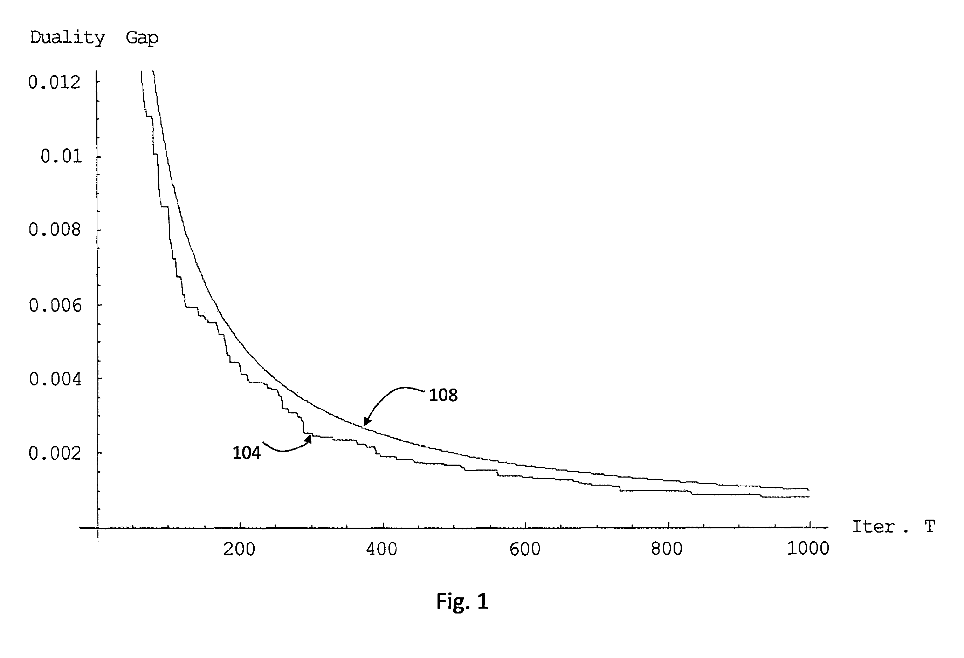

Numerical experiments on a large number of random matrices have shown that for square matrices ($m = n$) the duality gap achieved by the novel algorithm disclosed herein is upper bounded by $1/T$ where $T$ denotes the number of iterations. For non-square matrices this also holds when $T > max\{m, n\}$. Fig. 1 shows a graph 104a of the duality gap versus the number of iterations (T) of the lines 11-30 of the Blubit algorithm code disclosed in the Appendix A hereinbelow, wherein similar graphs as graph 104a were obtained from a large sample of square matrices whose values were randomly generated. Additionally shown is the graph 108a of the function 1/T, wherein the graph 108a bounds the graph 104a.

**Performance**

The operations count of the novel (Bluebit) algorithm mainly depends on the operations included in lines 14 and 23 where the matrix-vector products **h** = **Ax** and **g** = **y'A** are computed. Each of these multiplications require at most $m \times n$ multiplications, wherein matrix A is $m \times n$. Also the operation count is directly proportional to the number of iterations T. Therefore, as one of ordinary skill in the art will understand, the number of multiplications required is 2 $\times m \times n \times T$. If $m$ and $n$ are significantly large (e.g., 500 or greater), then the number of multiplications is dominated by $m$ and $n$. Note that this implies that the computational complexity of the Bluebit algorithm is no more than O($m \times n \times T$) as one skilled in that art will understand since the number of multiplications dominate all other computations performed.
Numerical experiments conform to the above theoretical expectation of the number of operations performed by the (Bluebit) algorithm. In order to demonstrate this, a collection of random matrices of various sizes were generated, and a minimax solution was computed by two methods. The first method transformed the Minimax problem to a LP problem and then the LP problem was solved using the Simplex method as it is implemented by the software package Mathematica. The second method solved the Minimax method directly using the Bluebit algorithm disclosed herein. The following table lists the resulting timings in seconds.

**Table 1**

| Matrix Size | Algorithm used | | |
| --- | --- | --- | --- |
| | Simplex Method | Bluebit Algorithm T=1,000 | Bluebit Algorithm T=10,000 |
| 10 x 10 | 0.000 | 0.187 | 1.828 |
| 50 x 50 | 0.047 | 0.469 | 4.594 |
| 100 x 100 | 0.500 | 0.922 | 9.265 |
| 250 x 250 | 5.547 | 1.203 | 11.734 |
| 500 x 500 | 45.125 | 3.203 | 31.297 |
| 750 x 750 | 174.281 | 5.656 | 55.875 |
| 1000 x 1000 | 388.406 | 8.312 | 82.875 |
| 1250 x 1250 | 685.125 | 11.594 | 115.890 |
| 1500 x 1500 | 1374.470 | 15.172 | 150.797 |

We may conclude that for large matrices (e.g., square matrices greater than 250 x 250), the Bluebit Algorithm executes faster than the Simplex Algorithm, even when high accuracy is required, e.g., T=10,000. For example, if the required accuracy for the duality gap is about 0.1%, then 1000 iterations are enough and the Bluebit algorithm executes faster for $250 \times 250$ matrices. If the required acuracy is higher (duality gap less than 0.01%), then the Bluebit algorithm becomes the preferable method for matrices bigger than $500 \times 500$.

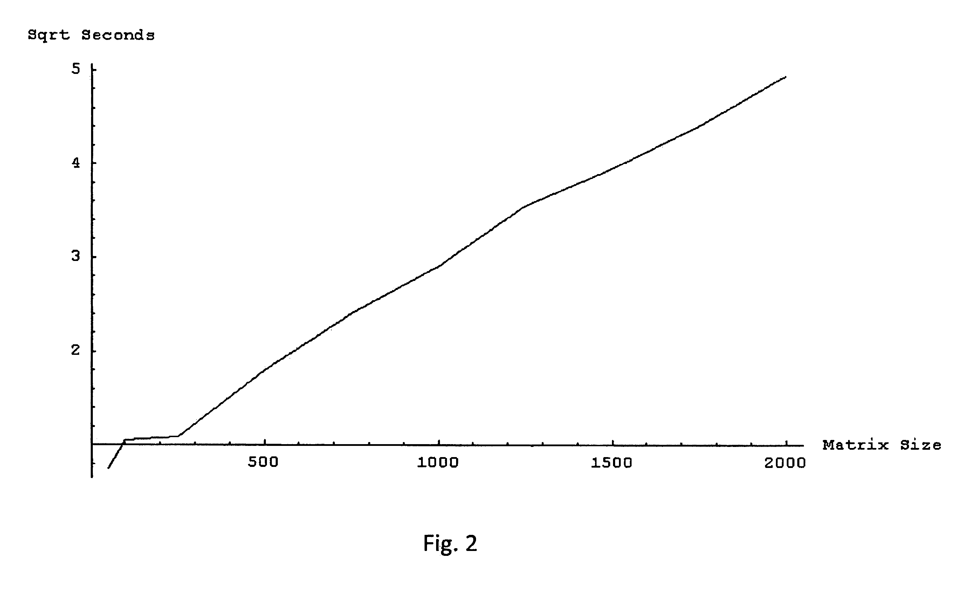

Fig. 2 shows a graph of the square root of the execution time of the Bluebit algorithm against the matrix size for a random square matrices. As it can be seen the graph is close to linear and therefore it is close to theoretical expectation.
The Appendix A hereinbelow shows the Mathematica® source code for generating: (a) the graph 104a of Fig. 1, (b) the information in Table 1 hereinabove, and (c) the graph of Fig. 2.

**Application of the New Minimax Algorithm**

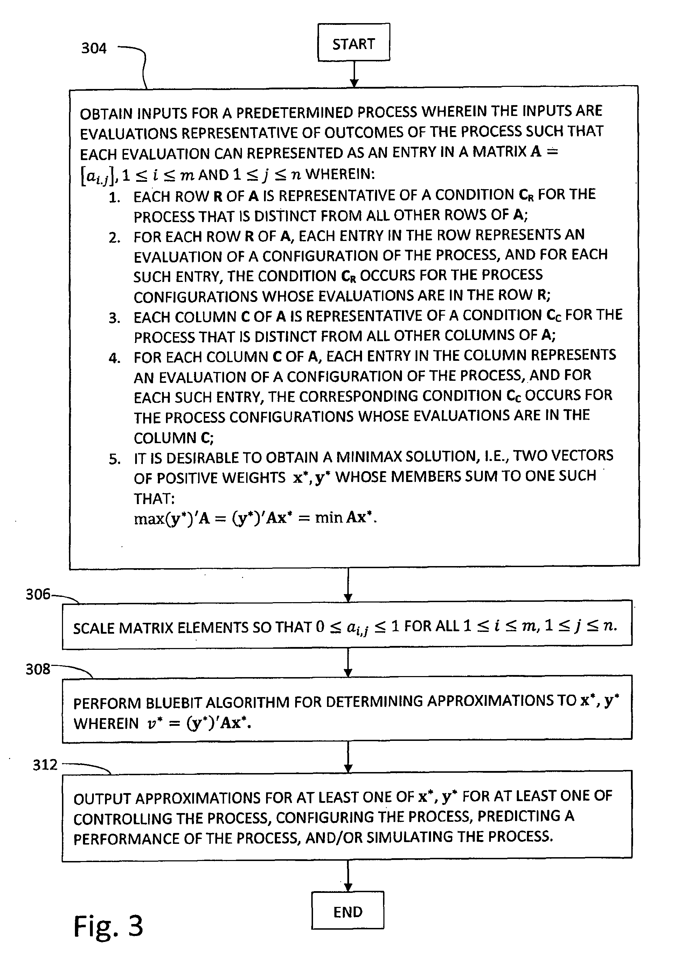

The novel minimax algorithm may be embodied in a computational system as illustrated in the flowchart shown in Fig. 3. In one embodiment, the steps of Fig. 3 may be performed in determining optimal game plays in particular games and/or contests with advisories, wherein the input evaluations of step 304 can be the payoff matrix in a zero sum game. Subsequently, in step 306, the entries $a_{i,j}$ of **A** are scaled so that $0 \leq a_{i,j} \leq 1$. Then the Bluebit algorithm is performed in step 308, so that the approximations for the actual or theoretical values of **x\*, y\*** (such approximations being identified with **x\*, y\*** in the descriptions of the Bluebit algorithm above) may be output in step 312. Note that for the process being a game, such output represents the optimal mixed strategies of the game for each one of the opponents respectively, as one of ordinary skill will understand. In particular, such output may be for, e.g., display on a computer monitor, or for actually configuring the game according to one of the approximations to **x\*, y\*.** Such optimally computed game plays may be presented on a computer monitor having a representation of the game (e.g., chess).
Alternatively, the input evaluations of step 304 may be related to any problem which can formulated as a zero sum game, e.g., a military operation, wherein such input may be a matrix representing potential gains/losses in a battle field or gains/losses in evaluatations of strategic positions; i.e., the rows/columns of the matrix represent potential moves of each of the opponents, and the matrix entries represent gains/losses for their respective moves.
Thus, such input may be provided to another process or computational system such as a military command and control center, wherein the output of step 312 may be then suggested as optimal mixed strategies regarding allocation of resources (e.g., military equipment, weapons, telecommunication equipment, etc.), and/or military forces.
In another embodiment, the flowchart of Fig. 3 may be also used in efficiently implementing a system and method for providing decision systems as disclosed in U.S. Patent No. 5,649,068 filed May 16, 1996 which is described in detail in **Appendix B** hereinbelow. In this embodiment, the inputs of step 304 may be a matrix containing the success/failure data (represented as 0/1 binary numbers) of each predictive function applied on the problem for each sample (e.g., each column of the matrix representing a unique one of the predictive functions, and each row representing a unique one of the samples), and the output of step 312 may be the weights by which each one of the predictive (kernel) function is combined in order to form the ensemble predictor. Note that a very similar technique for boosting is explained in detail hereinbelow.

Additionally/alternatively, the present minimax algorithm and the flowchart of Fig. 3 may be used to configure, control, or perform a prediction and/or perform a simulation of various other computational systems such as expert systems, decision making/decision support sytems as well as configure, control, or perform a prediction and/or perform a simulation of various domain specific physical systems as one of ordinary skill in the art will understand. In particular, various operational parameters of such systems may be determined using the present minimax algorithm and the steps of Fig. 3. For example, Fig. 3 may be utilized to perform the minimax computations in the following applications (I) through (VI):

**(I) Allocation of Network Bandwidth as a Resource.**

In U.S. Patent Application Publication No. 20070104222 by Luss filed Nov. 7, 2005, which is described in detail hereinbelow, discloses an optimal allocation of bandwidth among a plurality of video-on-demand (VOD) programs available on each link of a VOD tree network,
where a server at the root node of the tree network broadcasts the multiple VOD programs. According to the application by Luss, each node in the network has demands for a subset of the programs, and each link connecting nodes together in the network has a limited amount of available bandwidth capacity. The available bandwidth is allocated on each link optimally among all programs that are carried on that link. The bandwidth allocated to a specific program may be different on different links of the network, since the bandwidth allocated may be decreased, but not increased, from one link to the next along the paths from the root node to the destination nodes. The methods use equitable resource allocation models with a lexicographic minimax objective function. The first method finds optimal solutions while satisfying the capacity constraints on all links, tree-like ordering constraints for the bandwidth allocated to each of the programs, and lower and upper bounds on bandwidth allocation for each program. The second method finds optimal solutions to a more restrictive scheme that imposes additional constraints which require equal bandwidth allocation for a specific program on all relevant links emanating from the same node in providing various minimax solutions. At least some of the optimizations identified above utilize a minimax procedure, and accordingly an embodiment of Fig. 3 may be used. In particular, the input evaluations of step 304 may be represented by an instance of the matrix A having the values of performance function $F_{np}(x_{np})$ as described in equation (4.1) provided hereinbelow, and for such input evaluations, the output approximations of step 312 may be the vector of values, $x_{lp}$, each such value representing the bandwidth allocated on link $l$ for program $p$. Of course, various other resource allocation problems may be solved efficiently using the present Bluebit algorithm. In particular, it is not uncommon for such resource allocation problems to have thousands of resources to allocate.
A more detailed description of the allocation of network bandwidth as a resource is now provided.
Many telecommunications network services providers and cable TV operators are showing significant interest in provisioning Video-on-Demand (VOD) services. Moreover, major telecommunications equipment manufacturers are promoting diverse equipment for providing VOD or near-VOD services. These services are expected to grow significantly over time. Primary application areas include on-demand home entertainment, distance learning and training, and news-on-demand. These services require significant capital investments. For example, in near-VOD a server may broadcast a copy of a popular movie every five minutes. Thus, if the length of the movie is 100 minutes, the network would carry simultaneously 20 copies of the movie, which would require significant bandwidth resources.
Various topics related to VOD have been explored. For example, the papers by S. Ramesh, I. Rhee, and K. Guo, "Multicast with Cache (Mcache): An Adaptive Zero-DelayVideo-on-Demand Service", IEEE Transactions on Circuits and Systems for Video Technology 11, 440-456, 2001, by B. Li and J. Liu, "Multirate Video Multicast Over the Internet: An Overview", IEEE Network, 24-29, January/February 2003, and by K. A. Hua, M. A. Tantaoui, and W. Tavanapong, "Video Delivery Technologies for Large- Scale Deployment of Multimedia Applications", Proceedings of the IEEE, 92, 14391451, September 2004 discuss various VOD delivery technologies that are expected to be practical for large-scale problems. Nevertheless, even with effective VOD delivery technologies, the bandwidth requirements for VOD would be large. Since the available bandwidth on the network links is limited, an effective method of allocating the bandwidth of each link among the various VOD programs that are carried on the link is needed. Current state-of-the-art systems use ad-hoc heuristics and communications network managers' experience for VOD bandwidth allocation. Optimization-based methods for the simultaneous optimal allocation of bandwidth on all links of the VOD network would significantly enhance automated systems for managing VOD networks.
The present embodiment provides methods for optimal allocation of bandwidth available for each link of a tree network among multiple VOD programs. Consider a tree network with a server at the root node. The server broadcasts $P$ different VOD programs throughout the tree network. Each node in the network has demands for a subset of the $P$ programs. Each program has lower and upper bounds on bandwidth requirement, where the upper bound represents bandwidth required for providing excellent service, while the lower bound is the bandwidth needed to provide a minimally acceptable service. Each link on the network has a limited amount of available bandwidth. The objective is to allocate the available bandwidth on each link optimally among all programs that are carried on that link. Consider a specific program denoted as program $p$. The bandwidth allocated to program $p$ may be different on different links. However, the bandwidth allocated to program $p$ on link $1$ cannot exceed the bandwidth allocated to program $p$ on any link on the path between the server and link $1$. Hence, bandwidth allocation decisions at one link may affect the feasible allocation decisions at other links. The present embodiment uses the concept of equitable resource allocation models. A performance function is associated with each program requested at each node of the network that represents the service provided for that program at the node as a function of the bandwidth allocated to that program on the incoming link to the node. A solution is equitable if no performance function value can be improved without degrading another performance function value that is already the same or worse. The solution must satisfy the bandwidth constraints on the links, the ordering constraints described above, and lower and upper bounds. H. Luss in his paper "On Equitable Resource Allocation Problems: A Lexicographic Minimax approach", Operations Research 47, 361-378, 1999 presents an expository paper on equitable resource allocation. L. M. Betts, J. R. Brown, and H. Luss, "Minimax Resource Allocation for Problems with Ordering Constraints", Naval Research Logistics 41, 719-738, 1994 present an equitable resource allocation method that can handle simple ordering constraints, but not tree-like ordering constraints needed for the present embodiment. R. S. Klein, H. Luss, and D. R. Smith, "A Lexicographic Minimax Algorithm for Multiperiod Resource Allocation", Mathematical Programming 55, 213-234, 1992 solve a special case of the model in Betts, Brown, and Luss referenced above, intended for multi-period resource allocation problems. The models solved by the present embodiment are significantly more complex and their solution requires new, innovative methods to solve the equitable allocation problem with tree-like ordering constraints. In addition to providing optimal bandwidth allocation decisions, the model can be used to identify critical links that should be prime-candidates for capacity expansion.

Referring now to the figures and to Figure 1 in particular, there is shown an example of a VOD tree network 100. The network includes eight nodes 101-108. Node 101 is the root node. The nodes are interconnected by links 109-115. Node 101 (also labeled as node 0) has the VOD server. The VOD server stores multiple programs, labeled as $p = 1, 2, ..., P$. The server broadcasts program $p$ to nodes that request VOD service for program $p$ for $p = 1, 2, ..., P$. Each link, generically called link $1$, has a limited bandwidth capacity of $c_i$. The sum of bandwidth allocated on link $1$ to all programs carried on link $1$ cannot exceed the capacity of link $1$. Any of the nodes, generically called node $n$, may decrease the bandwidth of any program $p$ on any of the outgoing links from node n. For example, suppose the delivery technology of a VOD program comprises repeated broadcasting of the program from the root node (this technology is often referred to as near-VOD). Then, any node $n$ may increase (or keep unchanged) the time interval between successive broadcasts of any program $p$ on the outgoing links from node $n$. Increasing the time interval on a link implies decreasing the allocated bandwidth on the link. Each node $n$ may have demands for a subset of the **P** programs. The information at a node may consist of the number of requests per time unit for program $p$, or, alternatively, only of the programs requested at node $n$ without specifying the number of requests. The demand at node $n$ has $\boldsymbol{D_{np}}$ requests for program $p$ per unit time.

This embodiment formulates the problem of allocating the available bandwidth on each link optimally among the programs carried on each link as an equitable resource allocation problem; see background material on this topic in the paper by H. Luss "On Equitable Resource Allocation Problems: A Lexicographic Minimax Approach", Operations Research 47, 361-378, 1999. A performance function is associated with each program requested at each node. The performance function represents the service provided for that program at the node as a function of the bandwidth allocated to that program on the incoming link to the node. A solution is equitable if no performance function value can be improved without degrading another performance function value that is already the same or worse. The present embodiment provides new, innovative methods to solve the equitable allocation problem. In addition to providing optimal bandwidth allocation decisions, the model can be used to identify a ranking of critical links that should have their capacity expanded.

This embodiment provides methods for two variations of a model. The first model is referred to as the Flexible Bandwidth Allocation Model (FBAM). In FBAM the bandwidth allocated to program $p$ on any outgoing link from node n may be different. The second model is referred to as the Constrained Bandwidth Allocation Model (CBAM). In CBAM the bandwidth allocated to program $p$ on any outgoing link from the same node must be the same. FBAM may lead to better service since it allows more flexible allocations, while CBAM may result in a simpler design that is easier to control and maintain.

The description below uses near-VOD delivery technology for illustration purposes. Nevertheless, the present embodiment embodiment is independent of the VOD delivery technology. All that is needed is the function that maps a technology delivery to bandwidth consumption. In near-VOD, time intervals between successive broadcasts are translated into bandwidth consumption. In a different delivery technology, all nodes may receive VOD almost instantaneously, but at different video quality, wherein the video quality is translated to bandwidth consumption on incoming links to the nodes.

**The Flexible Bandwidth Allocation Model (FBAM)**

$p =$      Index for programs, $p = 1, 2, ..., P$, where P is the number of VOD programs.

         Programs may be aggregated to program families, where a family is a collection of programs with similar characteristics, e.g., children's movies, educational programs, etc.

$T_p$ = The time length of program $p$.

$B_p$ = The bandwidth required for broadcasting a single copy of program $p$.

$r_p$ = Revenue per request for program $p$.

$n, l$ = Indices for nodes in the tree network, $n, l$ = 0, 1, 2, ..., $N$, where node 0 is the root of the tree.

$D_{np}$ = The demand for program $p$ at node n, given as number of requests per time unit.

$NP$ = $\{(n, p) \mid D_{np} > 0\}$. Thus, the doubleton $(n, p) \in NP$ if program $p$ is requested at node $n$.

$l, m, q$ = Indices for links in the network, $l, m, q$ = 1, 2, ..., $N$. The links are labeled so that the end-node of link $l$ that is further away from node 0 is node $l$. For example, in Figure 1, node 102 is labeled as node 1 and link 109 is labeled as link 1.

$S(l)$ = The set of successor links of link $l$. For example, in Figure 1, links 113, 114 and 115 (labeled as links 5, 6, 7) are successors of link 110 (labeled as link 2), implying that $S(2) = \{5, 6, 7\}$.

$c_l$ = Bandwidth capacity of link $l$.

$al_p$ = 1 if program $p$ is carried on link $l$ and 0 otherwise. Thus, if for some $(n, p) \in NP$ link $l$ is on the path that connects nodes 0 and $n$, then $a_{lp}$= 1.

$LP$ = $\{(l,p) \mid a_{lp} = 1\}$.

$t_{lp}$ = Decision variables in near-VOD: Time interval between successive broadcasts of program p on link $l$ for $(l, p) \in LP$. $t_{lp}$ is also the time interval experienced at node $l$ between successive broadcasts of program $p$ for $(l, p) \in NP$.

$\alpha_{lp}$ = The minimum time interval ($\alpha_{lp} > 0$) desired between successive broadcasts of program $p$ on link $l$ for $(l, p) \in LP$.

$\beta_{lp}$ = The maximum time interval ($\beta_{lp} \geq \alpha_{lp}$) allowed between successive broadcasts of program $p$ on link $l$ for $(l, p) \in LP$.

$x_{lp}$ = Decision variables: Bandwidth allocated on link $l$ for program $p$, which can also be viewed as the bandwidth allocated to program $p$ on the incoming link into node $l$. Let $x$ be the vector $x = \{x_{lp}\}$ for $(l, p) \in LP$.

Note that index $l$ is used both for links and for nodes, and that link $l$ is the incoming link into node $l$, $(l, p) \in LP$ always refers to the doubleton (link $l$, program $p$), $(l, p) \in NP$ always refers to the doubleton (node $l$, program $p$), and $(n, p) \in NP$ always refers to the doubleton (node $n$, program $p$).

Since the average number of copies of program $p$ that are carried simultaneously on link $l$ is $T_p/t_{lp}$,

$$x_{lp} = \frac{B_p T_p}{t_{lp}}, \quad (l, p) \in LP. \tag{1}$$

Let $\varphi_{np}(t_{np})$ be the performance function associated with $(n, p) \in NP$. The performance function represents the dissatisfaction with the time interval between successive broadcasts of program $p$ experienced at node $n$. $\varphi_{np}(t_{np})$ is a continuous, strictly increasing function for $t_{np} \geq a_{np}$,; the larger $t_{np}$, the less satisfied the customers at node $n$ would be. The invention is independent of the specific form of the performance function. As an example, a reasonable performance function is:

$$\varphi_{np}(t_{np}) = w_{np}\frac{t_{np} - \alpha_{np}}{\alpha_{np}}, \quad (n, p) \in NP. \tag{2}$$

In equation (2), $\varphi_{np}(t_{np})$ is the weighted normalized deviation from the minimal time interval between successive broadcasts. The weight $w_{np}$ ($w_{np} > 0$) might be the revenue expected from program $p$ at node $n$ per unit bandwidth per time unit; i.e., $w_{np} = (D_{np}r_p)/(B_pT_p)$. Note that if it is preferred to use weights that are independent of the demands $D_{np}$, then the weights depend only on the program $p$. In that case, the input needs to specify only which programs $p$ should be provided at each node, but not the number of requests per time unit.

Although the model can be formulated in terms of decision variables $t_{lp}$, it is formulated with decision variables variables $x_{lo}$, which makes it independent of the delivery technology. Let $F_{np}(X_{np})$ be the performance function associated with $(n, p) \in NP$. This performance function represents the dissatisfaction of customers for program $p$ at node $n$ with allocating bandwidth $x_{np}$ to program $p$ on the incoming link into node $n$. As an example the performance function equivalent to equation (2), with variable $x_{np}$ instead of $t_{np}$, is:

$$F_{np}(x_{np}) = w_{np}\frac{B_pT_p/\alpha_{np} - x_{np}}{x_{np}}, \quad (n, p) \in NP. \tag{3}$$

$F_{np}(x_{np})$ is a nonlinear, continuous, strictly decreasing function for $x_{np} \geq 0$; the arger the bandwidth, the smaller the dissatisfaction. Again, the present embodiment is independent of the specific form of the performance function and equation (3) should merely be viewed as an example. Let $L_{np}$ and $U_{np}$ be the lower and upper bounds for bandwidth required for program $p$ at node $n$ for $(n, p) \in NP$. Thus, from

$$(1), L_{np} = B_pT_p/\beta_{np} \geq 0 \text{ and } U_{np} = B_pT_p/\alpha_{np} \geq L_{np} \text{ for } (n, p) \in NP.$$

The objective is to determine equitable bandwidth allocations for all $(n, p) \in NP$, while satisfying all the constraints. This implies that the optimal solution is such that no performance function value, say $F_{n1p1}(x_{n1p1})$" can be feasibly decreased without increasing the value of another performance function, say $F_{n2p2}(x_{n2p2})$, whose value is equal to or larger than $F_{n1p1}(x_{n1p1})$. Since performance functions $F_{np}(x_{np})$ are strictly decreasing with $x_{np}$, the optimal solution is such that no decision variable value can be increased without decreasing the value of another decision variable whose performance function value is already at least as large. Such equitable resource allocation problems can be formulated as lexicographic minimax optimization problems.

FBAM is therefore formulated as a lexicographic minimax optimization problem that determines the optimal decision variables $x_{ji}$, for all $(1, p) \in LP$. A minimax problem is formulated first since the solution to the lexicographic minimax problem includes repeated solution of such minimax problems.

*The Minimax Problem for FBAM*

$$V^* = \min_x[\max_{(n,p)\in NP} F_{np}(x_{np})] \tag{4.1}$$

so that

$$\sum_{p=1}^{P} a_{lp}x_{lp} \leq c_l, \quad l = 1, 2, \ldots, N \tag{4.2}$$

$$x_{lp} \geq x_{mp}, \quad \text{for all } m \in S(l) \text{ for which } (m, p) \in LP \qquad (4.3)$$

$$L_{lp} \leq x_{lp} \leq U_{lp}, \text{ for all } (l, p) \in LP. \qquad (4.4)$$

Objective function (4.1) minimizes the largest performance function. Constraints (4.2) ensure that the link capacity constraints are satisfied. Constraints (4.3) specify the required ordering constraints. The bandwidth allocated for program $p$ on link $l$ should be at least as large as the bandwidth allocated for program $p$ on all links $m \in S(l)$ for which $(m, p) \in LP$. Note that if $m \in S(l)$, $(m, p) \in LP$ implies that $(l, p) \in LP$. Obviously, for near-VOD, these ordering constraints imply that $t_{lp} \leq t_{mp}$ for all $m \in S(l)$, where $(m, p) \in LP$. Constraints (4.4) impose lower and upper bounds on the decision variables.

Although the lower and upper bounds constraints (4.4) are typically independent of the links, they are allowed to be link-dependent since bounds may be changed on certain links in successive iterations of the Lexicographic Minimax Algorithm. However, without loss of generality, it is assumed that for $(l, p) \in LP$ these bounds satisfy: (i) $U_{lp} \leq c_l$; (ii) $U_{mp} \leq U_{lp}$ for all $m \in S(l)$, where $(m, p) \in LP$, and (iii) $L_{mp} \leq L_{lp}$ for all $m \in S(l)$, where $(m, p) \in LP$. If these relations are not satisfied, the bounds should be appropriately revised before the model is solved. In order to satisfy (ii) above, upper bounds are scanned starting from the root of the tree downwards, while decreasing upper bounds as appropriate. In order to satisfy (iii) above, lower bounds are scanned from the bottom of the tree upwards, while increasing lower bounds as appropriate. Hereinafter, the description assumes that the lower and upper bounds were adjusted as described above, and that the revised bounds satisfy $U_{lp} \geq L_{lp}$ for all $(l, p) \in LP$; otherwise the Minimax Problem for FBAM is infeasible.

Let $F^{(NP)}(x)$ be a vector composed of all the performance functions $F_{np}(x_{np})$ for $(n, p) \in NP$, where for a given vector x these performance functions are sorted in a non-increasing order. Thus,

$$F^{(NP)}(x) = [F_{n_1 p_1}(x_{n_1 p_1}), F_{n_2 p_2}(x_{n_2 p_2}), F_{n_3 p_3}(x_{n_3 p_3}), \ldots], \qquad (5.1)$$

where

$$F_{n_1 p_1}(x_{n_1 p_1}) \geq F_{n_2 p_2}(x_{n_2 p_2}) \geq F_{n_3 p_3}(x_{n_3 p_3}) \geq \ldots \qquad (5.2)$$

FBAM is now formulated as a lexicographic minimax problem. The objective function minimizes lexicographically the vector $F^{(NP)}(x)$, and the constraints are the same as in the minimax problem.

**The Lexicographic Minimax Problem for FBAM**

$$V^L = \operatorname*{lexmin}_x [F^{(NP)}(x)] \qquad (6.1)$$

so that

$$\sum_{p=1}^{P} a_{lp} x_{lp} \leq c_l, \quad l = 1, 2, \ldots, N \qquad (6.2)$$

$$x_{lp} \geq x_{mp}, \quad \text{for all } m \in S(l) \text{ for which } (m, p) \in LP \qquad (6.3)$$

$$L_{lp} \leq x_{lp} \leq U_{lp} \text{ , for all } (l, p) \in LP. \qquad (6.4)$$

Superscript *L* is used to denote optimal values for Lexicographic Minimax Problem for FBAM and * for optimal values for the Minimax Problem for FBAM. The solution method of the Lexicographic Minimax Problem includes repeatedly solving minimax problems in the format of the Minimax Problem for FBAM. After each solution of a minimax problem certain decision variables are fixed at their lexicographic optimal value and some parameters are updated.

The Minimax Algorithm for FBAM that solves the Minimax Problem for FBAM as formulated by objective function (4.1) and constraints (4.2) to (4.4) is now provided. Once the bounds were adjusted, the Minimax Problem for FBAM has a feasible solution if and only if $\Sigma_p \, a_{lp} L_{lp} \leq c_l$ for all links *l*. Suppose the Minimax Problem for FBAM has a feasible solution. The optimal solution $V^*$ can then be bounded by $V_{min} \leq V^* \leq V_{max}$, where $V_{min} = \max_{(n,\, p)\, \in\, NP} F_{np} \, (U_{np})$ and $V_{max} = \max_{(n,\, p) \in NP} F_{np} \, (L_{np})$.

*Definition. V is feasible* for the Minimax Problem for FBAM if there exists a vector x that satisfies constraints (4.2)-(4.4) and $F_{np}(x_{np}) \leq V$ for all *(n, p)* $\in$ *NP*. If no such x exists, *V* is called infeasible.

Finding the optimal solution $V^*$ reduces to finding the smallest value of *V* that is feasible for the Minimax Problem for FBAM. The Minimax Algorithm for FBAM employs a bisection search to find $V^*$. Several propositions that form the basis for the algorithm are presented below.

*Proposition 1.* Let *x(V)* be the vector $x(V) = \{x_{lp}(V)\}$ for all $(l,p) \in LP$, computed for any $V \geq V_{min}$ through the following recursion:

$$x_{lp}(V) = \max\{L_{lp}, \max_{m \in S(l) \cap (m,p) \in LP} [x_{mp}(V)], F_{lp}^{-1}(V)\}, \text{ for all } (l, p) \in LP. \qquad (7)$$

Then, *V* is feasible for the Minimax Problem for FBAM if and only if x(*V*) satisfies constraints (4.2)-(4.4). Note that the second term on the right is zero if $m \in [S(l) \cap (m, p) \in LP1 = \varnothing$, and the third term is zero if $(l, p) \notin NP$. Recursion (7) is computed separately for each program *p*, starting from the bottom of the tree on links that carry *p*, moving up.

*Proposition 2.* Suppose the Minimax Problem for FBAM is feasible and $V^*$ is the optimal objective function value of the Minimax Problem for FBAM. Then x($V^*$), computed by recursion (7) satisfies $x_{lp}(V^*) = F_{lp}^{-1}(V^*)$, for some

*(l, p)* $\in$ *NP*. The Minimax Problem for FBAM may have multiple optimal solutions. A solution x* is called the *minimal solution* of the Minimax Problem for FBAM if and only if x* is optimal for the Minimax Problem for FBAM and x* < y*, where y* is any other optimal solution for the Minimax Problem for FBAM.

*Proposition 3.* Suppose the Minimax Problem for FBAM is feasible and $V^*$ is the optimal objective function value of the Minimax Problem for FBAM. Then *x(V*)*, computed by recursion (7), is the minimal solution of the Minimax Problem for FBAM. The minimal solution is unique.

*Proposition 4.* Suppose x($V^1$) and x($V^2$) are computed $V^1 \geq V_{min}$ and for $V^2 \geq$ respectively, using recursion (7). Suppose $V^1$ is feasible for the Minimax Problem for FBAM and $V^2$ is not. Then, $V^2 < V^1$.

The propositions above provide guidance to the algorithm described below. Similar variations of the algorithm below can readily be provided.

***The Minimax Algorithm for FBAM***

*Step* 0. *Initialization.*

(a) If $\Sigma_p\, a_{lp}L_{lp} > c_l$ for some link $l$, STOP; the Minimax Problem for FBAM is infeasible.

(b) Set $V_{min} = \max_{(n,p)\in NP}\, F_{np}(U_{np})$ and $V_{max} = \max_{(n,p)\in NP}\, F_{np}(L_{np})$.

(c) Compute $x(V_{min})$ using recursion (7). If $x(V_{min})$ satisfies constraints (4.2), STOP. $V^* = V_{min}$ and $x(V^*)$ is the minimal solution for the Minimax Problem for FBAM.

(d) Delete from constraints (4.2) all indices $l$ for which the corresponding constraint is satisfied by $x(V_{min})$.

*Step 1. Bisection Search.*

(a) For each program $p$, compute $x(V)$ for $V = (V_{min} + V_{max})/2$ using recursion (7).

(b) If $x(V)$ satisfies all constraints (4.2) that have not been deleted, set $V_{max} = V$ and go to Step 2.

(c) Set $V_{min} = V$. Delete from constraints (4.2) those that are satisfied by $x(V)$.

*Step 2. Termination Test.*

(a) If $V_{max} - V_{min} > \varepsilon$ (where $\varepsilon$ is an arbitrarily small positive number), return to Step 1 (a).

(b) Compute $x(V_{max})$ and STOP; $x(V_{max})$ is the minimal solution to the Minimax Problem for FBAM and $V^* = V_{max}$ (optimal within an $\varepsilon$).

Upon termination, constraints (4.2) that are satisfied as equality (within an arbitrarily small $\varepsilon' > 0$) are referred to as *critical constraints* or *critical links.* The algorithm terminates at Step 0 only if some variables of $x(V_{min})$ are at their upper bounds, whereas termination at Step 2 implies that x($V$) results in some critical constraints. At each iteration, the effort spent on computing x($V$) is on the order of $O(P^*N^2)$ and the effort spent on evaluating whether constraints (4.2) are satisfied or not is $O(P^*N)$ (more precisely, it is $O(LP)$). The number of iterations is $[\log[(V_{max} - V_{min})/\varepsilon]/\log 2]$. The computational effort can be somewhat reduced using the following proposition.
Variations of the algorithm above for solving the Minimax Problem for FBAM can readily be provided.
*Proposition* 5. Suppose the Minimax Problem for FBAM is feasible, but $V^2$ is not feasible for the Minimax Problem for FBAM. Let $TREE(l_1)$ be the subtree of the original tree with node $l_1$ as its root. If $x_{lp1}(V^2) \le L_{l1p1}$ for all links $l \in TREE(l_1)$ for which $(l, p_1) \in$

$$LP \text{ and } x_{l_1 p_1}(V^2) = L_{l_1 p_1}\, , \text{ then } x^{\bullet}_{l_1 p_1} = L_{l_1 p_1}\, .$$

Using Proposition 5, after each iteration variables that can be fixed at their lower bound may be found. These variables can be deleted from the set *LP,* while the corresponding link capacities in constraints (4.2) are updated. Note that the second term in recursion (7), $\max_{m\in S(l),(m,p)\in LP}\, [x_{mp}(V)]$, hould be revised to include lower bounds of deleted variables.
The Lexicographic Minimax Algorithm for FBAM solves the Lexicographic Minimax Problem for FBAM as formulated by objective function (6.1) and constraints (6.2) to (6.4). The solution is obtained by repeatedly using the Minimax Algorithm for FBAM to solve minimax problems, each in the format of the Minimax Problem for FBAM. Based on the minimal solution of each of these minimax problems, some of the variables are fixed at their lexicographic minimax value (denoted as $x^{L}_{lp}$).

Let $V^*$ and x* be the minimax objective value and the corresponding minimal solution of Minimax the Minimax Problem for FBAM. The rules for fixing variables at their lexicographic minimax values are: (i) If $x^{\bullet}_{l_1 p_1} = U_{l_1 p_1}$, then

$x^L_{l_1 p_1} = U_{l_1 p_1}$; and (ii) If variable $(l_1, p_1) \in LP$ and $l_1$ is a critical constraint, then, $x^L_{l_1 p_1} = x^*_{l_1 p_1}$.

Once variables are fixed, the next minimax problem with the additional constraints of fixed variables can be solved. Alternatively, the fixed variables can be deleted from the formulation of the next minimax problem, while updating link capacities $c_i$, and lower and upper bounds $L_{lp}$ and $U_{lp}$ on some variables. The bounds need to be updated so that the ordering constraints that involve deleted variables are preserved. The values of $V_{min}$ and $V_{max}$ are also recomputed. The process continues, where after the solution of each revised minimax problem some variables are fixed and deleted. The algorithm terminates once all variables are fixed at their lexicographic minimax values.

*The Lexicographic Minimax Algorithm for FBAM*

**Step 1**. Use the **Minimax Algorithm for FBAM** to solve the **Minimax Problem for FBAM** (in the first iteration, with the original parameters). The minimax objective function value is V* and the minimal solution is x*.

*Step* 2. If $V^* = V_{min}$ (where $V_{min}$ is taken from Step 0(b) of the Minimax Algorithm for FBAM solved above), identify $(l, p)$ for which $x^*_{lp} = U_{lp}$. These variables satisfy 4 = u, Fix these variables at these values.

*Step* 3. Identify all critical constraints from among the remaining constraints (4.2).

Suppose constraint $l_1$ is a critical constraint. Fix all variables $(l_1, p) \in LP$ at $x^L_{l_1 p} = x^*_{l_1 p}$. Repeat the above for each critical constraint.

*Step* 4. Let *FIX*= {$(l, p)$} be the set of all variables fixed in this iteration in steps 2 and 3. Exclude all variable $(l, p) \in$ *FIX* from the sets *LP* and NP defined for the next minimax problem. If *NP* = STOP. The lexicographic minimax problem is solved.

*Step* 5. Delete from constraint (4.2) critical constraints and constraints with no variables left. Update $c_l \leftarrow c_l - \sum_{p:(l,p) \in FIX} x^L_{lp}$ for all remaining constraints in (4.2).

*Step* 6. For each $(l, p) \in$ *FIX*, update $U_{mp} \leftarrow \min[U_{mp}, x^L_{lp}]$ for all $m \in S(l)$ for which

$$(m, p) \in LP.$$

*Step* 7. For each link *l*, find all *(m, p)* $\in$ FIX where m $\in$ S(l). For each p with such *(m, p)*

$$\in FIX, \text{ update } L_{lp} \leftarrow \max\{L_{lp}, \max_{(m,p) \in FIX \cap m \in S(l)} [x^L_{mp}]\}.$$

*Step* 8. Update $V_{max} = \min\{\max_{(n,p) \in NP} [F_{np}(L_{np})] V^*\}$. (This overrides $V_{max}$ as computed in Step 0(b) of the Minimax Algorithm for FBAM.)

*Step* 9. Return to Step 1 to solve the next minimax problem.

Similar variations of the algorithm above can readily be provided. Note that the number of lexicographic iterations (number of minimax problems that are solved) will not exceed the number of variables in the initial set *NP* since at least one variable is fixed at each iteration. Proposition 6, given below, is used in Step 8 to narrow the search interval of the Minimax Algorithm.

*Proposition* 6. Let FIX(i) and *V\*(i)* be the set *FIX* and the minimax objective value at the *i*-th iteration of the Lexicographic Minimax Algorithm for FBAM. Then, (i) *V\*(i) :5 V\**(i - 1), and (ii) if all (*l*, *p*). *FIX(i)* are associated with critical constraints, *V\*(i) < V\**(i -1),

The Minimax Algorithm for FBAM and the Lexicographic Minimax Algorithm for FBAM can readily handle performance functions that are non-increasing, rather than strictly decreasing. Recursion (7) needs then to be changed to:

$$x_{lp}(V) = \min\left[\max\{L_{lp}, \max_{m \in S(l) \cap (m,p) \in LP} [x_{mp}(V)], F_{lp}^{-1}(V)\}\right], \text{ for all } (l, p) \in LP. \quad (8)$$

The Lexicographic Minimax Algorithm for FBAM also provides an ordered list of critical constraints (critical links) which can be used to assist in the optimal planning of bandwidth capacity expansion in the network. The critical links identified at the first iteration are at the top of the list, those identified at the second iteration are next, and so forth. The lexicographic minimax solution would be improved by adding capacity to links, starting with the links that were determined as critical at the first iteration, then to the critical links of the second iteration, and so forth. Since in any period (where a period could be, for example, a month or three months) capacity can be added to a limited number of links due to budget constraints, the ordered list of critical links provides an optimal multi-period capacity expansion plan. Note that once a link capacity is expanded, it may be prudent to resolve the problem since some of the links that were deleted without being fully utilized may now be critical at some iteration.

### The Constrained Bandwidth Allocation Model (CBAM)

This embodiment also provides a method that has more restrictions on feasible bandwidth allocation. In FBAM, the bandwidth allocated to program p may be different on any outgoing link from a node. Obviously, this flexibility promotes excellent service. However, service providers may feel that such designs are too complex and require excessive maintenance and control. The second model is referred to as the constrained Bandwidth Allocation Model (CBAM). CBAM imposes the additional constraints where for, any program $p$, the same bandwidth is allocated on each of the links that carries program p and emanates from the same node.

Without loss of generality for any $l$, all lower bounds $L_{mp}$ are assumed to be the same and all upper bounds $U_{mp}$ are assumed to be the same for all $m \in S(l)$ which $(m, p) \in LP$. From here on, q is also used as an index for links. Link q has as its successor's links indexed by $l$ and link $l$ has as its successor's links indexed by m. To simplify the presentation below, link $q = 0$ is added as an incoming link into node 0 with $(0, p) \in LP$ for all $p$. The following constraints are added to the Minimax Problem for FBAM and to the Lexicographic Minimax Problem for FBAM:

$$x_{l_1 p} = x_{l_2 p} \text{ for all } l_1, l_2 \in S(q) \text{ for which } (l_1, p), (l_2, p) \in LP, \text{ for } q = 0, 1, ..., N. \quad (9)$$

The Minimax Algorithm for CBAM is similar to that provided for FBAM. Let $V$ be defined as *feasible* for the Minimax Problem for FBAM with added constraints (9) if there exists a vector x that satisfies constraints (4.2)-(4.4) and constraints (9), and $F_n A x_{np}) < V$ for all $(n, p) \in NP$. If no such **x** exists, $V$ *is* called infeasible. Recursion (7), used to compute $x(V)$, is changed in order to satisfy constraints (9). The revised recursion is as follows:

Computation *ofx(V)* for program p:
For each link $q$ for which $(q, p) . \in LP$, compute

$$z_{lp}(V) = \max\{L_{lp}, \max_{m \in S(l) \cap (m,p) \in LP} [x_{mp}(V)], F_{lp}^{-1}(V)\} \text{ for all } l \in S(q) \text{ for which } (l, p) \in LP$$

$$(10.1)$$

$$x_{lp}(V) = \max_{l \in S(q) \cap (l,p) \in LP} [z_{lp}(V)] \qquad \text{for all } l \in S(q) \text{ for which } (l, p) \in LP. \quad (10.2)$$

In recursion (10.1), the second term on the right is zero if [$m \in S(l) \cap (m, p) \in LP$] = 0, and the third term is zero ($l$, $p$)$\notin$ NP. Recursions (10.1)-(10.2) is computed separately for each program p, starting from the bottom of the tree on links that carry p, moving up. Consider again Figure 1 and suppose Program p is requested at nodes 3 (104), 5 (106), and 7 (108). Hence, program $p$ is carried on links 3 (111), 5 (113), 7 (115), 1 (109) and 2 (110). Recursion (10.2) first computes $x_{3p}(V) = z_{3p}(V)$. Then, recursion (10.1) is used to compute $Z_{5p}(V)$ and $Z_{7p}(V)$, and by recursion (10.2), $X_{5P}(V) = max[z_{5p}(V), Z_{7p}(V)]$. Finally, recursion (10.1) is used to compute $z_{1p}(V)$ and $z_{2p}(V)$ and recursion (10.2) is used to compute

$$x_{1p}(V) = x_{2p}(V) = \max[z_{1p}(V), z_{2p}(V)].$$

*The Minimax Algorithm for CBAM*

Use the *Minimax Algorithm for FBAM* with recursion (10.1)-(10.2) instead of recursion (7) in step 1 (a).

Propositions 1-6, with minor wording changes, still hold. The computational effort is also the same as for FBAM.

The Lexicographic Minimax Algorithm for CBAM is the same as that described for FBAM with minor changes. In particular, the Minimax Algorithm for CBAM is used and additional variables are set to their lexicographic value. Suppose $l_1 \in S(q)$ is a critical constraint and ($l_1$, $p_1$) $\in$ LP. Then, as described in Step 3 of the Lexicographic Minimax Algorithm for FBAM, variable ($l_1$, $P_1$) is set to its lexicographic minimax value, namely, $x^L_{l_1 p_1} = x^*_{l_1 p_1}$ ($x^*$ is the minimal solution of the minimax problem solved at that iteration). The algorithm for CBAM also sets $x^L_{l p_1} = x^*_{l p_1}$ for all $l \in S$ (q) for which ($l$, $p_1$)

$\in$ LP: Although these variables may not be associated with critical constraints, fixing them at that iteration follows from constraints (9).

*The Lexicographic Minimax Algorithm for CBAM*

Use the *Lexicographic Minimax Algorithm for FBAM* with revised Step 1 and revised Step 4 as follows.

*Step* 1. Use the *Minimax Algorithm for CBAM* to solve the *Minimax Problem for CBAM* (in the first iteration, with the original parameters). The minimax objective function value is V* and the minimal solution is x*.

*Step* 4. Let *FIX* = {(1,p)} be the set of all variables fixed in this iteration in steps 2 and 3. Suppose critical constraint $l_1 \in S(q)$. For each ($l_1$, $p_1$) $\in$ *FIX,* add to *FIX* variables ($l$, $p_1$) for all $l \in S(q)$ for which ($l$, $p_1$) $\in$ LP, and set $x^L_{l p_1} = x^*_{l p_1}$. Exclude all variable in the augmented set *FIX* from the sets *LP* and NP defined for the next minimax problem. If $NP = \varnothing$, STOP. The lexicographic minimax problem is solved.

As for FBAM, the Minimax Algorithm for CBAM and the Lexicographic Minimax Algorithm for CBAM can readily handle performance functions that are non- increasing, rather than strictly decreasing. Recursion (10.1) needs then to be revised, where the smallest possible value of $z_{ip}(V)$ that satisfies recursion (10.1) would be selected.

As for FBAM, the Lexicographic Minimax Algorithm for CBAM also provides an ordered list of critical links which, in turn, provides an optimal multi-period capacity expansion plan.

Further clarification of the present embodiment is provided through the solution of a small example of the VOD tree network 200 shown in Figure 2. The network comprises eight nodes 201-208, where node 201 is the root node with the server. The nodes are interconnected by links 209-215. The number adjacent to a link is the link's capacity. For example, link 209 has a capacity of 120 units, often expressed in megabits per second (Mbs). The server at node 0 broadcasts $P$ = 3 VOD programs. Arrows 216-222, outgoing from the respective nodes 1-7, represent the demand for programs at the node. The numbers adjacent to the arrows are the programs requested at the node. For example, as shown by arrow 218, node 204 has demands for programs 1 and 3.

The example uses for illustration near-VOD delivery with time intervals between successive broadcasts of each program that are translated to bandwidth, which are then allocated on each link. Suppose that the bandwidths required for a single copy of a program are $B_p$ = 5 Mbs for $p$ = 1, 2, 3, the program lengths are $T_1$ = 40 minutes, $T_2$ = 60 minutes, and $T_3$ =100 minutes, and the minimum and maximum time intervals between successive broadcasts are $\alpha_{lp}$ = 5 minutes

and $\beta_{lp}$ =10 minutes for all $(l, p) \in LP$. From Figure 2, the sets $LP = NP = \{(1, 1), (1, 2), (1, 3), (2,1), (2, 2), (2, 3), (3, 1), (3, 3), (4, 1), (4, 3), (5, 1), (5, 2), (6, 1), (6, 3), (7, 2), (7, 3)\}$. Although in this example the two sets are the same, it need not be the case (e.g., if not all three programs were requested at nodes 1 and 2). The lower and upper bounds $L_{lp}$ and $U_{lp}$ are derived from equation (1). The performance functions assumed in this example are given by equation (3) for all $(n, p) \in NP$. Program 3 in this example is expected to get better service than programs 1 and 2, so the weights in the performance functions are set to $w_1 = w_2 = 1$ and $w_3 = 1.2$. Table 1 presents the specific bounds and performance functions.

**Table 1.** Lower and Upper Bounds and the Performance Functions

| $P$ | $L_{lp}$ | $U_{lp}$ | $F_{np}(x_{np})$ | $F_{np}^{-1}(V)$ |
|---|---|---|---|---|
| 1 | 20 | 40 | $(40 - x_{np}) / x_{np}$ | $40 / (V + 1)$ |
| 2 | 30 | 60 | $(60 - x_{np}) / x_{np}$ | $60 / (V + 1)$ |
| 3 | 50 | 100 | $1.2 (100 - x_{np}) / x_{np}$ | $120 / (V + 1.2)$ |

**Solution of FBAM**

Table 2 presents the results of the Minimax Algorithm for FBAM in the first iteration of the Lexicographic Minimax Algorithm for FBAM. Initially, $V_{min}$ = 0 and $V_{max} := 1.200$. Each row provides the result for a single iteration of the Minimax Algorithm. In the last row, $V_{max} - V_{min} \leq \in = 0.01$. The solution associated with $V_{max}$ is selected as the minimax solution (shown in bold font) since it provides a feasible solution to the Minimax Problem for FBAM.

**Table 2.** Results of the First Minimax Algorithm for FBAM

| $V_{min}$ | $V_{max}$ | $V$ | $x_{n1}$ for all $(n, 1) \in NP$ | $x_{n2}$ for all $(n, 2) \in NP$ | $x_{n3}$ for all $(n, 3)$ for $NP$ |
|---|---|---|---|---|---|
| 0.000 | 1.200 | 0.600 | 25.000 | 37.500 | 66.667 |
| 0.600 | 1.200 | 0.900 | 21.053 | 31.579 | 57.143 |
| 0.600 | 0.900 | 0.750 | 22.857 | 34.286 | 61.538 |
| 0.750 | 0.900 | 0.825 | 21.918 | 32.877 | 59.259 |
| 0.825 | 0.900 | 0.863 | 21.477 | 32.21 | 58.182 |
| 0.825 | 0.863 | 0.844 | 21.692 | 32.538 | 58.708 |
| 0.844 | 0.863 | 0.854 | 21.581 | 32.371 | 58.437 |
| 0.854 | 0.863 | 0.863 | 21.477 | 32.215 | 58.182 |

Table 3 presents the results of the Lexicographic Minimax Algorithm. Thus, the first iteration has V* = 0.863. Equation 3 is a critical constraints and variables (3,1) and (3, 3) are fixed at their optimal value. In the second iteration, equation 1 is critical, and variables (1,1), (1, 2) and (1,3) are fixed. These variables impose new upper bounds on variables (4,1) and (4, 3). Thus, in iteration 3, variables (4, 1) and (4, 3) are fixed at their revised upper bounds and constraint 4 is deleted since all variables at constraint 4 were fixed. Iterations 4, 5 and 6 have critical constraints 7, 6 and 2, respectively. Finally, at iteration 7, constraint 5 is deleted without being a critical constraint, while variables (5,1) and (5, 2) are fixed at upper bounds that were revised in the previous iteration.

**Table 3.** Results of the Lexicographic Minimax Algorithm for FBAM

| Iteration | V* | Critical constraints/ Deleted constraints | Optimal Variables |
|---|---|---|---|
| 1 | 0.863 | 3 | $x_{31}^L = 21.477$, $x_{33}^L = 58.182$ |
| 2 | 0.73 6 | 1 | $x_{11}^L = 23.041$, $x_{12}^L = 34.562$, $x_{13}^L = 61.983$ |
| 3 | 0.736 | 4 (deleted) | $x_{41}^L = 23.041$, $x_{43}^L = 61.983$ |

(continued)

| Iteration | V* | Critical constraints/ Deleted constraints | Optimal Variables |
|---|---|---|---|
| 4 | 0.673 | 7 | $x_{72}^L = 35.864$, $x_{73}^L = 64.068$ |
| 5 | 0.463 | 6 | $x_{61}^L = 27.341$, $x_{63}^L = 72.159$ |
| 6 | 0.276 | 2 | $x_{21}^L = 31.360$, $x_{22}^L = 47.040$, $x_{23}^L = 81.328$ |
| 7 | 0.276 | 5 (deleted) | $x_{51}^L = 31.360$, $x_{52}^L = 47.040$ |

Note that the equitable solution (the lexicographic minimax solution) provides different service at different nodes. For instance, the bandwidths provided to program 1 at nodes 3 and 5 are 21.477 and 31.360, respectively.

The results also identify the ordered list of critical links that should be expanded. As table 3 shows, link 3 is at the top of the list of critical links, followed by link 1, 7, 6, 2. Thus link 3 should be expanded first, then link 1, and so forth. Note that increasing the capacity of link 3 would improve service to node 3. Increasing the capacity of link 1 would improve service to nodes 1 and 4. The latter is seen from iterations 2 and 3, as link 4 cannot be fully utilized due to upper bounds imposed by bandwidth allocations at link 1.

The optimally allocated bandwidth readily imply through equation (1) optimal time intervals for near-VOD delivery between successive broadcasts for any program on each of the links.

## Solution of CBAM

Recall that CBAM enforces constraints (9) so that for any program p, the same bandwidth is allocated on all links that carry program p and emanate from the same node. Table 4 presents the results of the Lexicographic Minimax Algorithm for CBAM. As expected, CBAM has more links that are not fully utilized. At the first iteration, link 3 is fully utilized while link 4 is not. At the second iteration, link 1 is fully utilized, while link 2 is not. At the third iteration links 5, 6 and 7 are all not fully utilized due to upper bounds imposed by the allocations at link 2. Although CBAM simplifies network control, it may leads to excessive underutilization of links. As the results indicate, insufficient capacity on link 1 affects directly, or indirectly, bandwidth allocated on all other links in the network (except for link 3). In particular, it affects bandwidth allocated on link 2, which, in turn, affects bandwidth allocated on links 5, 6 and 7.

**Table 4.** Results of the Lexicographic Minimax Algorithm for CBAM

| Iteration | V* | Critical constraints/ Deleted constraints | Optimal Variables |
|---|---|---|---|
| 1 | 0.863 | 3,4 (deleted) | $x_{31}^L = x_{41}^L = 21.477$, $x_{33}^L = x_{43}^L = 58.182$ |
| 2 | 0.736 | 1, 2 (deleted) | $x_{11}^L = x_{21}^L = 23.041$, $x_{12}^L = x_{22}^L = 34.562$, $x_{13}^L = x_{23}^L = 61.983$ |
| 3 | 0.736 | 5, 6, 7 (all deleted) | $x_{51}^L = x_{61}^L = 23.041$, $x_{52}^L = x_{72}^L = 34.562$, $x_{63}^L = x_{73}^L = 61.983$ |

As Table 4 shows, link 3 is at the top of the list of critical links, followed by link 1. Thus, link 3 should be expanded first, and then link 1. Note that increasing the capacity of link 3 would allow using more of the available bandwidth on link 4, thus improving the service to nodes 3 and 4. Increasing the capacity of link 1 would allow using more of the available bandwidth on link 2, as well as the available bandwidth on links 5, 6 and 7, thus improving the service to nodes 1, 2, 5, 6 and 7.

**(II) Allocation of Bids.**

In U.S. Patent Application No. 2005/0192865 filed Sept. 1, 2005, a method for selecting a desirable allocation of bids in a combinatorial exchange or auction setting where there are bids for bundles of items with various side constraints is disclosed . It is believed that an embodiment of Fig. 3 may be used in the selecting process.

**(III) Pattern Recognition.**

In U.S. Patent 5,325,445 filed May 29, 2005 a (subject matter of U.S. Patent 5,325,445 is provided in **Appendix E** hereinbelow), a feature classification for statistical pattern recognition is disclosed, wherein a hierarchical tree is created through a minimax type decompositional segregation as n-dimensional feature vectors of different feature classifications. An embodiment of Fig. 3 may be used in the decompositional segregation process, and in particular to define the tree-like hierarchical decomposition of n-dimensional feature speace as disclosed in Appendix E.

**(IV) Gas Flow Measurement.**

In U. S. Patent 6,510,746 by Kotwicki filed Fuly 12, 1999 (subject matter of U.S. Patent No. 6,510,746 is provided in **Appendix F** hereinbelow ), a method is disclosed for efficiently implementing a system and method for measuring a gas flow using upstream and downstream pressure measurement, such as for gas flows for an internal combustion engine, is disclosed. An embodiment of Fig. 3 may be used in the gas measurement process. In particular, the output approximations of step 312 may be the X, Z constants as described in the Kotwicki patent.

**(V) Portfolio Optimization**

A further example of another decision support system that can be enhanced by the novel minimax algorithm disclosed herein is a system for investment optimization which is now described. Assume a given collection of $n$ potential investments indexed by $j$ = 1,2, ...,n, and their returns over $m$ periods of time indexed by $i$ = 1,2, ..., $m$ is given. A hypothetical example is shown in the next table (Table 2), where the rows are the periods of time (the row four 1999 being row 1, the row for 2000 being row 2, etc.), and the columns are the potential investments (the column for "cash deposit" being column 1 having the yearly returns for cash, the column for "gold" being column 2 having the yearly returns for gold, etc.):

Table 2

| For Year | Cash Deposit | Gold | Stock1 | Stock2 |
|---|---|---|---|---|
| 1999 | 2.5 | 2.6 | 7.8 | -1.9 |
| 2000 | 3.5 | 4.3 | 5.0 | 3.9 |
| 2001 | 1.5 | 4.2 | 5.0 | 2.4 |
| 2002 | 1.8 | 4.7 | 6.2 | 9.4 |
| 2003 | 3.1 | 4.9 | 3.3 | 1.6 |
| 2004 | 1.6 | 5.7 | 0.9 | 1.4 |
| 2005 | 3.5 | 0.1 | 3.6 | 4.4 |
| 2006 | 2.8 | 5.4 | -0.4 | 2.2 |

Let $a_{i,j}$ denote the return of investment $j$ for the period $i$. In the above example $a_{3,2}$ denotes the return of gold in year 2001 which is 4.2 percent. The returns denoted by $a_{i,j}$ can be considered as a $m$ matrix $\mathbf{A} = [a_{i,j}]$.

A portfolio is determined by specifying what fraction of one's assets to put into each investment. Therefore, such a portfolio may be represented by a collection of nonnegative numbers $x_j$, $j$ = 1,2, ..., n that sum to one, wherein $x_1$ corresponds to the fractional portion of the portfolio invested in "cash deposits", $x_2$ corresponds to the fractional portion of the portfolio invested in "gold"., etc. Accordingly, the portfolio is represented as a $n$ dimensional vector $\mathbf{x} = (x_1, x_2, ..., x_n)$ with $\sum_{j=1}^{n} x_j = 1.$

The return that one would obtain using a given portfolio for the period $i$ is given by

$$h_i = \sum_{j=1}^{n} a_{i,j} x_j$$

and the returns for this same portfolio for all time periods arranged in a vector is h = (h$_1$, h$_2$, ..., h$_m$) wherein h is given by the matrix-vector product

$$h = Ax$$

It is assumed that history repeats itself and the laws dominating investment markets in previous years will continue to be valid in the future too. In the most simplified case, an investor may ignore other factors such as the risk of each investment when seeking for a portfolio which maximizes its minimum return over the past history. Therefore she/he wishes to optimize the portfolio selection **x** in order to maximize the minimum return. It is known in theory that such optimum selection exists, and it is achieved by **x\*** where **x\*** is the minimax solution for the matrix.

The assumption that "history repeats itself" may be interpreted as follows: regarding the investment returns, every future year is going to be either a repetition of one single previous year, or a "mixture" of previous years - namely a convex combination of previous years. For example the investment returns on a hypothetical future year could be 30% of the returns of 1999, plus 20% of the returns of 2002, plus 50% of returns of 2005, and zero weight assigned for all other years. Note that such a "mixture" could be additionally/alternatively interpreted in a manner such that future return of each investment will be determined in the same manner for all investments; i.e., convex combination of returns of previous years.

The weights for each year, such as the percentages immediately above, may be represented in vector form, and accordingly are represented by the vector **y**, e. g., ( 0.3, 0.0, 0.0, 0.0, 0.2, 0.0, 0.0, 0.5) for the percentage weights above. A conservative investor may consider the investment market as an opponent who would try to form a convex combination of an agreed upon collection of investments of previous years (wherein the weight of each year is represented by y$_i$) in order to minimize the investor's potential return in, e.g., the next year. Therefore the investor should try to find a portfolio **x** which, even in the worst case convex combination of the previous years **y** selected by the investment market, will still give a certain minimum return, and she/he will try to make this minimum return as large as possible. The formulation of the problem as described hereabove is as a zero sum game with two opponents being able to play mixed strategies.

In the above numerical example corresponding to Table 2, the optimal portfolio is given by **x\*** = (0.1711, 0.3183, 0.2468, 0.2637) which in practice means that the investor should invest 17.11% of his/her fortune in cash deposit, 31.83% in gold, 24.68% in stock1 and 26.37% in stock2. Also the worst case scenario selected by the investment market opponent is given by y\*= (0.0760, 0, 0, 0, 0, 0.3695, 0.4940, 0.0605) which in practice means a hypothetical year in which the returns are a mixture consisting of 7.60% of year 1999, 36.95% of 2004, 49.40% of 2005 and 6.05% of year 2006. The point of equilibrium is given by (**y\***)'**Ax\*** = 2.68.

The above result can be interpreted by any of the following ways:

a) if the investor selects the portfolio **x\*** immediately above, then for *any* combination of previous years **y** selected by the investment market opponent, the investor will achieve an annual return of *at least* 2.68%.
b) If the investment market opponent selects the worst case convex combination of the previous years **y\***, then for *any* portfolio **x** that the investor might chose, the investor will recieve a return *at most* 2.68%.

The returns per year and per investment are those as shown in next table:Table 3

|  | **x\* =** | 0.1711 | 0.3183 | 0.2468 | 0.2637 |  |
|---|---|---|---|---|---|---|
| **y\* =** | Year | Cash Deposit | Gold | Stock1 | Stock2 | Portfolio Return |
| 0.0760 | 1999 | 2.5 | 2.6 | 7.8 | -1.9 | 2.68 |
| 0.000 | 2000 | 3.5 | 4.3 | 5.0 | 3.9 | 4.23 |
| 0.000 | 2001 | 1.5 | 4.2 | 5.0 | 2.4 | 3.46 |
| 0.000 | 2002 | 1.8 | 4.7 | 6.2 | 9.4 | 5.81 |

(continued)

| | x* = | 0.1711 | 0.3183 | 0.2468 | 0.2637 | |
|---|---|---|---|---|---|---|
| y* = | Year | Cash Deposit | Gold | Stock1 | Stock2 | Portfolio Return |
| 0.000 | 2003 | 3.1 | 4.9 | 3.3 | 1.6 | 3.33 |
| 0.3695 | 2004 | 1.6 | 5.7 | 0.9 | 1.4 | 2.68 |
| 0.4940 | 2005 | 3.5 | 0.1 | 3.6 | 4.4 | 2.68 |
| 0.0605 | 2006 | 2.8 | 5.4 | -0.4 | 2.2 | 2.68 |
| | Average Return | 2.68 | 2.68 | 2.68 | 2.68 | |

One may verify that if the investor selects the portfolio **x\*** for x, then the return for the year 1999 will be 2.5x0.1711 + 2.6x0.3183 + 7.8 x0.2468 -1.9x0.2637 = 2.68. Also if the market selects **y\*** for y, then the return for Cash Deposit will be 2.5x0.0760 + 1.6x0.3695 + 3.5x0.4940 + 2.8x0.0605 = 2.68.

The formulation of the problem above is exactly the same as a minimax problem which can be solved by the Bluebit algorithm disclose herein. In particular, Fig. 3 may be used in the process of configuring the portfolio. For instance, the input evaluations of step 304 may be the matrix **A** containg the past history, the returns of potential investments across different periods of time (each row of the matrix representing returns of various investments for the same time period and each column representing returns of the same investment across different time periods), and for such input evaluations, the output approximations of step 312 may be **x\*** which is the optimal portfolio (fractions of one's assets that should be invested on various potential investments) and y*as worst case scenario that could be selected by the investment market opponent.

A more complex model, including risk as a factors, has been developed by the Nobel Prize winner Harry Markowitz in his book "Portfolio Selection Efficient Diversification of Investments". The methods disclosed in this book rely upon solving minimax or linear programming problems, and accordingly, the flowchart of Fig. 3 may be applied in place of the prior art minimax techniques. Additionally, as disclosed hereinbelow, since linear programming problems may be converted into minimax problems, large linear programming problems may be solved using the Bluebit algorithm and/or the steps of Fig. 3.

In real world portfolio configuration, the matrix **A** would have been larger, e.g., 50 rows and 5000 columns or more. For example, instead of including just four potential investments several thousands could have been included. Also, historical data for 50 years could have been included. Additionally, instead of measuring each investment's performance yearly, measurements may be performed on a monthly, weekly or in daily basis. Accordingly, the matrix **A** may have thousands of rows and tens of thousands of columns. The novel Bluebit algorithm provides a computationally efficient technique for determining an investment portfolio.

### (VI) Machine Learning-Boosting

Machine boosting techniques may also use the steps of Fig. 3. The goal of machine boosting is to combine a plurality of simple "rules of thumb", "wizards", "hypotheses" or "weak classifiers" (these terms being used substantially synonymously for referring to agents for generating proposed results to a particular set of conditions) to form an ensemble or aggregate result based on individual results from more than one of the plurality of wizards, wherein the aggregate result is expected to perform better that the individual wizards or rules of thumb. The terminology used to describe such an ensemble or aggregate classifier varies, but the underlying idea is the same; e.g., usually when a "past history", a "training set" or an "example set" is given, this information is used to train the weak classifiers and then combine these trained classifiers into one ensemble which performs better than each weak classifiers separately.

Let S be an example set, consisting of m labeled examples indexed by i.

$$S = \{(s_1, l_1), (s_2, l_2), \dots, (s_i, l_i), \dots, (s_m, l_m)\}$$

where $s_i$ denotes each example, and $l_i \in \{-1,1\}$ denotes the known actual label of each example. We are also given a number of n weak classifiers $w_1, w_{2;} \dots, w_j, \dots, w_n$ indexed by $j$ each one performing on the class S and predicting its label

$$w_j(s_i) \in \{-1,1\}$$

Accordingly, since $l_i$ is the actual label of the example $s_i$, and $w_j(s_i)$ denotes the prediction of the weak classifier $w_j$ for the label of the example $s_i$., the object is to combine the n weak classifiers $w_j$ in order to construct one ensemble binary classifier having the form

$$H(s_i) = \text{sign}\left(c_1 w_1(s_i) + \cdots + c_j w_j(s_i) + \cdots + c_n w_n(s_i)\right) \in \{-1,1\}$$

$$c_j \geq 0 \quad \forall 1 \leq j \leq n$$

where sign($b$) = -1 wherein $b < 0$, and sign($b$) = 1 when $b \geq 0$.

In the above equation, $c_j$ denotes a nonnegative coefficient with which the output of the weak classifier $w_j$ $(s)$ is combined. Naturally we would like to optimize performance of this ensemble classifier to be as "good" as possible. We are able to modify the performance of the ensemble classifier by modifying the coefficients $c_j$, but doing so requires a criterion, which will help us to evaluate the performance of such ensemble classifiers. As a first evaluation technique, we may pick the training error as our criterion, wherein, e.g., the frequency of misclassified examples is used for evaluating the performance of an ensemble classifier as follows:

$$\varepsilon = \frac{1}{n} \sum_{i=1}^{n} [H(s_i) \neq l_i]$$

However, using the training error as a criterion presents some drawbacks. First, there are situations where infinitely many of various ensemble classifiers may have zero training error. Accordingly, the question arises, should we consider all of such ensemble classifiers equally as good, or are one or more of them better than the others. Second, if the training error is zero for a particular one or more ensemble classifiers, then the training error does not allow for continuing with the optimization. Before justifying the use of a different criterion, we are going to have a closer look at the definition of the binary classifier and the definition of its training error. Recall that we defined the binary classifier as

$$H(s_i) = \text{sign}\left(c_1 w_1(s_i) + \cdots + c_j w_j(s_i) + \cdots + c_n w_n(s_i)\right)$$

$$= \text{sign}\left(\sum_{j=1}^{n} c_j w_j(s_i)\right)$$

If we consider the following term as a separate function

$$\mathcal{H}(s_i) = \sum_{j=1}^{n} c_j w_j(s_i)$$

then the binary classifier $H(s)$ becomes the sign of the $\mathcal{H}$ $(s)$ function, i.e.,

$$H(s_i) = \text{sign}(\mathcal{H}(s_i)).$$

The function $\mathcal{H}(s_i)$ may be considered as a confidence level classifier; i.e., the greater (more positive) its value, the greater the confidence that the circumstances indicative of 1 holds, and the lower (more negative) its value, the greater the confidence that the circumstances indicative of -1 holds. When the binary classifier $H(s_i)$ makes a correct prediction, then the label $l_i$ and the confidence level classifier $\mathcal{H}(s_i)$ have the same sign, therefore $l_i \cdot H(s_i) \geq 0$. On the contrary when a false prediction is made, then $l_i\, H(s_i) < 0$. This leads to the following redefinition of the error:

$$\varepsilon = \frac{1}{n}\sum_{i=1}^{n}[l_i \cdot \mathcal{H}(s_i) < 0]$$

If the training error is selected as the training criterion as in the equation immediately above, what we have actually done is pick an arbitrary constant, which is 0 is this case, and use the frequency of the product $l_i \cdot \mathcal{H}(s)$ being below this constant in order to compute the error. However, instead of picking zero as the constant, another number may be selected. That is, suppose that instead of using 0 as a threshold for the products $l_i \cdot \mathcal{H}(s)$, we pick a number p such that

$$l_i \cdot \mathcal{H}(s_i) \geq \rho \quad \forall\, 1 \leq i \leq m$$

and then we try to make p as big as possible. Then the optimization problem becomes

$$c = \arg\max_{c} \rho = \arg\max_{c} \min_{i}(l_i \cdot \mathcal{H}(s_i))$$

$$c_j \geq 0 \quad \forall 1 \leq j \leq n$$

This approach among other advantages has the obvious benefit that we are allowed to continue optimizing the ensemble classifier after the training error has zeroed, and this is the point when p becomes > 0. The performance of the binary classifier

$$H(s_i) = \text{sign}(\mathcal{H}(s_i))$$

is not affected if we scale the output of the confidence level classifier $H(s)$. That is, we are not interested in the pure output of this classifier, but rather we prefer to compare the output with its potential maximum or minimum value. Therefore, we normalize its output in the following sense

$$\mathcal{H}(s_i) = \frac{1}{\sum_{j=1}^{n} c_i}\sum_{j=1}^{n} c_j w_j(s_i)$$

For convenience, define a second set of parameters $x_j$ so that from now on we will refer to normalized parameters

$$x_j = \frac{c_j}{\sum_{j=1}^{n} c_j}$$

$$x_j \geq 0 \ \forall \ 1 \leq j \leq n$$

And of course, the following holds:

$$\sum_{j=1}^{n} x_j = 1$$

Also we do the following replacement

$$a_{i,j} = l_i \cdot w_j(s_i)$$

and we may think of those values of $a_{i,j}$ arranged in a $m \times n$ matrix **A**

$$\mathbf{A} = \begin{vmatrix} a_{1,1} & a_{1,2} & \cdots & a_{1,n} \\ a_{2,1} & a_{2,2} & \cdots & a_{2,n} \\ \vdots & \vdots & \ddots & \vdots \\ a_{m,1} & a_{m,2} & \cdots & a_{m,n} \end{vmatrix}$$

And finally, using the new variables the optimization problem becomes

$$\begin{aligned} \max_{\mathbf{c}} \rho &= \max_{\mathbf{c}} \min_i \left( l_i \cdot \mathcal{H}(s_i) \right) \\ &= \max_{\mathbf{c}} \min_i \left( l_i \cdot \frac{1}{\sum_{j=1}^{n} c_i} \sum_{j=1}^{n} c_j w_j(s_i) \right) \\ &= \max_{\mathbf{x}} \min_i \left( \sum_{j=1}^{n} l_i w_j(s_i) \cdot x_j \right) \\ &= \max_{\mathbf{x}} \min_i \left( \sum_{j=1}^{n} a_{i,j} \cdot x_j \right) \\ &= \max_{\mathbf{x}} \min_i \mathbf{A}\mathbf{x} \end{aligned}$$

with

$$\sum_{j=1}^{n} x_j = 1 \text{ and } x_j \geq 0, \forall 1 \leq j \leq n$$

Again, we have formulated the problem as a minimax problem which can be solved by the Bluebit algorithm, wherein, e.g., parameters for an ensemble classifier are determined.

Computational boosting applications can be enhanced using the Bluebit algorithm for various applications such as face detection and/or recognition, medical diagnosis, and decision making. The novel Bluebit algorithm described above can be utilized to in various boosting techniques such as those in the following references:

(a) U.S. Patent No. 6,546,379 by Hong et. al. filed Oct. 26, 1999 which discloses additional boosting applications and boosting techniques. In particular this Hong U.S. Patent discloses a method of boosting for predictive models, called cascade boosting, for resolving the interpretability problem of previous boosting methods while mitigating the fragmentation problem when applied to decision trees. The method of cascade boosting always applies a single weak model to any given data point. An improvement to the common method of boosting lies in how weak models are organized in a decision list rather than a weighted average. Cascade boosting resolves the interpretability problem of previous boosting methods while mitigating the fragmentation problem when applied to decision trees. Cascade boosting is simplest when applied to segmented predictive models but may also be applied to predictive models that do not explicitly segment the space of possible data points. The predictive model resulting from cascade boosting has fewer rules, or tree leaves, thereby enabling a modeler to better understand the correlations among the data. Subject matter of U.S. Patent No. 6,546,379 is provided in Appendix J hereinbelow;

(b) U.S. Patent No. 7,099,505 by Li et. al. filed Nov. 3, 2005, which described in detail in Appendix C hereinbelow, discloses a boosting learning procedure to which the novel Bluebit algorithm is applicable as described hereinabove. In particular, the combination of the disclosure of U.S. Patent No. 7,099,505 together with the use of the Bluebit algorithm provides a highly efficient method for face detection. Moreover, this combination is also applicable to various other technical areas including: text classification, image retrieval, document routing, online learning and medical diagnosis classification problems;

(c) U.S. Patent Application No. 2007/0053563 by Tu et. al. filed Mar. 2, 2006 which is directed to image detection and classification may utilize the steps of Fig.3 wherein the input evaluations of step 304 may be a matrix containing the success/failure data of each weak classifier for each sample in binary 0/1 form, and the output approximations of step 312 may be the weights for combining the weak classifiers as described in paragraph [0035] of the application by Tu et. al.;

(d) U.S. Patent Application No. 2003/0110147 by Li et. al. filed Mar. 4, 2002 which is directed to a statistical learning procedure for, e.g., detection of faces, speech recognition, text classification, image retrieval, document routing, online learning, and medical diagnosis. In particular, the steps of Fig.3 may be used in conjunction with this statistical learning procedure wherein, e.g:, the input evaluations of step 304 may be a $m \times n$ matrix **A** with elements $a[i,j]$ where $a[i,j]$ equals to 1 if weak classifier $j$ predicts correctly for the sample $i$ and equals 0 elsewhere, and the output approximations of step 312 may be: (i) **x\*** a list of weights by which the weak classifiers are combined in order to form the ensemble classifier (in case any of the weights equals to zero, the weak classifier is excluded), and (ii) **y\*** weights assigned to the sample set which can be used for training additional classifiers or retraining the included classifiers.

**Solving LP Problems**

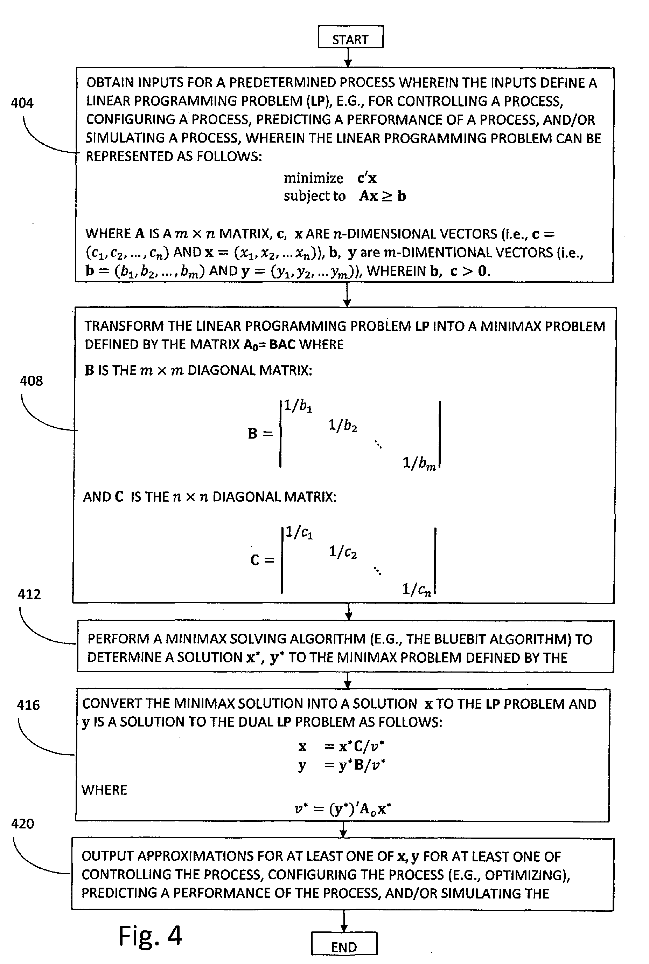

The present minimax algorithm may be also used in efficiently implementing a method for solving linear programming problems as shown, e.g., in the flowchart of Fig. 4. However, prior to describing how the novel minimax method can be used for solving LP problems, additional technical background material is provided in the following Transforming Minimax to LP Problems section.

*Transforming Minimax to LP Problems*

Traditional methods of solving minimax problems involve the transformation of the minimax problem to a Linear Programming (LP) problem. The resulting LP problem is then solved either by the Simplex method or by using an interior point method such as the Karmarkar's algorithm as one of ordinary skill in the art will understand.

Let's consider a $m \times n$ matrix **A**. We are asked to find, wherein the probability vectors **x, y** are to be determined such that:

$$\max_{x \in \mathcal{X}} \min_{y \in \mathcal{Y}} \mathbf{y}'\mathbf{Ax} = \min_{y \in \mathcal{Y}} \max_{x \in \mathcal{X}} \mathbf{y}'\mathbf{Ax} \qquad (2.1)$$

Let $v$ be the game value. Then

$$\gamma^* = \max_{1 \leq j \leq n}(\mathbf{y}^*)'\mathbf{A} = v = \min_{1 \leq i \leq m} \mathbf{Ax}^* = \rho^* \qquad (2.2)$$

Define $e_n = \{1\}^n$, $e_m = \{1\}^m$ as $n$ and $m$ dimensional column vectors with all elements set to 1. Construct the following LP problem:

$$\text{minimize} \quad \mathbf{e}'_n \mathbf{x}_o \qquad (2.3)$$

$$\text{subject to} \quad \mathbf{Ax}_o \geq \mathbf{e}_m \qquad (2.4)$$
$$\mathbf{x}_o \geq \mathbf{0}$$

and its dual problem:

$$\text{maximize} \quad \mathbf{e}'_m \mathbf{y}_o \qquad (2.5)$$

$$\text{subject to} \quad \mathbf{A}'\mathbf{y}_o \leq \mathbf{e}_n \qquad (2.6)$$
$$\mathbf{y}_o \geq \mathbf{0}$$

The solution to the above LP problem and its dual problem will be:

$$\mathbf{e}_n'\mathbf{x}_o = \mathbf{e}_n'\mathbf{y}_o = v_o \qquad (2.7)$$

and because of the constraints in (2.4), the following implication is obtained

$$\mathbf{Ax}_o \geq \mathbf{e}_m \Rightarrow \qquad (2.8)$$

$$\mathbf{Ax}_o/v_o \geq \mathbf{e}_m/v_o \qquad (2.9)$$

Replacing $\mathbf{x} = x_o/v_o$ we get

$$\mathbf{Ax} \geq \mathbf{e}_m/v_o \Rightarrow \qquad (2.10)$$

$$\rho = \min_{1 \le i \le m} \mathbf{A}\mathbf{x} \ge \frac{1}{v_o} \qquad (2.11)$$

and using similar reasoning, the following is obtained

$$\gamma = \max_{1 \le j \le n} \mathbf{y}'\mathbf{A} \le \frac{1}{v_o} \qquad (2.12)$$

Combining (1.11), (2.11) and (2.12), we get

$$\rho = \min_{1 \le i \le m} \mathbf{A}\mathbf{x} = \max_{1 \le j \le n} \mathbf{y}'\mathbf{A} = \gamma \qquad (2.13)$$

At the same time it will be

$$v_o = \mathbf{e}_n'\mathbf{x}_o = \sum_{j=1}^{n} x_{oj} \qquad (2.14)$$

and consequently for $\mathbf{x} = (x_1, x_2, ..., x_n)$, and $\mathbf{x} = x_0/v_0$ from above, we obtain

$$x_j = \frac{x_{oj}}{\sum_{j=1}^{n} x_{oj}} \qquad (2.15)$$

therefore

$$\sum_{j=1}^{n} x_j = 1 \qquad (2.16)$$

and using similar reasoning, the following is obtained

$$\sum_{i=1}^{m} y_i = 1 \qquad (2.17)$$

Thus, we may conclude $\mathbf{x}, \mathbf{y}$ are probability vectors, and also because of (2.13), they provide a minimax solution.

### *Transforming LP to Minimax problems*

In the previous section we described the known method for solving minimax problems via the solution of a LP problem. In this section, a novel technique is disclosed for solving LP problems by converting such problems to minimax problems, and then, e.g., applying the novel minimax solving algorithm described hereinabove.
Define as LP1 the Linear Programming problem:

$$\text{minimize} \quad \mathbf{c'x} \tag{3.1}$$

$$\text{subject to} \quad \mathbf{Ax} \geq \mathbf{b} \\ \mathbf{x} \geq \mathbf{0} \tag{3.2}$$

and DP1 as its dual problem:

$$\text{maximize} \quad \mathbf{b'y} \tag{3.3}$$

$$\text{subject to} \quad \mathbf{y'A} \leq \mathbf{c} \\ \mathbf{y} \geq \mathbf{0} \tag{3.4}$$

where $\mathbf{A}$ is a $m \times n$ matrix, $\mathbf{c}$, $\mathbf{x}$ are n-dimensional vectors (i.e., $c = (c_1, c_2, ..., c_n)$ and $\mathbf{x} = (x_1, x_2, ... x_n)$), $\mathbf{b}$, $\mathbf{y}$ are m-dimensional vectors (i.e., $\mathbf{b} = (b_1, b_2, ..., b_m)$ and $\mathbf{y} = (y_1, y_2, ...y_m)$). We assume that $\mathbf{b}$, $\mathbf{c} > \mathbf{0}$. If any of $b_i$, $c_j$ is negative or zero, then apply a pivot operation so that it becomes positive.

Define B as the $m \times m$ diagonal matrix:

$$\mathbf{B} = \begin{vmatrix} 1/b_1 & & & \\ & 1/b_2 & & \\ & & \ddots & \\ & & & 1/b_m \end{vmatrix} \tag{3.5}$$

Then the constraints in (3.2) can be written as:

$$(\mathbf{BA})\mathbf{x} \geq \mathbf{e}_m \tag{3.6}$$

where again $e_m$ is a m-dimensional vector of 1's. Define the Linear Programming problem LP2 as:

$$\text{minimize} \quad \mathbf{c'x} \tag{3.7}$$

$$\text{subject to} \quad (\mathbf{BA})\mathbf{x} \geq \mathbf{e}_m \\ \mathbf{x} \geq \mathbf{0} \tag{3.8}$$

and DP2 as its dual problem

$$\text{maximize} \quad \mathbf{e}'_m\mathbf{y} \tag{3.9}$$

$$\text{subject to} \quad \mathbf{y'(BA)} \leq \mathbf{c} \\ \mathbf{y} \geq \mathbf{0} \tag{3.10}$$

As one of ordinary skill in the art will understand, if **x** is a solution for LP1, then it will be a solution for LP2 as well. Let $y_1$, $y_2$ be the solutions for DP1 and DP2, respectively. It is easy to see that

$$\mathbf{y_1} = \mathbf{y_2}\mathbf{B} \qquad (3.11)$$

Now define the $n \times n$ diagonal matrix **C** as:

$$\mathbf{C} = \begin{vmatrix} 1/c_1 & & & \\ & 1/c_2 & & \\ & & \ddots & \\ & & & 1/c_n \end{vmatrix} \qquad (3.12)$$

and define $\mathbf{A}_0$ as

$$\mathbf{A_o} = \mathbf{BAC} \qquad (3.13)$$

Define LP3 as the Linear Programming problem:

$$\text{minimize} \quad \mathbf{e}'_n\mathbf{x} \qquad (3.14)$$

$$\text{subject to} \quad \mathbf{A}_o\mathbf{x} \geq \mathbf{e}_m \qquad (3.15)$$
$$\mathbf{x} \geq \mathbf{0}$$

where $e_n$ is a $n$-dimensional vector of 1's, and define DP3 as the dual problem:

$$\text{maximize} \quad \mathbf{e}'_m\mathbf{y} \qquad (3.16)$$

$$\text{subject to} \quad \mathbf{y}'\mathbf{A}_o \leq \mathbf{e}_n \qquad (3.17)$$
$$\mathbf{y} \geq \mathbf{0}$$

Let $x_3$, $y_3$ be the solutions for LP3 and DP3, respectively. They are related to the solutions of the original problems LP1, DP1 by the following equations:

$$\mathbf{x_1} = \mathbf{x_3}\mathbf{C} \qquad (3.18)$$

$$\mathbf{y_1} = \mathbf{y_3}\mathbf{B} \qquad (3.19)$$

In section Transforming Minimax to LP Problems above, we have seen that problems like LP3 are closely related to a minimax problem. Let **x\***, **y\*** be a minimax solution of the matrix $\mathbf{A}_0$ so that

$$\mathbf{y}'\mathbf{A}_o\mathbf{x}^* \;\geq v^* = (\mathbf{y}^*)'\mathbf{A}_o\mathbf{x}^* \geq (\mathbf{y}^*)'\mathbf{A}_o\mathbf{x} \quad \forall \mathbf{x} \in \mathcal{X}, \forall \mathbf{y} \in \mathcal{Y} \qquad (3.20)$$

We have shown hereinabove that $\mathbf{x}^*$, $\mathbf{y}^*$ are connected to $X_3$, $y_3$ by the relations:

$$\mathbf{x}_3 \;= \mathbf{x}^*/v^* \qquad (3.21)$$

$$\mathbf{y}_3 \;= \mathbf{y}^*/v^* \qquad (3.22)$$

so substituting (3.21) into (3.18), and substituting (3.22) into (3.19) results in

$$\mathbf{x}_1 \;= \mathbf{x}^*\mathbf{C}/v^* \qquad (3.23)$$

$$\mathbf{y}_1 \;= \mathbf{y}^*\mathbf{B}/v^* \qquad (3.24)$$

where

$$v^* = (\mathbf{y}^*)'\mathbf{A}_o\mathbf{x}^* \qquad (3.25)$$

Therefore, we conclude that in order to solve a LP problem as defined in (3.1)-(3.2) and its dual as defined in (3.3)-(3.4), we first define matrices $\mathbf{B}$ and $\mathbf{C}$ as in (3.5) and (3.12), and the matrix $\mathbf{A}_0 = \mathbf{BAC}$. Then we compute a minimax solution $\mathbf{x}^*$, $\mathbf{y}^*$ for matrix $\mathbf{A}_0$, and we then retrieve the solutions for the original problems LP1 and DP1 by (3.23), (3.24) and (3.25).

Accordingly, the above disclosed technique for transforming a linear programming problem into a minimax problem provides the advantage that the highly efficient Bluebit algorithm may be used to efficiently solve large linear programming problems. In particular, Fig. 4 provides a flowchart for transforming a linear programming problem into a minimax problem, and then solving the minimax problems for thereby obtaining a solution to the linear programming problem.

The application areas for which this technique may be applied are too numerous to fully list since linear programming techniques are widely used throughout engineering. In particular, linear programming problems have been or can be formulated for substantially any plurality of constraints that are (or can be reasonably approximated) by linear functions of the problem's parameters. Thus, linear programming problems can be formulated for various applications such as (a) configuration problems (e.g., configuring resource allocation problems for manufacturing), (b) to perform prediction analysis (e.g., network failure predictions), and/or (c) to perform simulations (e.g., financial portfolio simulations). Such linear programming problems can occur in any of the applications described above regarding minimax applications. Indeed, the present disclosure demonstrates the computational equivalence between minimax problems and linear programming programs in that either type of problem can be solved by formulating and solving a corresponding one of the other of a minimax or linear programming problem. Thus, the above described conversion technique for solving a linear programming problem by converting it to a minimax problem and then using minimax solution techniques (e.g., the steps of Fig. 3) can be applied where, e.g.,

    (a) There is a physical system having a plurality physical constraints to be satisfied, e.g.,

        (i) Find and display on a computer display the least expensive combination of foods that will satisfy predetermined nutritional requirements, and display on a computer display the determined combination for viewing by a user;;
        (ii) Minimize the risk in an investment portfolio subject to achieving a certain return, and display on a computer display the determined allocation funds within the portfolio;
        (iii) Optimize scheduling having various constraints (e.g., flight schedules as further described below), and display on a computer display the determined schedule for viewing by a user;

(iv) Optimize the types of products produced (e.g., a producer may be capable of producing a plurality of different products from similar production facilities, and it is desirable to optimize the revenue received from these various products while at the same time reducing production expense and/or waste), and display on a computer display the optimized configuration for viewing by a user;

(v) Optimize the assignment of each of n facilities to one of n locations so that the total transportation cost of the flow of materials between the n facilities is minimized, and display on a computer display the determined optimized assignment for viewing by a user.

(b) A prediction or simulation of a physical system for display on a computer display for viewing by a user, e.g.,

(i) Analysis of investment markets, network bandwidth allocation, advanced purchase and storage of a material to offset future potential price increases of the material);

(ii) Failure prediction such as in U.S. Patent No. 6,714,893 by Busche et. al. filed Feb. 15, 2002 (subject matter of U.S. Patent No. 6,714,893 is provided in Appendix G hereinbelow), wherein data is fed into an optimization module that assesses the efficiency of a failure process such that failures can be assessed as to their priority. These priorities are then used to feed a triggering engine that triggers notification of systems and individuals using narrowcasting technology. This system is one that allows early warning of potential problems occurring and integrates data from call centers, legacy systems, retailers, manufacturers, vendor supplied parts, and transportation of parts. In performing the steps of the flowchart of Fig. 4 to practice the method and system disclosed in U.S. Patent No. 6,714,893, the input for step 404 may be the inputs of the weighting engine 426 as described in the Busche patent and the output of step 420 may be solutions to the required optimization.

An extensive bibliography of linear programming applications may be found in "Quantitative Methods for Business", 6th ed. (St. Paul, Minn.: West Publishing Company, 1995) by David Anderson, Dennis Sweeney, and Thomas Williams which is fully incorporated herein by reference. However, to be more specific, it is believed that the linear programming problems disclosed in the following references provide examples of applications that may benefit from conversion to minimax problems:

(1) U.S. Patent No. 7,305,641 by Tang filed Jan. 12, 2005 (subject matter of U.S. Patent No. 7,305,641 is provided in Appendix H hereinbelow), and which discloses a method and a system for redistributing white space on an integrated circuit. The method comprises the steps of providing a series of circuit blocks for the integrated circuit, and placing the blocks on the integrated circuit to obtain a predefined optimal wire length. In accordance with the preferred embodiment, it is shown that the problem of placing the blocks to obtain an optimal wire length, can be formulated as linear programming problem. In performing the steps of the flowchart of Fig. 4 to practice the method and system disclosed in U.S. Patent No. 7,305,641, the input for step 404 may be the linear programming problem described by equations (3), (4), (5), (6) and (9) of the Tang patent, and the output of step 420 may be the parameters $\lambda_i$ related to the wire lengths in the this Tang patent.

(2) U.S. Patent No. 7,301,615 by Fukagawa filed Jan. 25, 2007 (subject matter of U.S. Patent No. 7,301,615 is provided in Appendix I hereinbelow), and which discloses an optical apparatus which includes an image forming optical system having a movable optical element, and a driving mechanism configured to move the optical element. The apparatus includes a first block which measures a wavefront aberration of the optical system. A second block obtains a linear evaluation value of an aberration expressed by a linear function of a position of the movable optical element out of aberrations of the optical system, and a quadratic evaluation value of a square of a root mean square of the wavefront aberration measured by the first block expressed by a quadratic function of the position. A third block uses a dummy variable as an upper limit value of the linear evaluation value and obtains a minimum value of the dummy variable by a Linear Programming. A fourth block determines a position of the optical element to be moved by the driving mechanism. In performing the steps of the flowchart of Fig. 4 to practice the method and system disclosed in U.S. Patent No. 7,301,615, the input for step 404 may be the linear program defined by equations (10), (11), (12), (13) therein, and the output of step 420 may be the minimized variable t and the adjustment amounts $x_k$ of respective components as described in this Fudagawa patent.

(3) Appendix D hereinbelow describes U.S. Patent No. 7,301,341 by Hargreaves et. al. filed Oct. 8, 2003 and which discloses a time-optimal MRI gradient design method that utilizes constrained optimization to design minimum-time gradient waveforms that satisfy gradient amplitude and slew-rate limitations. Constraints are expressed as linear equations which are solved using linear programming. In performing the steps of the flowchart of Fig. 4 to practice the method and system disclosed in U.S. Patent No. 7,301,341 and Appendix D, the input for step 404 may be the linear program defined by equations (10), (11), (12) of Appendix D, and the output of step 420 may be the values for the $H_x[n]$ and $S_x[n]$ variables of this Hargreaves patent.

(4) The United States Air Force's Military Airlift Command (MAC) uses approximately 1,000 planes (of varying capacity, speed, and range) to ferry cargo and passengers among more than 300 airports scattered around the world. Resource constraints, such as the availability of planes, pilots, and other flight personnel, place limitations or constraints on the capacity of the airlift system. Additionally, MAC. must determine whether it is more efficient to reduce cargo and top off the fuel tanks at the start of each flight or to refuel at stops along the way and pay for the costs of shipping fuel. The airlift system also requires that cargo handlers and ground crews be available to service the aircraft. Furthermore, schedulers must be able to deal with disruptions caused by bad weather and emergency changes in shipping priorities. Adding just a couple of percentage points to the efficiency of the airlift system can save the Air Force millions of dollars annually in equipment, labor, and fuel costs. Major commercial airlines, such as American and United, face similar scheduling problems. Complex resource-allocation problems such as these can be solved using linearprogramming techniques. *Business Week,* 21 September 1987, pp. 69-76, and 13 March 1989, p. 77.

The foregoing discussion has been presented for purposes of illustration and description. The description is not intended to limit the disclosure and claims supported therefrom to the form and content disclosed herein. In particular, variation and modification commiserate with the above teachings, within the skill and knowledge of the relevant art, are within the scope of the present disclosure. Further, the embodiments described hereinabove are further intended to explain the best mode presently known of practicing each invention recited in the claims hereinbelow, and to enable others skilled in the art to utilize the disclosure herein, or other embodiments thereof, and with the various modifications required by their particular application or uses of the present disclosure.

# Appendix A

We have used Mathematica for coding the Bluebit Algoritm. The first listing following shows the source code that generated the graph in Fig. 1.

```
SeedRandom[0];
m = 100;
n = 100;
A = Table[Random[], {m}, {n}];
amax = Max[A];
amin = Min[A];
A = (A - amin) / (amax - amin);
x = Table[N[1/n], {n}];
y = Table[N[1/m], {m}];
g = y.A;
Y = Max[g];
ymin = Y;
h = A.x;
p = Min[h];
pmax = p;
v = (ymin + pmax) / 2;
T = 1000;
GP1 = Table[0.0, {T}];
GP2 = Table[0.0, {T}];
For[t = 1, t ≤ T, t++,
    dx = UnitStep[g - v] * (g - v);
    dx = dx / Total[dx];
    d = (Y - p);
    x = (1 - d) * x + d * dx;
    h = A.x;
    p = Min[h];
    If[p > pmax, pmax = p; Xo = x; v = (ymin + pmax) / 2];
    dy = UnitStep[v - h] * (v - h);
    dy = dy / Total[dy];
    d = (Y - p);
    y = (1 - d) * y + d * dy;
    g = y.A;
    Y = Max[g];
    If[Y < ymin, ymin = Y; Yo = y; v = (ymin + pmax) / 2];
    GP1[[t]] = (ymin - pmax);
    GP2[[t]] = 1 / t;
];
Print["Duality Gap=", ymin - pmax]
Show[
ListPlot[GP1, PlotJoined → True, DisplayFunction → Identity,
    PlotStyle → {RGBColor[1, 0, 0]}],
ListPlot[GP2, PlotJoined → True, DisplayFunction → Identity,
    PlotStyle → {RGBColor[0, 0, 1]}],
DisplayFunction → $DisplayFunction, AxesLabel → {"Iter. T", "Duality Gap"}]
Export["Graph1.pdf", % ]
```

## The next listing generates Table 1

```
sizes = {10, 50, 100, 250, 500, 750, 1000, 1250, 1500}
SeedRandom[0];
For[size = 1, size ≤ 9, size++,
 m = sizes[[size]];
 n = sizes[[size]];
 en = Table[1.0, {n}];
 em = Table[1.0, {m}];
 A = Table[Random[], {m}, {n}];
 T = 1000;
 bluebit1 = Timing[
    amax = Max[A];
    amin = Min[A];
    A = (A - amin) / (amax - amin);
    x = Table[N[1 / n], {n}];
    y = Table[N[1 / m], {m}];
    g = y.A;
    γ = Max[g];
    γmin = γ;
    h = A.x;
    ρ = Min[h];
    ρmax = ρ;
```
$$v = \frac{\gamma min + \rho max}{2};$$
```
    For[t = 1, t ≤ T, t++,
     dx = UnitStep[g - v] * (g - v);
     dx = dx / Total[dx];
     d = (γ - ρ);
     x = (1 - d) * x + d * dx;
     h = A.x;
     ρ = Min[h];
```
$$If[\rho > \rho max, \rho max = \rho; Xo = x; v = \frac{\gamma min + \rho max}{2}];$$
```
     dy = UnitStep[v - h] * (v - h);
     dy = dy / Total[dy];
     d = (γ - ρ);
     y = (1 - d) * y + d * dy;
     g = y.A;
     γ = Max[g];
```
$$If[\gamma < \gamma min, \gamma min = \gamma; Yo = y; v = \frac{\gamma min + \rho max}{2}];$$
```
    ];
 ][[1]];
```

```
T = 10000;
bluebit2 = Timing[
     amax = Max[A];
     amin = Min[A];
     A = (A - amin) / (amax - amin);

     x = Table[N[1/n], {n}];
     y = Table[N[1/m], {m}];

     g = y.A;
     γ = Max[g];
     γmin = γ;
     h = A.x;
     ρ = Min[h];
     ρmax = ρ;
     v = (γmin + ρmax) / 2;

     For[t = 1, t ≤ T, t++,

     dx = UnitStep[g - v] * (g - v);
     dx = dx / Total[dx];
     d = (γ - ρ);
     x = (1 - d) * x + d * dx;
     h = A.x;
     ρ = Min[h];
     If[ρ > ρmax, ρmax = ρ; Xo = x; v = (γmin + ρmax) / 2];

     dy = UnitStep[v - h] * (v - h);
     dy = dy / Total[dy];
     d = (γ - ρ);
     y = (1 - d) * y + d * dy;
     g = y.A;
     γ = Max[g];
     If[γ < γmin, γmin = γ; Yo = y; v = (γmin + ρmax) / 2];

     ];
     ][[1]];

simplex = Timing[
     LinearProgramming[en, A, em]
     ][[1]];
Print["size=", m, "  simplex=", simplex, "  bluebit1=", bluebit1, "  bluebit2=",
  bluebit2];
]
```

This listing generates the graph of Fig. 2

```
sizes = {50, 100, 250, 500, 750, 1000, 1250, 1500, 1750, 2000}
cnt = Length[sizes];
SeedRandom[0];
points = Table[0.0, {cnt}, {2}];
For[size = 1, size ≤ cnt, size++,
 m = sizes[[size]];
 n = sizes[[size]];
 A = Table[Random[], {m}, {n}];
 T = 1000;
 points[[size, 1]] = sizes[[size]];
 points[[size, 2]] = Sqrt[Timing[
     amax = Max[A];
     amin = Min[A];
     A = (A - amin) / (amax - amin);
     x = Table[N[1/n], {n}];
     y = Table[N[1/m], {m}];
     g = y.A;
     γ = Max[g];
     γmin = γ;
     h = A.x;
     ρ = Min[h];
     ρmax = ρ;
           γmin + ρmax
     v = ─────────────── ;
                2
     For[t = 1, t ≤ T, t++,
      dx = UnitStep[g - v] * (g - v);
      dx = dx / Total[dx];
      d = (γ - ρ);
      x = (1 - d) * x + d * dx;
      h = A.x;
      ρ = Min[h];
                                        γmin + ρmax
      If[ρ > ρmax, ρmax = ρ; Xo = x; v = ───────────── ];
                                             2
      dy = UnitStep[v - h] * (v - h);
      dy = dy / Total[dy];
      d = (γ - ρ);
      y = (1 - d) * y + d * dy;
      g = y.A;
      γ = Max[g];
                                          γmin + ρmax
      If[γ < γmin, γmin = γ; Yo = y; v = ───────────── ];
                                              2
     ];
     ][[1]] /. Second → 1];
]
ListPlot[points, PlotJoined → True, AxesLabel → {"Matrix Size", "Sqrt Seconds"}]
```

# APPENDIX B

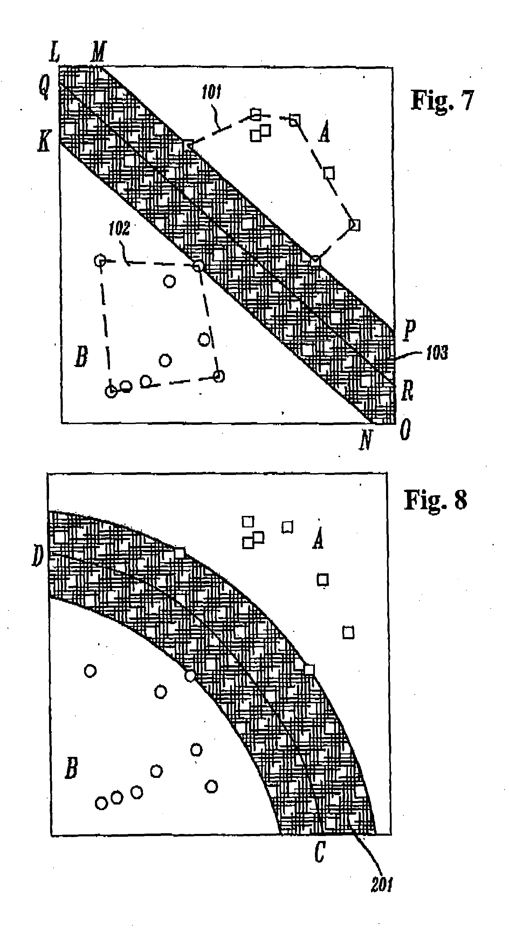

The labeling of items in this Appendix B apply only to Figs. 7 through 11.

The main objective of a learning machine is to learn to recognize as well as possible an unknown pattern. given a set of training examples. Of particular importance in the learning process for a learning machine is the method of deriving a decision function based on the training examples, in order to distinguish representatives of one class from representatives of another class. The derived decision function can be used to recognize unknown patterns.

The ability of a decision system to perform well a particular task depends on several factors such as, the number of examples in the training set, the number of errors in the training set and the complexity of the classifier. Prior art decision systems are predicated on two major approaches, each one with particular limitations and drawbacks.

In an approach called the optimal margin approach, a learning machine determines a decision function which is a weighted sum of the components of the input patterns or a weighted sum of arbitrary predefined functions of the input patterns (e.g. Perceptrons and polynomial classifiers). The weights are determined such that a) the number of training patterns that are misclassified by an optimal margin decision system is minimized, and b) the margin between the correctly classified training patterns and the decision boundary is maximized. The margin is defined as the distance of the closest training patterns to the decision boundary. The weights that optimize the margin are a function of only a subset of all training patterns, called the "supporting patterns". The latter are patterns that are closest to the decision boundary.

The capacity of a decision system using the optimal margin approach or, more specifically, the ability of such a system to solve complex problems is restricted by the number of predefined functions. Accordingly, the number of predefined functions had to be limited for computational reasons, hence, limiting the range of applications of decision systems using the optimal margin approach.

In another approach called "memory-based decision approach" prior art decision systems were designed to allow decision functions (e.g. Radial Basis functions, Potential functions) to be represented by a weighted sum of kernel functions, each kernel function being itself a function of two patterns, namely, an input pattern and a memorized pattern (also called "memory" or "prototype"). In this approach, however, prototype patterns and weights are determined in a suboptimal way, thereby limiting the ability of the decision system to perform complex tasks.

The present embodiment is directed to a method which a) takes advantage of the dual representation mathematical principle which permits some decision functions that are weighted sums of arbitrary predefined functions to be represented as memory-based decision function and vice versa, and b) allows design of memory-based decision systems with optimum margin in which weights and prototypes of training patterns of a memory-based decision function are determined such that the corresponding dual decision function satisfies the criterion of margin optimality.

In an embodiment of the principles of the present embodiment, input data that may be represented, for example, by a set of vectors in n-dimensional space, are classified with decision rules that may be graphically represented by non-linear decision surfaces. In accordance with the present embodiment, the classification is facilitated by transforming the input patterns to a new space using, for example, convolution of dot products, for linear separation by at least one optimal hyperplane represented by a decision function in the

transformed space. According to one aspect of the present embodiment, during the training process, training patterns or dot-product-transformed training patterns that are unused to determine the decision function, are identified and removed to allow the training process to be restarted with the remaining training patterns.

In a specific example implementing the principles of the present embodiment, a processor, such as a UNIX workstation includes a memory which stores training patterns data which may be for example, bit-mapped pixel images data, and a classification program which is designed to associate input data (received by the workstation) with a specific class. This association is achieved by automatically attributing to the same class all the patterns that are on the same side of the optimal hyperplane (or hyperplanes) in the transformed space.

According to one of the aspects of the present embodiment optimal decision hyperplane(s) is identified by simultaneously a) identifying support vectors from the training patterns data, and b) assigning weights to the support vectors through the mapping of the training patterns data into high dimension feature space. The steps described in a) and b) are performed jointly by a computer program in a manner that achieves correct classification of the training patterns while leaving the largest possible margin between the training patterns and the decision hyperplane in the feature space. Thus, input data received by the workstation from a source are classified in that workstation to allow the resulting classified data to be delivered to an output device. As a result, training patterns are assigned to the correct side of the decision hyperplane and as far as possible from the decision hyperplane in the feature space. It is mathematically provable that an automatic classification system built according to that principle has high probability to perform better than other systems on any particular classification task (such as speech or handwriting recognition).

Advantageously, the present embodiment permits to build rapidly such an automatic classification system on a computer, given training patterns and regardless of the high dimension of selected feature space.

Advantageously, decision systems that are equivalent to linear classifiers in large multidimensional space, $(10^{12}, 10^{16}$ dimensions), can be derived using a small amount of supporting patterns. Thus, decision systems of arbitrary capacity with both good speed and classification accuracy can be obtained. For example, polynomial decision functions of any order can be optimally selected. Furthermore, the number of computations required to classify patterns is only proportional to the number of supporting patterns and the number of inputs to the system when the kernel functions are properly selected.

FIG. 7 shows a decision system in which two classes in a training set are linearly separated by a decision boundary. FIG. 7 graphically illustrates a training set and a linear decision boundary which yields the best generalization performance. FIG. 7 is presented in this example to facilitate a better understanding of the optimal margin technique that is used in the decision system of the invention. Shown in FIG. 7 is a training set extracted from two classes A and B. The training examples from class A are illustrated in small rectangular blocks while the training examples from class B are represented by small circles. The area 103 that is delimited by KLMNOP represents the largest possible margin between the decision boundary QR and the training patterns on either side. That margin provides the best generalization performance for a classifier trained with the training set of FIG. 7, as proved mathematically in further detail below. Graphically, this statement appears intuitively justifiable since a new example from class A is likely to fall within or near the convex envelope 101 of the examples of class A (and similarly for class B). By providing the largest possible "safety" margin, the chances are minimized that examples from class A and B cross the border to the wrong side.

An important property of the maximum margin solution is that it is only dependent upon a restricted number of training examples, called supporting patterns (or informative patterns). In FIG. 7, the supporting patterns as represented by those examples that lie on the margin and, therefore, are closest to the decision boundary. The number m of linearly independent supporting patterns satisfies the inequality: $m \leq min(N+1,p)$. In this equation, (N+1) is the number of adjustable parameters and equals the well-known Vapnik-Chervonenkis dimension (VC-dimension), and p is the number of training examples. The generalization error is bounded by m/p and, therefore, m is a measure of the complexity of the learning problem. Because m is bounded by p and is generally a lot smaller than p, the maximum margin solution obtains good generalization even when the problem is grossly underdetermined, i.e. the number of training patterns p is much smaller than the number of adjustable parameters, N+1. As described in further detail below, the existence of supporting patterns is advantageous for computational reasons as well.

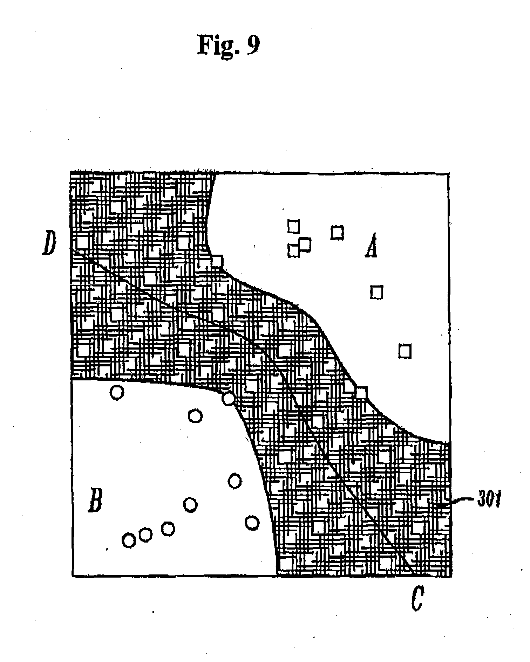

FIGs. 8 and 9 show examples of decision boundaries obtained by using the memory-based maximum margin technique. The decision boundaries shown in FIGs. 8 and 9 are derived (as explained in further detail below) by mapping the examples in set A and B to another space. FIG. 8 is an illustration of a second order polynomial decision boundary while FIG. 9 is an illustration of a Radial Basis Function decision boundary. The rainbow-shaped area 201 shown in FIG. 8 and the criss-crossed area of FIG. 9 represent the margin area 301 projected into the input space. The method of deriving the decision functions that yield the optimal margins in FIGs. 7, 8, and 9 are explained immediately below.

An optimal margin decision system designed in accordance with the invention, finds a decision function for pattern vectors x of dimension n belonging to either of two classes A and B. The input to the decision system is a set of p examples $x_i$ with labels $y_i$

$$(x_1,y_1),(x_2,y_2),(x_3,y_3), \ldots , (x_p,y_p)$$

where

$$y_k=1 \text{ if } x_k \in class\ A$$
$$y_k=-1 \text{ if } x_k \in class\ B \qquad\qquad (1)$$

From these training examples the decision system finds the parameters of the decision function D (x) during a learning phase. After training, the classification of unknown patterns is predicted according to the following rule:

$$x \in A \text{ if } D(x)>0$$
$$x \in B \text{ otherwise.} \qquad\qquad (2)$$

The equation D(x)=0 determines the decision boundary. The decision functions must be linear in their parameters but are not restricted to linear dependencies of x. These functions can be expressed either in direct, or in dual space. The direct space notation is identical to the Perceptron decision function:

$$D(x) = \sum_{i=1}^{N} w_i\phi_i(x) + b. \qquad\qquad (3)$$

In this equation the $\phi_i$ are predefined functions of x, and the $w_i$ and b are the adjustable parameters of the decision

function. Polynomial classifiers are a special case of Perceptrons for which $\phi_i(x)$ are products of components of x. In the dual space, the decision functions are of the form

$$D(x) = \sum_{k=1}^{p} \alpha_k K(x_k, x) + b \qquad (4)$$

The coefficients $\alpha_k$ are the parameters to be adjusted and the $x_k$ are the training patterns. The function K is a predefined kernel which can be, for example, a potential function or any Radial Basis Function Under certain conditions, symmetric kernels possess finite or infinite series expansions of the form $K(x, x') = \sum_i \phi_i(x)\phi_i(x').$ (5)

In particular, the kernel $K(x, x') = (x \cdot x' + 1)^q$ corresponds to a polynomial expansion $\phi b(x)$ of order q. Other examples of kernel functions include

$$K(x, x') = \tanh(\gamma x \cdot x')$$
$$K(x, x') = \exp(\gamma x \cdot x') - 1$$
$$K(x, x') = \exp(-\|x - x'\|^2/\gamma)$$
$$K(x, x') = \exp(-\|x - x'\|/\gamma)$$
$$K(x, x') = (x \cdot x' + 1)^q \exp(-\|x - x'\|/\gamma)$$

Of particular importance in these examples is the fact that those kernel functions can be evaluated with a number of computations proportional to the number n of inputs that is the dimension of vector x.

Provided that the expansion stated in Equation (5) exists, Equations (3) and (4) are dual representations of the same decision function and

$$w_i = \sum_{k=1}^{p} \alpha_k \phi_i(x_k), \qquad (6)$$

The parameters $w_i$ are called direct parameters, and the $\alpha_k$ are referred to as dual parameters.

In this embodiment, this decision system is extended to train classifiers linear in their parameters. First, the margin between the class boundary and the training patterns is formulated in the direct space. This problem description is then transformed into the dual space by means of the Lagrangian. The resulting problem is that of maximizing a quadratic form with constraints and is amenable to efficient numeric optimization decision system.

In order to maximize the margin in the direct space, the decision function is expressed as:

$$D(x) = w \cdot \phi(x) + b \qquad (7)$$

where w and $\phi(x)$ are N dimensional vectors and b is a bias. That decision function defines a separating hyperplane in $\phi$-space. The distance between this hyperplane and pattern $D(x)/\|w\|$. Assuming that a separation of the training set with margin M between the class boundary and the training patterns exists, all training patterns fulfill the following inequality:

$$\frac{y_k D(x_k)}{\|w\|} \geq M \qquad (8)$$

51

The objective of the decision system is to find the parameter vector w that maximizes M:

$$M^* = \max_{w, \|w\|=1} M \tag{9}$$

subject to: $y_k D(x_k) \geq M,\ k=1,2,\ldots,p.$

The bound $M^*$ is attained for those patterns satisfying

$$\min_k y_k D(x_k) = M^*. \tag{10}$$

These patterns are called the supporting patterns of the decision boundary.

The problem of finding a hyperplane in $\phi$-space with maximum margin is therefore a minimax problem of the form

$$\max_{w, \|w\|=1} \min_k y_k D(x_k). \tag{11}$$

The norm of the parameter vector in equations 9 and 11 is fixed to pick one of an infinite number of solutions that differ only in scaling. Instead of fixing the norm of w to take care of the scaling problem, the product of the margin M and the norm of a weight vector w can be fixed.

$$M\|w\|=1. \tag{12}$$

Thus, maximizing the margin M is equivalent to minimizing the norm $\|w\|$. If the training data are not linearly separable, the maximum margin may be negative. In this case, $M\|w\| = -1$ is imposed. Maximizing the margin is then equivalent to maximizing $\|w\|$. If the training data are linearly separable, the problem of finding a maximum margin separating hyperplane $w^*$ stated in Equation (9) reduces to solving the following quadratic problem:

$$\min_w \|w\|^2 \tag{13}$$

under conditions $y_k D(x_k) \geq 1,\ k=1,2,\ldots,p.$
The maximum margin is $M^* = 1/\|w^*\|.$

In principle the problem stated in Equation 13 can be solved directly with numerical techniques. However, this approach is impractical when the dimensionality of the $\phi$-space is large or infinite. Moreover, no information is gained about the supporting patterns.

The problem of Equation (13) can be transformed into the dual space by means of the Lagrangian

$$L(w,b,\alpha) = \frac{1}{2}\|w\|^2 - \sum_{k=1}^{p} \alpha_k [y_k D(x_k) - 1] \tag{14}$$

subject to $\alpha_k \geq 0,\ k=1,2,\ldots,p.$ The factors $\alpha_k$ are called Lagrange multipliers or Kuhn-Tucker coefficients and satisfy the conditions

$$\alpha_k(y_k D(x_k)-1)=0, \quad k=1,2,\ldots,p. \tag{15}$$

The factor one half has been included for cosmetic reasons; it does not change the solution.

The optimization problem of Equation 13 is equivalent to searching a saddle point of the function $L_{(w, b, \alpha)}$. This saddle point is the minimum of $L_{(w, b, \alpha)}$ with respect to w, and a maximum with respect to $\alpha(\alpha_k \geq 0)$ At the solution, the following necessary condition is met:

$$\frac{\partial L}{\partial w}=w^* - \sum_{k=1}^{p} \alpha_k^* y_k = 0,\tag{16}$$

hence

$$w^* = \sum_{k=1}^{p} \alpha_k^* y_k \phi_k.$$

The patterns which satisfy $y_k D(x_k)=1$ are the supporting patterns. According to equation 16 the vector $w^*$ that specifies the hyperplane with maximum margin is a linear combination of only the supporting patterns, which are those patterns for which $\alpha_k^* \neq 0$. Usually the number of supporting patterns is much smaller than the number p of patterns in the training set.

The dependence of the Lagrangian $L(w, b, \alpha)$ on the weight vector w is removed by substituting the expansion of $w^*$ given by Equation 16 for w. Further transformations result in a Lagrangian which is a function of the parameters $\alpha$ and the bias b only:

$$J(\alpha,b)= \sum_{k=1}^{p} \alpha_k(1-by_k) - \frac{1}{2}\, \alpha \cdot H \cdot \alpha \tag{17}$$

subject to $\alpha_k \geq 0, k=1, 2\ldots, p$. Here H is a square matrix of size $p \times p$ with elements $H_{kl} y_k y_l K(x_k x_l)$ In order for a unique solution to exist, H must be positive definite. For fixed bias b, the solution $\alpha^*$ is obtained by maximizing $J(\alpha, b)$ under the conditions $\alpha_k \geq 0$. Based on equations 7 and 16, the resulting decision function is of the form

$$D(x)=w^* \cdot \phi(x)+b = \sum_k y_k \alpha_k^* K(x_k x)+b \cdot \alpha_k^* \geq 0, \tag{18}$$

where only the supporting patterns appear in the sum with nonzero weight.

The choice of the bias b gives rise to several variants of the decision system. Two variants are considered in this embodiment. In the first variant, the bias can be fixed a priori and not subjected to training. In the second variant, the function represented by Equation 17 can be optimized with respect to w and b. This approach gives the largest possible margin $M^*$.

In both cases the solution is found with standard nonlinear optimization decision system for quadratic forms with linear constraints. The second approach gives the largest possible margin. There is no guarantee, however, that the second solution exhibits also the best generalization performance.

One possible strategy to optimize the margin with respect to both w and b allows Equation 17 to be solved for differences of pattern vectors to obtain $\alpha^*$ independent of the bias, which is computed subsequently. The margin in $\phi$-space is maximized when the decision boundary is halfway between the two classes. Hence the bias $b^*$ is obtained by applying Equation 18 to two arbitrary

supporting patterns $x_A \in$ class A and $x_B \in$ class B and taking into account that

$\bar{D}(x_A)=1$ and $D(x_B)=-1$.

$$b^* = -\frac{1}{2} (w^* \cdot \phi(x_A) + (w^* \cdot \phi(x_B)) \qquad (19)$$

$$= -\frac{1}{2} \sum_{k=1}^{p} y_k \alpha_k^* [K(x_A, x_k) + K(x_B, x_k)].$$

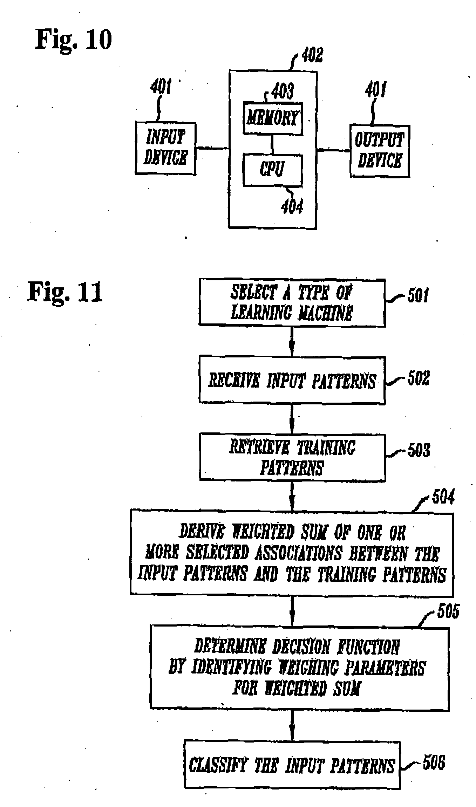

The dimension of problem 17 equals the size of the training set, p. To avoid the need to solve a dual problem of exceedingly large dimensionality, the training data is divided into chunks that are processed iteratively. The maximum margin hypersurface is constructed for the first chunk and a new training set is formed consisting of the supporting patterns from the solution and those patterns $x_k$ in the second chunk of the training set for which $y_k D(x_k) < 1 - \epsilon$. A new classifier is trained and used to construct a training set consisting of supporting patterns and examples from the first three chunks which satisfy $y_k D(x_k) < 1 - \epsilon$. This process is repeated until the entire training set is separated. In an actual implementation of the principles of the invention, training data are received in the optimal margin classification via input device 401 of FIG. 10 which forwards the training data to processor 402. Input device 401 may be for example, a data reading device, such as a magnetic disk arranged to transfer training data stored therein to processor 402. The latter includes a memory 403 that stores the programmed instructions for the classification system that are illustratively shown in Appendices 1 and 2. Processor 402 may be implemented using, for example a workstation which runs under the UNIX® operating system to execute the programmed instructions in memory 403, using the processing power of Central Processing Unit (CPU) 404 in order to define decision rules for the classification of input data. Upon assigning input data to a particular class, processor 402 forwards the classified data to output device 405 which may be, for example, a display monitor or a processor capable of executing instructions of specialized graphics software to represent a multidimensional hyperplane.

FIG. 11 shows a flow diagram of instructions executed by processor 402 to classify input data. Upon command from a user via input device 401, processor 402, initiates the process contemplated by the invention by selecting a type of learning machine for the classification system, as indicated in step 501. The type of learning machine selected depends on the kernel function picked (high order polynomial or radial basis function, to name a few), and may be, for example, a neural network. Thus, when processor 402 receives in step 502, a set of input patterns from input device 401, processor 402 in step 503, retrieves a set of training patterns contained in memory 403. Thereafter, processor 402 in step 504, derives a weighted sum of one or more selected associations between the input patterns and the training patterns. This association may take the form of the kernel functions described above. In step 505, processor 402 determines the decision function for the classification task by identifying weighting parameters for the weighted sum. These weighting parameters permit processor 402 to identify supporting patterns that are used in the determination of the decision surface. Armed with the identified supporting patterns and the associated wighting parameters, processor 402 then, in step 506, uses the decision function to classify input data received from input device 401.

FIG. 11 shows a flow diagram of instructions executed by processor 402 to classify input data. Upon command from a user via input device 401, processor 402, initiates the process contemplated by the invention by selecting a type of learning machine for the classification system, as indicated in step 501. The type of learning machine selected depends on the kernel function picked (high order polynomial or radial basis function, to name a few), and may be, for example, a neural network. Thus, when processor 402 receives in

step 502, a set of input patterns from input device 401, processor 402 in step 503, retrieves a set of training patterns contained in memory 403. Thereafter, processor 402 in step 504, derives a weighted sum of one or more selected associations between the input patterns and the training patterns. This association may take the form of the kernel functions described above. In step 505, processor 402 determines the decision function for the classification task by identifying weighting parameters for the weighted sum. These weighting parameters permit processor 402 to identify supporting patterns that are used in the determination of the decision surface. Armed with the identified supporting patterns and the associated wighting parameters, processor 402 then, in step 506, uses the decision function to classify input data received from input device 401.

A decision system designed according to the principles of the invention exhibit some interesting properties. Some of these properties are described below.

Since maximizing the margin between the decision boundary and the training patterns is equivalent to maximizing a quadratic form in the positive quadrant, there are no local minima and the solution is always unique if H has full rank. At the optimum

$$J(\alpha^*) = \frac{1}{2} \|w^*\|^2 = \frac{1}{2(M^*)^2} = \frac{1}{2} \sum_{k=1}^{p} \alpha_k^*. \qquad (20)$$

The uniqueness of the solution is a consequence of the maximum margin cost function and represents an important advantage over other decision systems for which the solution depends on the initial conditions or other parameters that are difficult to control.

Another benefit of the maximum margin objective is its insensitivity to small changes of the parameters w or .alpha.. Since the decision function D(x) is a linear function of w in the direct space, and of $\alpha$ in the dual space, the probability of misclassifications due to parameter variations of the components of these vectors is minimized for maximum margin. The robustness of the solution--and potentially its generalization performance--can be increased further by omitting some supporting patterns from the solution. Preferably, a selected subset of supporting patterns can be removed from the training set and the solution recomputed with this newly redefined training set. Equation 20 indicates that the largest increase in the maximum margin M* occurs when the supporting patterns with largest $\alpha_k^*$ are eliminated. The elimination can be performed automatically or with assistance from a supervisor. To facilitate the elimination procedure, patterns can be ranked according to the value of the coefficient $\alpha_k^*$. This feature gives rise to other important uses of the optimum margin decision system in database cleaning applications.

Another property of the decision system of the invention is that the optimum margin decision system performs automatic capacity tuning of the decision function to achieve good generalization. An estimate for an upper bound of the generalization error is obtained with the "leave-one-out" method: A pattern $x_k$ is removed from the training set. A classifier is then trained on the remaining patterns and tested on $x_k$. This process is repeated for all p training patterns. The generalization error is estimated by the ratio of misclassified patterns over p. For a maximum margin classifier, two cases arise. In the first case if $x_k$ is not a supporting pattern, the decision boundary is unchanged and $x_k$ will be classified correctly. In the second case, if $x_k$ is a supporting pattern, two possibilities exist. In the first possibility, the pattern $x_k$ is linearly dependent on the other supporting patterns. In this case it will be classified correctly. In the second possibility, $x_k$ is linearly independent from the other supporting patterns. In this case the outcome is

uncertain. In the worst case m' linearly independent supporting patterns are misclassified when they are omitted from the training data.

Hence the frequency of errors obtained by this method is at most m'/p, and has no direct relationship with the number of adjustable parameters. The number of linearly independent supporting patterns m' itself is bounded by min(N,p). This suggests that the number of supporting patterns is related to an effective capacity of the classifier that is usually much smaller than the VC-dimension, N+1.

In polynomial classifiers, for example, $N \approx n^q$, where n is the dimension of x-space and q is the order of the polynomial. In practice, $m \leq p << N$, i.e, the number of supporting patterns is much smaller than the dimension of the $\phi$-space. The capacity tuning realized by the maximum margin decision system is essential to get generalization with high-order polynomial classifiers. In addition, further capacity tuning can be achieved by adjusting certain parameters of the kernel functions. For example, the order q in the polynomial classifier or the parameter .gamma. in the Radial Basis Function can be tuned in order to achieve better classification performance.

Appendices 1 and 2 are computer program listings representing an illustrative implementation of a decision system designed in accordance with the invention. The program in Appendix 1 is written in the generally known C computer language and is used to derive an optimal margin decision function. The program in Appendix 2 is written in LISP and is the user interface for input and output operations. The program in Appendix 1 can be compiled and executed on Sun Microsystems workstations running the well-known UNIX operating system. The LISP program in Appendix 2 requires a learning machine LISP interpreter to be executed.

**Appendix 1**

```
// Block2D.h

#ifndef BLOCK2DH
#define BLOCK2DH


typedef double T;

// template
class Block2D {
    unsigned sz1, sz2;
    T **dms;
public:
    Block2D();
    Block2D(unsigned, unsigned);
    ~Block2D();
    int size1() const { return sz1; }      // # vectors
    int size2() const { return sz2; }      // # elements per vector
    int size(unsigned, unsigned);          // # vectors, elements per vector
    int reserve(unsigned, unsigned);       // # vectors, element per vector
    T& operator()(unsigned i, unsigned j) { return data[i][j]; }
    T* operator[](int i) { return data[i]; }
    operator T**() { return data; }
}; // Block2D

#endif
// Hash.h

#ifndef HASHH
#define HASHH

#include "SPool.h"

// define type here (until templates are available)
struct Key { int id1, id2; };
typedef double Value;

typedef int(*fhash)(const Key);
typedef int(*hequal)(const Key, const Key);

// template
class Hash {
    struct elem {
```

```
    Key key;  Value value;  elem *next;
    elem(Key k, Value v, elem *n) { key = k; value = v; next = n; }
    ~elem() { if (next) delete next; }
    void* operator new(size_t sz) { return alloc(sz); }
    void operator delete(void *p, size_t sz) { free(p, sz); }
  }; // elem
  unsigned m;                    // table size
  elem **tab;                    // hash table tab[m]
  hash hash_func;                // compute hash value from Key
  hequal equal_func;             // compare two Keys for equality
public:
  Hash(hash, hequal, unsigned m = 211);  // primes work better
  ~Hash();                       // remove all allocated space
  void set(Key, Value);          // set/alter entry
  Value *get(const Key);         // get entry (0 if not defined)
  double uniformity(int &n, int &m, int &depth) const;
    // uniformity of usage (1 is best), number entries, size of table
}; // Hash

#endif
// Hyper.h
// B. Boser  1/10/92

#ifndef HYPERH
#define HYPERH

#include "Hash.h"
#include <Block.h>

typedef double Flt;
Blockdeclare(Flt);
typedef Block(Flt) FltVec;
Blockdeclare(Int);
typedef Block(Int) IntVec;

typedef Flt (*sm)(int, int);       // similarity measure function

class SimilarityMeasure {          // calls sm and caches result
  Hash *hash;
  sm k;
public:
  SimilarityMeasure(sm k, unsigned hash_size = 8097);
  ~SimilarityMeasure();
  Flt K(int id1, int id2);
  void hash_statistics(double &uniformity, int &n, int &m, int &d) const;
    // uniformity of usage (1 is best), number entries, size of hash table



}; // SimilarityMeasure

class Hyper {
  SimilarityMeasure *sm;           // similarity function K(xi, xj)
  int lA, lB;                      // size of training data sets
  IntVec patA, patB;               // indices of training data
  int na, nb;                      // number of supporting patterns
  IntVec supA;                     // indices of supporting patterns
  IntVec supB;
  FltVec alphaA;                   // weights for supporting patterns
  FltVec alphaB;                   // weights for supporting patterns
  Flt W, norm_psi;                 // computed by HyperStep
  int debug;                       // 0: no msg, 1: some, 2: verbose
protected:
  void AddA(int id, Flt alpha = 0.001); // add to supA
  void AddB(int id, Flt alpha = 0.001); // add to supB
  void Eliminate(int id);          // eliminate from patA, patB, sup
  int AddSupport(Flt eps);         // add supporting pattern if needed
  int Remove0();                   // remove sup with alpha = 0
  Flt OrderDb(int *id, int n, int ascending = 1); // order acc, psi * x
public:
  Hyper(SimilarityMeasure *sm, int debug = 0);
  int Classifier(Flt eps = 0.1);   // make classifier from pat and sup
  Flt Classify(int idx);           // (psi * x) / norm_psi
  Flt Psi_x(int idx);              // psi times x
  void SetDataBase(int *pA, int lA, int *pB, int lB);
  void SetSupport(int nA, int nB, const int *supA, const int *supB,
                  const Flt *alphaA = 0, const Flt *alphaB = 0);
  void GetSupport(int &nA, int &nB, const int *& supA, const int *& supB,
                  const Flt *& alphaA, const Flt *& alphaB);
  void HyperStep(Flt eps);         // find weights for supA, supB
  Flt *GetAlphaA(int &nA) { nA = na; return alphaA; }
  Flt *GetAlphaB(int &nB) { nB = nb; return alphaB; }
  Flt RohOpt() const;              // sqrt(1/2W)
}; // Hyper

#endif
// Son.h
// B. Boser  1/10/92

#ifndef SORTH
#define SORTH

// 1st argument: number of items to be sorted
// 2nd argument: order ascending (1), descending (0)
// 3rd argument: sort key (sorted inplace)
```

57

```
// 4th and further arguments: sorted inplace according to key

void sort(int n, int ascending, double*, int*);

#endif
// Vector.h
// B. Boser  1/10/92

#ifndef VECTORH
#define VECTORH

typedef double flt;

flt dot(flt *x, flt *y, unsigned n);          // dot product
flt vmv(flt *v, flt **m, unsigned n);         // v[n] * m[n][n] * v[n]
flt tally(flt *v, unsigned n);                // sum of all elements in v
void init(flt *v, unsigned n, flt x = 0);     // initialize all elements

#endif
```

```
// Block2D.c

#include "Block2D.h"

int inline max(int i, int j) {
    return i > j ? i : j;
}; // max

Block2D::Block2D() {
    sz1 = sz2 = 0; data = 0;
}; // Block2D

Block2D::Block2D(unsigned s1, unsigned s2) {
    sz1 = sz2 = 0; data = 0;
    size(s1, s2);
}; // Block2D

Block2D::~Block2D() {
    for (int i=0; i<sz1; i++) delete[] data[i];
    sz1 = sz2 = 0; data = 0;
}; // Block2D

int Block2D::reserve(unsigned s1, unsigned s2) {
    return (sz1 <= s1 || sz2 <= s2) ?
        size(max(20, s1+s1/2), max(20, s2+s2/2)) : 1;
}; // reserve

int Block2D::size(unsigned s1, unsigned s2) {
    typedef T *Tp;
    if (s1 > sz1) {                           // more vectors
        Tp *d = new Tp[s1];
        Tp *src = data, *dst = d;
        for (int i=0; i<sz1; i++) *dst++ = *src++;
        if (s2 > sz2) for (i=sz1; i<s1; i++) *dst++ = 0;
        else for (i=sz1; i<s1; i++) *dst++ = new T[sz2];
        if (data) delete[] data; data = d; sz1 = s1;
    }
    if (s2 > sz2) {                           // more elements per vector
        for (int i=0; i<sz1; i++) {
            T* v = data[i];
            if (v) {
                T *vv = new T[s2];
                T *dst = vv, *src = v;
                for (int j=0; j<sz2; j++) *dst++ = *src++;
                scale T initial;
                for (j=sz2; j<s2; j++) *dst++ = initial;
```

```
        delete[] v;  data[i] = vv;
    } else {
        data[i] = new T[z2];
    }
}; // for
x2 = x2;
}
return 1;
}; // size
// Hash.c
// B. Boser 1/10/92

#include "Hash.h"

Hash::Hash(hash h, hequal e, unsigned num) {
    hash_func = h;  equal_func = e;  m = num;
    typedef elem *elemp;
    tab = new elemp[m];
    elem **p = tab;
    for (int i=0;  i<m;  i++) *p++ = 0;
}; // Hash

Hash::~Hash() {
    for (int i=0;  i<m;  i++) if (tab[i]) delete tab[i];
    delete[] tab;  tab = 0;  m = 0;
}; // ~Hash

void Hash::set(Key k, Value v) {
    unsigned h = hash_func(k) % m;
    elem *p = tab[h];
    while (p) {
        if (equal_func(k, p->key)) {
            p->value = v;  return;
        }
        p = p->next;
    }; // while
    tab[h] = new elem(k, v, tab[h]);
}; // set

Value* Hash::get(const Key k) {
    elem *p = tab[hash_func(k) % m];
    while (p) {
        if (equal_func(k, p->key)) return &(p->value);
        p = p->next;
    }
    return 0;


}; // get

double Hash::uniformity(int &nn, int &num, int &max_depth) const {
    nn = 0;  num = m;  max_depth = 0;  int b = 0;
    for (int i=0;  i<m;  i++) {
        int depth = 0;
        elem *pp = tab[i];
        while (pp) { nn++;  depth++;  pp = pp->next; }
        b += depth * (depth + 1);
        if (depth > max_depth) max_depth = depth;
    }
    double x = m * b;
    double y = (nn + 2 * m - 1) * nn;
    return x / y;
}; // uniformity


//////////////////////////////////////////////////////////////
/****
#include "Define.h"

static Hash *h = 0;
static CP h_func;

static int hash_func(const Key key) {
    CP form = NewConsCell(ref(h_func), NewConsCell(ref(key)));
    int r = (int)form->EvalReal();  unref(form);
    return r;
}; // hash_func

static int equal_func(const Key k1, const Key k2) {
    return equal(k1, k2);
}; // equal_func

static CP xhnew(CP param) {
    h_func = a_(param);
    unsigned m = 211;
    if (param != Nil) m = (unsigned)a_real(param);
    if (h) delete h;
    h = new Hash(hash_func, equal_func, m);
    return Nil;
}; // xhnew

static CP xhget(CP param) {
    CP key = a_(param);
```

```
    CP *value = h->get(key);  unref(key);
    return value ? ref(*value) : Nil;
}; // xhget

static CP xhset(CP param) {
    CP key = x_(param);
    CP val = a_(param);
    h->set(key, val);
    return Nil;
}; // xhset

static CP xhunif(CP) {
    int n, m;
    return NewRealCell(h->uniformity(n, m));
}; // xhunif

static bool hnewS = DefineFunction("hnew", xhnew);
static bool hgetS = DefineFunction("hget", xhget);
static bool hsetS = DefineFunction("hset", xhset);
static bool hunifS = DefineFunction("hunif", xhunif);

// ***/
// Hyper.c
// B. Boser  1/10/92

#include "Hyper.h"
#include "Block2D.h"
#include "Sort.h"
#include "Vector.h"
#include "File.h"
#include "Error.h"
#include "Util.h"
#include <math.h>

extern "C" {
    int malloc_debug(int);
    int malloc_verify();
    void mallocmap();
}; // extern "C"

BlockImplement(int);
BlockImplement(Flt);

#define min(a,b) (((a)>(b)) ? (b) : (a))
#define max(a,b) (((a)>(b)) ? (a) : (b))


///////////////////////////////////////////////////////
// SimilarityFunction

static int hashfun(const Key k) {
    return 65557 * k.id1 + k.id2;
}; // hashfun

static int equalfun(const Key k1, const Key k2) {
    return k1.id1 == k2.id1 && k1.id2 == k2.id2;
}; // equalfun

SimilarityMeasure::SimilarityMeasure(sm kk, unsigned m) {
    k = kk;  hash = new Hash(hashfun, equalfun, m);
}; // SimilarityMeasure

Flt SimilarityMeasure::K(int id1, int id2) {
    if (id2 < id1) { int r = id1;  id1 = id2;  id2 = r; }
    if (id1 < 0) return k(id1, id2);
    Key kk;  kk.id1 = id1;  kk.id2 = id2;
    Flt *val = hash->get(kk);
    if (val) return *val;
    Flt f = k(id1, id2);
    hash->set(kk, f);
    return f;
}; // K

void SimilarityMeasure::hash_statistics(double &uni, int &n, int &m, int &d)
const {
    uni = hash->uniformity(n, m, d);
}; // hash_statistics


///////////////////////////////////////////////////////
// Hyper

Hyper::Hyper(SimilarityMeasure *s_m, int d) {
    sm = s_m;  lA = lB = na = nb = 0;  debug = d;
    W = 0;  norm_psi = 1;
}; // Hyper

void Hyper::HyperStep(Flt eps) {
    static Block2D Z(50, 50);
    static FltVec alpha(50);
    static FltVec alpha_dot_k1(50);
    static FltVec alpha_bar_k1(50);
    int n = na + nb;
```

```
Z.reserve(n, n);
alpha.reserve(n);
alpha_dot_k1.reserve(n);
alpha_bar_k1.reserve(n);

Flt norm_psi_squared;
Flt norm_alpha_dot_k1_squared;
Flt norm_alpha_dot_k_squared = 0.998 * n;
int k = 1;                  // iteration count
init(alpha_bar_k1, n);

// compute Z
for (int i=0; i<n; i++)
    for (int j=i; j<n; j++) {
        Flt f = sm->K((i < na) ? supA[i] : supB[i-na],
                      (j < na) ? supA[j] : supB[j-na]);
        if ((i >= na) && (j < na) ||
            (i < na) && (j >= na)) f = -f;
        Z[i][j] = Z[j][i] = f;
}
for (i=0; i<na; i++) alpha[i   ] = alphaA[i];
for (i=0; i<nb; i++) alpha[i+na] = alphaB[i];
if (debug >= 20) for (i=0; i<n; i++) {
    fprintf(stderr, "0[%2d] =", i);
    for (j=0; j<n; j++)
        fprintf(stderr, " %6g", Z[i][j]);
}

// maximize W
while (1) {
    if (debug >= 2)
        fprintf(stderr, "102d hyper-step ----------------", k);
    // compute gradient alpha_dot_k1
    for (i=0; i<n; i++) {
        Flt u = dot(Z[i], alpha, n);
        alpha_dot_k1[i] = (alpha[i] != 0 || u < 1) ? 1-u : 0;
    }
    if (debug >= 2) {
        fprintf(stderr, "0_dot =");
        for (i=0; i<n; i++) fprintf(stderr, " %6g", alpha_dot_k1[i]);
    }

    // update conjugate gradient alpha_bar_k1
    norm_alpha_dot_k1_squared = dot(alpha_dot_k1, alpha_dot_k1, n);
    Flt step = norm_alpha_dot_k1_squared / norm_alpha_dot_k_squared;
    for (i=0; i<n; i++)


        alpha_bar_k1[i] = step * alpha_bar_k1[i] + alpha_dot_k1[i];
    norm_alpha_dot_k_squared = norm_alpha_dot_k1_squared;
    if (debug >= 2) {
        fprintf(stderr, "0-bar =");
        for (i=0; i<n; i++) fprintf(stderr, " %6g", alpha_bar_k1[i]);
    }

    // update alpha
    Flt norm_psi_bar_squared = vmv(alpha_bar_k1, Z, n);
    step = norm_psi_bar_squared > 1e-12 ?
        norm_alpha_dot_k1_squared / norm_psi_bar_squared : 1e-12;
    int zero = -1;
    for (i=0; i<n; i++) {
        if (alpha_bar_k1[i] < 0) {
            Flt a_div_ab = - alpha[i] / alpha_bar_k1[i];
            if (a_div_ab < step) { step = a_div_ab; zero = i; }
        }
    }
    if (debug >= 2) fprintf(stderr, "0 = %f0", step);
    for (i=0; i<n; i++) alpha[i] += step * alpha_bar_k1[i];
    if (zero >= 0) {
        alpha[zero] = 0; init(alpha_bar_k1, n);
    }
    if (debug >= 2) {
        fprintf(stderr, "0lpha =");
        for (i=0; i<n; i++) fprintf(stderr, " %6g", alpha[i]);
    }

    // compute norm_psi_squared and W
    norm_psi_squared = vmv(alpha, Z, n);
    W = tally(alpha, n) - 0.5 * norm_psi_squared;
    if (debug >= 2) {
        fprintf(stderr, "0-psi-sq = %f, ", norm_psi_squared);
        fprintf(stderr, "n-psb-sq = %f, ", norm_psi_bar_squared);
        fprintf(stderr, "W = %f, ", W);
        fprintf(stderr, "roh-opt = %f0, 1.0/sqrt(2*W));
    }

    // done?
    if (W > 1e9) break;
    if (k > 5 * n) break;
    i = 0;
    while (i < n && abs(alpha_dot_k1[i]) < eps) i++;
    if (debug >= 2 && i == n)
        fprintf(stderr, "converged after %d iterations0, k);
    if (i == n) break;
```

61

```
    k++;
  }
  for (i=0; i<na; i++) alphaA[i] = alpha[i];
  for (i=0; i<nb; i++) alphaB[i] = alpha[i+na];
  norm_psi = sqrt(fabs(norm_psi_squared));
}; // HyperStop

void Hyper::SetDataBase(int *pA, int la, int *pB, int lb) {
  patA.reserve(la); for (int i=0; i<la; i++) patA[i] = *pA++; lA = la;
  patB.reserve(lb); for ( i=0; i<lb; i++) patB[i] = *pB++; lB = lb;
}; // SetDataBase

void Hyper::SetSupport(int nA, int nB, const int *sA, const int *sB,
                       const Flt *aA, const Flt *aB) {
  na = nb = 0;
  for (int i=0; i<nA; i++) AddA(*sA++, aA ? *aA++ : 0.001);
  for ( i=0; i<nB; i++) AddB(*sB++, aB ? *aB++ : 0.001);
}; // SetSupport

void Hyper::GetSupport(int &nA, int &nB, const int *&sA, const int *&sB,
                       const Flt *&aA, const Flt *&aB) {
  sort(na, 0, alphaA, supA);
  sort(nb, 0, alphaB, supB);
  nA = na; nB = nb; sA = supA; sB = supB; aA = alphaA; aB = alphaB;
}; // GetSupport

Flt Hyper::Psi_x(int idx) {
  Flt r = 0;
  for (int i=0; i<na; i++) r += alphaA[i] * sm->K(idx, supA[i]);
  for ( i=0; i<nb; i++) r -= alphaB[i] * sm->K(idx, supB[i]);
  return r;
}; // Psi_x

Flt Hyper::Classify(int idx) {
  return Psi_x(idx) / norm_psi;
}; // Classify

int Hyper::Classifier(Flt eps) {
  // return final number of iterations
  if (lA == 0 || lB == 0) return na+nb;
  for (int i=0; i<min(10,lA); i++) AddA(patA[i]);
  for ( i=0; i<min(10,lB); i++) AddB(patB[i]);
  int iter = 0;
  do {
        HyperStop(iter % 32 ? 0.4*eps : 1e-6); Remove0();
        if (W > 1e9) break;


        iter++;
        if (debug >= 1) {
            fprintf(Stderr, "%3d. ", iter);
            fprintf(Stderr, "roh_opt = %f, ", RohOpt());
            fprintf(Stderr, "supp. A=%d, ", na);
            fprintf(Stderr, "B=%d0, nb);
        }
  } while (AddSupport(eps));
  HyperStep(1e-6); Remove0();     // remove extraneous supporting patterns
  return W > 1e9 ? -1 : iter;
}; // Classifier

void Hyper::AddA(int id, Flt alph) {
  if (debug >= 2) {
      fprintf(Stderr, "    adding sup. pat. from class A: %4d ", id);
      fprintf(Stderr, "total: %4d0, na);
  }
  supA.reserve(na); alphaA.reserve(na);
  supA[na] = id; alphaA[na] = alph; na++;
}; // AddA

void Hyper::AddB(int id, Flt alph) {
  if (debug >= 2) {
      fprintf(Stderr, "    adding sup. pat. from class B: %4d ", id);
      fprintf(Stderr, "total: %4d0, nb);
  }
  supB.reserve(nb); alphaB.reserve(nb);
  supB[nb] = id; alphaB[nb] = alph; nb++;
}; // AddB

void Hyper::Eliminate(int) {
}; // Eliminate

Flt Hyper::OrderDb(int *id, int n, int ascending) {
  static FltVec px(100);
  px.reserve(n);
  for (int i=0; i<n; i++) px[i] = Psi_x(id[i]);
  sort(n, ascending, px, id);
  return px[0];
}; // OrderDb

int Hyper::AddSupport(Flt eps) {
  // return true if supporting (?) pattern was added
  Flt M = 1.0/norm_psi;
  if (debug >= 2) {
      Flt sum = 0;
```

```
        for (int i=0; i<ns; i++) sum += alphaA[i];
        for (  i=0; i<nb; i++) sum += alphaB[j];
        fprintf(Stderr, "   norm_w = %f, ", norm_psi);
        fprintf(Stderr, "sqrt(sum alpha) = %f, ", sqrt(sum));
        fprintf(Stderr, "M = %f0, M);
    }
    int addA = 0, addB = 0;  M -= M*cps;
    for (int i=0; i<lA && addA<5; i++)
        if ( Psi_x(patA[i]) < M) {
            if (debug >= 2) {
                fprintf(Stderr, "   adding support A[%4d], ", i);
                fprintf(Stderr, "d = %f0, Psi_x(patA[i]));
            }
            AddA(patA[i]); addA++;
        }
    for (  i=0; i<lB && addB<5; i++)
        if (-Psi_x(patB[i]) < M) {
            if (debug >= 2) {
                fprintf(Stderr, "   adding support B[%4d], ", i);
                fprintf(Stderr, "d = %f0, Psi_x(patB[i]);
            }
            AddB(patB[i]); addB++;
        }
    return (addA > 0 || addB > 0);
}; // AddSupport

int Hyper::Remove0() {
    // return # patterns removed from supA, supB
    int x = 0;     // # patterns removed
    int i = 0;     // index into supA, supB
    while (i < na) {
        if (alphaA[i] == 0) {
            while (alphaA[na-1] == 0) { x++; na--; } // chop at end
            if (na > i+1) {                  // anything left?
                na--; x++;
                alphaA[i] = alphaA[na]; supA[i] = supA[na];
            } else break;
        }
        i++;
    }
    i = 0;
    while (i < nb) {
        if (alphaB[i] == 0) {
            while (alphaB[nb-1] == 0) { x++; nb--; } // chop at end
            if (nb > i+1) {                  // anything left?
                nb--; x++;



                alphaB[i] = alphaB[nb]; supB[i] = supB[nb];
            } else break;
        }
        i++;
    }
    if (x > 0 && debug >= -1)
        fprintf(Stderr, "   removed %d non-supporting pattern(s)0, x);
    return x;
}; // Remove0

Flt Hyper::RohOpt() const {
    return sqrt(0.5/W);
}; // RohOpt


////////////////////////////////////////////////////////////////

#include "Cell.h"
#include "Define.h"

static CP s_func = 0;


////////////////////////////////////////////////////////////////
// SimilarityFunction

Flt sim_func(int id1, int id2) {
    CP form = NewConsCell(ref(s_func),
                  NewConsCell(NewRealCell(id1),
                          NewConsCell(NewRealCell(id2))));
    Flt f = form->EvalReal(); unref(form);
    return f;
}; // sim_func

static CP xnew_sm(CP param) {
    s_func = u_(param);
    unsigned m = 8097;
    if (param != Nil) m = (unsigned)a_real(param);
    return NewRealCell(Real(unsigned(new SimilarityMeasure(sim_func, m))));
}; // xnew_sm

static CP xsm(CP param) {
    unsigned i = (unsigned)a_real(param);
    SimilarityMeasure *sm = (SimilarityMeasure*)i;
    int id1 = (unsigned)a_real(param);
    int id2 = (unsigned)a_real(param);
```

```
        return NewRealCell(sm->K(id1, id2));
    }; // xsm

    static CP xsm_statistics(CP param) {
        unsigned i = (unsigned)a_real(param);
        SimilarityMeasure *sm = (SimilarityMeasure*)i;
        double uni; int n, m, d;
        sm->hash_statistics(uni, n, m, d);
        return NewConsCell(NewRealCell(uni),
                    NewConsCell(NewRealCell(n),
                        NewConsCell(NewRealCell(m),
                            NewConsCell(NewRealCell(d)))));
    }; // xsm_statistics

    static bool xnew_smS = DefineFunction("new-sm", xnew_sm);
    static bool xsmS = DefineFunction("sm", xsm);
    static bool xsm_statisticsS = DefineFunction("sm-statistics", xsm_statistics);


    ///////////////////////////////////////////////////////////
    // similarity functions

    static CP xgaussd(CP param) {
        Matrix m1 = a_matrix(param);
        Matrix m2 = a_matrix(param);
        Float gamma = a_real(param);
        int sz;
        if ((sz = m1.size()) != m2.size()) error('E', "vector sizes differ");
        Float *p1 = m1.matrix1D();
        Float *p2 = m2.matrix1D();
        Float s = 0;
        for (int i=0; i<sz; i++) { Float f = *p1++ - *p2++; s += f * f; }
        return NewRealCell(exp(-sqrt(s)/gamma));
    }; // xgaussd

    static bool xgaussdS = DefineFunction("gaussd", xgaussd);


    ///////////////////////////////////////////////////////////
    // Hyper

    CP xnew_hyper(CP param) {
        unsigned s = (unsigned)a_real(param);
        SimilarityMeasure *sm = (SimilarityMeasure*)s;
        Hyper *hyper = new Hyper(sm, param == Nil ? 0 : (int)a_real(param));
        return NewRealCell(Real(unsigned(hyper)));



    }; // xnew_hyper

    CP xset_hyper_db(CP param) {
        unsigned x = (unsigned)a_real(param);
        Hyper *h = (Hyper*)x;
        Matrix xa = a_matrix(param); int la = xa.elements();
        Matrix xb = a_matrix(param); int lb = xb.elements();
        IntVec pa(la), pb(lb);
        for (int i=0; i<la; i++) pa[i] = (int)xa(i);
        for (   i=0; i<lb; i++) pb[i] = (int)xb(i);
        h->SetDataBase(pa, la, pb, lb);
        return Nil;
    }; // xset_hyper_db

    CP xset_hyper_support(CP param) {
        unsigned x = (unsigned)a_real(param);
        Hyper *h = (Hyper*)x;
        Matrix xa = a_matrix(param); int la = xa.size();
        Matrix xb = a_matrix(param); int lb = xb.size();
        IntVec pa(la), pb(lb);
        for (int i=0; i<la; i++) pa[i] = (int)xa(i);
        for (   i=0; i<lb; i++) pb[i] = (int)xb(i);
        if (param == Nil) { h->SetSupport(la, lb, pa, pb); return Nil; }
        Matrix aa = a_matrix(param);
        Matrix ab = a_matrix(param);
        if (la != aa.size()) error('E', "class A: # alphas <> # supp. patterns");
        if (lb != ab.size()) error('E', "class B: # alphas <> # supp. patterns");
        FltVec aav(la), abv(lb);
        for (i=0; i<la; i++) aav[i] = aa(i);
        for (i=0; i<lb; i++) abv[i] = ab(i);
        h->SetSupport(la, lb, pa, pb, aav, abv);
        return Nil;
    }; // xset_hyper_support

    CP xget_hyper_support(CP param) {
        unsigned x = (unsigned)a_real(param);
        Hyper *h = (Hyper*)x;
        int *supA, *supB, na, nb; Flt *alphaA, *alphaB;
        h->GetSupport(na, nb, supA, supB, alphaA, alphaB);
        Matrix sa = NewMatrix(na);
        Matrix sb = NewMatrix(nb);
        Matrix aa = NewMatrix(na);
        Matrix ab = NewMatrix(nb);
        for (int i=0; i<na; i++) { sa(i) = supA[i]; aa(i) = alphaA[i]; }
        for (   i=0; i<nb; i++) { sb(i) = supB[i]; ab(i) = alphaB[i]; }
        return
```

```
        NewConsCell(NewMatrixCell(ra),
            , NewConsCell(NewMatrixCell(sb),
                NewConsCell(NewMatrixCell(aa),
                    NewConsCell(NewMatrixCell(ab))))));
}; // xget_hyper_support

CP xhyper_step(CP param) {
    unsigned x = (unsigned)a_real(param);
    Hyper *h = (Hyper*)x;
    h->HyperStep(a_real(param));
    return NewRealCell(h->RohOpt());
}; // xhyper_step

CP xhyper_psi_x(CP param) {
    unsigned x = (unsigned)a_real(param);
    Hyper *h = (Hyper*)x;
    return NewRealCell(h->Psi_x(int(a_real(param))));
}; // xhyper_psi_x

CP xhyper_classify(CP param) {
    unsigned x = (unsigned)a_real(param);
    Hyper *h = (Hyper*)x;
    return NewRealCell(h->Classify(int(a_real(param))));
}; // xhyper_classify

CP xhyper_classifier(CP param) {
    unsigned x = (unsigned)a_real(param);
    Hyper *h = (Hyper*)x;
    return NewRealCell(h->Classifier(param != Nil ? a_real(param) : 0.1));
}; // xhyper_classifier

CP xhyper_roh(CP param) {
    unsigned x = (unsigned)a_real(param);
    Hyper *h = (Hyper*)x;
    return NewRealCell(h->RohOpt());
}; // xhyper_roh

static bool new_hyperS = DefineFunction("new-hyper", xnew_hyper);
static bool hyper_dbS = DefineFunction("set-hyper-db", xset_hyper_db);
static bool hyper_cS = DefineFunction("hyper-classifier", xhyper_classifier);
static bool hy_suS = DefineFunction("set-hyper-support", xset_hyper_support);
static bool hy_gsS = DefineFunction("get-hyper-support", xget_hyper_support);
static bool hyper_stepS = DefineFunction("hyper-step", xhyper_step);
static bool hyper_psi_xS = DefineFunction("hyper-psi-x", xhyper_psi_x);
static bool hyper_classifS = DefineFunction("hyper-classify", xhyper_classify);
static bool hyper_roh = DefineFunction("hyper-roh", xhyper_roh);


// Sort.h
// B. Boser 1/10/92

typedef double T1;
typedef int    T2;

// template
void sort(int n, int ascending, T1 *ra, T2 *rb) {
    ra--; rb--;
    int i,j,ir,l;
    T1 rra;
    T2 rrb;

    if (n < 2) return;
    l=(n >> 1)+1;
    ir=n;
    for (;;) {
        if (l > 1) {
            rra=ra[--l];
            rrb=rb[l];
        } else {
            rra=ra[ir];
            rrb=rb[ir];
            ra[ir]=ra[1];
            rb[ir]=rb[1];
            if (--ir == 1) {
                ra[1]=rra;
                rb[1]=rrb;
                return;
            }
        }
        i=l;
        j=l << 1;
        while (j <= ir) {
            if (j < ir && (ascending ?
                ra[j] < ra[j+1] : !(ra[j] < ra[j+1]))) ++j;
            if (ascending ? rra < ra[j] : !(rra < ra[j])) {
                ra[i]=ra[j];
                rb[i]=rb[j];
                j += (i=j);
            }
            else j=ir+1;
        }
        ra[i]=rra;
        rb[i]=rrb;
    }
}
```

```
};  // test2
// Vector.c
// B. Boser  1/10/92

#include "Vector.h"

flt dot(flt *x, flt *y, unsigned n) {
    flt s = 0;
    for (int i=0; i<n; i++) s += *x++ * *y++;
    return s;
};  // dot

flt vmv(flt *v, flt **m, unsigned n) {
    flt s = 0; flt *vp = v;
    for (int i=0; i<n; i++) s += *vp++ * dot(*m++, v, n);
    return s;
};  // vmv

flt tally(flt *v, unsigned n) {
    flt s = 0;
    for (int i=0; i<n; i++) s += *v++;
    return s;
};  // tally

void init(flt *v, unsigned n, flt x) {
    for (int i=0; i<n; i++) *v++ = x;
};  // init
```

66

Appendix 2

```
; usage:
; (classifier name
;          training-data-base
;          test-data-base
;          [ precision          ; default: .1
;            roh_min   .        ; default: 0
;            order              ; default: 1
;          ]
; )
; Creates a an optimal hyper-plane classifier and saves all data
; (report, maps, hyperplanes) under files called 'name' plus a
; suitable extension. If classifier is called repeatedly, data
; computed previously is reused if it exists (e.g. the hyper-planes
; are not recomputed if they exist already). The data-bases must
; be maps with the members "pattern" and "label" predefined. The
; type of "pattern" must be matrix (1-D, all identical), but "label"
; can be any type (the program figures out the number of classes
; from examining the different labels). Once a classifier has been
; generated, "classifier" can be called again with identical
; arguments but another "test-data-base" to get a report on the
; performance.
;
; (confusion-plot name lab1 lab2 db-train db-test)
; The procedure "classifier" prints a confusion-matrix for the test
; data. This function plots the separation of 2 classes (specified
; by their labels lab1 and lab2) for a training and a test set.
;
; (pair-classifier name
;          training-data-base
;          test-data-base
;          [ precision          ; default: .1
;            [ roh_min          ; default: 0
;              [ order ] ] ]    ; default: 1
; )
;
; functions:
;    classifier:    create data-base and classifier (if non-existant),
;                   and perform test
;    make-maps:     create special views of data base
;    make-classifier: create and save an optimal hyperplane
;                   for each class
;    report:        print out properties about the classifier
;    performance:   check and report the performance of the classifier
;    confusion-plot: draw a confusion plot for two classes
;
; globals:
;    hyper:         array of hyper planes (i.e. the classifier)
;    train:         maps, labels for training set
;    label-map:     mapping from index to labels (which may be e.g. strings)
;    freport:       report file

(de browse (name i)
   ; return map with removed patterns
   (let ((fin (fopen (+ name "-classifier.b") "r"))
         (hp 0)
         (simm (new-arr K (* (==> mapA size) (==> mapB size)))))
      (for (j 1 i) (==> hyper-plane load fin simm))
      (setq hp (==> hyper-plane load fin))
      (when hp
         (==> hp info stdout)
         (let ((mapA :hp:mapA)
               (mapB :hp:mapB)
               (supA :hp:supA)
               (supB :hp:supB))
            (when ~db-browser (load "db-browser.l"))
            (==> mapA name "Class A Training Data")
            (==> mapB name "Class B Training Data")
            (==> supA name "Class A Supporting Patterns")
            (==> supB name "Class B Supporting Patterns")
            (list mapA (new db-browser mapA mapB supA supB))
         ); let
      ); when
   ); let
); browse

(de clean (name &optional support)
   ; return map with removed patterns
   (let ((fin (fopen (+ name "-classifier.b") "r"))
         (hp 0)
         (simm (new-arr K (* (==> mapA size) (==> mapB size))))
         (nm ~(new db-browser)))
      (while (setq hp (==> hyper-plane load fin simm))
         (let ((m (if support :hp:supA :hp:mapA)))
            (when m
               (==> m first)
               (==> m name (sprintf "%s %s %l"
                              (==> m name)
                              (if support "support" "")
                              (==> m get 'label)))
               (setq nm (nconc nm m))
```

```
    ); when
    ); let
    ); while
    (when db-browser (load "db-browser.l"))
    (eval run)
    ); let
); clean

(de display-info (name &optional f)
    (if f (setq f (fopen (+ name "-info.txt") "w"))
        (setq f stdout))
    (let ((fin (fopen (+ name
                        (if pair "-pair" "")
                        "-classifier.b") "r"))
          (hp ()))
        (when fin
            (while (setq hp (==> hyper-plane load fin))
                (==> hp info f)
                (when (= f stdout) (ask "continue? "))
            ); while
        ); when
    ); let
); display-info

(de classifier (name db-train db-test &optional (eps 0.1) (order 1))
    (setq hyper () train () label-map ())
    (setq freport (fopen (+ name "-report.txt") "w"))
    (printf "writing report to file '%s'0 (pname freport))  (flush stdout)
    (writing freport
        (printf "0)  (for (i 0 76) (printf "-"))
        (printf "0YPER-PLANE EXPERIMENT FOR DATA-BASE '%s'0 name)
        (printf "host: %l0 (read (fopen "| hostname" "r")))
        (when message (message))
        (fflush freport)
        (load-all name eps roh_min () order)
        (rewind freport)
        (when db-train
            (report name db-train)
            (printf "23erformance on Training set:0)
            (performance db-train ())
        )
        (when db-test
            (printf "23erformance on Test set:0)
            (performance db-test ())
        )
    ); writing


    (fclose freport)
); classifier

(de pair-classifier (name db-train db-test &optional (eps .1) (order 1))
    (setq hyper () train () label-map ())
    (setq freport (fopen (+ name "-report.txt") "w"))
    (printf "writing report to file '%s'0 (pname freport))  (flush stdout)
    (writing freport
        (printf "0)  (for (i 0 76) (printf "-"))
        (printf "0YPER-PLANE EXPERIMENT FOR DATA-BASE '%s'0 name)
        (when message (message))
        (fflush freport)
        (load-all name eps roh_min t order)
        (when db-train
            (report name db-train)
            (printf "24erformance on Training set:0)
            (performance db-train ())
        )
        (when db-test
            (printf "24erformance on Test set:0)
            (performance db-test t)
        )
        (common
            (printf "Constructing training and test sets for second stage0)
            (setq db-stage2-train (make-set (+ name "-train2.db") db-train))
            (setq db-stage2-test (make-set (+ name "-test2.db") db-test))
            (setq hyper () train ())
            (classifier (+ name "-stage2")
                (==> map new "db-stage2-train)
                (==> map new "db-stage2-test)
                eps roh_min t)
        )
    )
); writing
    (fclose freport)
); pair-classifier

(de make-set (name db)
    (when "(classp class2)
        (dc class2 object pattern label)
    ); when
    (let ((vec (disk-array name 1024)))
        (for (i 0 (1- (==> db size)))
            (vec i (==> class2 new
                (pattern (pair-classify (==> db get "pattern)))
                (label (==> db get "label)) )
```

```
                    )
                        (==> db next)
                    ); for i
                    (vec 'flush)
                    (let ((dbnew (==> data-base new (==> db size))))
                        (==> dbnew bind-class 'pattern 'pattern vec)
                        (==> dbnew bind-class 'label  'label  vec)
                        (==> dbnew bind 'record vec)
                        dbnew
                    ); let dbnew
                ); let vec
            ); make-set

            (do pair-classify (pat)          ; return vector with n(n-1)/2 activations
                (let ((m (matrix ((lambda (x) (2/ (* x (1+ x)))) (bound hyper 1))))
                      (k 0))
                    (for (i 0 (bound hyper 1))
                        (for (j (1+ i) (bound hyper 1))
                            (m k (==> (hyper i j) classify pat))
                            (incr k)
                        ); for j
                    ); for i
                    m
                ); let m
            ); pair-classify

            (do load-all (name eps roh_min &optional pair (order 1))
                (when (or 'train 'label-map) (let ((fin (fopen (+ name "-maps.b") "r")))
                    (if fin (progn
                                (setq train (read fin))
                                (setq label-map (read fin))
                                (fclose fin)
                            )
                            (make-maps name db-train)
                    ); if
                )); when, let
                (when 'hyper
                    (if pair
                        (progn
                            (let ((fin (fopen (+ name "-pair-classifier.b") "r"))
                                  (simm (new-sm K 9000017)))
                                (setq hyper (array (1+ (bound train 1)) (1+ (bound train 1))))
                                (when fin
                                    (for (i 0 (bound train 1))
                                        (for (j (1+ i) (bound train 1))
                                            (hyper i j (==> hyper-plane load fin simm))

                                        ); for j
                                    ); for i
                                ); when fin
                            ); let fin
                            (make-pair-classifier name eps roh_min)
                        ); progn pair
                        (progn
                            (let ((fin (fopen (+ name "-classifier.b") "r"))
                                  (simm (new-sm K 9000017)))
                                (setq hyper (array (1+ (bound train 1))))
                                (when fin
                                    (for (i 0 (bound train 1))
                                        (hyper i (==> hyper-plane load fin simm))
                                    ); for i
                                ); when fin
                            ); let fin
                            (make-classifier name eps roh_min order)
                        ); progn 'pair
                    ); if pair
                ); when
            ); load-all

            (do qualified (db)
                (or "(==> db get 'quality)
                    (= (==> db get 'quality) "good")
                ); or
            ); qualified

            (do make-maps (name db-train)
                (printf "Oreading maps for training set0)
                (let ((db (array 1000))        ; no more than 1000 labels please
                      (labels 0)               ; number of labels found so far
                      (i 0)                    ; scratch variable
                      (omit 0)                 ; omitted patterns
                )
                    (setq label-map (array 1000))
                    (printf "training database: %d patterns0 (==> db-train size))
                    (repeat (==> db-train size)
                        (if (qualified db-train)
                            (if (setq i (exists label-map labels (==> db-train get 'label)))
                                (==> (db i) append (==> db-train index))
                                ; construct a new view
                                (let ((m (==> db-train empty)))
                                    (==> m append (==> db-train index))
                                    (db labels m)  (label-map labels (==> db-train get 'label))
                                    (incr labels)
```

```
                (printf "  %3d. label is %10 labels (==> db-train get 'label))
                (fflush freport)
             ); let
          ); if
            (incr omit)
          ); if qualified
             (==> db-train next)
       ); repeat
       (setq db (list 0 (1- labels))))
       (setq label-map (label-map (list 0 (1- labels))))
       ; construct train, to global array of data-bases
       (setq train (array labels))
       (for (i 0 (bound db 1))
            (==> (db i) prune)
            (train i (list (db i) (all-but db i)))
            (printf "  label %t (index %3d): %4d patterns, total %4d"
                    (label-map i)  i  (==> (db i)  size)
                    (+ (==> (db i) size) (==> (endx (train i)) size))
          )
            (fflush freport)
       ); for
       (printf "  %d (bad) patterns omitted from test-data" omit)
       (let (((fout (fopen (+ name "-maps.b") "w")))
            (write-binary fout train)
            (write-binary fout label-map)
            (fclose fout)
       ); let fout
    ); let db array
); make-maps

(de exists (arr len key)
   (let ((r ()))
      (for (i 0 (1- len))
           (when (= (arr i) key) (setq r i)))
      )
      r
   )
); exists

(de label2index (label)
   (let ((r ()))
      (for (i 0 (bound label-map 1))
           (when (= (label-map i) label) (setq r i))
      )
      r
   )
); label2index

(de index2label (idx)
   (if idx (label-map idx) ())
); index2label

(de all-but (db j)
   (let ((base (==> (db 0) empty)))
      (for (j 0 (bound db 1))
           (when (<> i j) (setq base (map-join base (db j))))
      )
      (==> base sort-index) (==> base prune) base
   )
); all-but

(de make-classifier (name eps roh_min order)
   (printf "Finding hyper planes with optimal margin")
   (when 'hyper (setq hyper (array (1+ (bound train 1)))))
   (let (((fout (fopen (+ name "-classifier.b") "w"))
          (sirand (new-srand (* 9000017))))
      (for (i 0 (bound hyper 1))
           (let (((c1 c2) (train i)))
              (when '(hyper i)
                 (printf stdout "hyper-plane for class %t vs. all others"
                         (==> c1 get 'label))
                 (printf freport "hyper-plane for class %t vs. all others"
                         (==> c1 get 'label))
                 (fflush freport)
                 (hyper i (new hyper-plane c1 c2 sirand
                               order eps debug 1))
                 (==> (hyper i) info stdout)
                 (==> (hyper i) info freport)
              )
              (==> (hyper i) save fout)
           )
      ); for
      (fclose fout)
   ); let
); make-classifier

(de make-pair-classifier (name eps roh_min)
   (printf
      "Finding hyper planes for pairwise separation with optimal margin")
   (when 'hyper
         (setq hyper (array (1+ (bound train 1)) (1+ (bound train 1)))))
   )
```

```
(let ((fout (fopen (+ name "-pair-classifier.b") "w")))
    (for (i 0 (bound hyper 1))
        (for (j (1+ i) (bound hyper 1))
            (let (((c1 dummy) (train i))
                  ((c2 dummy) (train j)))
                (when ~(hyper i j)
                    (fprintf stdout "hyperplane for %i vs %i0"
                        (==> c1 get 'label) (==> c2 get 'label))
                    (fprintf freport "hyperplane for %i vs %i0"
                        (==> c1 get 'label) (==> c2 get 'label))
                    (flush freport)
                    (hyper i j (new hyper-plane c1 c2
                        order ops debug1 func))
                    (==> (hyper i j) info stdout)
                    ); when hyper
                (==> (hyper i j) save fout)
                ); let
            ); for j
        ); for i
    (fclose fout)
    ); let
); make-pair-classifier

(db report (name db-train)
    (printf "Hyper plane classifier for %2d classes" (1+ (bound train 1)))
    (printf "0=================================================0")
(comment
    (when (or ~(==> (hyper 0) privatep 'Dmin)
              ~(hyper 0):Dmin)
        (fprintf stdout "computing diameter of data-base0")
        (==> (hyper 0) diameter db-train)
        (let ((f (fopen (+ name "-classifier.b") "w")))
            (for (i 0 (bound hyper 1))
                (when (0<> i)
                    (==> (hyper i) private 'D    :(hyper 0):D   )
                    (==> (hyper i) private 'Dmin :(hyper 0):Dmin)
                    (==> (hyper i) private 'Dmax :(hyper 0):Dmax)
                    )
                (==> (hyper i) save f)
                ); for
            (fclose f)
            ); let
        ); when
    )

    (mapnc (lambda (db h)
            (printf "hyper-plane for class %i vs. all others0"

                (==> (car db) get 'label) )
            (==> h info freport)
(comment
            (let* ((supA :h:supA)
                   (supB :h:supB)
                   (eliA :h:eliA)
                   (eliB :h:eliB))
                (draw-map supA
                    (sprintf "%s-support-classA-%d" name (==> supA get 'label)))
                (draw-map supB
                    (sprintf "%s-support-classB-%d" name (==> supA get 'label)))
                (draw-map eliA (sprintf "%s-eliminated-classA-%d"
                    name (==> supA get 'label)))
                (draw-map eliB (sprintf "%s-eliminated-classB-%d"
                    name (==> supA get 'label)))
                ); let*
            )
            ); lambda
        train hyper
        ); mapnc
    ); report

(de draw-map (db name)
    ; db:     map to draw
    ; name:   name of ps file(s)
    ; xs:     scale factor in x-dimension
    ; ys:     scale factor in y-dimension
    (when (and db (0<> (==> db size)))
        (fprintf stdout "plotting %s0" name)
        (==> (window 0) clear)
        (let* ((page 1)
               (x0 150) (y0 650)       ; offset from lower left corner
               (xm 450) (ym 550)       ; page size
               (xx 0) (yy 0)           ; current position
               (p 0))
            (==> db first)
            (==> (window) text (- x0 60) (+ y0 120)
                (sprintf "%s    Page %d" name page)
                (font helvetica 18 bold)
            )
            (repeat (==> db size)
                (graphics-batch
                    (setq p (==> (window) picture))
                    (==> (==> db got 'record) draw p)
                    (==> p scale (/ 100 (apply 'max (==> p size-points))))
                    (==> p align (+ x0 xx) (- y0 yy) 7)
```

```
                )
            (incr xx 120)
            (when (> xx xm) (setq xx 0) (incr yy 120))
            (when (> yy ym)
                (setq yy 0)
                (==> (window) save (sprintf "%s-page-%d.ps" name page))
                (incr page)
                (==> (window) clear)
                (==> (window) text x0 (+ y0 80)
                    (sprintf "%s       Page %d" name page)
                    (font helvetica 18 bold)
                )
            ); when
            (==> db next)
        ); repeat
        (==> (window) save (sprintf "%s-page-%d.ps" name page))
    ); let*
    ); when
); draw-map

(de performance (db &optional pair)
    (let* ((dim (1+ (bound hyper 1)))
            (conf (matrix dim dim))
            (err 0) (punt 0) (punt-good 0) (punt-bad 0)
            (good 0) (total 0)
            (db-miss (==> db empty))
            (db-reje (==> db empty)))
        (flush freport)
        (repeat (==> db size)
            (let* (((result-index dist-vec lab-vec)
                    ((if pair classify-pair classify) (==> db index)))
                    (result-label (index2label result-index))
                    (desired-label (==> db get 'label))
                    (desired-index (label2index desired-label))
                )
                (if result-index
                    (progn                  ; accept
                        (conf result-index desired-index
                            (1+ (conf result-index desired-index)))
                        (if (= result-label desired-label)
                            (incr good)
                            (incr err)
                            (printf "ERROR: got label %l for pattern %l "
                                result-label desired-label)
                            (printf "(data-base index = %d)0 (==> db index))
                            (printf "   %m0 lab-vec)

                            (printf "  %m0 dist-vec)
                            (==> db-miss append (==> db index))
                            (flush freport))
                    ); if
                    ); progn
                    (progn              ; reject
                        (incr punt)
                        (setq result-label
                            (index2label (lab-vec (bound lab-vec 1))) )
                        (if (= result-label desired-label)
                            (progn (printf "REJECT GOOD: ") (incr punt-good))
                            (progn (printf "REJECT BAD: ") (incr punt-bad))
                        )
                        (printf "got label %l for pattern %l "
                            result-label desired-label)
                        (printf "(data-base index = %d)0 (==> db index))
                        (printf "   %m0 lab-vec)
                        (printf "  %m0 dist-vec)
                        (==> db-reje append (==> db index))
                        (flush freport)
                    ); progn
                ); if result-index
            ); let*
            (==> db next)
            (incr total)  (flush freport)
        ); repeat
        (let ((lg (fopen "log" "a")))
            (sprintf lg "%d%d%g0 err (* 100 (/ err total)))
            (fclose lg)
        )
        (printf "%d errors, %d rejected (%d were wrong), %d good, %d total0
            err punt punt-bad good total)
        (printf "performance: %f percent errors, %f percent rejected0
            (* 100 (/ err total))  (* 100 (/ punt total)) )
        (when (0<> err)
            (printf "Confusion matrix:")
            (printf "  des label")
            (for (des 0 (1- dim))
                (printf " %3s" (sprintf "%l" (index2label des)))
            )
            (print)
            (for (res 0 (1- dim))
                (printf " got %3s [" (sprintf "%l" (index2label res)))
                (for (des 0 (1- dim)) (printf " %3d" (conf res des)))
                (printf " ]0)
            )
```

72

```
); when
 (flush freport)
; (draw-map db-miss (sprintf "%s-missed" name))
; (draw-map db-reje (sprintf "%s-rejected" name))
 ); let* dim
); performance

(de classify (id)               ; no rejects
  (let* ((dim (1+ (bound hyper 1)))
         (r (matrix dim))
         (l (matrix dim)))
    (for (i 0 (bound hyper 1))
      (when (hyper i)
        (r i (==> (hyper i) classify-id id))
        (l i i)
      ); when
    ); for
    (nr-sort2 r l)
    (list (l (bound l 1)) r l)
  )
); classify

(de classify-pair (id)          ; no rejects
  (let* ((dim (1+ (bound hyper 1)))
         (r (matrix dim))
         (l (matrix dim)))
    (for (i 0 (bound hyper 1))
      (for (j (1+ i) (bound hyper 1))
        (let* ((x (==> (hyper i j) classify-id id)))
          (if (>= x 0)  (r i (1+ (r i)))
            (r j (1+ (r j))))
        )
      ); let* pal
    ); for j
  ); for i
  (l () (range 0 (1- dim)))
  (nr-sort2 r l)
  (list (l (bound l 1)) r l)
  ); let* r
); classify-pair

(de mean (a b)
  (* (+ a b) 0.5)
); mean
```

:::::::::::::::::::::::::::::::::::::::::::::::::::::::::::::::::::::::::::::

```
; scatter plots

(de confusion-plot (name lab1 lab2 db-train db-test &optional (visible r))
    (load-all name 0.2 0)
    (setq w (window)) (==> w clear)
    (==> w fgcolor blue)
    (==> w font (font helvetica 18 bold))
    (==> w pattern no-pattern)
    (setq p1 (==> plot new w 140 100 300 300))
    (setq p2 (==> plot new w 140 450 300 300))
    (==> p1 xaxis -6 6 2 1 (sprintf "Class %i" lab1))
    (==> p1 yaxis -6 6 2 1 (sprintf "Class %i" lab2))
    (==> p2 xaxis -6 6 2 1 "")
    (==> p2 yaxis -6 6 2 1 (sprintf "Class %i" lab2))
    (==> w fgcolor red)
    (setq f1 (==> p1 frame -6 -6 6 6))
    (setq f2 (==> p2 frame -6 -6 6 6))
    (==> f1 text 7 5 "Training Set")
    (==> f2 text 7 5 "Test Set")
    (==> f1 line -6 -6 6 6 (brush 1 dashed))
    (==> f2 line -6 -6 6 6 (brush 1 dashed))
    (scatter p1 p2 lab1 lab2 db-train db-test)
    (==> w save (+ name "-"
                    (if (stringp lab1) lab1 (sprintf "%i" lab1))
                    "vs"
                    (if (stringp lab2) lab2 (sprintf "%i" lab2))
                    ".ps"
                )
    )
); confusion-plot

(de scatter (p1 p2 l1 l2 db-train db-test)
    (let* ((hp1 (hyper (label2index l1)))
           (hp2 (hyper (label2index l2))))
        (==> p1 mark 7 4.3 -1) (==> f1 text 7 4 (sprintf " class %i" l1))
        (==> p2 mark 7 4.3  1) (==> f2 text 7 4 (sprintf " class %i" l1))
        (==> p1 mark 7 3.3  2) (==> f1 text 7 3 (sprintf " class %i" l2))
        (==> p2 mark 7 3.3 -2) (==> f2 text 7 3 (sprintf " class %i" l2))
        (sc-plot p1 hp1 hp2 db-train l1 -1)
        (sc-plot p2 hp1 hp2 db-test  l1  1)
        (sc-plot p1 hp1 hp2 db-train l2  2)
        (sc-plot p2 hp1 hp2 db-test  l2 -2)
    )
); scatter

(de sc-plot (pt hp1 hp2 db label marker)

    (graphics-batch (repeat (==> db size)
        (when (= label (==> db get 'label))
            (let* ((x (==> hp1 classify (==> db get 'pattern)))
                   (y (==> hp2 classify (==> db get 'pattern))))
                (when (and (< (abs x) 6) (< (abs y) 6))
                    (==> pt mark x y marker))
            ); let*
        ); when
        (==> db next)
    ))
); sc-plot
```

# APPENDIX C

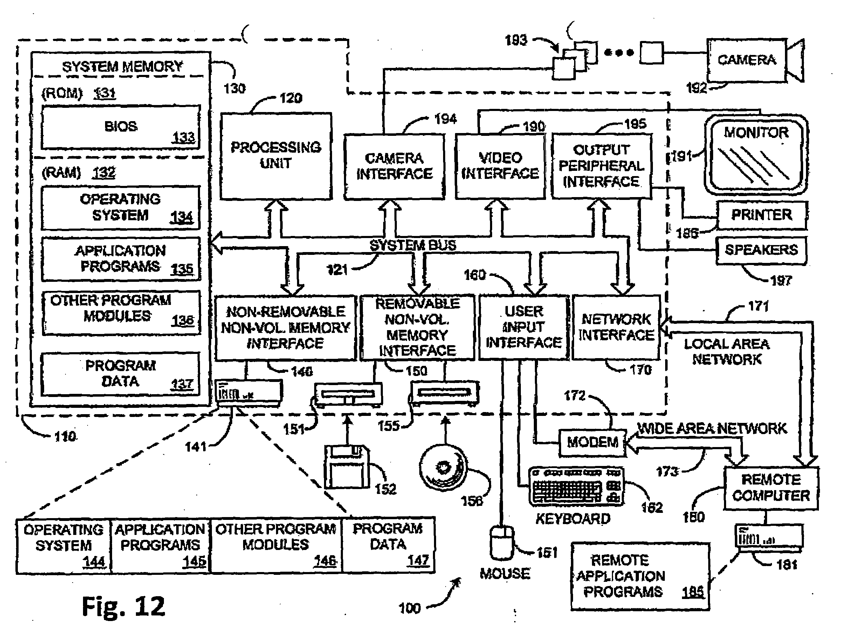

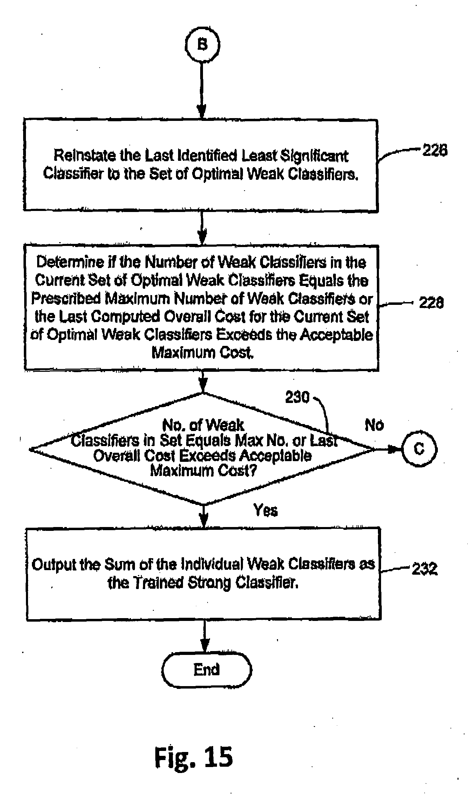

The labeling of items in this Appendix C apply only to Figs. 12 through 17.

Boosting is an approach to machine-learning classification problems that has received much attention of late. Boosting algorithms have recently become popular because they are simple, elegant, powerful and easy to implement. Boosting procedures have been used in many different applications. For instance, Fan, Stolfo and Zhang [2] introduced boosting, namely a boosting algorithm called AdaBoost, into a distributed on-line learning application. Iyer, Lewis, Schapire, Singer and Singhil [8] applied boosting to document routing, employing a boosting procedure for classifying and ranking documents in the context of Information Retrieval (IR). Moreno, Logan and Raj [13] employed a boosting classification algorithm in the confidence scoring of data in speech recognition application. They derived feature vectors from speech recognition lattices and fed them into a boosting classifier. This classifier combined hundreds of very simple `weak learners` and derived classification rules that reduced the confidence error rate by up to 34 percent. Schapire and Singer [23] used a family of boosting algorithms to perform text and speech categorization tasks. Sebastiani, Sperduti and Valdambrini [25] also applied boosting to text categorization. Tieu and Viola [30] applied boosting to image retrieval.

In most classification problems, feature vectors are composed and fed into one or more classifiers. There are usually just a few types of features used, such as, for example, color and oriented edges found in a training image. Boosting typically combines hundreds or thousands of very simple classifiers, called `weak learners`, by using a weighted sum. A classification procedure is iteratively applied to a set of weighted feature vectors. Each weak learner is called upon to solve a sequence of learning problems. At first each feature vector is assigned an equal weight (or a weight depending on its prior probability). At each iteration, a classifier is learned and the feature vectors that are classified incorrectly have their weights increased, while those that are correctly classified have their weights decreased. That is, in each subsequent problem examples are reweighted in order to emphasize those which were incorrectly classified by the previous weak classifier. Each classifier focuses its attention on those vectors on which the previous classifier fails. The concept is that feature vectors that are difficult to classify receive more attention on subsequent Iterations.

The classifier learned at each iteration is called a "weak classifier". A weak classifier is one that employs a simple learning algorithm (and hence a fewer number of features) and is not expected to classify the training data very well. Weak classifiers have the advantage of allowing for very limited amounts of processing time to classify an input. The final classifier, the "strong classifier", is formed as a weighted sum of the weak classifiers learned at each iteration. One important goal for many machine-learning applications is that the final classifiers depend only on a small number of features. A classifier which depends on a few features will be more efficient to evaluate a very large database, requiring less processing time and resources. Furthermore, the use of boosting classifiers with the choice of weak learners offers the advantage of being less sensitive to spurious features. It has been shown that the training error of a strong classifier approaches zero exponentially in the number of iterations.

It is noted that in the preceding paragraphs, as well as in the remainder of this specification, the description refers to various individual publications identified by a numeric designator contained within a pair of brackets. For example, such a reference may be identified by reciting, "reference [1]" or simply "[1]". A listing of the publications corresponding to each designator can be found at the end of the Detailed Description section.

The present embodiment is directed toward a procedure that iteratively refines results obtained by a statistically based

boosting algorithm to make a strong classifier which is better than can be obtained by the original boosting algorithm in the sense that fewer features are needed and higher accuracy is achieved for many different types of classification problems. The system and method, named FloatBoost, uses a novel method to select an optimum feature set to train weak classifiers based on the selected optimal features, and thereby to construct a strong classifier by linearly combining the learned set of weak classifiers. The boosting algorithm of the present embodiment leads to a strong classifier of better performance than obtained by many boosting algorithms, such as, for example, AdaBoost, in the sense that fewer features are needed and higher accuracy is achieved. This statistical learning procedure can be applied to many machine-learning applications where boosting algorithms have been employed, such as, for example, face detection, image retrieval, speech recognition, text classification, document routing, on-line learning and medical diagnosis.

In the FloatBoost system and method, simple features are devised on which the classification is performed. Every classifier, or cascade of classifiers, is learned from training examples using FloatBoost. FloatBoost expands upon the AdaBoost procedure. AdaBoost is a sequential forward search procedure using the greedy selection strategy. Its heuristic assumption in the monotonicity, i.e. that when adding a new feature to the current set, the value of the performance criterion does not decrease. A straight sequential selection method like sequential forward search (SFS) or sequential backward search (SBS) adds or deletes one feature at a time. To make this work well, the monotonicity property has to be satisfied by the performance criterion function. However, this is usually not the case for many types of the performance criterion functions such as normally used in AdaBoost. Therefore, AdaBoost suffers from the non-monotonicity problem as a sequential search method.

The Floating Search is a class of feature selection methods that allows an adaptive number of backtracking steps to deal with problems with non-monotonic criteria. While AdaBoost constructs a strong classifier from weak classifiers using purely sequential forward search, FloatBoost allows backtracking search. This results in higher classification accuracy with a reduced number of weak classifiers needed for the strong classifier.

The boosting process of the present embodiment involves inputting a set of training examples, a prescribed maximum number of weak classifiers, a cost function capable of measuring the overall cost (or overall quality of the strong classifier), and an acceptable maximum cost. A set of candidate weak classifiers is computed, each classifier being associated to a particular feature of the training examples. (A weak classifier is one that employs a single learning algorithm and hence one or a few number of features.) It is then determined which of the set of weak classifiers is the most significant weak classifier given the selected ones. The most significant classifier is based on the feature that when working together with the existing ones is most likely to predict correctly the classification labels of the training examples. This most significant classifier is then added to a current set of optimal weak classifiers. A determination is then made as to which of the current set of optimal weak classifiers is the least significant classifier. The least significant classifier is the one which when removed will lead to improvement of the overall classification performance. The overall cost for the current set of optimal weak classifiers is computed using the cost function. The least significant classifier for the current set of optimal weak classifiers is then conditionally removed and the overall cost for the current set of optimal weak classifiers is then re-computed, less the least significant classifier. It is then determined whether the removal of the least significant classifier results in a lower overall cost. Whenever it is determined that the removal of the least significant classifier results in a lower overall cost, the least significant classifier is eliminated. While keeping the earlier optimal weak classifiers unchanged, each classifier in the current set

of optimal weak classifiers associated with a feature added subsequent to the eliminated classifier is then recomputed. The foregoing actions of computing the overall cost for the current set of optimal weak classifiers using the cost function, through recomputing each classifier in the current set of optimal classifiers associated with a feature added subsequent to the eliminated classifier while keeping the earlier optimal weak classifiers unchanged, are repeated until it is determined the removal of the least significant classifier does not result in a lower overall cost. At this point, the last identified least significant classifier is then reinstated to the current set of optimal weak classifiers. Next it is determined if the number of weak classifiers in the current set of optimal weak classifiers equals the prescribed maximum number of weak classifiers or the last computed overall cost for the current set of optimal weak classifiers exceeds the acceptable maximum cost. Whenever it is determined that the number of weak classifiers in the current set of optimal weak classifiers does not equal the prescribed maximum number of weak classifiers and the last computed overall cost for the current set of optimal weak classifiers exceeds the acceptable maximum cost, the foregoing process starting with determining which of the set of weak classifiers is the most significant classifier is repeated. This continues until it is determined that the number of weak classifiers in the current set of optimal weak classifiers does equal the prescribed maximum number of weak classifiers or the last computed overall cost for the current set of optimal weak classifiers becomes lower than the maximum allowable cost, at which point the sum of the individual weak classifiers is output as the trained strong classifier.

In the following description of the preferred embodiments of the present embodiment, reference is made to the accompanying drawings that form a part hereof, and in which is shown by way of illustration specific embodiments in which the embodiment may be practiced. It is understood that other embodiments may be utilized and structural changes may be made without departing from the scope of the present embodiment.

### 1.0 Exemplar Operating Environment

FIG. 12 illustrates an example of a suitable computing system environment 100 on which the present embodiment may be implemented. The computing system environment 100 is only one example of a suitable computing environment and is not intended to suggest any limitation as to the scope of use or functionality of the present embodiment. Neither should the computing environment 100 be interpreted as having any dependency or requirement relating to any one or combination of components illustrated in the exemplary operating environment 100.

The present embodiment is operational with numerous other general purpose or special purpose computing system environments or configurations. Examples of well known computing systems, environments, and/or configurations that may be suitable for use with the present embodiment include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The present embodiment may be described in the general context of computer-executable instructions, such as program modules, being executed by a computer. Generally, program modules include routines, programs, objects, components, data structures, etc. that perform particular tasks or implement particular abstract data types. The present embodiment may also be practiced in

distributed computing environments where tasks are performed by remote processing devices that are linked through a communications network. In a distributed computing environment, program modules may be located in both local and remote computer storage media including memory storage devices.

With reference to FIG. 12, an exemplary system for implementing the present embodiment includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 12 illustrates operating system 134, application programs 135, other program modules 136, and program data 137.

The computer 110 may also include other removable/non-removable, volatile/nonvolatile computer storage media. By way of example only, FIG. 12 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable,

volatile/nonvolatile computer storage media that can be used in the exemplary operating environment include. but are not limited to, magnetic tape cassettes. flash memory cards. digital versatile disks. digital video tape, solid state RAM, solid state ROM. and the like. The hard disk drive 141 is typically connected to the system bus 121 through an non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 12, provide storage of computer readable instructions, data structures, program modules and other data for the computer 110. In FIG. 12, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus 121, but may be connected by other interface and bus structures, such as a parallel port. game port or a universal serial bus (USB). A monitor 191 or other type of display device is also connected to the system bus 121 via an interface, such as a video interface 190. In addition to the monitor, computers may also include other peripheral output devices such as speakers 197 and printer 196. which may be connected through an output peripheral interface 195. Of particular significance to the present embodiment, a camera 163 (such as a digital/electronic still or video camera, or film/photographic scanner) capable of capturing a sequence of images 164 can also be included as an input device to the personal computer 110. Further, while just one camera is depicted, multiple cameras could be included as an input device to the personal computer 110. The images 164 from the one or more cameras are input into the computer 110 via an appropriate camera interface 165. This interface 165 is connected to the system bus 121, thereby allowing the images to be routed to and stored in the RAM 132, or one of the other data storage devices associated with the computer 110. However, it is noted that image data can be input into the computer 110 from any of the aforementioned computer-readable media as well, without requiring the use of the camera 163.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in FIG. 12. The logical connections depicted in FIG. 12 include a local area network (LAN) 171 and a wide area network (WAN) 173, but may also include other networks. Such networking environments are commonplace in offices, enterprise-wide computer networks, intranets and the Internet.

When used in a LAN networking environment. the computer 110 is connected to the LAN 171 through a network interface or adapter 170. When used in a WAN networking environment. the computer 110 typically includes a modem 172 or other means for establishing communications over the WAN 173, such as the Internet. The modem 172, which may be internal or external, may be

connected to the system bus 121 via the user input interface 160, or other appropriate mechanism. In a networked environment, program modules depicted relative to the computer 110, or portions thereof, may be stored in the remote memory storage device. By way of example, and not limitation, FIG. 12 illustrates remote application programs 185 as residing on memory device 181. It will be appreciated that the network connections shown are exemplary and other means of establishing a communications link between the computers may be used.

The exemplary operating environment having now been discussed, the remaining parts of this description section will be devoted to a description of the program modules embodying the present embodiment.

## 2.0 The Floatboost Learning Procedure

The FloatBoost learning procedure is a statistically-based boosting procedure that makes it possible to train accurate classifiers in many different types of classification problems. FloatBoost uses a novel method to select optimum features and to train classifiers. It boosts classification performance by linearly combining a set of weak classifiers to form a strong classifier.

### 2.1 Overview.

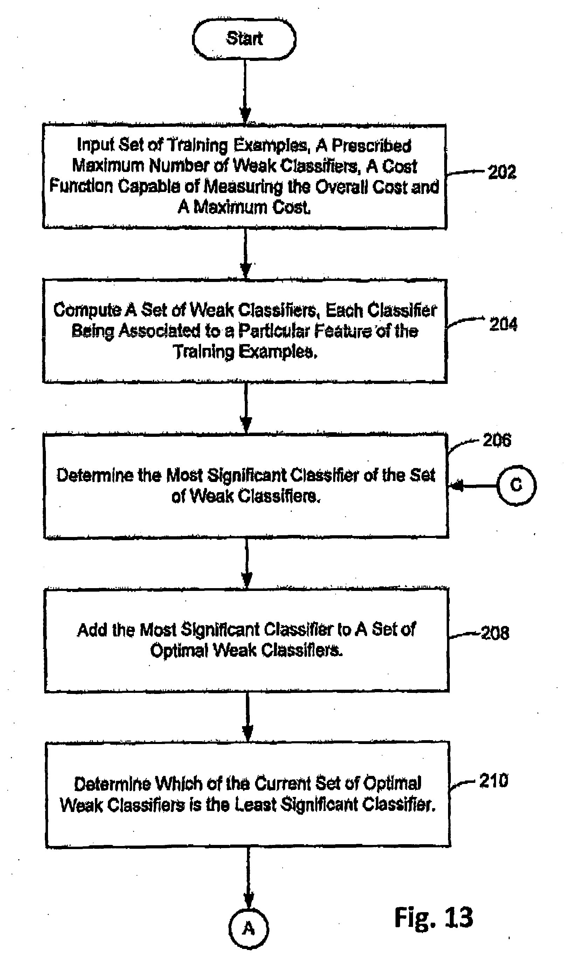

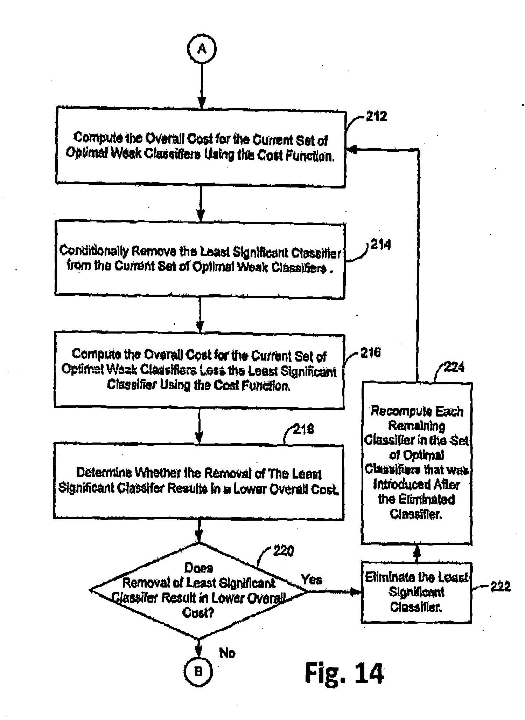

In the most general sense, as shown in FIG. 13, the boosting process of the present embodiment involves inputting a set of training examples. a prescribed maximum number of weak classifiers, a cost function capable of measuring the overall cost, and an acceptable maximum cost (process action 202). As shown in process action 204. a set of weak classifiers is computed. each classifier being associated to a particular feature of the training examples. A weak classifier is one that employs a single learning algorithm and hence one or a few number of features. It is then determined which of the set of weak classifiers is the most significant classifier (process action 206). The most significant classifier includes the feature that is the most likely to predict whether a training example matches the classification of a particular classifier. This most significant classifier is then added to a current set of optimal weak classifiers, as indicated by process action 208. A determination is then made as to which of the current set of optimal weak classifiers is the least significant classifier (process action 210). The least significant classifier includes the feature when matching that is the least likely to predict whether a training example matches the classification of a particular classifier. The overall cost for the current set of optimal weak classifiers is next computed, as shown in process action 212 of FIG. 14, using the cost function. The least significant classifier for the current set of optimal weak classifiers is then conditionally removed (process action 214) and the overall cost for the current set of optimal weak classifiers is computed, less the least significant classifier. using the cost function (process action 216). It is then determined whether the removal of the least significant classifier results in a lower overall cost (process action 218). Whenever it is determined that the removal of the least significant classifier results in a lower overall cost (process action 220), the least significant classifier is eliminated (process action 222). While keeping the earlier optimal weak classifiers unchanged. each classifier in the current set of optimal weak classifiers associated with a feature added subsequent to the eliminated classifier is recomputed, as shown in process action 224. The foregoing actions of computing the overall cost for the current set of optimal weak classifiers (process action 204), through recomputing each remaining classifier in the current set of optimal classifiers associated with a feature added subsequent to the eliminated classifier (process action 224), are repeated until it is determined the removal of the least significant classifier does not result in a lower overall cost. The last identified least significant classifier of the current set of optimal weak

classifiers is then reinstated (process action 226). Next, it is determined if the number of weak classifiers in the current set of optimal weak classifiers equals the prescribed maximum number of weak classifiers or the last computed overall cost for the current set of optimal weak classifiers exceeds the acceptable maximum cost, as shown in process action 228. Whenever it is determined that the number of weak classifiers in the current set of optimal weak classifiers does not equal the prescribed maximum number of weak classifiers or the last computed overall cost for the current set of optimal weak classifiers exceeds the acceptable maximum cost (process action 230), the foregoing process starting with determining which of the set of weak classifiers is the most significant classifier (process action 206) is repeated. This continues until it is determined that the number of weak classifiers in the current set of optimal weak classifiers does equal the prescribed maximum number of weak classifiers or the last computed overall cost for the current set of optimal weak classifiers becomes lower than the maximum allowable cost, at which point the sum of the individual weak classifiers is output as the trained strong classifier (process action 232).

More specifically, the FloatBoost learning procedure is described as follows. Let $\mathcal{H}_M = \{h_1,...,h_M\}$ be the so far best subset of M weak classifiers; $J(\mathcal{H}_M)$ is the criterion which measures the overall cost of the classification function

$$H_M(x) = \sum_{m=1}^{M} h_m(x)$$ build on $\mathcal{H}_M$; $J_m^{min}$ be the minimum cost achieved so far with a linear combination of m weak classifiers for $m = 1,...,M_{max}$ (which are initially set to a large value before the iteration starts). As shown below, this procedure involves training inputs, initialization, forward inclusion, conditional exclusion and output. 0. (Input) (1) Training examples $Z = \{(x_1; y_1),.....,(x_N; y_N)\}$, where N=a+b; of which a examples have $y_i = +1$ and b examples have $y_i = -1$; (2) The maximum number $M_{max}$ of weak classifiers to be combined; (3) The cost function $J(H_M)$ (e.g., error rate made by $H_M$); (4) The acceptable cost $J*$

1. (Initialization)

(1) $w^{(0)}_i = \frac{1}{2a}$ for those examples with $y_i = +1$ or

$w^{(0)}_i = \frac{1}{2b}$ for those examples with $y_i = -1$;

(2) $J_m^{min} = $ max-value (for m=1,...,$M_{max}$)$M=0$, $H_0 = \{\}$;

2. (Forward Inclusion)

(1) $M \leftarrow M + 1$;

(2) Choose $h_M$ according to Eq.8;

(3) Update $w_i^{(M)} \leftarrow w_i^{(M)} \exp[-y_i h_M(x_i)]$, and normalize to $\sum w_i^{(M)} = 1$;

(4) $\mathcal{H}_M = \mathcal{H}_{M-1} \cup \{h_M\}$; If $J_M^{min} > J(H_M)$ then $J_M^{min} = J(H_M)$;

3. (Conditional Exclusion)

(1) $h' = \arg\min_{h \in H_M} J(H_M - h)$; // $h'$ is the least significant feature in $\mathcal{H}_M$

(2) If $J(H-h') < J^{min}_{M-1}$ then

    (a) $H_{M-1} = H_M - h'$; $M = M-1$; $J^{min}_{M-1} = J(H_M - h')$; $M = M-1$

    (b) if $h' = h_m'$, then re-calculate $w_i^{(l)}$ and $h_j$ for $j = m', \ldots M$;

    (c) go to 3.(1);

(3) else

    (a) if $M = M_{max}$ or $J(H_m) < J^*$, then go to 4;

    (b) go to 2.(1);

4. (Output)

$$H(x) = \text{sign}\left[\sum_{m=1}^{M} h_m(x)\right].$$

In Step 2 (forward inclusion), the currently most significant weak classifier is added one at a time, which is the same as in AdaBoost. In Step 3 (Conditional Exclusion), FloatBoost removes the least significant weak classifier from $H_M$, subject to the condition that the removal leads to a lower cost than $J^{min}_{M-1}$ (which is not done in AdaBoost). Supposing that the removed weak classifier was the $m'$-th in $\mathcal{H}_M$, then $h_m', \ldots, h_M$ will be re-learned. This is repeated until no more removals can be done.

## 2.2 FloatBoost Applied to Face Detection

As mentioned previously, boosting algorithms can be applied to many machine learning applications. The boosting procedure of the present embodiment will be described in terms of face detection. As such, some background information on boosting procedures and face detection systems is useful.

### 2.2.1 Background Information on Face Detection

Face detection systems essentially operate by scanning an image for regions having attributes that would indicate that a region contains a person's face. These systems operate by comparing some type of training images depicting people's faces (or representations thereof) to an image or representation of a person's face extracted from an input image. Furthermore, face detection has remained a challenging problem especially for non-frontal view faces. This challenge is firstly due to the large amount of variation and complexity brought about by the changes in facial appearance, lighting and expression [1,25]. Changes in facial view (head pose) further complicate the situation because the distribution of non-frontal faces in the image space is much more dispersed and more complicated than that of frontal faces. Learning based methods have so far been the most effective ones for face detection. Most face detection systems learn to classify between face and non-face by template matching. They treat face detection as an intrinsically two-dimensional (2-D) problem, taking advantage of the fact that faces are highly correlated. It is assumed that some low-dimensional features that may be derived from a set of prototype or training face images can describe human faces. From a pattern recognition viewpoint, two issues are essential in face detection: (i) feature selection, and (ii) classifier design in view of the selected features.

A procedure developed by Freund and Shapire [4], referred to as AdaBoost, has been an effective learning method for many

pattern classification problems, to include face detection. AdaBoost is a sequential forward search procedure using the greedy selection strategy. Its heuristic assumption is monotonicity, i.e. that when adding a new feature to the current set, the value of the performance criterion does not decrease. The premise offered by this sequential procedure can be broken-down when the assumption is violated, i.e. when the performance criterion function is non-monotonic. As a sequential search algorithm, AdaBoost can suffer from local optima when the evaluation criterion is non-monotonic.

Another issue is real-time multi-view face detection. Previous face detections systems, especially any that can detect faces in multiple viewpoints, are very slow, too slow to be used for real time applications. Most existing works in face detection, including Viola et al. [31] deal with frontal faces. Sung and Poggio [29] partition the frontal face and non-face image spaces each into several probability clusters, derive feature vectors in these subspaces, and then train neural networks to classify between face and nonface. Rowley et al [20] trained retinally connected neural networks using preprocessed image pixel values directly. Osuna et al [15] apply the support vector machines algorithm to train a neural network to classify face and non-face patterns. Roth et al. [19] use a learning architecture specifically tailored for learning in the presence of a very large number of features for the face and non-face classification.

In Viola et al. [31], simple Haar-like features, used earlier in Papageorgiou [16] for pedestrian detection, are extracted; face/non-face classification is done by using a cascade of successively more complex classifiers which are trained by using the (discrete) AdaBoost learning algorithm. This resulted in the first real-time frontal face detection system which runs at about 14 frame per second for a $320 \times 240$ [31]. However, the ability to deal with non-frontal faces is important for many real applications because, for example, statistics show that approximately 75% of the faces in home photos are non-frontal [11]. A reasonable treatment for multi-view face detection is the view-based method taught by Pentland et al. [17], in which several face models are built, each describing faces in a certain view. This way, explicit 3D modeling is avoided. Feraud et al. [3] adopt the view-based representation for face detection, and use an array of five detectors with each detector responsible for one view. Wiskott et al. [32] build elastic bunch graph templates for multi-view face detection and recognition. Gong and colleagues [6] study the trajectories of faces in linear Principal Component Analysis (PCA) feature spaces as they rotate, and use kernel support vector machines (SVMs) for multi-pose face detection and pose estimation [14,12]. Huang et al. [7] use SVM's to estimate facial poses.

The system of Schneiderman and Kanade [24] is claimed to be the first algorithm in the world for multi-view face detection. Their algorithm consists of an array of five face detectors in the view-based framework. Each is constructed using statistics of products of histograms computed from examples of the respective view. However, it is very slow and takes one minute to work on a $320 \times 240$ pixel image over only four octaves of candidate size [24].

### 2.2.2 FloatBoost Applied to Detector-Pyramid Face Detection System and Method

In the system and method of the co-pending application, a coarse to fine strategy is used in that a sub-window is processed from the top to bottom of a detector pyramid by a sequence of increasingly more complex face/non-face classifiers designed for increasingly finer ranges of facial view. This strategy goes beyond the straightforward view-based method in that a vast number of nonface sub-windows can be discarded very quickly with very little loss of face sub-windows. This is very important for fast face

detection because only a tiny proportion of sub-windows are of faces. Since a large number of nonface sub windows are discarded the processing time for face detection is significantly reduced. The multi-view face detection system employing FloatBoost is distinguished from previous face detection systems in its ability to detect multi-view faces in real-time. It is designed based on the following thinking: While it is extremely difficult to distinguish multi-view faces from non-face images clearly using a single classifier, it is less difficult to classify between frontal faces and non-faces as well as between multi-view faces and parts of non-faces. Therefore, narrowing down the range of view makes face detection easier and more accurate for that view.

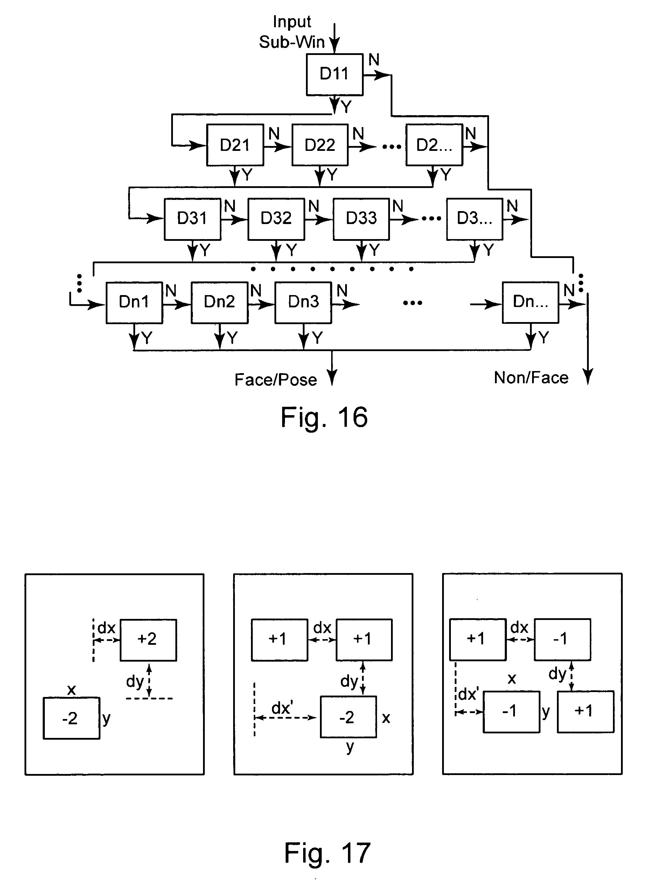

More specifically, the detector-pyramid architecture, generally shown in FIG. 16, adopts the coarse to fine (top-down in the pyramid) strategy in that the full range of facial views is partitioned into increasingly narrower ranges at each detector level, and thereby the face space is partitioned into increasingly smaller subspaces. Also, a simple-to-complex strategy is adopted in that the earlier detectors that initially examine the input sub-window are simpler and so are able to reject a vast number of non-face sub-windows quickly, whereas the detectors in the later stages are more complex and involved and spend more time to scrutinize only a relatively tiny number of remaining sub-windows.

The multi-view face detection system employing FloatBoost can be generalized as follows. Images of face and non-face examples are captured to be used as a training set. A pyramid of detectors, increasing in sophistication and complexity and partitioned into finer and finer pose ranges from top down, are trained. Then, an input image is prepared for input into the detector pyramid by extracting sub-windows from the input image into sub-windows. Each of these sub-windows is then input into the detector pyramid. For each input sub-window the system determines whether the sub-window is a face, and if so, its pose range. If more than one detector of the present embodiment detects a face at close to the same location then the system arbitrates the outputs for the detectors with overlapping detections. The following paragraphs detail the generalized process actions discussed above.

As with most face detection system, the face detection system and process employing the detector pyramid must first be trained before it can detect face regions in an input image. This training phase generally involves first capturing face and non-face images. As will be explained later, these captured face and non-face images are used to train a detector-pyramid that employs a sequence of increasingly more complex face/non-face classifiers designed for detecting increasingly finer ranges of facial views. Each classifier is dedicated to detecting a particular pose range. Accordingly, the captured training face images should depict people having a variety of face poses.

The captured training face images are preprocessed to prepare them for input into the detector pyramid. In general, this involves normalizing and cropping the training images. Additionally, the training images are roughly aligned by using the eyes and mouth. Normalizing the training images preferably entails normalizing the scale of the images by resizing the images. It is noted that this action could be skipped if the images are captured at the desired scale thus eliminating the need for resizing. The desired scale for the face is approximately the size of the smallest face region expected to be found in the input images being searched. In a tested embodiment, an image size of about 20 by 20 pixels was used with success. These normalization actions are performed so that each of the training images generally match as to orientation and size. The face training images (but not the non-face training images) are also preferably cropped to eliminate unneeded portions of the image that could contribute to noise in the training process. It is noted that the training images could be cropped first and then normalized.

The high speed and detection rate depend not only on the detector-pyramid architecture, but also on the individual detectors. Three types of simple features, which are block differences similar to steerable filters, are computed as shown in FIG. 17. The three types of simple features are shown relative to a sub-window. The sum of the pixels which lie within the white rectangles are subtracted from the sum of pixels in the black rectangles. Each such feature has a scalar value that can be computed very efficiently from the summed-area table [10] or integral image [3]. These features may be non-symmetrical to cater to nonsymmetrical characteristics of non-frontal faces. They have more degrees of freedom in their configurations than the previous use, which is 4 (x, y, dx, dy) in the two block features and 5 (x, y, dx, dx', 0, dy) in the three and four block features, where dx and dx' can take on negative values whereas the others are constrained to positive values only. There are a total number of 102,979 two-block features for a sub-window of size 20x20 pixels. There are a total number of 188,366 three-block features (with some restrictions to their freedom). FIG. 17 depicts the three types of simple Harr wavelet like features defined in a sub-window. The rectangles are of size x by y and are at distances of (dx, dy) apart. Each feature takes a value calculated by the weighted $(\pm 1; 2)$ sum of the pixels in the rectangles.

A face/nonface classifier is constructed based on a number of weak classifiers where a weak classifier performs face/non-face classification using a different single feature, e.g. by thresholding the scalar value of the feature according the face/non-face histograms of the feature. A detector can be one or a cascade of face/nonface classifiers, as in [3]. A more technically detailed description of feature selection and detector training using the FloatBoost procedure will be discussed shortly.

The detectors in the pyramid are trained separately, using different training sets. An individual detector is responsible for one view range, with possible partial overlapping with its neighboring detectors. Due to the symmetry of faces, it is necessary to train side view detectors for one-side only, and mirror the trained models for the other side. For one feature used in left-side view, its structure is mirrored to construct a new feature used for right-side view. Each left-side view feature is mirrored this way, and these new features are combined to construct right side view detectors. Making use of the symmetry of faces, it is necessary to train, for each level, the frontal view detector plus those of non-frontal views on one side. Therefore, assuming there are L (an odd number) detectors at a level, it is necessary to train only (L+1)/2 detectors. The corresponding models for the other side can be obtained by mirroring the features selected for this side. So, 7 detectors are trained for a detector-pyramid composed of 11 detectors.

The multi-view face detection system and method classifies images based on the value of simple features. The FloatBoost system and method uses a combination of weak classifiers derived from tens of thousands of features to construct a powerful detector. To summarize the above, the construction of the detector-pyramid is done in the following way: 1. Simple features are designed. There are a number of candidate features. 2. A subset of the features is selected and the corresponding weak classifiers are taught using FloatBoost. 3. A strong classifier is constructed as a linear combination of the weak classifiers, as the output of FloatBoost learning. 4. A detector is composed of one, or a cascade, of strong classifiers. 5. At each level of the pyramid, the full range of face poses (out-of-plane rotation) is partitioned into a number of sub-ranges, and the same number of detectors are trained for face detection in that partition, each specialized for a certain pose sub-range. 6. Finally, the detector-pyramid is composed of several levels from the coarsest view partition at the top to the finest partition at the bottom.

Therefore, using FloatBoost, the detectors in the pyramid are trained separately using separate training sets. An individual detector is responsible for one view/pose range, with possible partial overlapping with its neighboring detectors.

Once the system is trained it is ready to accept prepared input image regions and to indicate if the region depicts a face, even if the face is non-frontal in the image.

### 2.2.3 Detailed Description of FloatBoost Procedure

This section provides a mathematical description of the FloatBoost boosting procedure as it applies to a face detection application. It should be noted that although this boosting method is described here with respect to its applicability to face detection, the FloatBoost procedure has applicability to many other applications including speech recognition, text classification, document routing, online learning and medical diagnosis.

The multi-view face detection task is the following: Given the input image I, find the locations of all faces in I and give the scale and pose of each found face. Denote the existence of a face by the state $S = (u, v, s, \theta)$ where (u, v) is relative translation in the image plane, s the size (scale) of the rectangular sub-window containing a face, and $\theta$ is the pose.

Multi-view face detection can be done in three steps: First, scan I exhaustively at all possible locations and scales, resulting in a large number of sub-windows $x = x(u, v, s \mid I)$. Second, for each x, test if it is a face at pose $\theta$.

$$h^\theta(x) \quad \begin{array}{c} \text{face at pose } \theta \\ \geq \\ < \quad 0 \\ \text{otherwise} \end{array} \qquad (1)$$

Third, post-process to merge multiple detections.

In this section, a statistical framework for learning such a classification function h(x) is presented. For the time being, face-nonface classification only is considered and the pose $\theta$ is dropped out.

### 2.2.3.1 Learning Classification Function

For the two class problems, a set of N labeled training examples $(x_1; y_1), ..., (x_N; y_N)$ is given, where $y_i \in \{+1, -1\}$ is the class label associated with example $x_i$. For face detection, $x_i$ is an image sub-window of a fixed size : (e.g. 20x20) containing an instance of the face $(y_i = +1)$ or nonface $(y_i = -1)$ pattern. In the notion of Real AdaBoost [22,5], a stronger classifier is a linear combination of weak classifiers

$$H_M(x) = \sum_{m=1}^{M} h_m(x) \qquad (2)$$

where $h_m(x) \in \Re$ are weak classifiers. The class label for a test x is obtained as H(x)= $\text{sign}[H_M(x)]$ (an error occurs when $H(x) \neq y$) while the magnitude $|h(x)|$ indicates the confidence.

In boosting learning [4], each example $x_i$ is associated with a weight $w_i$, and the weights are updated dynamically using a multiplicative rule according to the errors in previous learning so that more emphasis is placed on those examples which are erroneously classified by the weak classifiers learned previously. This way, the new weak classifiers will pay more attention to those

examples. The stronger classifier is obtained as a proper linear combination of the weak classifiers.

### 2.2.3.2 Learning Weak Classifiers

Here, the following discussion deals with how to derive a (usually large) set of candidate weak classifiers given the (normalized) weights w, and then choose $h_m(x)$ from the set. The "margin" of example (x, y) achieved by h(x) (a single or a combination of weak classifiers) on the training examples can be defined as yh(x) [21]. This can be considered as a measure of the confidence of the h's prediction. The following criterion measures the bound on classification error [22]

$$J(h(x)) = E_w(e^{-yh(x)}) = \sum_i e^{-y_i h(x_i)} \qquad (3)$$

where $E_w(\ )$ stands for the mathematical expectation with respect to w over the examples $(x_i, y_i)$.

The weak classifiers $h_m(x)$ in Eq. (2) are derived stage-wise as the minimizers of J(h). Given the current estimate h(x), an improved estimate h(x)+h*(x) is sought by minimizing J(h(x)+h*(x)) with respect to h*(x). It is shown in [5] that the minimizer is

$$h^*(x) = \frac{1}{2}\log\frac{P(y=+1|x,w)}{P(y=-1|x,w)} \qquad (4)$$

$$= \frac{1}{2}\log\frac{P_j(y=+1)P_j(x|y=+1,w)}{P_j(y=+1)P_j(x|y=+1,w)} \qquad (5)$$

This result provides a basis for the subsequent constructions of $h_j^*(x)$. However, the estimates of $P(x|y=+1,w)$ and $P(x|y=-1,w)$ are not available. Therefore, another approach is chosen for the derivation of h*(x).

A large number of simple features are defined for the sub-window x of a fixed shape and size (cf. [33] and the next section), and each simple feature, denoted as $x^t$, takes on a real scalar value. In the following, a candidate weak classifier $h_j(x)$ is derived for each single different feature j.

The probability densities of feature j for a sample sub-window x is denoted by $P_j(x|y=+1)$ for the face pattern and $P_j(x|y=-1)$ for the non-face pattern. The two densities can be estimated using the histograms resulting from weighted voting of the training examples. The candidate weak classifiers are designed as

$$h_j^*(x) = \frac{1}{2}\left[\log\frac{P_j(x|y=+1,w)}{P_j(x|y=-1,w)} + \log\frac{P(y=+1)}{P(y=-1)}\right] \qquad (6)$$

$$= L_j(x) - T \qquad (7)$$

The half log likelihood ratio $L_j(x)$ is learned from the training examples of the two classes, and the threshold T can be adjusted to control the balance between the detection and false alarm rates in the case when the prior probabilities are not known.

The set of the derived weak classifiers, given the weights w, is denoted by $\mathcal{H}_M = \{h_1....h_M\}$. Given the current

$$H_{M-1}(x) = \sum_{m=1}^{M-1} h_m(x), \text{ the best } h_M(x) \text{ for the new strong classifier } H_M(x) = H_{M-1}(x) + h_M(x) \text{ is}$$

$$h_M = \arg\min_{h^*} J(h(x) + h^*(x)) \qquad (8)$$

By this, a sequence of weak classifiers is derived for the boosted classifier $H_M(x)$ of Eq. (2). 2.2.3.3 FloatBoost Learning

FloatBoost incorporates the idea of Floating Search [18] into AdaBoost [4,22,5] to overcome the non-monotocity problems associated with AdaBoost. Floating Search [18] is a sequential feature selection procedure with backtracking, aimed to deal with non-monotonic criterion functions for feature selection. Feature selection with a non-monotonic criterion may be dealt with by using a more sophisticated technique, called plus-ℓ-minus-r, which adds or deletes $\ell$ features and then backtracks r steps [28,10]. The Sequential Floating Search method [18] allows the number of back-tracking steps to be controlled instead of being fixed beforehand. Specifically, it adds or deletes $\ell$ =1 feature and then backtracks r steps where r depends on the current situation. It is such a flexibility that amends limitations due to the non-monotonicity problem. Improvement on the quality of selected features is gained with the cost of increased computation due to the extended search. The SFFS algorithm performs very well in several applications [18,9]. The idea of Floating Search is further developed in [27] by allowing more flexibility for the determination of $\ell$.

These feature selection methods, however, do not address the problem of (sub-) optimal classifier design based on the selected features. FloatBoost combines them into AdaBoost for both effective feature selection and classifier design.

Again, applying the FloatBoost learning procedure to the face detection problem discussed above the actions of training inputs, initialization, forward inclusion, conditional exclusion and output are performed to construct the strong classifier $H(x) =$ $\text{sign}[\sum_{m=1}^{M} h_m(x)]$.

For face detection, the acceptable cost $J^*$ is the maximum allowable risk, which can be defined as a weighted sum of missing rate and false alarm rate. The algorithm terminates when the cost is below $J^*$ or the maximum number M of weak classifiers is reached.

FloatBoost usually needs fewer weak classifiers than AdaBoost to achieve a given objective $J^*$. One has two options with such a result: (1) Use the FloatBoost-trained strong classifier with its fewer weak classifiers to achieve similar performance as can be (done by a AdaBoost-trained classifier with more weak classifiers. (2) Continue FloatBoost learning to add more weak classifiers even if the performance on the training data does not increase. The reason for (2) is that even if the performance does not improve on the training data, adding more weak classifiers may lead to improvements on test data [24].

REFERENCES

1. M. Bichsel and A. P. Pentland. "Human face recognition and the face image set's topology". CVGIP: Image Understanding, 59:254 261, 1994. 2, W. Fan, S. Stolfo and J. Zhang. "The application of AdaBoost for Distributed, Scalable and On-line Learning", pages 362 366, In ACM 1999. 3, J. Feraud, O. Bernier, and M. Collobert. "A fast and accurate face detector for indexation of face images". In Proc. Fourth IEEE Int. Conf on Automatic Face and Gesture Recognition, Grenoble, 2000. 4. Y. Freund and R. Schapire. "A decision-theoretic generalization of on-line learning and an application to boosting", Journal of Computer and System Sciences, 55(1):119

139, August 1997. 5. J. Friedman, T. Hastie, and R. Tibshirani. "Additive logistic regression: a statistical view of boosting". Technical report, Department of Statistics, Sequoia Hall, Stanford Univerity. July 1998. 6. S. Gong, S. McKenna, and J. Collins, "An investigation into face pose distribution". In Proc. IEEE International Conference on Face and Gesture Recognition, Vermont, 1996. 7. J. Huang, X. Shao, and H. Wechsler. "Face pose discrimination using support vector machines (SVM)". In Proceedings of International Conference Pattern Recognition, Brisbane, Queensland, Australia, 1998. 8. R. Iyer, D. Lewis, R. Schapire, Y. Singer, A. Singhal, "Boosting for document routing". Ninth International Conference on Information and Knowledge Management, 2000. 9. A. Jain and D. Zongker. "Feature selection: evaluation, application, and small sample performance". IEEE Trans. on PAMI, 19(2):153 158, 1997. 10. J. Kittler. "Feature set search algorithm". In C. H. Chen, editor, Pattern Recognition In Practice, pages 41 60. North Holland, Sijthoff and Noordhoof, 1980. 11. A. Kuchinsky, C. Pering, M. L. Creech, D. Freeze, B. Serra, and J. Gwizdka, "FotoFile: A consumer multimedia organization and retrieval system". In Proc. ACM HCI'99 Conference, 1999. 12. Y. M. Li, S. G. Gong, and H. Liddell. "Support vector regression and classification based multi-view face detection and recognition". In IEEE Int. Conf. Of Face & Gesture Recognition, pages 300 305, France, March 2000. 13. P. Moreno, B. Logan and B, Raj. "A boosting approach for confidence scoring", Cambridge Research Laboratory. Technical Report Series, CRL 2001/08. July 2001. 14. J. Ng and S. Gong. "Performing multi-view face detection and pose estimation using a composite support vector machine across the view sphere". In Proc. IEEE International Workshop on Recognition, Analysis, and Tracking of Faces and Gestures in Real-Time Systems, pages 14 21, Corfu, Greece, September 1999. 15. E. Osuna, R. Freund, and F. Girosi. "Training support vector machines: An application to face detection". In CVPR, pages 130 136, 1997. 16. C. P. Papageorgiou, M. Oren, and T. Poggio. "A general framework for object detection". In Proceedings of IEEE International Conference on Computer Vision, pages 555 562, Bombay, India, 1998. 17. A. P. Pentland, B. Moghaddam, and T. Starner, "View-based and modular eigenspaces for face recognition". In Proceedings of IEEE Computer Society Conference on Computer Vision and Pattern Recognition, pages 84 91, 1994. 18. P. Pudil, J. Novovicova, and J. Kittler. Floating search methods in feature selection. Pattern Recognition Letters, 15(11):1119 1125, 1994. 19. D. Roth, M. Yang, and N. Ahuja. "A snow-based face detector". In Proceedings of Neural Information Processing Systems, 2000. 20. H. A. Rowley, S. Baluja, and T. Kanade, "Neural network-based face detection". IEEE Transactions on Pattern Analysis and Machine Intelligence, 20(1):23 28, 1998. 21. R. Schapire, Y. Freund, P. Bartlett, and W. Lee, Boosting the margin: a new explanation for the effectiveness of voting methods. In Proc. 14th International Conference on Machine Learning, pages 322 330. Morgan Kaufmann, 1997. 22. R. E. Schapire and Y. Singer. "Improved boosting algorithms using confidence-rated predictions". In Proceedings of the Eleventh Annual Conference on Computational Learning Theory, pages 80 91, 1998. 23. R. E. Schapire and Y. Singer. Boos Texter: A boosting-based system for text categorization. Machine Learning, 39(2/3):135 168. May/June 2000. 24. H. Schneiderman and T. Kanade. "A statistical method for 3d object detection applied to faces and cars". In Proceedings of IEEE Computer Society Conference on Computer Vision and Pattern Recognition, 2000. 25. Fabrizio Sebastiani, Alessandro Sperduti, and Nicola Valdambrini. An improved boosting algorithm and its application to automated text categorization. In Arvin Agah, Jamie Callan, and Elke Rundensteiner, editors, Proceedings of CIKM-00, 9th ACM International Conference on Information and Knowledge Management, pages 78 85, McLean, US. 2000. ACM Press, New York, US. 26. P. Y. Simard, Y. A. L. Cun, J. S. Denker, and B. Victorri. "Transformation invariance in pattern recognition--tangent distance and tangent propagation". In G. B. Orr and K.-R. Muller, editors, Neural Networks: Tricks of the Trade. Springer, 1998. 27. P. Somol, P. Pudil, J. Novoviova, and P. Paclik. "Adaptive floating search methods in feature selection". Pattern Recognition Letters, 20:1157 1163, 1999. 28. S. D, Stearns. "On selecting features for pattern classifiers", In Proceedings of International Conference Pattern Recognition, pages 71 75, 1976. 29. K.-K. Sung and T. Poggio.

"Example-based learning for view-based human face detection". IEEE Transactions on Pattern Analysis and Machine Intelligence, 20(l):39 51, 1998. 30. K. Tieu and P. Viola. "Boosting image retrival". In Proceedings of IEEE Computer Society Conference on Computer Vision and Pattern Recognition, volume l, pages 228 235, 2000. 31. P. Viola and M. Jones. "Robust real time object detection". In IEEE ICCV Workshop on Statistical and Computational Theories of Vision, Vancoover, Canada, Jul. 13, 2001. 32. L. Wiskott, J. Fellous, N. Kruger, and C. V. Malsburg. "Face recognition by elastic bunch graph matching". IEEE Transactions on Pattern Analysis and Machine Intelligence, 19(7):775 779, 1997.

EP 2 071 473 A2

## APPENDIX D

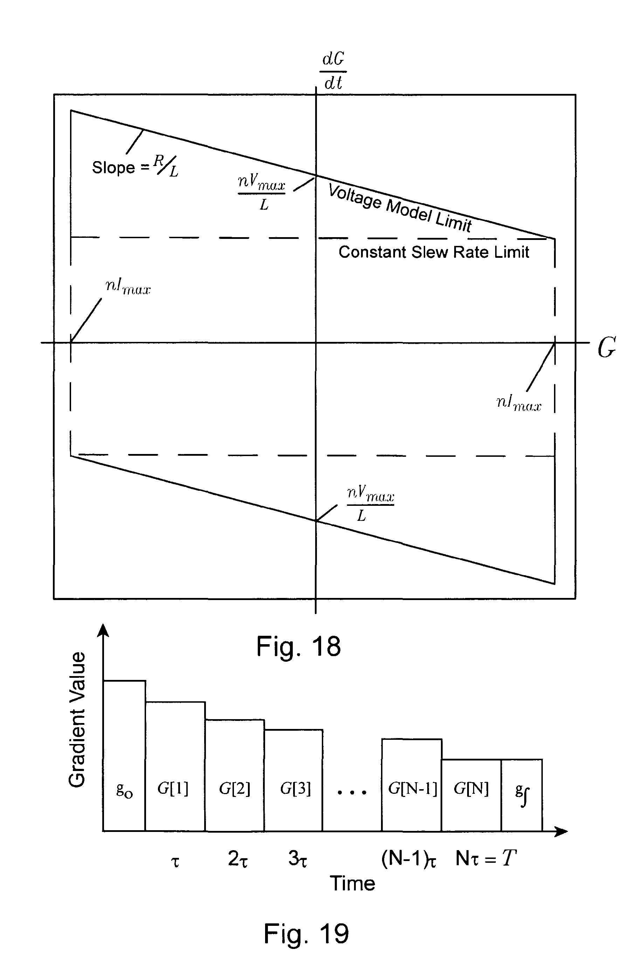

The labeling of items in this Appendix D apply only to Figs. 19 through 31.

The present embodiment relates generally to magnetic resonance imaging (MRI), and more particularly, the present embodiment relates to the design of magnetic gradients for use in MRI.

Magnetic resonance imaging (MRI) requires placing an object to be imaged in a static magnetic field, exciting nuclear spins in the object within the magnetic field, and then detecting signals emitted by the excited spins as they precess within the magnetic field. Through use of magnetic gradient and phase encoding of the excited magnetization, detected signals can be spatially localized in three dimensions.

Advances in MR system hardware enable the use of new rapid pulse sequences. Typical rapid sequences include rapid gradient-echo (FLASH, GRASS) and multi-echo spin-echo (TSE, FSE, RARE) sequences. Refocused SSFP (True-FISP, FIESTA, balanced-FFE) sequences, which produce high signal and contrast, are becoming common as improved gradients allow imaging with minimal artifacts from off-resonance. All of these sequences demand efficient gradient waveform design. Efficient acquisition methods include echo-planar and spiral imaging. Aside from imaging trajectories, gradient waveform design includes phase-encoding, prewinder and rewinder gradients. In rapid sequences with short repetition times, the design of these latter gradients is an important consideration in improving imaging efficiency, because their duration reduces the image acquisition duty cycle.

In particular, the design problem is to minimize gradient waveform durations subject to both hardware constraints and sequence constraints such as desired gradient area. Numerous previous works have presented different methods to optimize gradients in different situations. Many of these methods are limited to the design of trapezoidal pulses, and most have been demonstrated for 1D gradient design. Simonetti et al. presented a general technique to minimize 1D-gradient properties such as moments, diffusion-sensitivity 2 or RMS-current of 1D gradients using numerical optimization. See "An Optimal Design Method for Magnetic Resonance Imaging Gradient Waveforms," IEEE Trans Med Imaging 1993; 12:350-360; and "MRI Gradient Waveform Design by Numerical Optimization," Magn Reson Med 1993; 29: 498-504.

The design of rapid imaging sequences requires time-optimal magnetic gradient waveforms to provide maximum spatial resolution while keeping both repetition times and scan times low. In accordance with the present embodiment, constrained optimization is used in designing gradients that satisfy gradient-amplitude and slew-rate limitations and additional constraints such as beginning and end amplitude, gradient area and higher-order gradient moments.

The design is formulated as linear equations for a number, N, of discrete-time waveforms with a sampling period $T$. A minimum time gradient requires the identification of the smallest value for N for which a design solution exists. A binary search technique is employed to minimize the time in identifying the minimum value of $N_T$ which provides a solution.

The linear equations are then solved using known linear programming, L1-norm formulation, or second-order cone programming (SOCP).

The design can also include constraints on the gradient waveform to avoid overheating and to limit maximum stimulation

91

thresholds in the waveform algorithm. It is known that the gradient amplifier, wires, and coils have several heating constraints. Also, the time varying magnetic field of a gradient amplifier can induce electric fields of sufficient magnitude to excite nerves. These constraints can be addressed in the gradient waveform design.

The design method can be used in accordance with the present embodiment to design minimum-time gradient waveforms that satisfy gradient-amplitude and slew-rate limitations. Additional constraints such as gradient start and end amplitudes, gradient area or higher-order gradient moments can be included. Importantly, application of the method can be extended to multi-dimensional gradient design which is necessary for procedures that use oblique scan-plane orientations.

Consider first the general constraints in gradient waveform design including gradient amplifier voltage and current limits as well as pulse-sequence requirements. Next, methods of formulating the problem are described so that it can be solved using three different types of existing linear and quadratic programming techniques. All of these techniques result in comparable solutions.

A gradient amplifier supplies current to a gradient coil, producing a continuously-varying gradient, G(t). The amplifier has current and voltage limits $(I_{max}$ and $V_{max})$ that result in the following limits on G(t) as described in King et al., "Optimized Waveforms for Spiral Scanning," Magn Reson Med 1995; 34:156-160.

$$|G(t)| \leq \eta I_{max} \tag{1}$$

and

$$\left| L \frac{d}{dt} G(t) + RG(t) \right| \leq \eta V_{max} \tag{2}$$

Here L, R and $\eta$ are the gradient coil inductance, resistance and efficiency (i.e., in mT/m/A). In MRI systems, the gradient can be considered a vector $\overline{G}(t)$, that is composed of three components, $G_x(t)$, $G_y(t)$, and $G_z(t)$. The primary purpose of the present embodiment is to specify gradient waveforms that can be freely rotated in three dimensions. This constrains the maximum gradient or change of gradient in any direction, and the constraints of Eqs. 1 and 2 become (with $G_{max} = \eta I_{max}$)

$$\left\| \overline{G}(T) \right\|_2 \leq \eta G_{max} \tag{3}$$

and

$$\left\| L \frac{d}{dt} G(t) + R\overline{G}(t) \right\|_2 \leq \eta V_{max} \tag{4}$$

Frequently, a simpler "constant-slew-rate-limit" model is used, where $\eta R I_{max}$ is subtracted from the right side of Eqs. 2 and 4 and the $RG(t)$ or $R\dot{G}(t)$ term is omitted. For a single gradient axis, the constraints of the voltage model and the constant-slew-rate-limit model are shown in FIG. 18 which illustrates limits on gradient amplitude and slew-rate for a single-axis gradient due to maximum current $(I_{max})$ and maximum voltage $(V_{max})$. Limits are shown using the common constant-slew-rate-limit model (white area) and the more accurate voltage-limit model (white plus light gray areas). As the ratio of coil

resistance (R) to coil inductance (L) increases, the constant-slew-rate-model becomes increasingly constraining, and the voltage-limit model should be used. $\eta$ is the ratio of gradient strength to gradient current. As the ratio of coil resistance to coil inductance increases, the constant-slew-rate-limit model becomes more constraining.

Imaging requirements of the pulse sequence constrain the k-space change ($\Delta \vec{k}$) that the gradients will produce in terms of the gyromagnetic ratio, $\gamma$ as

$$\int_{t=0}^{T} \vec{G}(t) dt = \frac{2\pi}{\gamma} \Delta \vec{k} \qquad (5)$$

Additionally, there are cases where higher-order moments of the gradients can be specified, as

$$\int_{t=0}^{T} t^q \vec{G}(t) dt = \frac{2\pi}{\gamma} \Delta \vec{m}_q \qquad (6)$$

where $\Delta \vec{m}_q$ is a specified design constraint on the change in the $q_{th}$ moment of the gradient.

Boundary constraints on the gradient waveforms include having specified initial and final values for the gradient, i.e., $\vec{G}(0) = \vec{g_0}$ and $\vec{G}(T) = \vec{g_f}$. This is required to design gradient waveforms at the start and end of the sequence, and to link different waveforms together.

Practical gradients are generated as discrete-time waveforms with a sampling period $\tau$. A gradient waveform can be represented as a discrete sequence $\vec{G}[n] = \vec{G}(n\tau)$ with $n = 1...N$. FIG. 19 shows a single component of the discrete-time vector $\vec{G}[n]$. The constraints in Eqs. 1-6 can easily be converted to discrete-time equivalents, where a derivative is approximated by the slope between two consecutive samples, and an integral is approximated by a discrete sum multiplied by $\tau$. Specifically, it is useful to express the voltage constraint (Eq. 4) as

$$\left\| \alpha \vec{G}[n] + \beta \vec{G}[n+1] \right\|_2 \leq \psi \qquad (7)$$

where $\alpha = R - \dfrac{L}{\tau}$, $\beta = \dfrac{L}{\tau}$, and $\psi = \eta V_{max}$ for the voltage model. In the constant-slew-rate-limit model, $\alpha = -\dfrac{L}{\tau}$, $\beta = \dfrac{L}{\tau}$, and $\psi = \eta V_{max} - R I_{max}$.

Typically the gradients, as well as the desired moments, consist of two or three separate gradient axes. In basic cases, these axes can be treated separately and all constraints expressed as described in the previous section. However, there are numerous cases where gradients must be designed in a 2D or 3D space that must be free to rotate.

First we now define the solution space consisting of three separate discrete-time waveforms along each axis, $G_x[n]$, $G_y[n]$ and $G_z[n]$, which must collectively satisfy the quadratic constraints of Eqs. 3 and 4. The boundary constraints and moment constraints (Eqs. 5 and 6) are applied separately for each of the dimensions. Overall, the problem is now quadratically constrained.

Before formulating solutions to the gradient design problem, it is useful to summarize the constraints for discrete time waveform design. Table 1 lists the four types of constraint for gradient design problems for D-dimensional, N-point waveform with Q-moments constrained, and the number of instances of each in gradient design. The quadratic inequality constraints are the prime source of complexity in gradient design.

[0036] Table 1.

| Constraint | Type | Number |
|---|---|---|
| Current (Gradient Amplitude) | Quadratic Inequality | $N$ |
| Voltage (Gradient Slew-Rate) | Quadratic Inequality | $N$ |
| Gradient Moments | Linear Equality | $D \times Q$ |
| Boundary Values | Linear Equality | $2D$ |

A certain class of constrained optimization problems, convex-optimization problems, have been studied heretofore. For many types of convex optimization problems, very efficient and robust solution methods have been developed. These methods are guaranteed to find the globally-optimal solution if any solution exists. Following are described methods of expressing the gradient design constraints as standard convex optimization problems so that they may be solved efficiently and reliably.

Both absolute-value and equality constraints can equivalently be expressed as two inequality constraints. A single absolute-value constraint $a|x| \leq b$ can be replaced by two linear constraints $ax \leq b$ and $-ax \leq b$. An equality constraint of the form $ax = b$ can be replaced by the two inequalities $ax \leq b + \varepsilon$ and $-ax \leq -b + \varepsilon$. This is desirable in practical optimization, as it allows the tolerance .epsilon. to be different for different constraints.

Using this formulation, the constraints of Eqs. 1, 2, 5 and 6 as well as the boundary constraints can all be expressed as linear inequality constraints on the discrete-time gradient waveform.

Each quadratic constraint may be approximated by multiple linear constraints. This is done in 2D, for example, by approximating the circle $G_x[n]^2 + G_y[n]^2 = G_{max}^2$ as a series of P lines defined by

$$\cos(\theta_p)G_x[n] + \sin(\theta_p)G_y[n] \leq G_{max} \cos\left(\frac{\pi}{P}\right) \quad \forall = 1...P \tag{8}$$

where $\theta_p = 2\pi \dfrac{p - 0.5}{P}$.

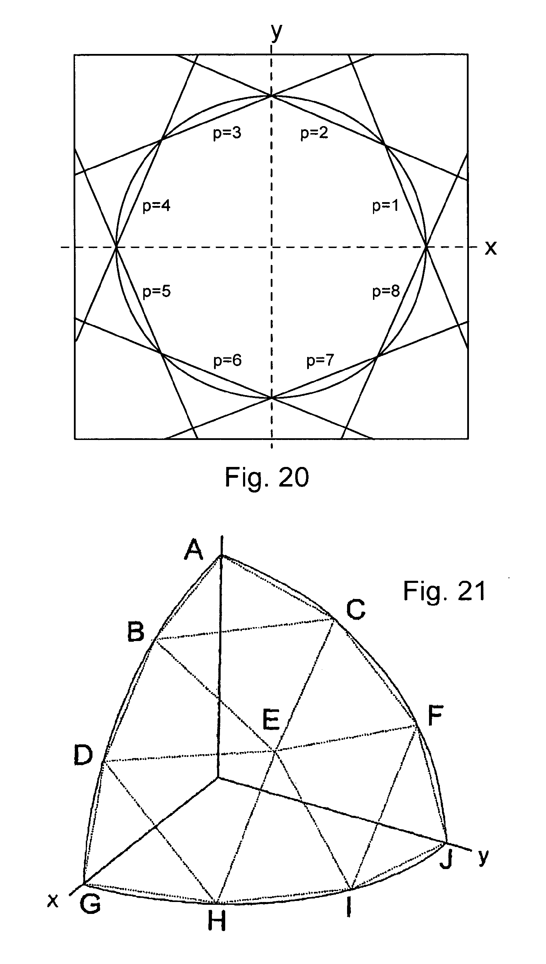

FIG. 20 shows this piece-wise-linear approximation to a 2D quadratic constraint with P=8. The white area represents allowable values of the 2D amplitude, voltage, or slew-rate. For all of the 2D examples herein, P=16 is used. A piece-wise-linear approximation to a sphere is also possible for 3D quadratically constrained problems. A simple way to do this is to consider the surface of the sphere $|\vec{r}| = c$ in the first octant where the components of $\vec{r}$ are all positive (FIG. 21). By placing points on the surface of the sphere, triangles with roughly equal area are constructed, and the constraints can be expressed in the form

$$\vec{n} \cdot \vec{r} \le \vec{n} \cdot \vec{V}$$

where $\vec{n}$ is a vector normal to the triangle, i.e., $\vec{n} = (\vec{B} - \vec{A}) - \times(\vec{C} - \vec{A})$ and $\vec{V}$ is the position vector of any of the triangle corners, $(\vec{A}, \vec{B}, \text{or } \vec{C})$.

For the 3D examples herein, the first quadrant is divided into 9 planes using the points shown in FIG. 21. Here piece-wise-linear approximation to spherical surface represents 3D quadratic constraints. The points shown are permutations of

$$\langle 1,0,0 \rangle, \left\langle \frac{\sqrt{3}}{2}, \frac{1}{2}, 0 \right\rangle, \text{ and } \left\langle \frac{1}{\sqrt{3}}, \frac{1}{\sqrt{3}}, \frac{1}{\sqrt{3}} \right\rangle.$$ The entire sphere can then be represented by the 72 planes generated with all permutations of positive and negative signs in the individual $\vec{n}$ vectors.

The problem with only linear inequality constraints can be solved using linear-programming (LP). The "standard LP" form of a problem is to find the vector x that minimizes a cost function $\mathbf{f}^T\mathbf{x}$ subject to the constraint $\mathbf{Ax} \le \mathbf{b}$. The matrix A and vector b are formed by combining all of the linear constraint equations for amplifier and pulse sequence constraints. This formulation of the problem is referred to as "simple-LP" formulation.

The cost function in simple-LP formulation is linear in the gradient values. Minimization of such a cost function is not particularly useful. As such the actual optimization consists of a series of feasibility tests as will be described later. For the simple-LP formulation, f is chosen to be a vector of ones.

The LP formulation for an N-point waveform uses ND variables with roughly $2^{D+1}NP$ constraints, where D is the number of dimensions and P is the number of piece-wise-linear constraints on gradient amplitude and voltage amplitude for which coefficients are all positive (i.e., the number of constraints in the first quadrant or octant). The Appendix shows the complete simple-LP formulation for a 2D freely-rotatable gradient design problem.

An alternative to simple-LP formulation is the Ll-norm formulation, which alters the number of constraints and can produce different solutions to the problem, see Xu et al., "Homogeneous Magnet Design Using Linear Programming," IEEE Trans Med Imaging 2000; 36:476-483.

The Ll-norm formulation uses standard linear programming to minimize the Ll-norm (absolute value) of the gradient and slew voltage by adding "slack variables" to the optimization problem. In addition to solving for $G_x[n]$, we solve a set of variables $H_x[n]$, that converge to $|G_x[n]|$ and a set of variables $S_x[n]$ that converge to $|\alpha G_x[n] + \beta G_x[n+1]|$.

The slack variables are forced to converge by first adding the following linear gradient constraints to the problem:

$$-H_x[n] + G_x[n] \leq 0$$
$$-H_x[n] - G_x[n] \leq 0 \qquad (10)$$

Additionally we add the following slew-rate constraints:

$$-S_x[n] + \alpha G_x[n] + \beta G_x[n+1] \leq 0 \qquad (11)$$
$$-S_x[n] - \alpha G_x[n] - \beta G_x[n+1] \leq 0$$

These constraints will force the $H_x[n]$ and $S_x[n]$ variables to approach the appropriate absolute value when combined with minimization of the following cost function:

$$J(S_x[n], H_x[n]) = \sum_{n=1}^{N} (H_x[n] + S_x[n]) \qquad (12)$$

For two and three dimensional problems, an appropriate set of variables $H_y[n]$, $S_y[n]$, $H_z[n]$ and $S_z[n]$ would be added. Constraints for these variables are expressed as in Eqs. 10 and 11, and the variables would be added to the cost function in Eq. 12.

The simple-LP cost function of all ones simply tries to make individual gradient axes closer to their negative amplitude limits. However, the L1-norm cost function is preferable, as it tends to minimize the magnitude of both gradient current and voltage, which will improve heating characteristics of the waveform.

When L1-norm formulation is used, the piece-wise-linear constraints on gradient amplitude may be reduced by replacing the constraint on $G_x[n]$, $G_y[n]$, and $G_z[n]$ with equivalent constraints on $H_x[n]$, $H_y[n]$, and $H_z[n]$. Similarly, the voltage constraints may be replaced with constraints on $S_x[n]$, $S_y[n]$, and $S_z[n]$. Since all of the slack variables are constrained to be non-negative, only the gradient amplitude and voltage-limit constraints with positive coefficients are needed. This reduces the number of gradient amplitude constraints by a factor of $2^D$ where D is the number of gradient axes, and is the primary advantage of the L1-norm formulation compared to simple-LP formulation.

The L1-norm formulation uses 3N D variables, and approximately 2N(P+2D) constraints. For 2D or 3D problems, the number of constraints is often much smaller than that of the simple-LP formulation. Additionally, as described by Xu et al., L1-norm programming tends to find solutions where some or many of the variables are zero. This may be advantageous in gradient design, as solutions with lower gradient or slew duty cycle result in lower gradient heating.

Second-order cone programming (SOCP) (see Lobo et al., "Applications of second-order cone programming," Linear Algebra Appl. 1998; 284; 193-228) is a method that finds the solution x that minimizes a linear cost function $f^T x$ subject to the "second-order cone" constraint:

$$\|Ax + b\|_2 \leq Cx + d \qquad (13)$$

First this constraint is a superset of the linear constraints in linear programming. Second, the cost function is linear, as with

EP 2 071 473 A2

the simple-LP formulation described above, and is chosen in the same manner, as all ones.

The SDCP formulation of the gradient design problem begins with Eqs. 5-6. Although these constraints could be reduced by a factor of $2^D$ compared with the simple LP or L1-norm formulations, this has little effect on convergence time. The main advantage of the SDCP formulation is that the quadratic limits of Eqs. 3 and 4 result in a total of 2N-1 constraints, regardless of the number of gradient dimensions. Additionally, the SDCP formulation does not approximate the quadratic gradient limits, which sometimes results in slightly shorter duration solutions.

Because the time to find a solution increases with the number of constraints, it is useful to try to further reduce the number of constraints. Assuming that the slew-rate constraints are met, there will be gradient amplitude constraints near the endpoints that are redundant. Specifically, if the (minimum) distance from the start or end gradient to a linear or quadratic gradient constraint is $\Delta G$, then that constraint is redundant for at least a time

$$\frac{L\Delta G}{\eta V_{max} + RG_{max}}.$$

The minimum-time gradient design problem is to find $N_{min}$, the minimum value of N for which a solution exists. Linear programming functions can be called sequentially with different values of N. We first assume that either $\overline{G}(0) = 0$ or $\overline{G}(n\tau) = 0$. If a solution exists for N, then $N_{min} \leq N$. Otherwise, $N_{min} \geq N$.

This suggests using a binary-search technique. This technique divides the unknown interval containing $N_{min}$ on each call. Begin with estimates of the upper and lower bounds $N_u$ and $N_l$ on N. First these are tested to ensure that they are in fact upper and lower bounds. If not, both bounds are raised or lowered accordingly and retested. Once $N_u$ and $N_l$ have been verified, N is set as close as possible to $N_l + v(N_u - N_l)$. Depending on whether or not a solution exists, either $N_u$ or $N_l$ is set to N, and the process is repeated. Use v=0.8 because an existing solution is found considerably more quickly than the lack of a solution using SDCP.

The above formulation has been implemented using Matlab 6.0 with functions from the Mathworks Optimization toolbox (Mathworks, Natick, Mass.). Specifically, use the linprog( ) function, which replaces the old lp( ) function in Matlab, as well as the socp() function described above. Matlab functions are available for general use.

First, compare the time required to solve the minimum time gradient-area-nulling problem using the simple-LP, L1-norm and SDCP methods. All tests used Matlab 6.0 on 1.8 GHz Athlon PCs running Linux. The binary search formulation was identical for all three methods, and the comparison was performed for 1D, 2D and 3D problems.

Generated were 1000 random gradient waveforms of random duration and the given dimension with endpoints within the magnitude constraint for the given solution method. A sample period of $\tau = 20\ \mu s$ was used, which assumes a gradient amplifier bandwidth of less than 25 kHz. The gradient and zeroth moment of the gradient were then rewound to zero using the bisection method described above. Each step of the binary search method was solved using simple-LP, L1-norm or SDCP formulation. The times required to solve the rewinder problem for each waveform and each formulation method were recorded. In all cases a maximum gradient

97

amplitude of 40 mT/m, and a constant-slew-rate model with 150 T/m/s maximum slew-rate were used. For 2D and 3D, the rewinders are limited by the quadratic constraints described above.

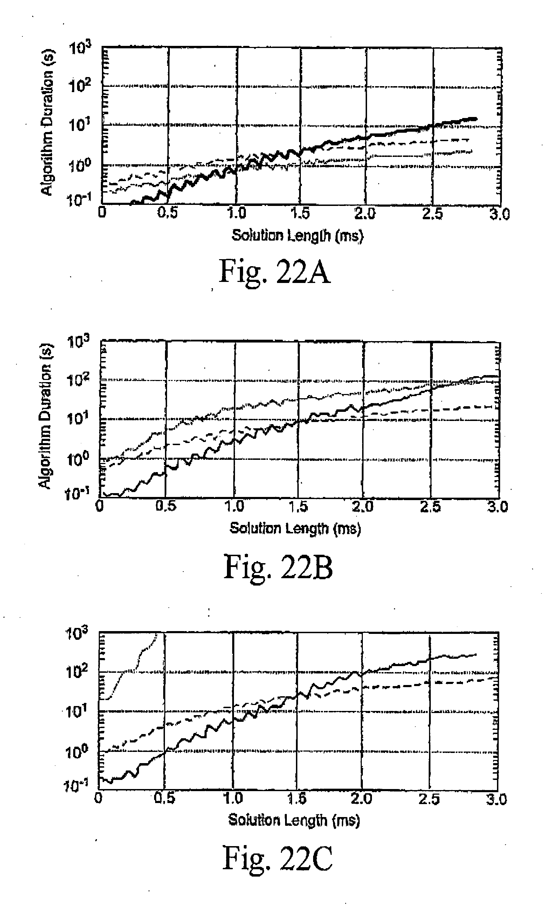

Fig. 22a-22c compare convergence times for the three methods for 1D, 2D and 3D design problems. Shown are convergence time for 1D (a), 2D (b), and 3D (c) time-optimal gradient design using simple-LP (dotted line), L1-norm (dashed line) and SOCP (solid line). Although simple-LP formulation is the most efficient for 1D design problems, the L1-norm is significantly better for 2D and 3D problems. SOCP outperforms L1-norm in 2D and 3D problems, except when the solution turns out to be very long. Not surprisingly, convergence time increases with the solution length. SOCP formulation is fastest regardless of dimension for most practical waveforms (i.e., duration less than 1 ms), and is significantly faster than the other methods as the number of gradient dimensions increases to 2 or 3.

Presented now are several examples showing applications of linear programming for time optimal gradient design. We begin with 1D examples that show that linear programming produces the time-optimal waveforms. Next we show 2D examples, particularly for use in spiral imaging. Finally we show 3D examples for double-oblique or oblique spiral scans.

For a constant amplitude limit, constant-slew-rate limit gradient, the minimum time waveforms to produce a given zeroth, first and/or second moment are generally triangular or trapezoidal waveforms. However, calculation of the segments sometimes must be solved numerically.

A first example is the generation of a simple 1D moment-nulled phase-encoding gradient. The boundary constraints on the pulse waveform are $G_x[0] = G_x[N] = 0$ and the desired k-space area and first-moments are $\Delta \bar{k} = k_{des}$ and $m_1 = 0$. This example sets

$$k_{des} = 400 \ \text{m}^{-1}, G_{max} = 40 \ \text{mT/m and maximum slew-rate} \ \frac{\psi}{L} = 150 \ \text{T/m/s}.$$

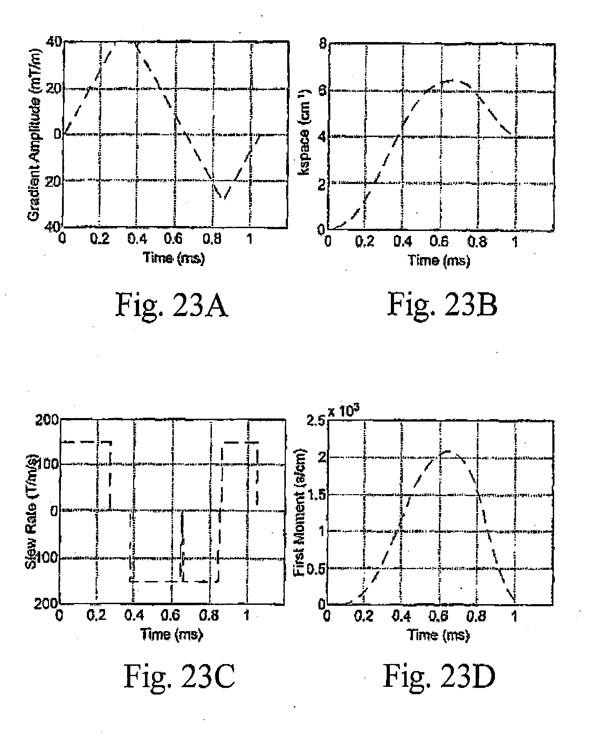

The resulting gradient waveform, k-space trajectory, slew-rate and first moment are shown in FIGS. 23A-23D which show (a) first-moment-nulled gradient waveform, (b) corresponding k-space trajectory, (c) gradient slew-rate, and (d) gradient first-moment, all plotted as functions of time for Example A. The gradient waveform has a duration of 1.048 ms. The gradient is a bipolar combination of a trapezoidal lobe with a triangular lobe, as can reasonably be expected given amplitude- and slew-limited constraints in one dimension. Note that either the gradient amplitude limit or the slew-rate limit is always met, which should be the case for a minimum-time gradient in one dimension.

A second example is to design a minimum-time waveform that transitions between successive lines of an echo-planar imaging trajectory. For consistency, the same gradient and slew-limits, 20 mT/m and 200 T/m/s respectively, are used with the assumption that the gradients can be freely rotated to any oblique in-plane position. The EPI trajectory uses a 20 mT/m readout gradient, with 0.8 cm$^{-1}$ phase-encode area between lines. In our formulation, we specify

$G_x[1] = -G_x[N] = 20 \ \text{mT/m}, G_y[1] = G_y[N] = 0 \ \text{mT/m}, \Delta k_x = 0 \ \text{cm}^{-1}$ and $\Delta k_y = 0.8 \ \text{cm}^{-1}, \tau = 1 \ \mu s.$

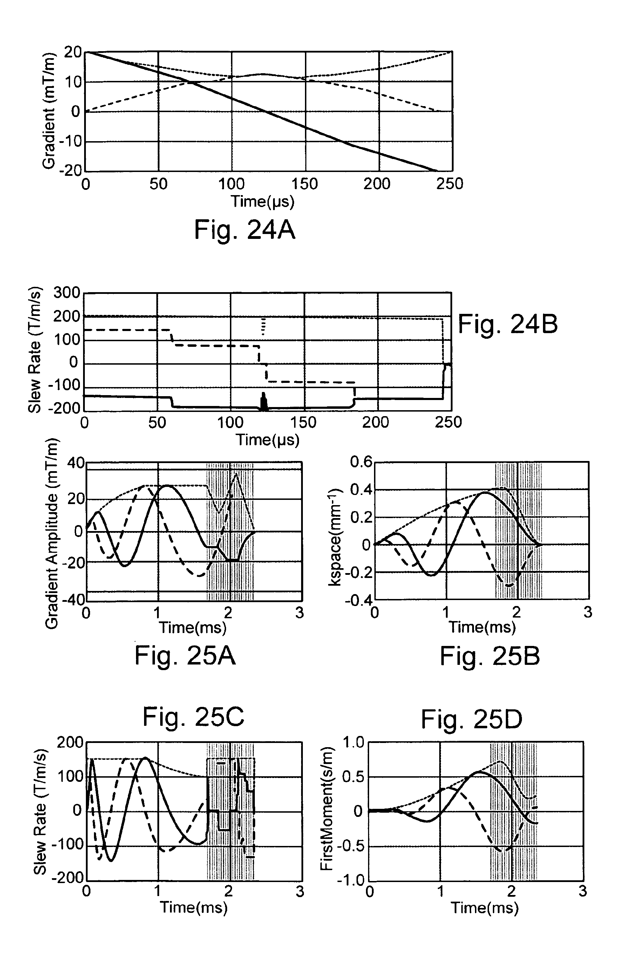

The result, shown in FIGS. 24A-24B, has a total duration of $245 \ \mu s$ In FIGS. 24A-24B, gradient waveforms (a) and slew-rates (b) for an echo-planar readout/phase-encode transition are shown. Gradients and slew-rates are shown for the x-axis (solid

line) y-axis (dashed line) and magnitude (dotted line). This method performs as well as the time-optimal method described in ref. (9).

The solutions with both methods look very similar, and the minor difference between them is most likely simply the way that the end-point constraint is formulated. Interestingly, this gradient is not zero at either endpoint. However, because of the symmetry of the problem, the bisection method of finding the minimum-time gradient still works.

Minimum gradient waveform design on one dimension can generally be solved exactly and analytically. However, two-dimensional design is not always simple. Consider spiral imaging, where interleaved spiral waveforms are played by rotating the waveform in the x-y gradient plane. For the trajectory to be played at arbitrary rotation angles, the gradient and slew-rate vector magnitudes must be within slew-rate constraints.

Spiral waveform design methods have been addressed previously. The spiral waveform can be rewound by separately rewinding each axis with both amplitude (current) and voltage limits set to $1/\sqrt{2}$ times the individual axis limits. This is adequate for applications where the spiral readout duration is long, but is not time-optimal. In cases such as spiral steady-state free precession imaging, it is desirable to rewind the first moment of the gradient as well. In this example, a time-optimal rewinder for spiral gradient waveforms as well as a rewinder for a first-moment-nulled spiral waveform are used.

For this example, a spiral waveform can be used similar to that used for SSFP imaging. The design assumes 60 spiral interleaves to achieve a resolution of 1.25 mm and a field-of-view of 20 cm with a readout duration of 2.7 ms.

The optimization goal is to rewind the gradient waveforms and zeroth moment vector simultaneously to zero as quickly as possible. The rewinder gradient vector initially equals the final gradient of the readout, and ends at zero in both dimensions. Combined with the constraint of rewinding the zeroth moment vector, this gives six equality constraints. FIGS. 25A-25D show the spiral gradient waveform and rewinder characteristics. FIGs. 25A-25D illustrate gradient waveforms (a), k-space trajectory (b), slew-rates (c) and first moment (d) for a simple rewinder waveform (gray region) for a 2D-spiral imaging gradient. Each plot shows x (solid line) and y (dashed line) components, as well as the magnitude (dotted line). The k-space-only rewinder lasts for 0.66 ms, and has a significant residual first moment. All quantities reach zero at the end of the waveform. As with the 1D example, either the gradient magnitude or slew-rate magnitude limit is reached for the entire duration of the rewinder.

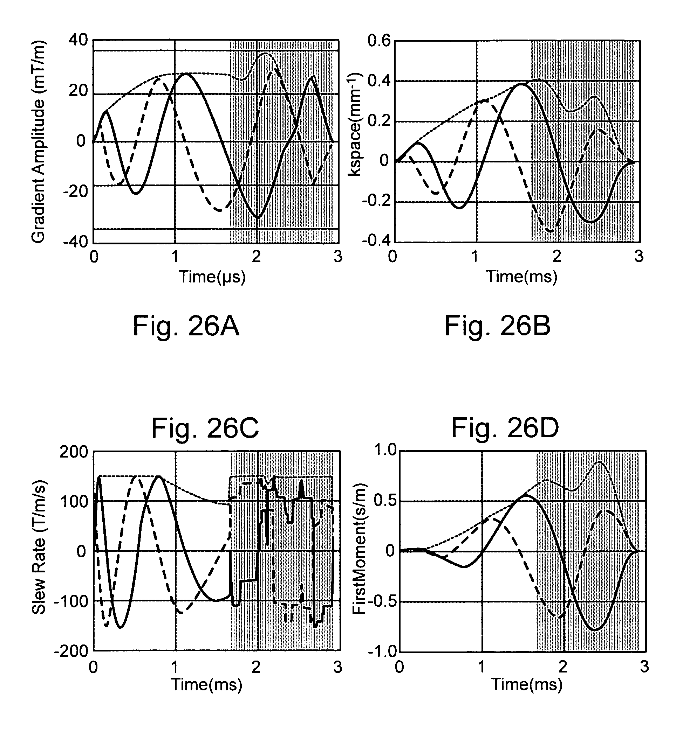

The spiral rewind problem can be repeated for the case where the first moments are also rewound at the end of the waveform. This adds a constraint in each axis for a total of eight equality constraints. The L1-norm solution is shown in FIGs. 26A-26D. Here are shown gradient waveforms (a), k-space trajectory (b), slew-rates (c) and first moment (d) for an $m_1$- nulled rewinder waveform (gray region) for a 2D-spiral imaging gradient. Each plot shows x (solid line) and y (dashed line) components, as well as the magnitude (dotted line). The $m_1$- nulled rewinder lasts for 1.23 ms, and rewinds the gradient, k-space location and the first moment.

For nulling of the first moments, the minimum-time waveform is significantly increased, from 0.78 ms to 1.38 ms. If the two axes were rewound separately (as is commonly performed), each using 70% of the maximum power, the duration would be closer to 1.8 ms. In rapid imaging sequences such as SSFP, 0.4 ms is a significant time reduction, i.e., 10% of the repetition time or 25% of the data acquisition time.

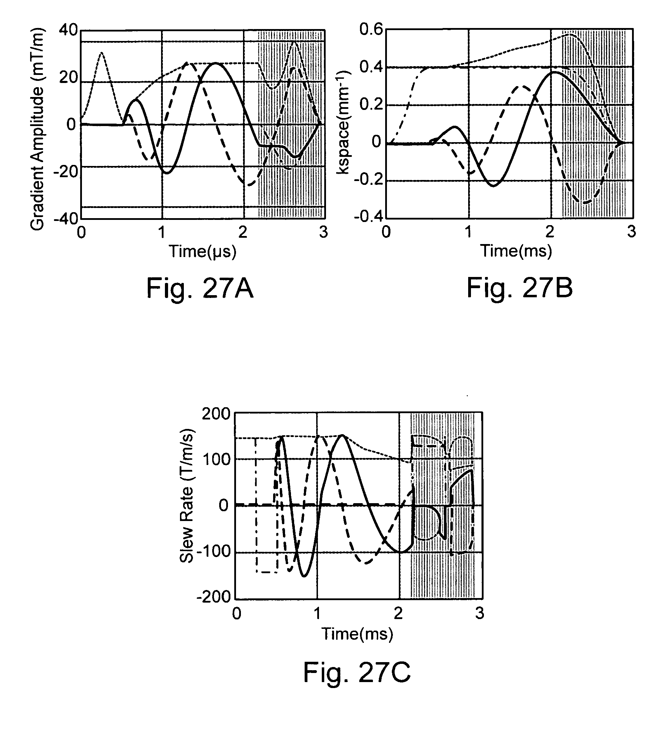

There are cases where the gradient vector must be rotated freely in three dimensions, such as double-oblique scans or oblique-plane spiral scans. The 3D "stack of spirals" example in FIGs. 27A-27C pertains to the latter. Shown are gradient waveforms (a), k-space trajectory (b) and slew-rates (c) for a 3D rewinder waveform (gray region) for a "stack-of-spirals" imaging gradient. Each plot shows x (solid line), y (dashed line) and z (dash-dot line) components, as well as the magnitude (dotted line). The rewinder gradient lasts for 0.74 ms. For gradient-spoiled acquisition, it is desirable to play a gradient spoiler on the z-axis following the spiral readout. To minimize the overall time, this spoiler should be played out simultaneously with the spiral rewinder.

The problem is formulated the same way as that of the simple spiral-rewinder in Example B with the additional constraints that in the z-axis, we specify $G_z [1] = G_z [N] = 0$ and a desired k-space area.

The LP formulation is useful for optimizing oblique gradient design. Gradient design is simplest when the three gradient axes may be designed independently of each other, that is when each "logical" gradient axis corresponds exactly to one "physical" gradient axis. This non-oblique case corresponds to the 3D LP formulation where the gradient constraints are simply $|G_x [n]| \leq G_{max}$, $|G_y [n]| \leq G_{ymax}$, and $|G_z [n]| \leq G_{zmax}$.

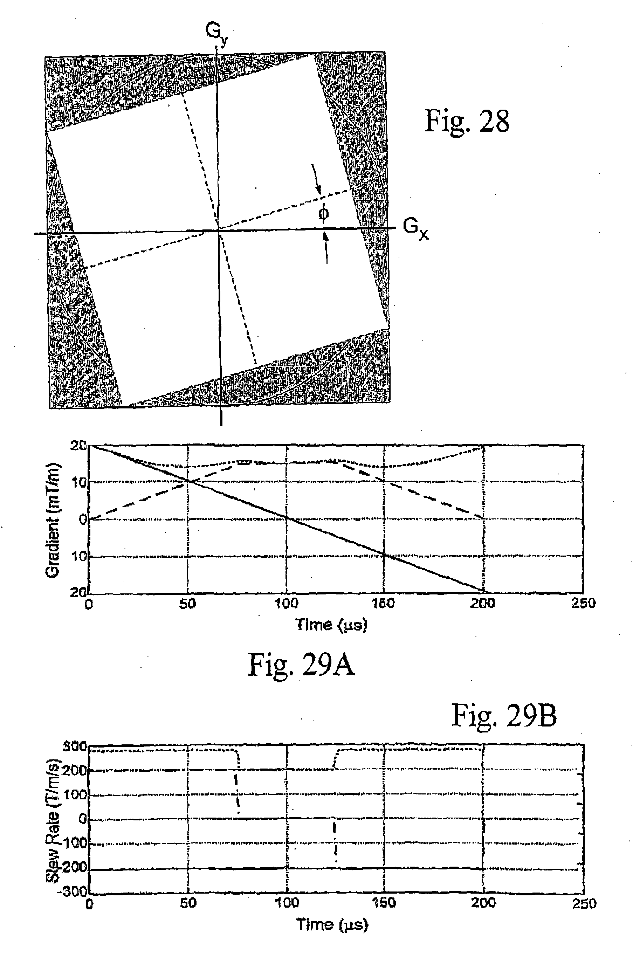

Gradient limits can be reset for any rotation angle by scaling the logical gradient limit by $(\cos \phi + \sin \phi)^{-1}$, where $\phi$ is the angle between major logical and physical axes. As shown in FIG. 28, this ensures that the gradient vector always lies within the large gray square. However, this is obviously inefficient in that a significant amount of gradient power is not used. FIG. 28 illustrates gradient amplitude usage for different oblique-scan strategies. The dark gray square represents all usable gradient amplitude, and the circle represents the quadratically-constrained amplitude if the gradient is designed to be freely-rotatable. If gradients are designed completely independently, then the amplitude limits on each axis must be reduced so that the worst-case gradient still lies within the dark gray square. This is shown for a rotation angle of $\theta = 15°$ (dashed lines). With constraints tailored to the specific oblique angle, all gradient power is available for any rotation angle.

The LP formulation is very adaptable, as the physical constraints can simply be rotated to the logical coordinate system. This means that for oblique gradient design all available gradient power is always used.

Consider the echo-planar transition of example B where the logical and physical gradients are rotated by $\phi = 0°$ and $\phi = 30°$. Here the design is gradient for each specific oblique position. The gradient amplitude constraints

$$\cos \phi G_x[n] - \sin \phi G_y[n] \leq G_{max}$$

$$- \cos \phi G_x[n] + \sin \phi G_y[n] \leq G_{max}$$

$$\sin \phi G_x[n] + \cos \phi G_y[n] \leq G_{max}$$

$$- \sin \phi G_x[n] - \cos \phi G_y[n] \leq G_{max}$$

$$(14)$$

where $\phi$ is the angle of rotation between logical and physical coordinate systems. The slew-rate constraints are

$$\cos\phi\left(\alpha G_x[n] + \beta G_x[n+1]\right) - \sin\phi\left(\alpha G_y[n] + \beta G_y[n+1]\right) \le \psi$$

$$-\cos\phi\left(\alpha G_x[n] + \beta G_x[n+1]\right) + \sin\phi\left(\alpha G_y[n] + \beta G_y[n+1]\right) \le \psi \qquad (15)$$

$$\sin\phi\left(\alpha G_x[n] + \beta G_x[n+1]\right) + \cos\phi\left(\alpha G_y[n] + \beta G_y[n+1]\right) \le \psi$$

$$-\sin\phi\left(\alpha G_x[n] + \beta G_x[n+1]\right) - \cos\phi\left(\alpha G_y[n] + \beta G_y[n+1]\right) \le \psi$$

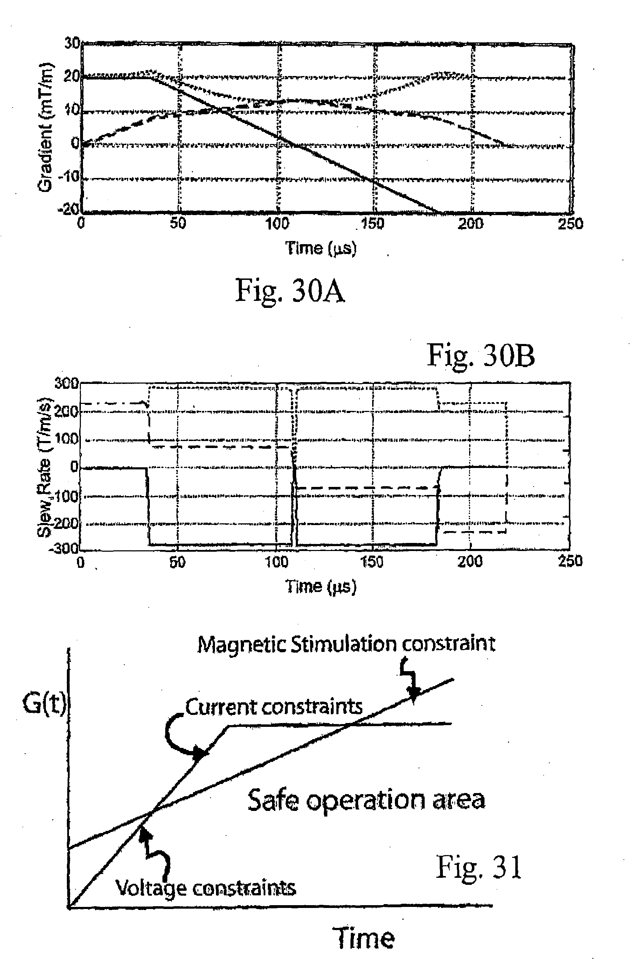

FIGS. 29A-29B and 30A-30B show the resulting waveforms. Both waveforms are faster than that shown in FIGS. 24A-24B, as more gradient power is available, both for amplitude and slew-rate. The off-axis case results in a longer waveform, because slewing in two logical axes must be performed by one physical axis.

The gradient waveform design can also include constraints to avoid overheating and to limit maximum thresholds. The gradient amplifier, wires, and coils have several heating constraints. These can be expressed as functions of the gradient waveforms and the derivatives of the waveforms. Often these constraints are binding in the operation of the scanner. Hence it would be important to be able to constrain the heating in the waveform design algorithm. Fortunately it is possible to include constraints on the gradient waveform and its derivative in the methods disclosed herein.

The heat dissipated in the coil itself is

$$E_{coil} = \int_0^T I^2 R_{coil} dt \qquad (16)$$

where $R_{coil}$ is a constant, and $I$ is proportional to the gradient waveform, G(t). Using the SOCP formulation, the waveforms G(t) for each axis are approximated by a discrete-time waveform $G_i$ where $i=1\ldots N$. Using this, the quadratic constraint can be expressed directly and added to the other constraints in the problem, as

$$\sqrt{\sum_{i=1}^{N} T G_i^2} < \sqrt{\eta E_{max}} \qquad (17)$$

where $E_{max}$ is the maximum heat that can be dissipated in the coil for a given time duration. $\eta$ is the coil efficiency (G/cm/A), and T is the gradient sampling step. Alternatively, instead of constraining the heat, the heat can be minimized by first adding a slack variable, E, in the SOCP formulation as follows:

$$\sqrt{\sum_{i=1}^{N} T G_i^2} < E \qquad (18)$$

Then E can be minimized in the SOCP cost function directly.

Amplifier heating models vary from system to system, but generally are of the following form:

$$E_{amp} = \int_0^T I^2 R_{sat} dt + \int_0^T |I| V_{sat} dt + V_{pwm} |I| PWM(I) \qquad (19)$$

The first two terms of this equation can be constrained or minimized by adding slack variables in the SOCP formulation. The first term uses one slack variable, $E_1$ as

$$\sum_{i=1}^{N} TR_{sol} \frac{G_i^2}{\eta^2} < E_1 \qquad (20)$$

The second term first defines N variables, $P_i$ as

$$\sqrt{\frac{V_{sol}^2 G_i^2}{\eta^2}} < P_i \qquad (21)$$

Then, neglecting the third term, $E_{amp}$ can be constrained or minimized by constraining or minimizing the sum:

$$J = \sum_{i=1}^{N} TP_i + E_1 \qquad (22)$$

The time varying magnetic field of a gradient amplifier has been known to induce electric fields of sufficient magnitude to excite nerves. This is known as magnetostimulation or peripheral nerve stimulation (PNS). Stimulation is a function of gradient amplitude and the derivative of the gradient amplitude. The FDA does not advise MRI manufacturers to operate the gradient amplifiers above stimulation thresholds. Hence, it would be a contribution to the state of the art of gradient waveform design to be able to include maximum stimulation thresholds in the waveform algorithm. Average population studies have determined stimulation thresholds that are a linear combination of G(t) and dG/dt(t).

Mathematically, this stimulation limit can be written as

$$\left| \alpha G(t) + \beta \frac{dG}{dt} \right| < A_{stim} \qquad (23)$$

where G(t) is the gradient and dG/dt is the first derivative of the gradient. The stimulation threshold, $A_{stim}$, is determined experimentally, and may vary from patient to patient. Given $A_{stim}$, the stimulation limits can be imposed on the individual or combined gradient axes in the exact same way as the amplifier voltage limits. FIG. 31 illustrates the voltage and current constraints and magnetic stimulation constraints for safe operation of a gradient amplifier.

The design of many minimum-time gradient waveforms can be expressed as a constrained optimization problem. With some manipulation, the problem can be posed as a standard linear programming (LP) problem, for which many efficient solving methods have been developed. The formulation described solves minimum-time gradient problems where the initial and final gradient values and desired moments are specified, and where the gradient either starts or ends at zero.

Proof of time-optimality is an interesting question. For 1D cases, this can be done, and results indicate this algorithm produces the minimum-time solution. For more complex cases where there is not an analytic solution, it is not possible to prove

time-optimality of the solution. Based on the principles of convex optimization techniques, it is assumed that the solutions are time-optimal. Additionally, the simple LP formulation and LI-norm formulation always give the same duration gradient.

The minimum-time gradient problem, as expressed above, is a series of feasibility problems using different length solution vectors. Shown are three different problem formulations. First, the problem can be solved simply as a standard LP problem, using $G_x[n]$, $G_y[n]$, and $G_z[n]$ variables representing the gradient on each axis. Second, the LI-norm formulation adds additional slack variables, $H_x[n]$, $H_y[n]$, and $H_z[n]$, representing the gradient magnitudes, and $S_x[n]$, $S_y[n]$, and $S_z[n]$ representing the voltage magnitude to further reduce the number of constraints. The LI-norm formulation also allows a more physically-meaningful cost function to be expressed. Third, the second-order cone programming (SOCP) formulation uses $G_x[n]$, $G_y[n]$, and $G_z[n]$ variables and quadratic constraints on both gradient amplitude and gradient voltage.

The simple LP formulation is advantageous compared to LI-norm only for 1D problems. For 2D or 3D problems for which the solutions consist of 75 or fewer time samples $(1.5\text{ ms with }\Delta T = 20\text{ }\mu s)$, the SOCP formulation is the fastest formulation. Given that the SOCP formulation also uses the available gradient limits slightly more efficiently than either simple LP or LI-norm formulation, it is clearly the best option. However, if SOCP software is not available, the LI-norm formulation also performs very well for 2D or 3D problems.

Minimum time, multi-dimensional gradient design is an increasingly important part of designing MR imaging sequences. The present embodiment provides a method that can deliver the time-optimal gradients given a variety of constraints such as amplitude, slew-rate, end points or gradient moments. The present embodiment uses standard linear programming tools, which are robust and efficient.

While the present embodiment has been described with reference to specific embodiments, the description is illustrative of the present embodiment and is not to be construed as limiting the present embodiment.

US005325445A

# United States Patent [19]

## Herbert

[11] Patent Number: 5,325,445

[45] Date of Patent: Jun. 28, 1994

[54] **FEATURE CLASSIFICATION USING SUPERVISED STATISTICAL PATTERN RECOGNITION**

[75] Inventor: Thomas F. Herbert, Rochester, N.Y.

[73] Assignee: Eastman Kodak Company, Rochester, N.Y.

[21] Appl. No.: 890,401

[22] Filed: May 29, 1992

[51] Int. Cl.$^5$ ........................................ G06K 9/68
[52] U.S. Cl. .................................. 382/38; 382/14; 382/39
[58] Field of Search ................. 382/48, 36, 37, 38, 382/39, 34, 14, 15; 395/10, 50, 75

[56] **References Cited**

### U.S. PATENT DOCUMENTS

| | | | |
|---|---|---|---|
| 3,623,015 | 11/1971 | Schmitz et al. | 340/172.5 |
| 4,613,519 | 9/1986 | Yacobi | 427/39 |
| 4,770,184 | 9/1988 | Greene, Jr. et al. | 128/661.08 |
| 4,783,802 | 11/1988 | Takebayashi et al. | 381/41 |
| 4,975,974 | 12/1990 | Nishijima et al. | 382/34 |
| 4,975,975 | 12/1990 | Filipski | 382/38 |
| 4,977,603 | 12/1990 | Irie et al. | 382/36 |
| 5,058,182 | 10/1991 | Kuan et al. | 382/36 |
| 5,075,896 | 12/1991 | Wilcox et al. | 382/39 |
| 5,077,807 | 12/1991 | Bokser | 382/36 |
| 5,142,593 | 8/1992 | Kasano | 382/36 |
| 5,181,259 | 1/1993 | Rorvig | 382/36 |
| 5,185,813 | 2/1993 | Tsujimoto | 382/37 |
| 5,187,751 | 2/1993 | Tanaka | 382/36 |

### OTHER PUBLICATIONS

Aristides A. G. Requicha, "Representations for Rigid Solids: Theory, Methods, and Systems," *Computing Surveys*, vol. 12, No. 4, pp. 437–463, Dec. 1980.
EKTRON VEREDUS® "Surface Flaw Detection and Analysis System for Metal Coil, Plastic, Paper Roll Products, and other Web Processed Materials"; EK-TRON Applied Imaging, Inc., 1991.
Duda et al., *Pattern Classification and Scene Analysis*, Chapter 2, pp. 10–20; Chapter 3, pp. 44–49; Chapter 4, pp. 85–105 and Chapter 6, pp. 189–190, 1973.
Winston, Patrick Henry, *Artificial Intelligence*, Second Edition, Chapter 4, pp. 87–88 & 114–117, 1984.
Fu, K. S., *Syntactic Pattern Recognition and Applications*, Chapter 3, pp. 79–97, 1982.

Primary Examiner—Joseph Mancuso
Attorney, Agent, or Firm—Kevin P. Radigan

[57] **ABSTRACT**

Feature classification using a novel supervised statistical pattern recognition approach is described. A tree-like hierarchical decomposition of n-dimensional feature space is created off-line from an image processing system. The hierarchical tree is created through a mini-max-type decompositional segregation of n-dimensional feature vectors of different feature classifications within the corresponding feature space. Each cell preferably contains feature vectors of only one feature classification, or is empty, or is of a predefined minimum cell size. Once created, the hierarchical tree is made available to the image processing system for real-time defect classification of features in a static or moving pattern. Each feature is indexed to the classification tree by locating its corresponding feature vector in the appropriate feature space cell as determined by a depth-first search of the hierarchical tree. The smallest leaf node which includes that feature vector provides the statistical information on the vector's classification.

**35 Claims, 6 Drawing Sheets**

```
        ┌──────────────────────┐  20
        │  TRAINING SAMPLE OF  │
        │ ENCODED THRESHOLDED  │
        │    BINARY IMAGES     │
        └──────────────────────┘
                   │
                   ▼            22
        ┌──────────────────────┐
        │ EXTRACT CONNECTED REGIONS │
        └──────────────────────┘
                   │
                   ▼            24
        ┌──────────────────────┐
        │   STORE CONNECTED    │
        │  REGIONS IN DATABASE │
        └──────────────────────┘
                   │
                   ▼            26
        ┌──────────────────────┐
        │   OBTAIN GEOMETRIC   │
        │  MEASUREMENTS & FORM │
        │  INTO FEATURE VECTOR │
        └──────────────────────┘
                   │
                   ▼            28
        ┌──────────────────────┐
        │  SAVE FEATURE VECTORS │
        └──────────────────────┘
                   │
                   ▼            30
        ┌──────────────────────┐
        │   CLASSIFY FEATURE   │
        │       VECTORS        │
        └──────────────────────┘
                   │
                   ▼            32
        ┌──────────────────────┐
        │  CALL HYPER-TREE TO  │
        │  CREATE DATA MODEL   │
        └──────────────────────┘
```

*fig. 1*

fig. 2

fig. 3

20

TRAINING SAMPLE OF
ENCODED THRESHOLDED
BINARY IMAGES

22

EXTRACT CONNECTED REGIONS

24

STORE CONNECTED
REGIONS IN DATABASE

26

OBTAIN GEOMETRIC
MEASUREMENTS & FORM
INTO FEATURE VECTOR

28

SAVE FEATURE VECTORS

30

CLASSIFY FEATURE
VECTORS

32

CALL HYPER-TREE TO
CREATE DATA MODEL

*fig. 4*

**40**
INITIALIZE POINTER
TO HYPER-TREE

**42**
ESTABLISH MAXIMUM
LEVEL OF DECOMPOSITION

**44**
DETERMINE MINIMUM
CELL SIZE FOR LEAF-NODES

**46**
FOR EACH FEATURE, READ
FEATURE FROM db & CALL
DECOMPOSE TO PLACE FEATURE
IN CORRECT HYPER-CUBE

**48**
CALL TRAVERSE TO
ACCUMULATE STATISTICS
FOR EACH CATEGORY

**50**
CALL PRINSTAT TO
PRINT THE STATISTICS

*fig. 5*

VEREDUS SYSTEM _80_

OUTPUT REPORTS 72

DECISION 70

IMAGE REDUCTION 68

Y GROUP ENCODING 66

CAMERA 64

62

_60_

SYSTEM FOR OFF-LINE CLASSIFICATION

HYPER-TREE 77

CLASSIFY 76

74

RELATIONAL DATABASE

CONNECT

GEO 75

73

............... IMAGE PATH

———— DATA PATH

_fig. 6_

STORAGE STRUCTURE FOR
OF CLASS DATA MODEL

DIM

LEVEL

SIZE

CLASSES

LOSS

HEADER (8BYTES)

8 BYTES (FLOAT)
REPEATED ONCE
FOR EACH CLASS

RISK

8 BYTES (FLOAT)
REPEATED CLASS$^2$ TIMES

CLASS ——— 2 BYTES

DAUGHTERMASK—*

$2^{DIM-3}$ BYTES

ROOT CUBE

CLASS

DAUGHTERMASK—*

2 BYTES
(REPEATED
ONCE FOR
EACH "1"
BIT IN
DAUGHTER-
MASK)

REPEATED
RECURSIVELY
ONCE FOR
EACH LEVEL

* APPEARS ONLY IF THE
MSB IN CLASS IS SET

*fig. 7*

# FEATURE CLASSIFICATION USING SUPERVISED STATISTICAL PATTERN RECOGNITION

## BACKGROUND OF INVENTION

### 1. Technical Field

This invention relates in general to feature classification techniques for a static or moving image, and more particularly, to a feature classification system and method which employ supervised statistical pattern recognition using a novel vector classification model of spatially decomposed multi-dimensional feature space.

### 2. Background Art

As the use of optical scanning and electronic imperfection detection have continued to increase, automatic differentiation of defect classes has come within reach of available technology. Pattern recognition is applicable to feature classification problems because pattern recognition automatically assigns a physical object or event to one of several pre-specified categories. Each defect (or feature) shows up as a connected region in the image and each defect can be assigned to a category.

There are two types of pattern recognition (PR), structural and statistical. Structural methods use a representation of a feature's shape known as a boundary representation (BREP), while statistical methods use an array of numbers or measurements containing properties of each feature; this numerical information is called a feature vector. In structural pattern recognition the picture of the feature can be recreated from the reduced data since the BREP has complete boundary information in polygonal form. In statistical pattern recognition, however, the picture cannot be recreated from its representation; but, a feature vector is a more compact representation of the object than a BREP. With either method, the goal is to construct a classifier, i.e., a machine to automatically process the image to generate a classification for each feature.

In structural pattern recognition, the classifier is based on formal language theory. The BREP is processed into a series of symbols representing the length and direction of the vectors in the boundary. A set of strings consisting of concatenations of these symbols is the language. The grammar, which is a mathematical system of describing the language, describes the structure or the boundary of the features as ordered combinations of symbols. A recognizer, which is constructed from this grammar, works like a computer language compiler used to recognize and distinguish computer language statements. For example, the box of FIG. 1 can be thought of as a language. As shown, $L = \{a^n, b^n, c^n, d^n | n \geq 1\}$ is a language describing the box with each side of length "1" or greater.

In real-world problems a feature or defect does not have an exact description so the problem is more difficult than parsing a computer language. A structural recognizer that can handle realistic problems has to be based on complicated context sensitive or stochastic grammars to deal with high data complexity and variation. Because of this, structural methods are not readily implemented in typical engineering situations.

In contrast, statistical pattern recognition uses a recognizer based on statistical decision theory. Several different types of statistical pattern recognition exist but in general there are two main approaches, called supervised and unsupervised classification.

Supervised classification uses a labelled training sample formed when an expert identifies the category of each member of the sample. Probability distributions are estimated or recognizers are constructed directly from the training sample. An expert must examine the data and label each of the features. (Again, the novel pattern recognition approach described herein uses supervised classification.) The effort of labelling a training sample can be made easier by providing a graphical interface to facilitate an expert's interaction with the data.

Unsupervised classification doesn't use a labelled training sample. This approach requires the recognizer to learn the underlying probability distribution of the data as it goes, which is often a difficult problem. However, unsupervised classification also does not require the sometimes lengthy process of accumulating a sufficiently large training sample and it does not necessarily require the effort of identifying the members of this sample. The method can be useful in augmenting supervised classification by allowing the system to adapt to changes in the data.

In addition to the above-noted approaches, statistical pattern recognition employs two main methods, parametric and non-parametric. Parametric methods assume an underlying probability distribution of the real world data. Non-parametric methods make no such assumptions.

Parametric methods are generally used when the distribution is known to be in one of the familiar forms, such as Normal or Gaussian. Classifiers can be generated based on Bayes rule with the a priori distributions known and joint probability distributions determined from the sample data. Specific features can then be compared to the statistics of the known distribution function thereby classifying them.

In real-world situations, the data often does not conveniently fall into a Normal or other known distribution. The distribution of a class of features might be multi-modal, i.e., with two or more peaks in the distribution of a defect category (e.g., see FIG. 2). As in the example of FIG. 2, spot like defects are roundish and easily recognized by an approximately equal length and width, but there might be relatively small and large defects all of which are known as spots. In this example, the spots might be better recognized as the ratio of area to perimeter, which will remain approximately constant as the size of the roundish spots vary. Although a specialized recognizer can be constructed to deal with this example, a method is needed which is generally applicable.

Non-parametric methods provide a more general solution to the above problem in that they generate decision functions or a classifier directly from a training sample. By doing this such approaches bypass the parameter estimation problem and ignore any presumed form for the density function. (As described below, the present invention comprises a non-parametric technique.)

One of the main difficulties of non-parametric methods is the exponential increase in storage and computational requirements as the dimensionality increases. If the feature is described by a large number of measurements (or elements), the problem can grow to be very large when some of the known methods are used. (Since the technique of the present invention divides the feature space recursively by powers of two, the problem is

made more manageable because the storage space only increases as the log base 2.)

## SUMMARY OF THE INVENTION

Briefly described, in one aspect a method for generating a statistical classification model from a sample test image having a plurality of features thereon is provided. The statistical model is used for real-time supervised feature classification by an associated image processing system. The model generating method includes the steps of: imaging the sample test image having the plurality of features thereon and producing a digital representation thereof; using the digital image representation to assign a unique classification to selected features of the same type; producing an n-element feature vector for each feature classified, the n-element feature vectors defining an associated n-dimensional feature space; using the assigned classifications to cluster the corresponding feature vectors in feature space, wherein this clustering employs a minimax search to define a tree-like hierarchical decomposition of n-dimensional feature space; and storing the hierarchically decomposed n-dimensional feature space for access by the image processing system during real-time feature classifying of a new pattern.

In another aspect, the present invention comprises a real-time image processing method for classifying web features using a supervised statistical classifier. The statistical classifier comprises a tree-like hierarchical decomposition of n-dimensional feature space wherein different feature types are clustered in different feature space cells of the hierarchical tree. This method includes the steps of: imaging the web and producing a digital representation thereof, the imaging operation including producing an n-dimensional feature vector for each imaged feature of the web; referencing the supervised statistical classifier and automatically locating imaged features within corresponding feature space cells of the tree-like hierarchical decomposition of n-dimensional feature space, this locating step comprising searching the hierarchical decomposition of feature space for the smallest cell of the hierarchical tree including the feature vector; and accumulating statistics on imaged features based on the located feature vectors relative to the hierarchical tree. The accumulated statistics include a feature-type classification for the corresponding web feature.

In still another aspect of the present invention, a real-time image processing system for classifying web features using a supervised statistical classifier is provided. The statistical classifier comprises a tree-like hierarchical decomposition of n-dimensional feature space wherein different feature types are clustered in different feature space cells of the hierarchical tree. The system includes imaging means for producing a digital image representation of the web, including n-dimensional feature vectors for selected web features. Referencing means for accessing the supervised statistical classifier in a real-time manner and automatically locating feature vectors within corresponding feature space cells of the tree-like hierarchical decomposition of n-dimensional feature space are also provided. For each located feature vector, the locating means includes searching means for traversing the hierarchical decomposition of feature space for the smallest cell of the hierarchical tree including the subject feature vector. Finally, accumulating means accumulates statistics on the selected web features based on their location within

the hierarchical tree. The statistics provide for each located feature vector a feature-type classification of the corresponding web feature.

Numerous additional method and system enhancements are also described and claimed herein.

It will be observed from the above discussion that a novel method for generating a statistical model from a sampled test image (or, preferably, a plurality of sampled test images) is provided. The flexible, non-parametric approach presented produces a classification tree to be searched by an on-line image processing system, e.g. as part of a quality control process. The processing system locates a particular feature vector within a corresponding feature space cell. Once created, the data model remains accurate for the given process and imaging conditions. The resultant data model is more efficient and more accurate at classifying features than heretofore known modeling techniques. Further accuracy may be obtained by simultaneous application of non-supervised methods to automatically learn the probability distribution of defect categories through multiple applications of the technique (herein termed "hyper-tree"). The resultant cell size and ratio of size of cells with the number of defects in them instantly yields information on the quality of the statistical performance. A degree of certainty of recognition can be provided along with an estimation of defect classification. In addition, the technique can be implemented in software or hardware.

## BRIEF DESCRIPTION OF THE DRAWINGS

These and other objects, advantages and features of the present invention will be more readily understood from the following detailed description of certain preferred embodiments thereof, when considered in conjunction with the accompanying drawings in which:

FIG. 1 depicts by way of example a representation of a structural pattern language;

FIG. 2 graphically depicts a sample multi-modal distribution of a given class of defects over a defined area;

FIG. 3 graphically depicts a simple example of two-dimensional recursive subdivision of feature space pursuant to the present invention;

FIG. 4 is a functional flowchart of one embodiment of preliminary processing during creation of a data model pursuant to the present invention;

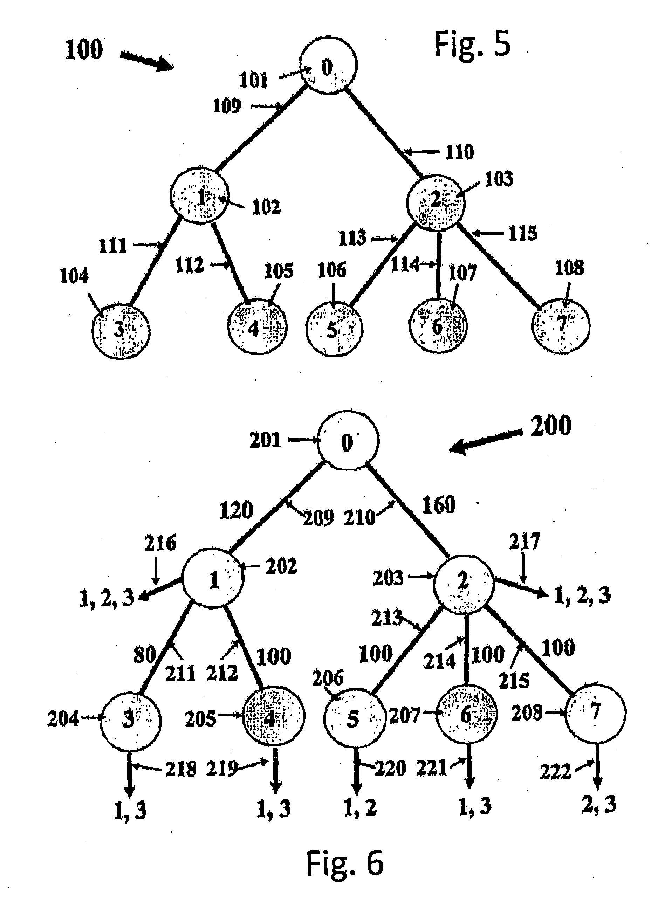

FIG. 5 is a functional flowchart of a specific embodiment of "hyper-tree" processing pursuant to the present invention;

FIG. 6 is a block diagram representation of one system embodiment of the present invention; and

FIG. 7 is a block diagram of one embodiment of storage structure for a data model constructed pursuant to the present invention.

## BEST MODE FOR CARRYING OUT THE INVENTION

In the detailed embodiments described herein, the claimed invention is referred to as "hyper-tree."

In a hyper-tree method, each defect or feature is initially described by a feature vector containing n measurements or characteristics of the feature. These vectors form a multi-dimensional (or, more specifically, n-dimensional) feature space where the number of dimensions is equal to the number "n" of measurements in the feature vector. Statistical analysis pursuant to the present invention is enhanced by inclusion of greater

than three elements or measurements per feature vector. The inventive method breaks down this feature space to form clusters for each defect class. A data model results directly from the clusters of sample data. This data model is ultimately transferred to the on-line defect imaging system and used to categorize new defect data in real-time.

### Algorithms

The hyper-tree algorithm uses a type of heuristic search, referred to in the art as a "minimax search", which is similar to that used in game theory because it recursively subdivides a multi-dimensional feature space by assuming the presence of a malicious opponent that is trying to destroy the purity of a hyper-cube by introducing features assigned to other classes. It combines this approach with a technique similar to oct-trees used to segment 3-d space for positioning and measuring geometric solids. The oct-tree approach is extended from three dimensions into multiple dimensional (i.e., greater than three-dimensional) "hyper-space" to form a "hyper-tree." It recursively divides the space into smaller and smaller hyper-cubes trying to maintain the purity of the region in hyper-space. The hyper-tree algorithm terminates when a region is pure or when a predefined minimum cell size is reached.

The hyper-cube is initially assumed to be an unspecified classification, empty of all points. The first point to arrive in an empty hyper-cube causes the cube to be sub-divided into $2^d$ child hyper-cubes. As each new point of a given class appears, and it is placed in an empty barren region or in a region of a different class, a sub-division occurs. If the point appears in a classified pure hyper-cube then the count is augmented for that hyper-cube. This process continues recursively until all points in the training sample are read. Since the feature space is a discrete sampled space, the subdivision is repeated only enough times to yield unit-sized hyper-cubes as leaf-nodes on the classification hyper-tree. Hyper-tree doesn't necessarily resolve to a minimum type cell. For example, another criteria can be used to terminate the heuristic search yielding larger than real size hyper-cubes, herein referred to as the maximum decomposition level. In general, an impure leaf-node indicates that points of opposing categories occurred in approximately the same position of hyper-space.

FIG. 3 is a simplified, two-dimensional example of how the feature space might be divided to distinguish two defect categories in 2-d feature space where each feature vector consists of area and perimeter. In this case the feature space is sub-divided to yield pure squares for each category. The points which fall within the dotted squares are classified as spots and the points which fall within the cross-hatched area are classified as streaks. The clear areas are unclassified. If the points of opposing categories were closer together, the space would be sub-divided into still smaller squares. A more realistic example, however, is harder to illustrate because of the difficulty of drawing multi-dimensional space. If two more dimensions such as length and width are included they would subdivide the resultant hyper-space more accurately. Also in practical applications, an unspecified classification, such as category zero, can be included to cover any defects or features in the training sample not explicitly categorized.

The number of leaf-nodes and the level of decomposition indicate the quality of the training sample and the success the resulting data model will have in differenti-

ating between defect categories. Loss and risk functions are generated by considering the ratio of the number of points of other categories in a region dominated by a given category. The encoded feature space or resulting data model is saved, e.g., to a disk, using one bit to indicate the presence of each child hyper-cube. This model can then be read by an on-line image processing program for classification of fresh data in real-time. An overview of one software embodiment of model building pursuant to the present invention is set forth below.

| | |
|---|---|
| Main program | reads each feature in the training sample from the database calling Decompose after reading each new feature. |
| Decompose | puts the feature in the hyper-cube if it is of the same type, a minimum sized hyper-cube, or empty. If the node hasn't been initialized yet, it is initialized. If the node is not a leaf node, Decompose is called recursively. If the node is a leaf-node but not a minimum node then Try-to-Exclude is called for every point in the node that has a category different from the current feature. Decompose is then called recursively for every feature of the same category as the current feature. |
| Try-to-Exclude | puts the feature in the node if it is a minimum cell, or empty. If the node hasn't been initialized yet, it is initialized. If the node is a leaf-node but not a minimum node the Decompose is called for every point in the node that has a category the same as feature. Try-to-Exclude is then called recursively with the feature. |
| Traverse | accumulates the statistics of the data model. It traverses the hyper-tree calculating the a priori and a posterior probabilities, the mean, the variance and the cost and risk functions for each defect category. |
| Printstat | prints a summary of the statistics gathered by Traverse. |
| Writemx | recursively descends the hyper-tree writing a data model to the disk using an encoded form where only one bit is used for each child hyper-cube. |

The pseudo-code below describes the principal program components summarized above. Variable name-sare in italics. © 1992 Eastman Kodak Company

Main program
    Initialize head pointer to hyper-tree.
    Establish maximum level of decomposition.
    Determine minimum cell size for leaf-nodes.
    For $n = 1$ to the total number of features (N) do the following
        Read $feature_n$ from Segmented Image Database
        Call Decompose ($feature_n$, head) which attempts to place feature in correct hyper-cube.
    Call Traverse to accumulate the statistics for each category.
    Call Printstat to print the statistics.
Decompose (feature, node)

## 7

-continued

```
If node is at minimum size or the maximum level
of decomposition is reached then
    put feature in child's list of features
else is node is leaf node then
    if there are no points of other categories
    in node then
        put feature in node's list of features
    else begin block
        find center of cell for point feature.
        if child cell corresponding to new
        center is NIL then
            make new child-cell
        call Decompose (child-cell, feature)
        for all categories Ω = {ω₁ . . . ωₖ}, i = 1 . . . k
        do
            if category of feature is not the
            same as ωᵢ then begin
                for all old points in node's
                list of category ωᵢ do
                    take old point,
                    oldpoint of category ωⱼ
                    from list
                    find center of cell for
                    oldpoint.
                    if child-cell for new
                    center is NIL
                        make new child-
                        cell
                    call Try-to-Exclude
                    (child_cell, oldpoint)
                end for all
            end if
        end for all
    end of block
    else begin block
        find center of cell for feature.
        If child cell corresponding to new center
        is NIL then
            make new child-cell
        call Decompose (child-cell, feature)
    end of block
end of procedure Decompose.
Try-to-exclude (feature, node)
    If node is minimum size or maximum level of
    decomposition is reached then
        put feature in node's list of features
    else if node is leaf-node then
        if there are no points of other categories
        in node then
            put feature in node's list of features
        else begin block
            find center of cell for feature.
            if child-cell corresponding to new
            center is NIL then
                make new child-cell
            for all points in child-cell's list
            for category of feature do
                take oldpoint from list
                find center of cell for oldpoint
                if child cell corresponding to
                new center is NIL then
                    make new child-cell
                call Decompose (child-cell,
                oldpoint)
            end for all
            call Decompose (child-cell, feature)
            to push feature down list.
        end of block
        else begin block
            find center of cell for point feature.
            If child-cell corresponding to new center
            is NIL then
                make new child-cell
            call Try-to-Exclude (child-cell, feature)
        end of block
    end of procedure Try-to-Exclude.
Traverse
    For category = 0 to maximum feature type do
        Initialize area and count to 0
        For i = 0 to Max Dimension Do
            Initialize mean and variance to 0
        Initialize risk, apriori and aposteriori to
```

## 8

-continued

```
0
For level = 0 to Maximum decomposition level do
    Initialize area and count to 0
    If root node is not barren
        bump level
        For n = 0 to 2^DIM do
            if child cube (n) exists
                call follow branch to accumulate
                sum for mean
        calculate mean
        for category = 0 to maximum feature
        type do
            if count for this cat is 0
                mean = 0
            else
                mean = sum/count [category]
            calculate aposteriori
            if volume_total[category] is 0
                aposti = 0
            else
                aposti = count/volume total
    Do the traversal again to get sum² for
    variance
    for n = 0 to 2^DIM
        if root is not barren
            call follow again
    Now calculate standard deviation and
    apriori
for category 1 to maximum feature type do
    apriori = count/total
    for i = 0 to DIM
        SD[i] = sqrt [sum²/total count]
    For category 2 to maximum feature type DO
        If category 1 = category 2
            expected loss [category 2] = 0
        else
            expected loss = vol_count
            [category 1 * category 2]
            / category_count * apriori
            for category 1.
        risk = 1 category_count/volume
        total [category 1].
Follow branch
    If this note is barren it is a leaf node
        sum area
        find the category of this cell
        sum feature vectors into array
    else
        for n = 0 to 2^DIM
            if progeny [n] exists
                call follow branch
Follow again
    if this node is a leaf node
        for each vector in this cell
            sq_accum = sq_accum + (vector[i] -
            mean[i])² Used to calculate variance
            and standard deviation
    else
        for n = 0 to 2^DIM
```

## Implementation of Hyper-tree

Referring to FIG. 4, the Hyper-tree method of supervised classification requires a large training sample, which comes from the real-time imaging system in the form of encoded thresholded binary images, 20 "Training Sample of Encoded Threshold Binary Images." The connected regions or features are then extracted from the image by performing a connectivity analysis, 22 "Extract Connected Regions." Each connected region is described by a list of vertices, a boundary description or an enclosing polygon. Each list of vertices is stored in a database indexed by a unique identifier or feature number, 24 "Store Connected Regions in Database."

Geometric measurements are obtained from each region in the database and formed into an array of integers called a feature vector, 26 "Obtain Geometric

## 9

Measurements & Form Into Feature Vector." This array includes, for example, x and y positions, width, length, perimeter and area such that multi-dimensional hyper-space is defined thereby. Each feature vector is stored in the database indexed by the feature number, 28 "Save Feature Vectors." After this step the database contains information describing all the features in the training sample.

For supervised classification as in hyper-tree, it is necessary to establish a priori classifications of each feature of interest in the training sample. Pictures of all the features are displayed on the screen of a graphic workstation so an expert can scroll through them marking all interesting features with the appropriate classifications, 30 "Classify Feature Vectors."

Hyper-tree reads the sample set of classified features from the database, develops the classifier or data model and stores it, 32 "Call Hyper-Tree To Create Data Model." This is accomplished by building a multi-dimensional hyper-tree in memory, dividing the feature space as specified by the classifications of the sample data. The a priori probability, the a posteriori probability, mean, variance, loss function, and the risk function for each defect category are all preferably calculated (and printed). The loss function is the probability of choosing any wrong classification for a given feature when the true state of nature is a different classification. The risk function is the probability of choosing a specific wrong classification.

FIG. 5 depicts a specific hyper-tree processing approach utilizing the subroutines summarized above. Hyper-tree processing begins by initializing a pointer to the main program, 40 "Initialize Pointer To Hyper-Tree." Thereafter, the maximum level of decomposition is determined, 42 "Establish Maximum Level Of Decomposition," and a minimum cell size is determined, 44 "Determine Minimum Cell Size For Leaf-Nodes." For each stored feature, the decomposed subroutine is called to place the feature in a correct hyper-cube, 46 "For Each Feature, Read Feature From Database & Call Decompose (Feature $_n$, Head) To Place Feature In Correct Hyper-Cube." Once each feature has been positioned, the classification-tree is traversed to accumulate statistics for each classification, 48 "Call Traverse To Accumulate Statistics For Each Category," and the statistics are printed, 50 "Call Prinstat To Print The Statistics."

By way of example, Table 1 below is an output listing from one embodiment of hyper-tree run on a sample of two defect types on motion picture film. The table shows the extent of the subdivision of the feature space, the calculated cost and risk functions and the mean and standard deviation for each element in the feature vector.

### TABLE 1

| CAT | LEVEL | POINTS | AREA |
|-----|-------|--------|------|
| All | 0 | | 0 |
| 0 | | 0 | 0 |
| 1 | | 0 | 0 |
| 2 | | 0 | 0 |
| 3 | | 0 | 0 |
| 4 | | 0 | 0 |
| 5 | | 0 | 0 |
| 6 | | 0 | 0 |
| 7 | | 0 | 0 |
| 8 | | 0 | 0 |
| All | 1 | | 2048 |
| 0 | | 1 | 2048 |
| 1 | | 0 | 0 |

## 10

### TABLE 1-continued

| CAT | LEVEL | POINTS | AREA |
|-----|-------|--------|------|
| 2 | | 0 | 0 |
| 3 | | 0 | 0 |
| 4 | | 0 | 0 |
| 5 | | 0 | 0 |
| 6 | | 0 | 0 |
| 7 | | 0 | 0 |
| 8 | | 0 | 0 |
| All | 2 | | 0 |
| 0 | | 0 | 0 |
| 1 | | 0 | 0 |
| 2 | | 0 | 0 |
| 3 | | 0 | 0 |
| 4 | | 0 | 0 |
| 5 | | 0 | 0 |
| 6 | | 0 | 0 |
| 7 | | 0 | 0 |
| 8 | | 0 | 0 |
| All | 3 | | 512 |
| 0 | | 0 | 0 |
| 1 | | 1 | 512 |
| 2 | | 0 | 0 |
| 3 | | 0 | 0 |
| 4 | | 0 | 0 |
| 5 | | 0 | 0 |
| 6 | | 0 | 0 |
| 7 | | 0 | 0 |
| 8 | | 0 | 0 |
| All | 4 | | 0 |
| 0 | | 0 | 0 |
| 1 | | 0 | 0 |
| 2 | | 0 | 0 |
| 3 | | 0 | 0 |
| 4 | | 0 | 0 |
| 5 | | 0 | 0 |
| 6 | | 0 | 0 |
| 7 | | 0 | 0 |
| 8 | | 0 | 0 |
| All | 5 | | 0 |
| 0 | | 0 | 0 |
| 1 | | 0 | 0 |
| 2 | | 0 | 0 |
| 3 | | 0 | 0 |
| 4 | | 0 | 0 |
| 5 | | 0 | 0 |
| 6 | | 0 | 0 |
| 7 | | 0 | 0 |
| 8 | | 0 | 0 |
| All | 6 | | 0 |
| 0 | | 0 | 0 |
| 1 | | 0 | 0 |
| 2 | | 0 | 0 |
| 3 | | 0 | 0 |
| 4 | | 0 | 0 |
| 5 | | 0 | 0 |
| 6 | | 0 | 0 |
| 7 | | 0 | 0 |
| 8 | | 0 | 0 |
| All | 7 | | 32 |
| 0 | | 2 | 32 |
| 1 | | 0 | 0 |
| 2 | | 0 | 0 |
| 3 | | 0 | 0 |
| 4 | | 0 | 0 |
| 5 | | 0 | 0 |
| 6 | | 0 | 0 |
| 7 | | 0 | 0 |
| 8 | | 0 | 0 |
| All | 8 | | 192 |
| 0 | | 1 | 48 |
| 1 | | 1 | 48 |
| 2 | | 2 | 96 |
| 3 | | 0 | 0 |
| 4 | | 0 | 0 |
| 5 | | 0 | 0 |
| 6 | | 0 | 0 |
| 7 | | 0 | 0 |
| 8 | | 0 | 0 |
| All | 9 | | 160 |
| 0 | | 1 | 80 |
| 1 | | 1 | 32 |
| 2 | | 1 | 48 |

## 11

### TABLE 1-continued

| CAT | LEVEL | POINTS | AREA |
|---|---|---|---|
| 3 | | 0 | 0 |
| 4 | | 0 | 0 |
| 5 | | 0 | 0 |
| 6 | | 0 | 0 |
| 7 | | 0 | 0 |
| 8 | | 0 | 0 |
| All | 10 | | 104 |
| 0 | | 1 | 84 |
| 1 | | 1 | 24 |
| 2 | | 1 | 4 |
| 3 | | 0 | 0 |
| 4 | | 0 | 0 |
| 5 | | 0 | 0 |
| 6 | | 0 | 0 |
| 7 | | 0 | 0 |
| 8 | | 0 | 0 |

Sample statistics for each category

**For Category: 0**

Statistic array

| | width | length | area | Perimeter | Pj length |
|---|---|---|---|---|---|
| mean | 2.604 | 0.788 | 23.074 | 6.600 | 1.794 |
| S.D. | 4.45 | 4.65 | 556.91 | 17.79 | 4.66 |

Expected Loss

| Category: | Loss: |
|---|---|
| 0 loss | 0.00 |
| 1 loss | 0.00 |
| 2 loss | 0.00 |
| 3 loss | 0.00 |
| 4 loss | 0.00 |
| 5 loss | 0.00 |
| 6 loss | 0.00 |
| 7 loss | 0.00 |
| 8 loss | 0.00 |

| Area | Count | apriori | aposti | risk |
|---|---|---|---|---|
| 2292 | 860 | 0.96 | 1.00 | 0.00 |

Sample statistics for each category

**For Category: 1**

Statistic array

| | width | length | area | Perimeter | Pj length |
|---|---|---|---|---|---|
| mean | 11.200 | 11.267 | 94.133 | 55.200 | 16.600 |
| S.D. | 5.0 | 19.39 | 183.12 | 85.48 | 34.22 |

Expected Loss

| Category: | Loss: |
|---|---|
| 0 loss | 0.26 |
| 1 loss | 0.00 |
| 2 loss | 0.00 |
| 3 loss | 0.00 |
| 4 loss | 0.00 |
| 5 loss | 0.00 |
| 6 loss | 0.00 |
| 7 loss | 0.00 |
| 8 loss | 0.00 |

| Area | Count | apriori | aposti | risk |
|---|---|---|---|---|
| 616 | 15 | 0.02 | 0.79 | 0.21 |

Sample statistics for each category

**For Category: 2**

Statistic array

| | width | length | area | Perimeter | Pj length |
|---|---|---|---|---|---|

## 12

### -continued

**For Category: 2**

| | | | | | |
|---|---|---|---|---|---|
| mean | 13.882 | 8.706 | 77.176 | 49.059 | 10.765 |
| S.D. | 3.12 | 1.86 | 25.04 | 8.58 | 2.63 |

Expected Loss

| Category: | Loss: |
|---|---|
| 0 loss | 0.00 |
| 1 loss | 0.00 |
| 2 loss | 0.00 |
| 3 loss | 0.00 |
| 4 loss | 0.00 |
| 5 loss | 0.00 |
| 6 loss | 0.00 |
| 7 loss | 0.00 |
| 8 loss | 0.00 |

| Area | Count | apriori | aposti | risk |
|---|---|---|---|---|
| 148 | 17 | 0.02 | 1.00 | 0.00 |

Sample statistics for each category

**For Category: 3**

Statistic array

| | width | length | area | Perimeter | Pj length |
|---|---|---|---|---|---|
| mean | 0.000 | 0.000 | 0.000 | 0.000 | 0.000 |
| S.D. | 0.000 | 0.000 | 0.000 | 0.000 | 0.000 |

Expected Loss

| Category: | Loss: |
|---|---|
| 0 loss | 0.00 |
| 1 loss | 0.00 |
| 2 loss | 0.00 |
| 3 loss | 0.00 |
| 4 loss | 0.00 |
| 5 loss | 0.00 |
| 6 loss | 0.00 |
| 7 loss | 0.00 |
| 8 loss | 0.00 |

| Area | Count | apriori | aposti | risk |
|---|---|---|---|---|
| 0 | 0 | 0.00 | 0.00 | 0.00 |

The first part of the listing shows the breakdown of the feature space. The "areas" are actually the sizes of one edge of a hyper-cube. Large areas mean that the hyper-space was subdivided less meaning that the feature clusters are more distinct. Also the number of features of each category are shown for each level of decomposition.

The statistics are shown in the second part of the listing. The a priori probability is based on the number of features of a given category in the total sample. The loss function, risk function and the a posteriori probability are based on a determination of the "purity" of the feature clusters.

A program, Decision (discussed below), reads the classifier or data model and uses it to classify each file of new feature vectors. It first builds a hyper-tree in memory from the compact representation on the disk. Decision then reads all the feature vectors in the file and generates the classifications. It does this by traversing the hyper-tree assigning a classification when a feature falls into a leaf-node hyper-cube.

### Derivation of Hyper-tree

The derivation of the formulas for a posteriori probability, calculated loss, and calculated risk functions for each defect category are shown in this section. In hyper-tree, the actual classifier or data model is based on non-parametric methods where the classifier results

116

**13**

directly from the subdivision of feature space bypassing estimation of the probability distributions and the density function. Estimated probability distributions and density functions can be calculated from the training sample but these estimations are not used by the hyper-tree program. Hyper-tree's formula for the a posteriori probability is:

$$\frac{k_i}{k}$$

where $k_i$ is the number of features in sub-volume V of type i, and k is the total number of features in sub-volume V. If the assumption is made that the feature space is already optimally subdivided into hyper-cubes, this section shows the derivation.

In the hyper-tree method, the feature space is a discrete sampling of real feature space and the sub-divisions are binary so some sampling error may be introduced. This sampling error is presumed to be small and is not taken into account. Also since the data consists of measurements taken from a sampled image and the feature space is sub-divided no further than a minimum hyper-cube size of one, the sampling error should be negligible.

Given a set of n categories:

$$\Omega = (\omega_1 \ldots \omega_j \ldots \omega_s), 1 \leq j \leq s. \tag{1}$$

The sample set consists of a number of feature vectors X, each of which has d elements:

$$x = (x_1 \ldots x_d), \text{ forming hyper-space } R^d. \tag{2}$$

If we assume that the sample size is sufficiently large such that the apriori probability of a defect occurring as a given category $\omega_j$, $P(\omega_j)$ can be predicted accurately, than the probability of $P(\omega_j)$ is equal to:

$$p(\omega_j) = \frac{n_j}{N} \tag{3}$$

where $n_j$ is the number of points category j and N is the total number of points.

If we assume the probability P that a feature x will fall in a region in hyper-space R is,

$$P = \int_R p(x') dx' \tag{4}$$

were dx' is a volume element.

$$P \approx p(x) V \tag{5}$$

where V is the volume of a region R in hyper-space.

In non-parametric techniques such as the Parzen windows and nearest neighbor methods, a hyper-volume in d-space is chosen of sufficient size to include a certain number of features of a given category $\omega_j$. In hyper-tree, the method presented herein, the hyper-volume V is chosen to contain k points such that $k \geq k_j$ where $k_j$ is all the defects of category j in volume V. The space average conditional probability density $p(x|\omega_j)$ where

**14**

$$p(x|\omega_j) = \frac{k_j/N}{V} \tag{6}$$

Bayes rule states that $p(\omega_j)p(x|\omega_j) = p(x)p(\omega_j,x)$ where

$$p(x) = \sum_{j=1}^{s} p(x|\omega_j)p(\omega_j) \tag{7}$$

So Bayes' rule can be applied to calculate the a posteriori probability:

When a feature of type x is encountered the

$$p(\omega_j|x) = \frac{p(x|\omega_j)p(\omega_j)}{\sum_{i=1}^{s} p(x|\omega_i)p(\omega_i)} = \frac{k_j}{k} \tag{8}$$

decision rule which minimizes the cost of making a wrong decision should be applied. The decision rule used in this method minimizes the overall risk given a particular sample space. This is the Bayes risk and is the minimum risk that can be achieved.

If action $\alpha_i$ is taken when the true classification is $\omega_j$, the expected loss is

$$\lambda(\alpha_i|\omega_j) \tag{9}$$

This expected loss function can be estimated from the training sample by the number of points of type j in the volume V.

$$\lambda(\alpha_i|\omega_j) = \frac{k_j}{k_j} \tag{10}$$

The total conditional risk for taking action $\alpha_i$ given feature x, $R(\alpha_i|x)$ is:

$$R(\alpha_i|x) = \sum_{j=1}^{s} \lambda(\alpha_i|\omega_j)p(\omega_j|x) = \frac{k_j}{k} \tag{11}$$

## Performance Analysis

In this section, the hyper-tree algorithm is analyzed and compared to other algorithms used to do statistical pattern recognition. Execution time and storage space considerations involved in the choice of non-parametric methods vs. parametric methods are discussed and some specific performance improvements of hyper-tree processing in comparison with other non-parametric methods are set forth.

Parametric methods require less storage space than non-parametric methods. In parametric methods, the underlying probability distribution functions are known and discriminant functions can be calculated from the a priori and the class conditional density functions so there is no need to store an actual representation of the feature space. Thus the total storage space requirements are minimized. Hyper-tree's use of memory is minimized by efficient binary encoding of the multi-dimensional classifier, and with the ever decreasing memory costs in today's computers the consideration of storage space requirements is of decreasing importance.

In non-parametric methods such as nearest-neighbor or Parzen windows, the computational requirements can be prohibitive for high data dimensionality. For

each feature, or point in hyper-space, a volume must be selected which will grow to enclose a number of neighboring points, large enough to be able to classify the point in terms of the majority of its neighbors. This will run in $O(n^2)$ where n is the number of features for a one category classifier. For a two category classifier this will run in $O(n^4)$ and for three categories, it will run in $O(n^8)$. For c classes, it will run in $O(n^{2**c})$.

In hyper-tree the feature space is decomposed by successive binary division. Therefore the worst case execution time for a one category classifier when the feature space is completely decomposed is $O[nlog(n)]$, where n is the number of features. An increase in dimensionality does not greatly increase execution time. The factor is linear because there is only one more compare operation per feature for every extra element in the feature vector. For multiple categories the effect is as follows. For two categories hyper-tree will run in $O[n^2log(n)]$, for three categories it will run in $O[n^3log(n)]$, and for c categories, $O[n^clog(n)]$. Although there is degradation in performance of hyper-tree for very large numbers of unique categories the performance doesn't degrade as fast as other methods.

### Operational Defect Classification System Using Hyper-Tree

This section discusses a complete system, shown in block diagram form in FIG. 6, using an off-line workstation (denoted 60) and a VEREDUS TM Real-time Surface Flaw Detection and Analysis System, labeled 80, which is marketed by EKTRON Applied Imaging, Inc., an Eastman Kodak Company located in Rochester, N.Y., to recognize and classify defects by category. At the core of this system is the hyper-tree method of statistical pattern recognition.

The VEREDUS TM system 80 is a special purpose fast pipe-lined image processing system used to detect surface or imbedded flaws or defects optically in a web 62 based coating, plating or similar process. VEREDUS TM can be connected to one or more linear optical image sensors 64. It produces reports 72 which are statistical tabulations of defect types and statistics for an operator (not shown).

Hyper-tree is part of a system 60 used to "teach" the VEREDUS TM real-time system 80 to recognize defects on a moving web while it is scanning in real-time. This program is integrated with other programs in a system centered on a relational defect database 74. The system consists of the following programs: (1) Connect 73 which segments the image and inserts the segmented image information into the database 74; (2) Geo 75 which takes the geometric measurements of the defects forming the feature vectors and puts the results into the database 74; (3) Classify 76 which is a program run by the operator to assign apriori or known classifications to the features in the "training sample"; and (4) Hyper-tree 77, described above which partitions the feature space to form the classifier or classification model, called here the "OFCLAS Data Model." There is also a fifth program, Decision 70 in System 80 which takes the data model, OFCLAS, and applies it to new as yet unclassified data, i.e., to do an a posteriori classification operation.

A special mode is available on VEREDUS TM system 80 to grab part of a scanned image of interest in compressed form, known as Y-group encoding 66. This Y-group encoded image can be moved from the VEREDUS TM system to the off-line classification system 60 through either shared VMEbus memory, serial port or tcp/ip if system 80 is so equipped.

1. Connect obtains the compressed image. This is generally a binary image, e.g., 1 bit per pixel, but could have more bits per pixel. The image is decompressed from Y-group coding as it is segmented into physically separate features by following each scan line and recording each intersection with a change in the image pixel value. This in effect finds the boundaries of each feature in the image. After thinning to reduce the number of vertices to the minimum necessary, each feature is stored in the database as a list of x,y pairs of vertices which describe the outline or boundary of all negative and positive space of the feature. In other words, the outer boundary is stored along with the boundaries of any holes or negative regions. Each of these features is stored in the database with a unique key.

2. Geo reads the features from the database and takes geometric measurements of each one. These measurements form what is called a feature vector, i.e., a list of numbers describing the geometric characteristics of each of these features. The feature vector can include the width at the widest point, the length along the longest point, the perimeter, and the area excluding any holes. It can also optionally include the x,y coordinate position, the centroid or center of gravity and the projected length. Geo puts the feature vector for each feature into the database and keys it to the boundary obtained by Connect.

3. Classify paints a graphical representation of the original image on the screen of the off-line workstation using the boundary vertex lists found in the database and allows the user to choose features of interest by picking them with a mouse. The user of the program can choose a classification for each feature of interest. This is how the a priori classifications are determined. Each of these a priori classifications are stored in the database and keyed to the boundary list and the feature vector described above.

4. The Hyper-tree program is run to create the classifier or classification model. This model is known as the OFCLAS data model. The method used by Hyper-tree to develop this model is described in detail above. The model is transferred to the VEREDUS TM system 80 using one of the above-noted interfaces.

5. Decision classifies new data according to the model. There can also be a version to be run on the off-line system to verify or check the results.

FIG. 7 depicts one embodiment of a data model structure, again denoted "OFCLAS" and constructed pursuant to of the present invention. Standardized names and numbers are preferably assigned to each measurement. In the sample data model of FIG. 7, the following terms apply:

| Dim | The dimensionality of the data model. This is equivalent to the number of elements in the feature vector. |
|---|---|
| Level | The number of decomposition levels used in this model. |

-continued

| Class | |
|---|---|
| MAXCLASS | The classification. The maximum number of classifications or categories possible. |
| Risk | The loss function (or cost) associated with choosing category j when the actual category is i. This is implemented as a 2 dimensional array of MAXCLASS elements where each element is a floating point number. |
| Loss | The loss function (or cost) associated with any wrong choice of category. This is represented as an array of floating point numbers. |
| Daughtermask | The mask has one bit for every possible daughter, where the maximum number of daughters is $2^{dim}$. A 1 in a bit position means that a daughter exists, a 0 means the daughter doesn't exist. There is always a Daughtermask in the root node. In other nodes the Daughtermask exists only if the class of the node is >0. |
| Cube | The data structure containing the classification and the Daughtermask for the next level. If the cube is a leaf-node, the class is >0. If the class is less than 0, a Daughtermask follows. |

The data structure is recursive where the maximum possible number of cubes is equal to the number of decomposition levels multiplied by 2 raised to the power of the dimensionality, dim. Or in other words

$$maxcubes = level \times 2^{dim},$$

Expressed in "C" the maximum number of cubes is

$$maxcubes = level * (1 << dim).$$

The number of bytes necessary for the daughtermask is

$$2^{dim-3},$$

Expressed in "C" the daughter mask is defined as:

$$char\ daughtermask\ [1 << (dim-3)],$$

The actual number of cubes will generally be much less than the maximum. It is related to the quality of the classifier, the statistical distribution of the original data in the training sample which was used to create the model.

The top of the data model will have a header. Next will be the loss function array, followed by the risk arrays. Finally the cubes are found in order from the root cube to the leaves.

It will be observed from the above discussion that a novel method for generating a statistical model from a sampled test image (or, preferably, a plurality of sampled test images) is provided. The flexible, non-parametric approach presented produces a classification tree to be depth-first searched by an on-line image processing system, e.g. as part of a quality control process. The processing system locates a particular feature vector within a corresponding feature space cell. Once created, the data model remains accurate for the given process and imaging conditions. The resultant data model is more efficient and more accurate at classifying features than heretofore known modeling techniques. Further accuracy may be obtained by simultaneous application of non-supervised methods to automatically learn the probability distribution of defect categories through multiple applications of the technique (herein termed "hyper-tree"). The resultant cell size and ratio of size of cells with the number of defects in them instantly yields information on the quality of the statistical performance. A degree of certainty of recognition can be provided along with prior estimations of defect classification. In addition, the technique can be implemented in software or hardware.

Although specific embodiments of the present invention have been illustrated in the accompanying drawings and described in the foregoing detailed description, it will be understood that the invention is not limited to the particular embodiments described herein, but is capable of numerous rearrangements, modifications, and substitutions without departing from the scope of the invention. The following claims are intended to encompass all such modifications.

I claim:

1. A method for generating a statistical classification model from a sample test image having a plurality of features thereon, said statistical classification model for use in real-time feature classification by an image processing system, said method comprising the steps of:
   (a) imaging said sample test image with said plurality of features thereon to produce a digital image representation thereof;
   (b) assigning a unique classification to selected features of the same type in said sample test image by referencing said digital image representation;
   (c) producing an n-element feature vector for each feature classified in said step (b), said n-element feature vectors defining an associated n-dimensional feature space;
   (d) using said classifications assigned in said step (b) to cluster feature vectors in feature space, said clustering resulting from a minimax search to define a tree-like hierarchical decomposition of n-dimensional feature space based upon said assigned feature classifications; and
   (e) storing the hierarchically decomposed n-dimensional feature space resulting from said clustering of step (d) for access by said image processing system for real-time feature classification of a new image.

2. The method of claim 1, wherein said minimax search clustering step (d) proceeds by defining a hierarchical decomposition of n-dimensional feature space such that each terminal feature cell thereof contains only feature vectors corresponding to the same classification, or is empty or is of a predefined minimum cell size for said decomposed feature space.

3. The method of claim 2, wherein at least two different feature types exist in said sample test image and wherein said step (b) comprises assigning a unique classification to each of said feature types.

4. The method of claim 3, comprising the step of cumulatively repeating steps (a)-(d) for a plurality of sample test images such that a plurality of features of each feature type are clustered within the hierarchically decomposed n-dimensional feature space.

5. The method of claim 4, wherein the resultant hierarchical decomposition of n-dimensional feature space comprises a supervised classifier for real-time feature classifying of a new image by said image processing system.

**19**

6. The method of claim 3, wherein said clustering step (d) includes the steps of:

(i) selecting a feature vector and locating said feature vector within feature space,

(ii) selecting another feature vector and locating said another feature vector within said feature space,

(iii) selectively decomposing said feature space if at least two feature vectors of different classifications are disposed within the same feature space cell, said selective decomposing continuing until said at least two feature vectors of different classifications are located in different cells or until said predefined minimum cell size is reached,

(iv) repeating steps (ii) and (iii) for each of said feature vectors produced in step (c), the resultant decomposed feature space of step (iii) comprising said tree-like hierarchical decomposition of n-dimensional feature space.

7. The method of claim 3, wherein said step (c) includes producing a multi-element feature vector for each classified feature in the digitally represented image such that said step (d) produces a tree-like hierarchical decomposition of multi-dimensional feature space.

8. The method of claim 3, wherein said minimax search employed in said step (d) includes selectively decomposing feature space by a power of two.

9. The method of claim 8, further comprising establishing a maximum level of feature space decomposition for said minimax search of said step (d).

10. The method of claim 9, further comprising determining a minimum cell size for said minimax search decomposition of said feature space during said step (d).

11. The method of claim 3, further comprising the step of transferring said tree-like hierarchical decomposition of n-dimensional feature space to said on-line image processing system.

12. The method of claim 3, wherein said classification assigning step (b) is manually accomplished by an operator.

13. The method of claim 3, wherein said imaging step (a) includes defining features as connected regions within the imaged sample test image and obtaining n-geometric measurements of said connected regions, said geometric measurements being utilized in said step (c) to form said n-element feature vectors.

14. A real-time image processing method for classifying web features using a supervised statistical classifier, said statistical classifier comprising a tree-like hierarchical decomposition of n-dimensional feature space wherein different feature types are clustered in different feature space cells of the hierarchical tree, said method comprising the steps of:

(a) imaging said web and producing a digital image representation thereof, said imaging including producing an n-dimensional feature vector for selected web features;

(b) referencing said supervised statistical classifier and automatically clustering feature vectors within corresponding feature space cells of said tree-like hierarchical decomposition of n-dimensional feature space, for each of said feature vectors said locating step comprising searching said hierarchical decomposition of feature space for the smallest cell of said hierarchical tree including said feature vector; and

(c) accumulating statistics on imaged features based on said located feature vectors of said step (b), said statistics providing for each such located feature

**20**

vector a feature-type classification for said corresponding feature.

15. The real-time image processing method of claim 14, wherein said supervised statistical classifier comprises a tree-like hierarchical decomposition of multi-dimensional feature space, and wherein said imaging step (a) includes producing a multi-dimensional feature vector for selected web features.

16. The real-time image processing method of claim 14, wherein said web to be imaged in said step (a) is moving.

17. The real-time image processing method of claim 16, wherein said moving web comprises a moving web of film material, and wherein said web features imaged in said step (a) comprise imperfections in said film material.

18. The real-time image processing method of claim 16, wherein said moving web comprises a moving web of material, and wherein said web features imaged in said step (a) comprise surface imperfections in said moving web material.

19. The real-time image processing method of claim 14, further including predefining said supervised statistical classifier prior to said steps (a)-(c).

20. The real-time image processing method of claim 19, further comprising pre-storing said supervised statistical classifier for real-time referencing thereof during said step (b).

21. The real-time image processing method of claim 19, wherein said classifier predefining step comprises the steps of:

(i) imaging a plurality of sample test images having features thereon and producing digital image representations thereof;

(ii) assigning a unique classification to selected features of the same type by referencing said digital image representations;

(iii) producing an n-element feature vector for each feature classified in said step (ii), said n-element feature vectors defining an associated n-dimensional feature space; and

(iv) using said classifications assigned in said step (ii) to cluster feature vectors in feature space, said clustering employing a minimax search to define a tree-like hierarchical decomposition of n-dimensional feature space based upon said assigned feature classifications, said tree-like hierarchical decomposition of n-dimensional feature space comprising said supervised statistical classifier.

22. The real-time image processing method of claim 21, wherein said minimax search employed in said step (iv) includes selectively decomposing feature space by a power of two.

23. The real-time image processing method of claim 14, further comprising transferring said statistics accumulated in said step (c) for quality control supervision of said imaged web by printing, displaying or downloading said statistics to a processing unit.

24. A real-time image processing system for classifying web features using a supervised statistical classifier, said statistical classifier comprising a tree-like hierarchical decomposition of n-dimensional feature space wherein different feature types are clustered in different feature space cells of the hierarchical tree, said system comprising:

means for imaging said web and producing a digital image representation thereof, said imaging means

including means for producing n-dimensional feature vectors for selected web features;

means for referencing said supervised statistical classifier and automatically clustering feature vectors within corresponding feature space cells of said tree-like hierarchical decomposition of n-dimensional feature space, for each of said feature vectors said locating means comprising means for searching said hierarchical decomposition of feature space for the smallest cell of said hierarchical tree including said feature vector; and

means for accumulating statistics on said selected web features based on said located feature vectors, said statistics providing for each located feature vector a feature-type classification for said corresponding web feature.

25. The real-time image processing system of claim 24, further comprising storage means for holding said supervised statistical classifier for real-time searching thereof by said referencing means.

26. The real-time image processing system of claim 24, wherein said web to be imaged by said imaging means is moving.

27. The real-time image processing system of claim 26, wherein said web comprises a moving web of film material, and wherein said web features imaged by said imaging means comprise imperfections in said film material.

28. The real-time image processing system of claim 26, wherein said web comprises a moving web of material, and wherein said web features imaged by said imaging means comprise surface imperfections in said moving web material.

29. The real-time image processing system of claim 24, further comprising means for predefining said supervised statistical classifier, said predefining means comprising:

means for imaging a plurality of sample test images having features thereon and producing digital image representation thereof;

means for assigning a unique classification to selected features of the same type by referencing said digital image representations;

means for producing an n-element feature vector for each feature classified, said n-element feature vectors defining an associated n-dimensional feature space; and

means for clustering feature vectors in feature space using said assigned classifications, said clustering means employing a minimax search to define a tree-like hierarchical decomposition of n-dimen-

sional feature space based upon said assigned feature classifications, said tree-like hierarchical decomposition of n-dimensional feature space comprising said supervised statistical classifier.

30. The real-time image processing system of claim 29, wherein said minimax search employed by said clustering means includes means for selectively decomposing feature space by a power of two.

31. A system for generating a statistical classification model from sample test images having a plurality of features thereon, said statistical classification model being for use in real-time feature classification by an image processing system, said model generating system comprising:

means for imaging said sample test images to produce digital image representations thereof;

means for assigning a unique classification to selected image features of the same type by referencing said digital image representations;

means for producing an n-element feature vector for each classified feature, said n-element feature vectors defining an associated n-dimensional feature space; and

means for clustering said feature vectors in feature space based upon said assigned classifications, said clustering means for performing a minimax search to define a tree-like hierarchical decomposition of n-dimensional feature space based upon said assigned feature classifications for use in said clustering, said tree-like hierarchical decomposition of feature space comprising said statistical classification model.

32. The model generating system of claim 31, wherein said clustering means proceeds to define a hierarchical decomposition of n-dimensional feature space such that each terminal feature cell thereof contains only feature vectors corresponding to the same classification, or is empty, or is of a predefined minimum cell size for said decomposed feature space.

33. The model generating system of claim 32, wherein said minimax search employed by said clustering means includes means for selectively decomposing feature space by a power of two.

34. The model generating system of claim 31, further comprising means for transferring said tree-like hierarchical decomposition of n-dimensional feature space to said image processing system.

35. The model generating system of claim 31, wherein said classification assigning means is manually accomplished by an operator.

* * * * *

US006510746B1

## (12) United States Patent
### Kotwicki

(10) Patent No.: **US 6,510,746 B1**
(45) Date of Patent: **Jan. 28, 2003**

(54) **GAS FLOW MEASUREMENT**

(75) Inventor: **Allan Joseph Kotwicki**, Williamsburg, MI (US)

(73) Assignee: **Ford Global Technologies, Inc.**, Dearborn, MI (US)

( * ) Notice: Subject to any disclaimer, the term of this patent is extended or adjusted under 35 U.S.C. 154(b) by 0 days.

(21) Appl. No.: **09/351,600**

(22) Filed: **Jul. 12, 1999**

(51) Int. Cl.$^7$ ............................. G01F 1/37; G01F 1/00
(52) U.S. Cl. ...................... 73/861.52; 702/45; 702/100
(58) Field of Search ................... 73/861.52, 3, 861.42, 73/861.54, 861, 861.01, 863.03; 123/571; 374/36; 702/20–24, 27, 30–32, 45, 47, 50, 100, 138, 140, 127, 128, 134, 143, 170, 183

(56) **References Cited**

U.S. PATENT DOCUMENTS

| | | | | |
|---|---|---|---|---|
| 3,752,393 A | * | 8/1973 | Moseley | 700/285 |
| 4,074,573 A | * | 2/1978 | Nordhofen | 702/47 |
| 4,290,404 A | | 9/1981 | Hata et al. | |
| 4,390,001 A | | 6/1983 | Fugimoto | |
| 4,406,161 A | | 9/1983 | Locke et al. | |
| 4,562,744 A | | 1/1986 | Hall et al, | |
| 4,829,449 A | * | 5/1989 | Polesnak | 702/45 |
| 5,107,441 A | * | 4/1992 | Decker | 702/47 |
| 5,226,728 A | * | 7/1993 | Heyden | 374/36 |
| 5,347,843 A | | 9/1994 | Orr et al. | |
| 5,493,512 A | * | 2/1996 | Peube et al. | 702/47 |
| 5,613,479 A | | 3/1997 | Gates et al. | |

OTHER PUBLICATIONS

"Experimental Methods for Engineers" J.P. Holman, pp. 184–236, Second Edicition, McGraw–Hill Book Company.
"The Internal–Combustion Engine in Theory and Practice", vol. 1: Thermodynamics, Fluid Flow, Performance, Second Edition, Revised, The MIT Press, by C. f. Taylor.
Holman, Experimental Methods for Engineers, 2$^{nd}$ Edition, 1966., pp. 185–236.

* cited by examiner

*Primary Examiner*—Harshad Patel
(74) *Attorney, Agent, or Firm*—Allan J. Lippa; John D. Russell

(57) **ABSTRACT**

A method for approximating compressible flow is described that is applicable across any pressure range of interest uses upstream and downstream pressure. The approximation minimizes variance with respect to a true flow equation. A flow control system is given using the new method that achieves accurate control with minimum complexities. The control system is application to various systems, including internal combustion engine airflow control, internal combustion engine exhaust gas recirculation control, internal combustion engine alternative fuel flow control, and many other compressible flow control problems.

19 Claims, 2 Drawing Sheets

FIG.1

DETERMINE GAS PARAMETER K — 210

CALCULATE CONSTANTS X, Z — 220

FIG.2

DETERMINE TRANSITION VALUE — 310

$$T = \left[\left(\frac{K+1}{2}\right)^{\frac{K}{K-1}} - 1\right] P_2$$

$\Delta P > T$ ? — 312

MASS FLOW CALCULATED FROM CHOKED CONDITION — 314

MASS FLOW CALCULATED USING EQUATION 2 — 316

FIG.3

FIG.4

FIG.5

# GAS FLOW MEASUREMENT

## FIELD OF THE INVENTION

The present invention relates to a system and method to measure gas flow using upstream and downstream pressure measurements, and in particular to measurement of flows related to internal combustion engine operation.

## BACKGROUND OF THE INVENTION

Determining compressible gas flow from pressure measurements is commonly performed using the known adiabatic orifice compressible flow equation shown in the following equation, referred to herein as a true flow function.

$$\dot{m} = A_o \sqrt{\frac{2k}{k-1}} \sqrt{\frac{MW}{RT_1}} \, p_1 \sqrt{r^{\frac{2}{k}} - r^{\frac{k+1}{k}}} \qquad \text{equation 1}$$

$$r = \begin{cases} \dfrac{p_2}{p_1} & \dfrac{p_2}{p_1} > \left(\dfrac{2}{k+1}\right)^{\frac{k}{k-1}} \\ \left(\dfrac{2}{k+1}\right)^{\frac{1}{k-1}} & \text{otherwise} \end{cases}$$

where,

$$\dot{m}$$

is mass flow rate, $A_o$ is orifice area, $MW$ is molecular weight of gas flowing through the orifice, $k$ is the ratio of specific heats, $p_2$ is downstream pressure, $p_1$ is upstream pressure and $T1$ is upstream temperature. The variable, $r$, can take on two values depending on the ratio of downstream to upstream pressure. When the ratio is greater than a certain value, flow is said to be subsonic and the upper equation is followed. When the ratio is less than a certain value, flow is said to be sonic, or choked, and the lower equation is followed.

However, due to complex exponents and corresponding difficulties in cost effective implementation of the above equation in digital computers that run at high speed, approximations to the adiabatic orifice compressible flow equation are commonly sought.

One approximation to equation 1 is given in terms of differential pressure between upstream and downstream conditions and downstream pressure. The known equation is given as:

$$\dot{m} = A_o \sqrt{2} \sqrt{\frac{MW}{RT_1}} \sqrt{a(\Delta p)p_2 - b(\Delta p)^2}$$

where, $a$ is given as 1 and $b$ is given as

$$\left(\frac{1.5}{k} - 1\right)$$

and $\Delta p = p_1 - p_2$. Such a method is described by Holman in, *Experimental Methods for Engineers*, $2^{nd}$ Edition, 1966.

The inventor herein has recognized several disadvantages with the above approximation. In particular, the above approximation has a limited region of applicability as stated by Holman. In other words, the above approximation only resembles the true flow function in a limited operation region when using the fixed values of $a$ and $b$ stated by Holman. Another disadvantage is that the prior art approximation is invalid during subsonic operation and no corresponding transition point is given in terms of variables $\Delta p$ and $p_2$. Another disadvantage is that values of $a$ and $b$ stated by Holman are only applicable for small area ratios between orifice area and pipe area.

## SUMMARY OF THE INVENTION

An object of the invention claimed herein is to provide a flow measurement method for measuring compressible flow using an approximation that is useful over all operating conditions and used in conjunction with various gas types.

The above object is achieved, and problems of prior approaches overcome, by A method for determining a flow of a compressible gas through an orifice, the method comprising: determining first and second constants based on an error between a flow approximation and a true flow function, wherein said flow approximation is based on said first constant, said second constant, an upstream pressure variable, a downstream pressure variable, and a differential pressure variable; calculating an actual differential pressure between an actual upstream pressure and an actual downstream pressure; and calculating a compressible gas flow based on said actual upstream pressure, said actual downstream pressure, said actual differential pressure, and said first and second constants using said flow approximation.

By using an approximation according to the present invention, not only can extremely accurate approximations be achieved, but the approximations are valid over all pressure conditions. In other words, the approximation of this form can be used in pressure ranges under which the prior art produced inaccurate results and therefore in pressure ranges in which the prior art discouraged approximations. In fact, the approximation according to the present invention achieves higher accuracy than the prior art in all pressure ranges, including those ranges in which the prior art approach is taught to be useful.

An advantage of the above aspect of the invention is that more accurate flow measurement is obtained across all pressure ranges.

Another advantage of the above aspect of the invention is that the more efficient real time software is obtained.

Other objects, features and advantages of the present invention will be readily appreciated by the reader of this specification.

## BRIEF DESCRIPTION OF THE DRAWINGS

The object and advantages described herein will be more fully understood by reading an example of an embodiment in which the invention is used to advantage, referred to herein as the Description of the Preferred Embodiment, with reference to the drawings wherein:

FIG. 1 is a block diagram of a flow system in which the invention is used to advantage;

FIGS. 2–4 are a high level flowcharts of various routines for controlling EGR flow; and

FIG. 5 is an alternate embodiment of the present invention.

## DESCRIPTION OF AN EMBODIMENT

The present application is related to the following patent application having a common inventor which is co-owned by the same assignee: "Flow Measurement and Control," Ser. No. 09/226,681 filed Jan. 11, 1999, now U.S. Pat. No. 6,308,694 which are incorporated herein by reference.

A flow measurement system is shown in FIG. 1. Pipe 10 represents a flow passage in which a compressible fluid

**3**

medium (not shown) flows. Pipe 10 has flow area $(A_p)$ 13. For example, fluid medium may comprise air, exhaust gas from an internal combustion engine, air having evaporated fuel therein, or any other compressible gas substance. The fluid medium flows in the direction indicated by arrow 11. The medium flows through orifice 14, which may comprise any type of flow obstruction such as, for example, a sharp edged orifice, a venturi, or a chamfered orifice. Orifice 14 has flow area $(A_o)$ 15 which represents the area through which the medium may pass. Upstream pressure $(p_1)$ is measured by sensor 20. Downstream pressure $(p_2)$ is measured by sensor 22. Alternatively, only one of upstream or downstream pressure may be measured if the differential pressure $(\Delta p)$ is also measured, where differential pressure is defined as $\Delta p = p_1 - p_2$. The sensors 20,22 comprise known pressure sensor.

Throttle 42 is an additional obstruction in the flow path that is used to control fluid medium flow. Throttle 42 creates a variable area obstruction. Increasing throttle area increases flow, while decreasing throttle area decreases flow. Throttle 42 is shown upstream of orifice 14, but may also be placed downstream of orifice 14.

Continuing with FIG. 1, Controller 12 is shown in FIG. 1 as a conventional microcomputer including: microprocessor unit 102, input/output ports 104, read-only memory 106, random access memory 108, and a conventional data bus. Controller 12 is shown receiving various signals from sensors 120. Controller 12 is also shown sending various signals to actuators 122. In addition, controller 12 receives an indication of upstream pressure $(p_1)$ from sensor 20 and downstream pressure $(p_2)$ from sensor 22. Controller 12 also sends signal u to throttle actuator 40 coupled to throttle 42.

In a preferred embodiment of the present invention, the gas flow is approximated using the following equation, referred to herein as a flow approximation:

$$\dot{m} = A_o \sqrt{\frac{2k}{k-1}} \sqrt{\frac{MW}{RT_1}} \sqrt{(Xp_1 + Zp_2)(\Delta p)} \qquad \text{equation 2}$$

Here, the constants X and Z are determined as described later herein with particular reference to FIG. 2.

Referring now to FIG. 2, a routine for determining constants X and Z is described. The only changing parameter in this routine is gas property related parameter, k, which represents the ratio of specific heats. Therefore, this routine need only be executed when the method will be applied to a gas with a different value of k. In step 210, ratio of specific heats k is determined for the gas flowing through orifice 14. Then, in step 220, constants X and Z are determined. A preferred method determines constants X and Z by minimizing variance between the approximation of equation 2 and the assumed true value in equation 1. In this embodiment, the constants are given as:

**4**

The above equation gives coefficients X and Z in explicit matrix form to be evaluated by those of ordinary skill in the art. The integrals can easily be numerically approximated. For example, for k=1.4, the constants are given as: $X=-1.932*10^{(-2)}$ and $Z=0.3049$. These constants represent the minimum variance between equation 1 and equation 2. In other words, these constants provide the minimum value of the integrated squared error.

According to the present invention, flow determined using equation 2 accurately and simply approximates flow using equation 1. This accurate and simple calculation achieves these results by determining constants (X,Z) such that error is minimized between an the approximation and a true flow function. Measurements of actual pressure values are not requires for determining constants (X,Z), only the approximation form is needed. Thus, knowing the form of equation 2, i.e. the relationship between constants, pressures, and other variables, it is possible to find constants (X,Z) to have minimum error.

In an alternative embodiment, where only a single type of gas flows through orifice 14, constants X and Z need only be determined a single time according to any of the methods of the present invention.

In another alternative embodiment, constants X and Z can be calculated to minimize the maximum error, or solve a minimax problem as is known to those skilled in the art. This can be done numerically by finding constants X and Z that give the minimum value of the maximum error.

Referring now to FIG. 3, a routine is described for estimating mass flow. In step 310 transition value (T) is calculated according to the following equation:

$$T = \left( \left( \frac{k+1}{2} \right)^{\frac{k}{k-1}} - 1 \right) p_2$$

Then, in step 312, a determination is made as to whether differential pressure $(\Delta p)$ is greater than transition value (T). The above equation for (T) is used to advantage when sensors provide downstream pressure and differential pressure. When the answer to step 312 is YES, the mass flow is calculated in step 314 according to the choked flow equation known to those skilled in the art and described previously herein. When the answer to step 312 is NO, the mass flow is calculated in step 316 according to the present invention as shown in equation 2. According to the present invention, equation 2 with coefficients X and Z is applicable for any upstream pressure $p_1$ and downstream pressure $p_2$ combination such that:

$$\begin{bmatrix} X \\ Z \end{bmatrix} = \begin{bmatrix} \dfrac{4\left(1-\left(\frac{2}{k+1}\right)^{\frac{y}{k-1}}\right)}{\left(1-\left(\frac{2}{k+1}\right)^{\frac{k}{k-1}}\right)^4} & \dfrac{-6\left(1-\left(\frac{2}{k+1}\right)^{\frac{2\frac{k}{k-1}}}\right)}{\left(1-\left(\frac{2}{k+1}\right)^{\frac{k}{k-1}}\right)^4} \\[4mm] \dfrac{-6\left(1-\left(\frac{2}{k+1}\right)^{\frac{2\frac{k}{k-1}}}\right)}{\left(1-\left(\frac{2}{k+1}\right)^{\frac{k}{k-1}}\right)^4} & \dfrac{12\left(1-\left(\frac{2}{k+1}\right)^{\frac{k}{k-1}}\right)}{\left(1-\left(\frac{2}{k+1}\right)^{\frac{k}{k-1}}\right)^4} \end{bmatrix} \begin{bmatrix} \int_{\left(\frac{2}{k+1}\right)^{\frac{k}{k-1}}}^{1} \dfrac{r^{\frac{2}{k}} - r^{\frac{k+1}{k}}}{1-r} dr \\[4mm] \int_{\left(\frac{2}{k+1}\right)^{\frac{k}{k-1}}}^{1} \dfrac{r^{\frac{2}{k}} - r^{\frac{k+1}{k}}}{1-r} r\, dr \end{bmatrix}$$

$$\Delta p < \left[ \left( \frac{k+1}{2} \right)^{\frac{k}{k-1}} - 1 \right] \rho_2$$

For example, for k=1.4 this is:

$$\Delta p < 0.9 \rho_2$$

Thus, the approximation is applicable over the entire pressure range where flow is subsonic.

Referring now to FIG. 4, a method for controlling flow using a flow measurement approximation according to the present invention is described. In step 410, a desired flow is calculated. The desired flow can be calculated in various ways depending on specific applications. For example, if the flow is fresh air entering an internal combustion engine, the desired flow may be calculated based on a desired engine torque. Next, in step 412, the actual flow is measured as described previously herein with particular reference to FIG. 3. Then, in step 414, the routine calculates an error between the desired flow and the approximated flow. Then, in step 416 this error is used to adjust the control signal u. The process of step 416 may be any control method known to those skilled in the art, such as, for example, a PID controller.

Referring now to FIG. 5, an alternative embodiment is shown where throttle 42 acts as the obstruction. Here, the orifice area ($A_o$) is determined from the throttle position (TP), measured by sensor 43. The relationship between signal (TP) and area ($A_o$) can be determined geometrically or experimentally.

The above method is also applicable when including the area ratio from orifice area ($A_o$) to pipe area ($A_p$). In this case the true function known to those skilled in the art is given as:

$$\dot{m} = A_o \sqrt{\frac{2k}{k-1}} \sqrt{\frac{MW}{RT_1}} \, p_1 \sqrt{\frac{r^{\frac{2}{k}} - r^{\frac{k+1}{k}}}{1 - r^{\frac{2}{k}} \left( \frac{A_o}{A_p} \right)^2}}$$

$$r = \begin{cases} \frac{p_2}{p_1} & \frac{p_2}{p_1} > r_{crit} \\ r_{crit} & \text{otherwise} \end{cases}$$

Where, $r_{crit}$ is a function of area ratio and k. Specifically, $r_{crit}$ is found by solving the following equation:

$$\frac{\partial}{\partial r_{crit}} \sqrt{\frac{r_{crit}^{\frac{2}{k}} - r_{crit}^{\frac{k+1}{k}}}{1 - r_{crit}^{\frac{2}{k}} \left( \frac{A_o}{A_p} \right)^2}} = 0$$

As example solutions, the approximate values for specific area ratios are shown in the table below:

| $\frac{A_o}{A_p}$ | $r_{crit}$ |
|---|---|
| 0 | .528 |
| .1 | .530 |
| .2 | .533 |
| .3 | .540 |
| .4 | .550 |
| .5 | .564 |
| .6 | .583 |
| .7 | .610 |
| .8 | .650 |

The flow approximation used in step 314 is unchanged, i.e., equation 2 is still used. However, in step 220 coefficients X and Z are calculated to minimize variance as:

$$\begin{bmatrix} X \\ Z \end{bmatrix} = \begin{bmatrix} 4\frac{\alpha^2+\alpha+1}{(1-\alpha)^3} & -6\frac{\alpha-1}{(1-\alpha)^3} \\ -6\frac{\alpha+1}{(1-\alpha)^3} & \frac{12}{(1-\alpha)^3} \end{bmatrix} \begin{bmatrix} \int_\alpha^1 \frac{r^{\frac{2}{k}} - r^{\frac{k+1}{k}}}{\left(1-\beta^2 r^{\frac{2}{k}}\right)(1-r)} dr \\ \int_\alpha^1 \frac{r^{\frac{2}{k}} - r^{\frac{k+1}{k}}}{\left(1-\beta^2 r^{\frac{2}{k}}\right)(1-r)} r \, dr \end{bmatrix} \qquad \text{equation 3}$$

where

$$\beta = \frac{A_o}{A_p}$$

and α is the corresponding critical value $r_{crit}$ for the given area ratio. In an alternative embodiment, the limits of integration in equation 3 can be changed so that error is minimized over a smaller range. Thus, the method can be made more accurate over a smaller region, if, for example, only this smaller region is of interest.

As an example, for k=1.4, according to the present invention, the values are found to be:

| $\frac{A_o}{A_p}$ | $r_{crit}$ | X | Z |
|---|---|---|---|
| 0 | .528 | $-1.932 \cdot 10^{-2}$ | .305 |
| .1 | .530 | $-2.843 \cdot 10^{-2}$ | .325 |
| .2 | .533 | $-2.851 \cdot 10^{-2}$ | .325 |
| .3 | .540 | $-2.866 \cdot 10^{-2}$ | .325 |
| .4 | .550 | $-6.475 \cdot 10^{-2}$ | .401 |
| .5 | .564 | $-.104$ | .476 |
| .6 | .583 | $-.176$ | .608 |
| .7 | .610 | $-.323$ | .855 |
| .8 | .650 | $-.697$ | 1.424 |

Thus, according to the present invention, flow can be accurately measured using a flow approximation rather than the true flow function, thereby achieving reduced computational complexity.

This concludes the description of the Preferred Embodiment. The reading of it by those skilled in the art would bring to mind many alterations and modifications without departing from the spirit and scope of the invention. For example, many additional corrections may be applied to the flow approximation method of the present invention. For example, various temperature corrections can be included. These additional temperature corrections can be easily added to the method of the present invention without difficulty. The present invention approximates the pressure related terms of compressible flow. Accordingly, it is intended that the scope of the invention be limited by the following claims.

I claim:

1. A method for determining a flow of a compressible gas through an orifice, the method comprising the steps of:

determining values of a first and second constants based on an error between a mass flow approximation equation and a true mass flow equation, wherein said mass flow approximation equation is parameterized by said first constant, said second constant, an upstream pressure variable, a downstream pressure variable, and a differential pressure variable;

calculating an actual differential pressure value between an actual upstream pressure value and an actual downstream pressure value; and

calculating a compressible gas flow based on said actual upstream pressure value, said actual downstream pressure value, said actual differential pressure value, and said first and second constant values using said mass flow approximation equation.

2. The method recited in claim 1 wherein said step of determining values of said first and second constant further comprises determining values of said first and second constant based on said error between said mass flow approximation equation and said true mass flow equation, said mass flow approximation equation being parameterized by a product of said first constant and said upstream pressure variable, a second product of said second constant and said downstream pressure variable, and a third product of said differential pressure variable and a sum of said first and second products.

3. The method recited in claim 2 wherein said step of determining values of said first and second constant further comprises determining values of said first and second constant based on said error between said mass flow approximation equation and said true mass flow equation, said mass flow approximation equation being further parameterized by an area ratio between an orifice area and a pipe area through which the gas flows.

4. The method recited in claim 1 wherein said step of determining values of said first and second constant further comprises the step of obtaining a minimum error between said mass flow approximation equation and said true mass flow equation.

5. The method recited in claim 4 wherein said step of determining values of said first and second constant further comprises determining values of said first and second constant based on said error between said mass flow approximation equation and said true mass flow equation, said mass flow approximation equation being further based on an area ratio between an orifice area and a pipe area through which the gas flows.

6. The method recited in claim 1 wherein said step of determining values of said first and second constant further

comprises the step of obtaining a minimum of a maximum error between said mass flow approximation equation and said true mass flow equation.

7. The method recited in claim 1 further comprising the step of using said calculated compressible gas flow to control an element that affects the flow of the compressible gas.

8. The method recited in claim 1 wherein said step of calculating compressible gas flow further comprises calculating compressible gas flow through a throttle plate of an internal combustion engine.

9. The method recited in claim 1 wherein said step of calculating compressible gas flow further comprises calculating compressible gas flow through an exhaust gas recirculation valve of an internal combustion engine.

10. The method recited in claim 1 further comprising the step of switching to an alternate flow calculation method based on a comparison of said actual differential pressure value and a transition value.

11. The method recited in claim 10 wherein said switching step further comprises switching to said alternate flow calculation method based on said comparison of said actual differential pressure value and said transition value, said transition value being based on said actual downstream pressure value.

12. The method recited in claim 1 further comprising the step of switching to an alternate flow calculation method based on a comparison of said actual differential pressure value and a transition value, wherein said transition value is based on said actual downstream pressure value.

13. A method for determining a flow of a compressible gas through an orifice, the method comprising the steps of:

determining values of a first and second constant based on an error between a mass flow approximation equation and a true mass flow equation to obtain a minimum error between said mass flow approximation equation and said true mass flow equation, wherein said mass flow approximation equation is parameterized by said first constant, said second constant, an upstream pressure variable, a downstream pressure variable, and a differential pressure variable;

calculating an actual differential pressure value between an actual upstream pressure value and an actual downstream pressure value; and calculating a compressible gas flow based on said actual upstream pressure value, said actual downstream pressure value, said actual differential pressure value, and said first and second constant values using said mass flow approximation equation.

14. The method recited in claim 12 wherein said determining step further comprises determining values of said first and second constant to obtain said minimum error between said mass flow approximation equation and said true mass flow equation, said mass flow approximation equation being parameterized by a product of said first constant and said upstream pressure variable, a second product of said second constant and said downstream pressure variable, and a third product of said differential pressure variable and a sum of said first and second products.

15. The method recited in claim 14 wherein said determining step further comprises determining values of said first and second constant to obtain said minimum error between said mass flow approximation equation and said true mass flow equation, said mass flow approximation equation being further parameterized by an area ratio between an orifice area and a pipe area through which the gas flows.

16. The method recited in claim 13 further comprising the step of using said calculated compressible gas flow to control an element that affects the flow of the compressible gas.

**17.** The method recited in claim 13 wherein said step of calculating compressible gas flow further comprises calculating compressible gas flow through a throttle plate of an internal combustion engine.

**18.** The method recited in claim 13 wherein said step of calculating compressible gas flow further comprises calculating compressible gas flow through an exhaust gas recirculation valve of an internal combustion engine.

**19.** A method for determining compressible gas flow through an orifice, the method comprising the steps of:

calculating values of a first and second constant based on an error value between a first mass flow equation and a second mass flow equation, wherein said second mass flow equation is parameterized by said first constant, said second constant, an upstream pressure variable, a downstream pressure variable, and a differential pressure variable;

calculating an actual differential pressure value between an actual upstream pressure value and an actual downstream pressure value; and

calculating the compressible gas flow based on said actual upstream pressure value, said actual downstream pressure value, said actual differential pressure value, and said first and second constant values using said second mass flow equation.

* * * * *

US006714893B2

## (12) United States Patent
### Busche et al.

(10) Patent No.: **US 6,714,893 B2**
(45) Date of Patent: **Mar. 30, 2004**

(54) **ENHANCED CONCERN INDICATOR FAILURE PREDICTION SYSTEM**

(75) Inventors: **Frederick D. Busche**, Highland Village, TX (US); **William D. Calkins**, Dallas, TX (US); **Jeffrey D. Kish**, Nazareth, PA (US); **Scott L. Swain**, Novi, MI (US)

(73) Assignee: **International Business Machines Corporation**, Armonk, NY (US)

(*) Notice: Subject to any disclaimer, the term of this patent is extended or adjusted under 35 U.S.C. 154(b) by 218 days.

(21) Appl. No.: **10/077,019**

(22) Filed: **Feb. 15, 2002**

(65) **Prior Publication Data**

US 2003/0158702 A1 Aug. 21, 2003

(51) Int. Cl.⁷ .......................... G06F 17/18; G06F 17/30
(52) U.S. Cl. .................................... 702/181; 707/10
(58) Field of Search ............................ 702/181; 707/10

(56) **References Cited**

**U.S. PATENT DOCUMENTS**

| | | | |
|---|---|---|---|
| 5,245,554 A * | 9/1993 | Tsuyama et al. | 702/185 |
| 5,531,122 A | 7/1996 | Chatham et al. | 73/760 |
| 5,581,694 A | 12/1996 | Iverson et al. | 395/183.02 |
| 5,692,107 A * | 11/1997 | Simoudis et al. | 706/12 |
| 5,802,518 A | 9/1998 | Karaev et al. | 707/9 |
| 5,822,218 A | 10/1998 | Moosa et al. | 364/488 |
| 5,852,793 A | 12/1998 | Board et al. | 702/56 |
| 5,917,724 A | 6/1999 | Brousseau et al. | 364/186 |
| 5,986,281 A | 11/1999 | Burchanowski et al. | 257/48 |
| 5,991,707 A | 11/1999 | Searles et al. | 702/185 |
| 6,049,741 A | 4/2000 | Kawamura | 700/80 |
| 6,067,544 A | 5/2000 | Moore | 707/6 |
| 6,088,676 A * | 7/2000 | White, Jr. | 705/1 |
| 6,100,901 A | 8/2000 | Mohda et al. | 345/440 |
| 6,188,423 B1 | 2/2001 | Pou | 347/211 |
| 6,243,628 B1 | 6/2001 | Bliley et al. | 701/29 |
| 6,249,887 B1 | 6/2001 | Gray et al. | 714/47 |
| 6,253,336 B1 | 6/2001 | Moore | 714/38 |
| 6,266,668 B1 * | 7/2001 | Vanderveldt et al. | 707/10 |
| 6,567,814 B1 * | 5/2003 | Bankier et al. | 707/101 |

**FOREIGN PATENT DOCUMENTS**

| | | | | |
|---|---|---|---|---|
| EP | 1 168 198 A2 * | 2/2002 | | G06F/17/30 |
| JP | 10134086 A | 5/1998 | | G06F/17/30 |
| JP | 2000353177 A | 12/2000 | | G06F/17/30 |

**OTHER PUBLICATIONS**

"Predictive Data Mining: Practical Examples", Velickov et al., Artificial Intelligence in Civil Engineering Proc. 2ⁿᵈ Joint, Workshop, Germany, Mar. 2000.*

* cited by examiner

Primary Examiner—John Barlow
Assistant Examiner—Toan M Le

(57) **ABSTRACT**

An enhanced concern indicator failure prediction system is provided to predict possible product failures with automatic notification of people as well as systems. The system integrates data mining, spatial analysis, linear programming, narrowcasting, data warehousing, visualization, and text mining. As a result, failure conditions, attributes, complaints, locations, consequences, and sequence of events are analyzed using data mining technologies. This data is fed into an optimization module that assesses the efficiency of the failure process such that failures can be assessed as to their priority. These priorities are then used to feed a triggering engine that triggers notification of systems and individuals using narrowcasting technology. This system is one that allows early warning of potential problems to occur and integrates data from call centers, legacy systems, retailers, manufacturers, vendor supplied parts, and transportation of parts.

**28 Claims, 3 Drawing Sheets**

100

104

108

CLIENT

SERVER

NETWORK
102

110

CLIENT

106 STORAGE

FIG. 1

112

CLIENT

202 PROCESSOR PROCESSOR 204

206

SYSTEM BUS

SERVER
200

208 MEMORY
CONTROLLER/
CACHE

I/O BRIDGE 210

214

PCI BUS 216

209 LOCAL
MEMORY

PCI BUS
BRIDGE

212 I/O
BUS

MODEM

NETWORK
ADAPTER

230 GRAPHICS
ADAPTER

222

218

220

PCI BUS
BRIDGE

PCI BUS

232 HARD DISK

226

PCI BUS
BRIDGE

PCI BUS

FIG. 2

228

224

EP 2 071 473 A2

CLIENT
300

PROCESSOR  ⟷  HOST/PCI CACHE/BRIDGE  ⟷  MAIN MEMORY        AUDIO ADAPTER

306

302    BUS   308              304              316

SCSI HOST BUS ADAPTER — 312        LAN ADAPTER    EXPANSION BUS INTERFACE    GRAPHICS ADAPTER    AUDIO/VIDEO ADAPTER

326

DISK

TAPE — 328        310        314        318        319

CD-ROM — 330    320 — KEYBOARD AND MOUSE ADAPTER    MODEM    MEMORY

*FIG. 3*        322        324

BEGIN

502 — DEFINE PREDICTIVE INDICATORS

504 — PERFORM VISUALIZATIONS

506 — PERFORM DATA MINING

508 — OPTIMIZE INPUTS AND OUTPUTS

510 — COLLECT AND MANIPULATE TEXT/DATA

REPORT? — YES — GENERATE REPORTS
512    NO        514    518    *FIG. 5*

TRIGGER? — YES — DISTRIBUTE TRIGGERING DATA TO SUBSCRIBERS
516    NO

132

## FIG. 4

EARLY PREDICTIVE INDICATORS — 402

SERVER JOB RUNTIME PARAMETER TEMPLATES
403 405

SQL FEATURE VALUE QUERY TEMPLATES
404 406

WEIGHTING ENGINE — 426

SERVER JOB WIZARD

RDBMS

DATA VISUALIZATION — 408

410 — DATA MINING

412 — SEGMENTATION
414 — CLASSIFICATION
416 — STATISTICAL VERIFICATION PREDICTION
418 — ASSOCIATIONS
420 — OUTLIER ANALYSIS
422 — PROFILE MODEL
424 — MODEL SCORING

430 — ECI DATA STORAGE

432 — TEXT MINING

434 — REPORT WIZARD

USER DASHBOARD 452

SYSTEMS: PAGERS EMAIL AUTOMATED — 450

438 — TRIGGERING ENGINE

440 — NARROW CASTING

CUSTOMIZED REPORTS AND RUNTIME USER INTERFACE

DISTRIBUTED TO ALL TYPES OF SUBSCRIBERS

# ENHANCED CONCERN INDICATOR FAILURE PREDICTION SYSTEM

## CROSS REFERENCE TO RELATED APPLICATIONS

The present invention is related to the following applications entitled "METHOD AND SYSTEM FOR INTEGRATING SPATIAL ANALYSIS AND DATA MINING ANALYSIS TO ASCERTAIN FAVORABLE POSITIONING OF PRODUCTS IN A RETAIL ENVIRONMENT", U.S. application Ser. No. 09/400,583, "METHOD AND SYSTEM FOR INTEGRATING SPATIAL ANALYSIS AND DATA MINING ANALYSIS TO ASCERTAIN WARRANTY ISSUES ASSOCIATED WITH TRANSPORTATION PRODUCTS", U.S. application Ser. No. 09/401,109, now U.S. Pat. No. 6,493,723, and "METHOD AND SYSTEM FOR INTEGRATING SPATIAL ANALYSIS AND DATA MINING ANALYSIS TO ASCERTAIN RELATIONSHIPS BETWEEN COLLECTED SAMPLES AND GEOLOGY WITH REMOTELY SENSED DATA", U.S. application Ser. No. 09/400,776, now U.S. Pat. No. 6,430,547, all of which were filed Sep. 22, 1999, and "METHOD AND SYSTEM FOR INTEGRATING SPATIAL ANALYSIS, DATA MINING ANALYSIS, AND SCHEDULING TO EFFICIENTLY SCHEDULE AND MONITOR INFRASTRUCTURE MAINTENANCE", U.S. application Ser. No. 09/619,408, filed on Jul. 19, 2000, now U.S. Pat. No. 6,496,814, and U.S. application Ser. No. 09/838,732, filed on Apr. 19, 2001, all of which are assigned to the same assignee, and incorporated herein by reference.

## BACKGROUND OF THE PRESENT INVENTION

### 1. Field of the Invention

The present invention relates to data processing and, in particular, to failure prediction. Still more particularly, the present invention provides a method, apparatus, and program for using data mining, spatial analysis, linear programming, narrowcasting, data warehousing, visualization, and text mining in a failure prediction system.

### 2. Background of the Invention

Product failures may lead to various consequences. Typically, when a product defect is discovered, the product is recalled. However, the product defect may be discovered only after catastrophic consequences are suffered. For example, an infant car seat may be recalled only after numerous injuries or possibly deaths. Preferably product defects and their subsequent repair under warranty would trigger timely actions that would minimize the liability and expenses associated with the defect.

Product failures can also be costly in public relations for a manufacturer. Particularly when the safety of consumers is threatened, public perception may be damaged. Even if only one part or model is found to be defective, trust and loyalty in a brand name may be destroyed. Thus, great cost may be expended in restoring the trust of consumers.

Furthermore, a product failure may have an effect on other related companies. For example, an automobile manufacturer may factory install a particular brand and model of tires on automobiles. If that particular model of tires has a defect, failures could result in injuries and possibly loss of life. Both the tire manufacturer and automobile manufacturer may find themselves buried in law suits, recalls, and public relation problems.

Therefore, it would be advantageous to provide an improved system for predicting failures to avoid unnecessary risk to the public and inestimable cost to the manufacturer.

## SUMMARY OF THE INVENTION

The present invention provides a system and method to predict possible product failures with automatic notification of people as well as systems. The present invention integrates data mining, spatial analysis, linear programming, narrowcasting, data warehousing, visualization, and text mining. As a result, failure conditions, attributes, complaints, locations, consequences, and sequence of events are analyzed using data mining technologies. This data is fed into an optimization module that assesses the efficiency of the failure process such that failures can be assessed as to their priority. These priorities are then used to feed a triggering engine that triggers notification of systems and individuals using narrowcasting technology. This system is one that allows early warning of potential problems to occur and integrates data from call centers, legacy systems, retailers, manufacturers, vendor supplied parts, and transportation of parts.

## BRIEF DESCRIPTION OF THE DRAWINGS

The novel features believed characteristic of the invention are set forth in the appended claims. The invention itself, however, as well as a preferred mode of use, further objectives and advantages thereof, will best be understood by reference to the following detailed description of an illustrative embodiment when read in conjunction with the accompanying drawings, wherein:

FIG. 1 depicts a pictorial representation of a network of data processing systems in which the present invention may be implemented;

FIG. 2 is a block diagram of a data processing system that may be implemented as a server in accordance with a preferred embodiment of the present invention;

FIG. 3 is a block diagram illustrating a data processing system is depicted in which the present invention may be implemented;

FIG. 4 is an early concern indicator system is shown in accordance with a preferred embodiment of the present invention; and

FIG. 5 is a flowchart of an enhanced concern indicator failure prediction system in accordance with a preferred embodiment of the present invention.

## DETAILED DESCRIPTION OF THE PREFERRED EMBODIMENTS

With reference now to the figures, FIG. 1 depicts a pictorial representation of a network of data processing systems in which the present invention may be implemented. Network data processing system 100 is a network of computers in which the present invention may be implemented. Network data processing system 100 contains a network 102, which is the medium used to provide communications links between various devices and computers connected together within network data processing system 100. Network 102 may include connections, such as wire, wireless communication links, or fiber optic cables.

In the depicted example, server 104 is connected to network 102 along with storage unit 106. In addition, clients 108, 110, and 112 are connected to network 102. These clients 108, 110, and 112 may be, for example, personal computers or network computers. In the depicted example, server 104 provides data, such as boot files, operating system images, and applications to clients 108–112. Clients 108, 110, and 112 are clients to server 104. Network data processing system 100 may include additional servers, clients, and other devices not shown.

## 3

In the depicted example, network data processing system 100 is the Internet with network 102 representing a worldwide collection of networks and gateways that use the TCP/IP suite of protocols to communicate with one another. At the heart of the Internet is a backbone of high-speed data communication lines between major nodes or host computers, consisting of thousands of commercial, government, educational and other computer systems that route data and messages. Of course, network data processing system 100 also may be implemented as a number of different types of networks, such as for example, an intranet, a local area network (LAN), or a wide area network (WAN). FIG. 1 is intended as an example, and not as an architectural limitation for the present invention.

The present invention provides a method and apparatus for evaluating product data to predict product failures. Products data, such as failure conditions, attributes, complaints, locations, consequences, and sequences of events may be obtained from one or more sources in a distributed data processing system, such as distributed data processing system 100. For example, product data may be obtained from retailer databases, third party data providers, and the like, which may be located remotely but accessible through the network 102.

The present invention may be implemented in a client device or a server. For example, the present invention may be implemented in a server, such as server 104, that obtains customer data from the various sources via the network 102. In response to a request from a client device, such as client device 112, the server 104 may evaluate product data using data mining technologies.

Referring to FIG. 2, a block diagram of a data processing system that may be implemented as a server, such as server 104 in FIG. 1, is depicted in accordance with a preferred embodiment of the present invention. Data processing system 200 may be a symmetric multiprocessor (SMP) system including a plurality of processors 202 and 204 connected to system bus 206. Alternatively, a single processor system may be employed. Also connected to system bus 206 is memory controller/cache 208, which provides an interface to local memory 209. I/O bus bridge 210 is connected to system bus 206 and provides an interface to I/O bus 212. Memory controller/cache 208 and I/O bus bridge 210 may be integrated as depicted.

Peripheral component interconnect (PCI) bus bridge 214 connected to I/O bus 212 provides an interface to PCI local bus 216. A number of modems may be connected to PCI local bus 216. Typical PCI bus implementations will support four PCI expansion slots or add-in connectors. Communications links to clients 108-112 in FIG. 1 may be provided through modem 218 and network adapter 220 connected to PCI local bus 216 through add-in boards.

Additional PCI bus bridges 222 and 224 provide interfaces for additional PCI local buses 226 and 228, from which additional modems or network adapters may be supported. In this manner, data processing system 200 allows connections to multiple network computers. A memory-mapped graphics adapter 230 and hard disk 232 may also be connected to I/O bus 212 as depicted, either directly or indirectly.

Those of ordinary skill in the art will appreciate that the hardware depicted in FIG. 2 may vary. For example, other peripheral devices, such as optical disk drives and the like, also may be used in addition to or in place of the hardware depicted. The depicted example is not meant to imply architectural limitations with respect to the present invention.

## 4

The data processing system depicted in FIG. 2 may be, for example, an IBM e-Server pSeries system, a product of International Business Machines Corporation in Armonk, N.Y., running the Advanced Interactive Executive (AIX) operating system or LINUX operating system.

With reference now to FIG. 3, a block diagram illustrating a data processing system is depicted in which the present invention may be implemented. Data processing system 300 is an example of a client computer. Data processing system 300 employs a peripheral component interconnect (PCI) local bus architecture. Although the depicted example employs a PCI bus, other bus architectures such as Accelerated Graphics Port (AGP) and Industry Standard Architecture (ISA) may be used. Processor 302 and main memory 304 are connected to PCI local bus 306 through PCI bridge 308. PCI bridge 308 also may include an integrated memory controller and cache memory for processor 302. Additional connections to PCI local bus 306 may be made through direct component interconnection or through add-in boards. In the depicted example, local area network (LAN) adapter 310, SCSI host bus adapter 312, and expansion bus interface 314 are connected to PCI local bus 306 by direct component connection. In contrast, audio adapter 316, graphics adapter 318, and audio/video adapter 319 are connected to PCI local bus 306 by add-in boards inserted into expansion slots. Expansion bus interface 314 provides a connection for a keyboard and mouse adapter 320, modem 322, and additional memory 324. Small computer system interface (SCSI) host bus adapter 312 provides a connection for hard disk drive 326, tape drive 328, and CD-ROM drive 330. Typical PCI local bus implementations will support three or four PCI expansion slots or add-in connectors.

An operating system runs on processor 302 and is used to coordinate and provide control of various components within data processing system 300 in FIG. 3. The operating system may be a commercially available operating system, such as Windows 2000, which is available from Microsoft Corporation. An object oriented programming system such as Java may run in conjunction with the operating system and provide calls to the operating system from Java programs or applications executing on data processing system 300. "Java" is a trademark of Sun Microsystems, Inc. Instructions for the operating system, the object-oriented operating system, and applications or programs are located on storage devices, such as hard disk drive 326, and may be loaded into main memory 304 for execution by processor 302.

Those of ordinary skill in the art will appreciate that the hardware in FIG. 3 may vary depending on the implementation. Other internal hardware or peripheral devices, such as flash ROM (or equivalent nonvolatile memory) or optical disk drives and the like, may be used in addition to or in place of the hardware depicted in FIG. 3. Also, the processes of the present invention may be applied to a multiprocessor data processing system.

As another example, data processing system 300 may be a stand-alone system configured to be bootable without relying on some type of network communication interface, whether or not data processing system 300 comprises some type of network communication interface. As a further example, data processing system 300 may be a personal digital assistant (PDA) device, which is configured with ROM and/or flash ROM in order to provide non-volatile memory for storing operating system files and/or user-generated data.

The depicted example in FIG. 3 and above-described examples are not meant to imply architectural limitations.

For example, data processing system 300 also may be a notebook computer or hand held computer in addition to taking the form of a PDA. Data processing system 300 also may be a kiosk or a Web appliance.

The present invention provides a system and method to predict possible product failures with automatic notification of people as well as systems. The present invention integrates data mining, spatial analysis, linear programming, narrowcasting, data warehousing, visualization, and text mining. As a result, failure conditions, attributes, complaints, locations, consequences, and sequence of events are analyzed using data mining technologies. This data is fed into an optimization module that assesses the efficiency of the failure process such that failures can be assessed as to their priority. These priorities are then used to feed a triggering engine that triggers notification of systems and individuals using narrowcasting technology. This system is one that allows early warning of potential problems to occur and integrates data from call centers, legacy systems, retailers, manufacturers, vendor supplied parts, and transportation of parts and the whole.

With reference to FIG. 4, an early concern indicator system is shown in accordance with a preferred embodiment of the present invention. Data mining is a process for extracting relationships in data stored in database systems. As is well-known, users can query a database system for low-level information, such as a whether a particular model number appears in service records. Early predictive indicators 402 allow a user to define indicators for predicting possible product failures. Specifically, server runtime parameter templates 403 structured query language (SQL) feature value query templates 404, server job wizard 405, allow a user to define low-level queries of relational database management system (RDBMS) 406.

Data visualization 408 is a visualization framework that gives users the ability to apply advanced visualization and analysis techniques to data. Data visualization 408 provides a set of tools for manipulating, transforming, processing, realizing, rendering and animating data. Insight gained from visualizing data can be used in defining queries and templates or managing data mining profiles.

Data mining 410 builds a set of high-level rules about a set of data, such as "If a product fails a predetermined number of times during a selected period of time at a specified location, then the probability that the product will fail at a given temperature is greater than 20%." These rules allow a user to better understand the relationship between a potential product failure and possible causes or contributing factors. Data mining includes segmentation 412, classification 414, statistical verification prediction 416, associations 418, outlier analysis 420, profile model 422, and model scoring 424.

Segmentation 412 compares entities to see how they might segment naturally. For example, when a "mileage" attribute is considered, the class of the vehicle may segment naturally between high, normal, and low mileage, cars. More specifically, sports utility vehicles may naturally have more mileage than sports cars.

Classification 414 allows a user to put entities into classes based on known data. Classification tries to discover rules that predict whether a record belongs to a particular class based on the values of certain other attributes in that record. In other words, given a set of attributes, one attribute is selected as the "goal," and one desires to find a set of "predicting" attributes from the remaining attributes.

Statistical verification prediction 416 is used to predict the value of attributes by using the information contained in

other attributes. Statistical verification prediction may use common statistical analysis techniques, such as linear regression.

Associations 418 find probabilities of combinations of data. An association rule can be developed based on a set of data for which an attribute is determined to be either present or absent. For example, suppose data has been collected on a set of service visits and the attributes are tire brand, complaint type, tire mileage, and total automobile mileage. Associations might identify a strong relationship between a particular tire brand and tire blowouts when the mileage exceeds 50,000 miles.

Outlier analysis 420 is used to find records where some of the attribute values are quite different from the expected values. For example, outlier analysis may be used to find a driver with unusual wear on brake pads or unusually high mileage on a vehicle.

Profile model 422 is a tool to allow a user to specify a model that is used to extract entities from the enhanced concern indicator (ECI) data storage by matching them to the model. These extracts are then analyzed using data mining.

Model scoring 424 is the technique of using an existing model to evaluate other entities by using the common attributes. For example, a model for tire failure might be applied to all automobile records and those automobile owners at high risk contacted.

Weighting engine 426 is an optimization engine that optimizes multiple inputs and multiple outputs. The weighting engine may use the server job runtime parameter templates, SQL feature value query templates, and server job wizard to filter data. Common techniques for optimization are linear programming, non-linear programming, mixed integer programming, decision envelopment analysis. The weighting engine may also use scoring from data mining 410 to optimize inputs and outputs to ECI data storage 430.

ECI data storage 430 provides a data warehouse for the prediction system. Data warehousing is the storage of raw data itself. One of the most common techniques for data warehousing is a relational database. However, other techniques are possible, such as hierarchical databases or multidimensional databases. No matter which type of database is used, it should be able to store points, lines, and polygons such that geographic distributions can be assessed. This type of warehouse or database is sometimes referred to as a spatial data warehouse.

Data is nonvolatile, i.e. read-only, and often includes historical data. The data in the warehouse needs to be "clean" and "integrated". Data is often taken from a wide variety of sources. To be clean and integrated means data is represented in a consistent, uniform fashion inside the warehouse despite differences in reporting the raw data from various sources. The present invention integrates data from call centers, legacy systems, retailers, manufacturers, vendor supplied parts, transportation of parts, and other sources.

The present invention also includes text mining 432. Raw data from sources may include text and other data that must be collected and manipulated. For example, service records may include text describing problems with a product. As an example, a customer may complain about a "squeak" or a "knock" coming from the engine. This information may be collected and manipulated to gather further information that may be used to predict product failures.

Report Wizard 434 is a mechanism that may be used to generate customized reports. The report wizard may also be used to deliver reports to a user via a runtime user interface.

Thus, the present invention integrates the technologies of data mining, spatial analysis, linear programming, data warehousing, visualization, and text mining to predict product failures. Failure conditions, attributes, complaints, locations, consequences, and sequences of events are analyzed using these technologies. This data is fed into an optimization module that assesses the efficiency of the failure process such that failures can be assessed as to their priority. These priorities are then used to feed triggering engine 438 that triggers notification of systems and individuals.

Narrowcasting 440 distributes triggering data to subscribers. Narrowcasting is the technique of distributing pertinent information to the precise destinations that require this information. As contrasted with simply broadcasting information, this technique avoids overloading the destination with information that not immediately useful. For example, a tire distributor may desire to see failure information relating to his tire brands but would not be interested in failure information relating to the brake system. Subscribers may be systems 450, such as pagers, e-mail, or other automated systems. Subscribers may also be people. For example, a person may monitor for failures at user dashboard 452.

With reference now to FIG. 5, a flowchart of an enhanced concern indicator failure prediction system is illustrated in accordance with a preferred embodiment of the present invention. The process begins and a user defines predictive indicators (step 502), performs visualizations (step 504), and performs data mining (step 506). The process optimizes inputs and outputs (step 508) and collects and manipulates text/data (step 510).

A determination is made as to whether a report is to be generated (step 512). If a report is to be generated, the process generates a report (step 514) and returns to step 512 to determine whether a report is to be generated. If a report is not to be generated in step 512, a determination is made as to whether triggering data is discovered (step 516). If triggering data is discovered, the process distributes the triggering data to subscribers (step 518). If triggering data is not discovered in step 516, the process returns to step 512 to determine whether a report is to be generated.

Thus, the present invention allows early warning of potential problems. The present invention integrates data mining, spatial analysis, linear programming, narrowcasting, data warehousing, visualization, and text mining. As a result, failure conditions, attributes, complaints, locations, consequences, and sequence of events are analyzed using data mining technologies. As a result, the present invention allows the notification of people and systems if potential failure is predicted, thus allowing costly and potentially catastrophic consequences to be avoided.

It is important to note that while the present invention has been described in the context of a fully functioning data processing system, those of ordinary skill in the art will appreciate that the processes of the present invention are capable of being distributed in the form of a computer readable medium of instructions and a variety of forms and that the present invention applies equally regardless of the particular type of signal bearing media actually used to carry out the distribution. Examples of computer readable media include recordable-type media such as a floppy disc, a hard disk drive, a RAM, CD-ROMs, and transmission-type media such as digital and analog communications links.

The description of the present invention has been presented for purposes of illustration and description, and is not intended to be exhaustive or limited to the invention in the form disclosed. Many modifications and variations will be apparent to those of ordinary skill in the art. The embodiment was chosen and described in order to best explain the principles of the invention, the practical application, and to enable others of ordinary skill in the art to understand the invention for various embodiments with various modifications as are suited to the particular use contemplated.

What is claimed is:

1. A method for predicting product failures, comprising:

defining predictive indicators;

performing data mining on product data using the predictive indicators;

determining whether triggering data is discovered by the data mining; and

distributing triggering data to subscribers if triggering data is discovered.

2. The method of claim 1, further comprising performing data visualization on the product data.

3. The method of claim 2, wherein the step of defining predictive indicators comprises defining predictive indicators based on results of the data visualization.

4. The method of claim 2, wherein the step of performing data mining comprises performing data mining based on results of the data visualization.

5. The method of claim 1, wherein the data mining comprises at least one of segmentation, classification, statistical verification prediction, associations, outlier analysis, profile modeling, and model scoring.

6. The method of claim 1, further comprising using a weighting engine to optimize multiple inputs from the predictive indicators and multiple outputs to product data storage.

7. The method of claim 6, wherein the weighting engine optimizes the multiple inputs and multiple outputs using scoring from the data mining.

8. The method of claim 1, further comprising performing text mining on the product data to collect and manipulate information that may be used to predict product failures.

9. The method of claim 1, wherein the step of determining whether triggering data is discovered by the data mining comprises:

discovering potential product failures;

assessing priorities of the potential product failures; and

sending the assessed priorities to a triggering engine.

10. The method of claim 9, wherein the triggering engine triggers notification of at least one system.

11. The method of claim 10, wherein the at least one system comprises a pager.

12. The method of claim 10, wherein the at least one system comprises an e-mail account.

13. The method of claim 9, wherein the triggering engine triggers notification of an individual at a user dashboard.

14. The method of claim 1, wherein the step of distributing triggering data to subscribers comprises distributing the triggering data using narrowcasting.

15. An apparatus for predicting product failures, comprising:

definition means for defining predictive indicators;

data mining means for performing data mining on product data using the predictive indicators;

determination means for determining whether triggering data is discovered by the data mining; and

distribution means for distributing triggering data to subscribers if triggering data is discovered.

**9**

16. The apparatus of claim 15, further comprising data visualization means for performing data visualization on the product data.

17. The apparatus of claim 16, wherein the definition means comprises means for defining predictive indicators based on results of the data visualization means.

18. The apparatus of claim 16, wherein the data mining means comprises means for performing data mining based on results of the data visualization means.

19. The apparatus of claim 15, wherein the data mining means comprises tools for performing at least one of segmentation, classification, statistical verification prediction, associations, outlier analysis, profile modeling, and model scoring.

20. The apparatus of claim 15, further comprising a weighting means for optimizing multiple inputs from the predictive indicators and multiple outputs to product data storage.

21. The apparatus of claim 20, wherein the weighting means optimizes the multiple inputs and multiple outputs using scoring from the data mining means.

22. The apparatus of claim 15, further comprising text mining means for performing text mining on the product data to collect and manipulate information that may be used to predict product failures.

23. The apparatus of claim 15, wherein the determination means comprises:

**10**

means for discovering potential product failures;

means for assessing priorities of the potential product failures; and means for sending the assessed priorities to a triggering engine.

24. The apparatus of claim 23, wherein the triggering engine triggers notification of at least one system.

25. The apparatus of claim 24, wherein the at least one system comprises a pager.

26. The apparatus of claim 24, wherein the at least one system comprises an e-mail account.

27. The apparatus of claim 23, wherein the triggering engine triggers notification of an individual at a user dashboard.

28. A computer program product, in a computer readable medium, for predicting product failures, comprising:

instructions for defining predictive indicators;

instructions for performing data mining on product data using the predictive indicators;

instructions for determining whether triggering data is discovered by the data mining; and

instructions for distributing triggering data to subscribers if triggering data is discovered.

*  *  *  *  *

APPENDIX H

US007305641B2

(12) **United States Patent**
Tang

(10) Patent No.: **US 7,305,641 B2**
(45) **Date of Patent:** Dec. 4, 2007

(54) **METHOD AND SYSTEM TO REDISTRIBUTE WHITE SPACE FOR MINIMIZING WIRE LENGTH**

(75) Inventor: **Xiaoping Tang, Elmsford, NY (US)**

(73) Assignee: **International Business Machines Corporation, Armonk, NY (US)**

(*) Notice: Subject to any disclaimer, the term of this patent is extended or adjusted under 35 U.S.C. 154(b) by 128 days.

(21) Appl. No.: 11/034,098

(22) Filed: **Jan. 12, 2005**

(65) **Prior Publication Data**

US 2006/0156265 A1 Jul. 13, 2006

(51) Int. Cl.
GO6F 9/45 (2006.01)
GO6F 17/50 (2006.01)

(52) U.S. Cl. .................................. 716/10; 716/9; 716/11
(58) Field of Classification Search ............... 716/2–14
See application file for complete search history.

(56) **References Cited**

U.S. PATENT DOCUMENTS

| | | | | |
|---|---|---|---|---|
| 5,682,321 A * | 10/1997 | Ding et al. | ............... | 716/8 |
| 5,909,376 A * | 6/1999 | Scepanovic et al. | ............ | 716/8 |
| 2005/0166169 A1* | 7/2005 | Kurzum et al. | ............... | 716/10 |
| 2005/0278676 A1* | 12/2005 | Dhanwada et al. | ............ | 716/9 |

OTHER PUBLICATIONS

Tang et al., Optimal redistribution of white space for wire length minization, 2005, IEEE/ACM, pp. 412-417.*

Yang et al., , Routability driven white space allocation for Fixed-die standard-cell placement, Apr. 2002, ACM, pp. 42-47.*

Bamji et al., Enhance network flow algorithm for Yield optimization, 1996, ACM, pp. 746-751.*

Tang et al., Fast-SP: A fast Algorithm for block placement based on Sequence Pair, 2001, IEEE, pp. 521-526.*

* cited by examiner

Primary Examiner—Jack Chiang
Assistant Examiner—Nghia M. Doan
(74) Attorney, Agent, or Firm—Scully, Scott, Murphy & Presser, P.C.; Anne Dougherty, Esq.

(57) **ABSTRACT**

Disclosed are a method and a system for redistributing white space on an integrated circuit. The method comprises the steps of providing a series of circuit blocks for the integrated circuit, and placing the blocks on the integrated circuit to obtain a predefined optimal wire length. In accordance with the preferred embodiment of the invention, we first show that the problem of placing the blocks to obtain an optimal wire length, can be formulated as linear programming. Then, we find it can be solved by efficient min-cost flow implementation instead of general and slow linear programming. The approach guarantees to obtain the minimum total wire length for a given floorplan topology. We also show that the approach is capable of handling various constraints such as fixed-frame (fixed area), IO pins, pre-placed blocks, boundary blocks, range placement, alignment and abutment, rectilinear blocks, cluster placement, and bounded net delay, without loss of optimality.

**14 Claims, 6 Drawing Sheets**

FIG. 1A

FIG. 1B

FIG. 2

FIG. 3A

FIG. 3B

FIG. 4A

FIG. 4B

## FIG. 5A

## FIG. 5B

## FIG. 6

FIG. 7A

FIG. 7B

FIG. 8A

FIG. 8B

## FIG. 9A

## FIG. 9B

# FIG. 10A

# FIG. 10B

# METHOD AND SYSTEM TO REDISTRIBUTE WHITE SPACE FOR MINIMIZING WIRE LENGTH

## BACKGROUND OF THE INVENTION

### 1. Field of the Invention

This invention generally relates to floorplanning. More specifically, the invention relates to a method and system to decide the positions of circuit blocks or IP blocks on an integrated circuit in order to obtain an optimal wire length.

### 2. Background Art

Floorplanning is to decide the positions of circuit blocks or IP blocks on a chip subject to various objectives. It is the early stage of physical design and determines the overall chip performance. Due to the enormous complexity of VLSI design with continuous scaling-down of technology, a hierarchical approach is needed for the circuit design in order to reduce runtime and improve solution quality. Also, IP (module reuse) based design methodology becomes widely adopted. This trend makes floorplanning even more important.

Floorplanning can be classified into two categories, slicing and non-slicing. Among slicing representations, there are binary tree and normalized Polish expression. For non-slicing structure, many representations are invented recently, such as topology representation (BSG, sequence pair, TCG), packing representation (O-tree, B*-tree), and mosaic representation (CBL, Q-sequence, twin binary tree, twin binary sequence). All of these algorithms compact blocks to the left and bottom subject to the given topological constraints. Recently, additional constraints are addressed in floorplanning, such as fixed frame, alignment and performance (bounded net delay), buffer planning in floorplanning, etc. Again, within the approaches, the floorplan is compacted to lower-left (or upper-right) corner and then evaluated. In general, compaction implies minimum area. However, it may be sub-optimal for other objectives, such as minimizing wire length, routing congestion, and buffer allocation. As we can see, even with the same minimum area and the same topology, there exists lots of different floorplans that have different distribution of white space and thus have different values on other objectives.

In floorplanning and placement, minimizing total wire length is the first-order objective. If a floorplanner/placer can minimize total wire length very well, then there is much freedom and space to consider and tradeoff other concerns such as routability and timing. It is not known in the prior art how to place blocks to obtain an optimal wire length.

## SUMMARY OF THE INVENTION

An object of this invention is to provide an improved floorplanning procedure to determine the positions of circuit blocks or IP blocks on a chip substrate.

Another object of the present invention is to minimize total wire length in floorplanning.

A further object of the invention is to solve the following problem:

Given a sequence pair (X, Y) with a set of m macro blocks $B=\{b_1, b_2, \ldots, b_m\}$ where $w_i \times b_i$ specifies the dimension of block $b_i$ ($w_i$: width, $h_i$: height), and a set of nets $N=\{N_1, N_2, \ldots, N_n\}$ where $N_i$, $i=1, 2, \ldots, n$ describes the connection between blocks, find a placement of blocks B satisfying the topological relation imposed by the sequence pair, such that the total wire length

$$\sum_{i=1}^{n} \lambda_i W(N_i)$$

is minimized where $W(N_i)$ denotes the wire length of net $N_i$ and $\lambda_i$ is its weight.

Another object of the invention is to use a min-cost flow based approach to determine where to place circuit blocks in an integrated circuit, in order to minimize total wire length.

These and other objectives are attained with a method and system for redistributing white space on an integrated circuit. The method comprises the steps of providing a series of circuit blocks for the integrated circuit, and placing the blocks on the integrated circuit to obtain a predefined optimal wire length.

In accordance with the preferred embodiment of the invention, we first show that the problem of placing the blocks to obtain an optimal wire length can be formulated as linear programming. It is not only an exact algorithm to minimize wire length and meanwhile keep the minimum area by distributing white space smarter, but also an approach to optimally minimize the composite cost of both area and wire length. The algorithm is so efficient in that it finishes in less than 0.4 seconds for all MCNC benchmarks of block placement. It is also very effective. Experimental results show we can improve 4.2% of wire length even on very compact floorplans. Thus it is worth applying as a step of post-floorplanning (refine floorplanning). It is noted that researchers have studied the problem of allocating white space in placement for various objectives. These methods are heuristics in terms of minimizing wire length. The approach of this invention optimally minimizes wire length for a given floorplan, and can be applicable to mixed-size cell placement.

Most floorplanning algorithms use simulated annealing to search for an optimal floorplan. The implementation of a simulated annealing scheme relies on a floorplan representation where a neighbor solution is generated and examined by perturbing the representation. In the invention, we use sequence pair representation to present the approach. The reason we pick sequence pair is that it is simple and widely adopted. However, our approach is not limited to sequence pair representation. For any floorplan represented by any other presentation, we can derive a constraint graph and, thus, apply the approach to redistribute white space for minimizing total wire length. As discussed below, preferred embodiment of this invention can take any input of floorplan or block placement even with a large set of additional constraints. The optimality of the approach still holds for a given floorplan topology (it does not change topology). The topology can be extracted from a floorplan/block placement, or specified by a representation such as slicing, BSG, sequence pair, TCG, O-tree, B*-tree, CBL, Q-sequence, twin binary tree and twin binary sequence.

Further benefits and advantages of the invention will become apparent from a consideration of the following detailed description, given with reference to the accompanying drawings, which specify and show preferred embodiments of the invention.

## BRIEF DESCRIPTION OF THE DRAWINGS

FIG. 1(a) shows a floorplan in which blocks are compacted to the lower-left corner.

FIG. 1(b) shows an alternate floorplan, with optimal wire length, and which, compared to the floorplan of FIG. 1(a), has the same topology and area but a different distribution of white space.

FIG. 2 shows the structure specified by the sequence pair $(b_3 b_1 b_2, b_1 b_2 b_3)$.

FIG. 3(a) illustrates a horizontal network graph.

FIG. 3(b) shows a vertical network graph.

FIG. 4(a), illustrates the results of applying a min-cost flow algorithm on the horizontal network graph of FIG. 3(a).

FIG. 4(b) shows the results of applying a min-cost flow algorithm on the vertical network graph of FIG. 3(b).

FIGS. 5(a) and 5(b) are residual graphs derived, respectively, from the graphs of FIGS. 4(a) and 4(b).

FIG. 6 shows a block placement with minimum wire length.

FIGS. 7(a) and 7(b) illustrate modifications of the graphs FIGS. 3(a) and 3(b), respectively, to handle a fixed-frame constraint.

FIGS. 8(a) and 8(b) show modification of the graphs of FIGS. 3(a) and 3(b), respectively, to minimize a composite cost.

FIG. 9(a) show an original placement of blocks.

FIG. 9(b) shows the placement of the blocks of FIG. 9(a) when minimizing wire length in the same frame.

FIG. 10(a) illustrates another original placement of blocks.

FIG. 10(b) shows a new placement result for the blocks of FIG. (10) when minimizing the wire length in the same frame.

## DETAILED DESCRIPTION OF THE PREFERRED EMBODIMENTS

The present invention relates to a method and system to decide the position of circuit blocks or IP blocks on an integrated circuit in order to obtain an optimal wire length. Existing floorplanning algorithms compact blocks to the left and bottom. Although the compaction obtains an optimal area, it may not meet other objectives such as minimizing total wire length.

Even with the same minimum area and the same topology, there exists lots of different floorplans that have different distributions of white space and thus have different values on other objectives. This problem is illustrated in FIGS. 1(a) and 1(b). As can be seen, FIG. 1(b) shows the floorplan with optimal wire length, which has the same topology and area but, compared to FIG. 1(a), has a different distribution of white space.

In accordance with the preferred embodiment of the invention, we first show that the problem of placing the blocks to obtain an optimal wire length can be formulated as linear programming. Then, we find it can be solved by efficient min-cost flow implementation instead of general and slow linear programming. The approach guarantees to obtain the minimum total wire length for a given floorplan topology. We also show that the approach is capable of handling various constraints such as fixed-frame (fixed area), IO pins, pre-placed blocks, boundary blocks, range placement, alignment and abutment, rectilinear blocks, cluster placement, and bounded net delay, without loss of optimality. It is not only an exact algorithm to minimize wire length and meanwhile keep the minimum area by distributing white space smarter, but also an approach to optimally minimize the composite cost of both area and wire length. The algorithm is so efficient in that it finishes in less than 0.4 seconds for all MCNC benchmarks of block placement. It is

also very effective. Experimental results show we can improve 4.2% of wire length even on very compact floorplans. Thus it is worth applying as a step of post-floorplanning (refine floorplanning). It is noted that researchers have studied the problem of allocating white space in placement for various objectives. These methods are heuristics in terms of minimizing wire length. The approach of this invention optimally minimizes wire length for a given floorplan, and can be applicable to mixed-size cell placement.

Most floorplanning algorithms use simulated annealing to search for an optimal floorplan. The implementation of a simulated annealing scheme relies on a floorplan representation where a neighbor solution is generated and examined by perturbing the representation. In the invention, we use sequence pair representation to present the approach. The reason we pick sequence pair is that it is simple and widely adopted. However, our approach is not limited to sequence pair representation. For any floorplan represented by any other presentation, we can derive a constraint graph and, thus, apply the approach to redistribute white space for minimizing total wire length. As discussed below, the preferred approach of this invention can take any input of floorplan or block placement even with a large set of additional constraints. The optimality of the approach still holds for a given floorplan topology (it does not change topology). The topology can be extracted from a floorplan/block placement, or specified by a representation such as slicing, BSG, sequence pair, TCG, O-tree, B*-tree, CBL, Q-sequence, twin binary tree and twin binary sequence.

A sequence pair is a pair of sequences of n elements representing a list of n blocks. The two sequences specify the geometric relations (such as left-of, right-of, below, above) between each pair of blocks as follows:

$$(\dots b_i \dots b_j \dots, \dots b_i \dots b_j \dots) \Rightarrow b_i \text{ is to the left of } b_j \tag{1}$$

$$(\dots b_j \dots b_i \dots, \dots b_i \dots b_j \dots) \Rightarrow b_j \text{ is to the left of } b_i \tag{2}$$

The sequence pair structure can be shown as an oblique grid (as shown in FIG. 2). The original paper which proposed sequence pair, "VLSI module placement based on rectangle-packing by the sequence pair", *IEEE Transaction on Computer Aided Design of Integrated Circuits and Systems*, Vol. 15:12, pp. 1518-1524, 1996 (Murata, et al.), presented an algorithm to translate a sequence pair to a placement by constructing two constraint graphs, $G_h$ and $G_v$. Both $G_h$ and $G_v$ have n+2 vertices representing n blocks plus source node and sink node (representing boundaries). $G_h$ has a directed edge $(b_i, b_j)$ if block $b_i$ is to the left of block $b_j$. Similarly, if block $b_i$ is below block $b_j$, $G_v$ has the corresponding directed edge $(b_i, b_j)$. For any pair of blocks (e.g. $b_i, b_j$), there exists exactly one edge connecting the two nodes either in $G_h$ or in $G_v$. Both $G_h$ and $G_v$ are vertex weighted, directed, acyclic graphs. The weights in $G_h$ represent the widths of blocks, and the weights in $G_v$ represent the heights of blocks. Given that the coordinates of a block are the coordinates of the lower-left corner of the block, a longest path algorithm can be applied to determine the coordinates of each block and the total width and height of the bounding box. As an example, the sequence pair specifying the placement in FIG. 1 is $(b_3 b_1 b_2, b_1 b_2 b_3)$.

### Problem and Solution

Sequence pair specifies the topological relation between blocks. Given a sequence pair, previous algorithm compacts blocks to lower-left corner to minimize area. Even with the same minimum area, there exist different placements of

blocks satisfying the topological constraint imposed by the sequence pair. It is very common that white space exists even in the floorplan packed to minimum area. The problem is to find a floorplan that fairly distributes white space and minimizes the total wire length, as defined as follows:

Problem 1. Given a sequence pair $(X, Y)$ with a set of $m$ macro blocks $B=\{b_1, b_2, \ldots, b_m\}$ where $w_i \times h_i$ specifies the dimension of block $b_i$ ($w_i$: width, $h_i$: height), and a set of nets $N=\{N_1, N_2, \ldots, N_n\}$ where $N_i$, $i=1, 2, \ldots, n$ describes the connection between blocks, find a placement of blocks $B$ satisfying the topological relation imposed by the sequence pair, such that the total wire length

$$\sum_{i=1}^{n} \lambda_i W(N_i)$$

is minimized where $W(N_i)$ denotes the wire length of net $N_i$ and $\lambda_i$ is its weight.

Without loss of practicality, we assume that all $\lambda_i$ are integers. In the following we use $x_i/y_i$ to denote the $x/y$ coordinate of block $b_i$, referring to the lower-left corner of the block. For simple representation and easy understanding, we assume all pins are located in the center of the block. Actually as we can see later, our approach has no restriction that pins should be in the center of the block. It is common to use half perimeter of bounding box as an estimate of wire length for a net. Let us consider a net $N_i$ connecting a set of $z$ blocks $\{b_{j_1}, b_{j_2}, \ldots, b_{j_z}\}$, and use $(L_i, L'_i; R_i, R'_i)$ as its bounding box where $(L_i, L'_i)$ and $(R_i, R'_i)$ refer to lower-left and upper-right corner of the bounding box respectively. Thus we have $\forall j \in \{1, 2, \ldots, z\}$

$$L_i \leq x_{ij} + w_{ij}/2 \tag{3}$$

$$R_i \geq x_{ij} + w_{ij}/2 \tag{4}$$

$$L'_i \leq x_{ij} + h_{ij}/2 \tag{5}$$

$$R'_i \geq y_{ij} + h_{ij}/2 \tag{6}$$

Note that the coordinate $(x_{ij}+w_{ij}/2, y_{ij}+h_{ij}/2)$ is the center of the block $b_{ij}$ where pin is located. When pin is not at the center, we can use the actual pin location to substitute the coordinate. In addition, the geometric constraint imposed by sequence pair can be written as follows:

$$(\ldots b_i \ldots b_j \ldots \ldots \ldots b_i \ldots b_j \ldots) \Rightarrow x_i + w_i \leq x_j \tag{7}$$

$$(\ldots b_j \ldots b_i \ldots \ldots \ldots b_i \ldots b_j \ldots) \Rightarrow y_i + h_i \leq y_j \tag{8}$$

Thus the problem can be stated as:

$$\min \sum_{i=1}^{n} \lambda_i (R_i - L_i + R'_i - L'_i) \tag{9}$$

subject to the set of constraints as stated in (3) (4) (5) (6) (7) (8). Since the evaluation of $x$ and $y$ coordinates can be done independently, the problem can be decoupled into two subproblems:

$$\min \sum_{i=1}^{n} \lambda_i (R_i - L_i) \tag{10}$$

subject to the set of constraints as stated in (3) (4) (7), and

$$\min \sum_{i=1}^{n} \lambda_i (R'_i - L'_i) \tag{11}$$

subject to the set of constraints as stated in (5) (6) (8). The problems (10) and (11) can be solved separately. The reason for decoupling is that it makes the algorithm faster. As we can see, all of the three problems, (9), (10) and (11), are linear programming. However, each of the problems has special property that all constraints are difference constraints. Thus its dual problem is a min-cost flow problem, since in the constraint matrix of the dual problem, each column has exactly one "1" and "-1". As we know, linear programming is more general but much slower than min-cost flow algorithm. Let us first consider the problem (10). We can construct a network graph (called horizontal network graph) $G_H=(V_H, E_H)$ as follows.

1. $V_H=\{s, t, x_1, x_2, \ldots, x_m, L_1, R_1, L_2, R_2, \ldots, L_n, R_n\}$, where $s$ is the source node, $t$ is the sink node, $x_i$ represents the $x$ coordinate of block $b_i$, and $L_i$ and $R_i$ represent the left and right boundary of bounding box of net $N_i$ as denoted above.

2. $E_H=\{(s,R_i)|i=1,2,\ldots,n\} \cup \{(x_i,x_j)|$ block $b_i$ is to the right of block $b_j\} \cup \{R_i,x_j\},x_j,L_i)|$net $N_i$ connects block $b_j\} \cup \{(L_i,t)|i=1,2,\ldots,n\}$, where $(s,R_i)$ is the edge from source to right boundary of bounding box, $(x_i,x_j)$ is the edge imposed by the sequence pair as in constraint (7), $(R_i,x_j)$ is the edge imposed by net connection as in constraint (4), $(x_j,L_i)$ is the edge imposed by net connection as in constraint (3), and $(L_i,t)$ is the edge from left boundary of bounding box to sink.

3. Edge Capacity: $U_H(s,R_i)=U_H(L_i,t)=\lambda_i$ $\forall i \in \{1,2,\ldots,n\}$; for any other edge $e \in E_H$, $U_H(e)$ is unlimited.

4. Cost Function: $C_H(s,R_i)=0$, $C_H(L_i,t)=0$, $C_H(x_i,x_j)=-w_j$, $C_H(R_i,x_j)=-w_j/2$, and $C_H(x_j,L_i)=w_j/2$.

It should be noted that the subgraph, which contains only the vertices $x_i$, $i=1, \ldots m$ and the edges $(x_i,x_j)$ imposed by sequence pair, is similar to the horizontal constraint graph mentioned in Murata, et al. The difference is that the direction of edges is inverted and the edge cost is negative. Thereafter, in Murata, et al. a longest path algorithm is applied to compute the positions of blocks, while in the invention we shall use min-cost flow algorithm in the sense of shortest path. It should also be noted that the transitive edges on the subgraph can be safely omitted, which will speed up the computation considerably.

Thus we compute the min-cost flow of amount $\Sigma_{i=1}^{n}\lambda_i$ on the graph $G_H$, which solves the dual problem. Our goal is to compute the positions of blocks subject to the constraints and minimize the total wire length (the primal problem), which can be done as follows. We first compute the residual graph derived from the min-cost flow. Then a shortest path algorithm applied on the residual graph would give the positions for all blocks. If necessary, a common source node connecting to all other nodes can be added to the residual graph for shortest path computation. Analogously, we can construct another network graph and solve the problem (11)

by min-cost flow approach. The graph (called vertical network graph) is denoted as $G_V=(V_v,E_v)$.

We use the example as shown in FIG. 1 to illustrate the approach. The input of the problem is: sequence pair $(b_3\ b_1\ b_2,\ b_1\ b_2\ b_3)$ with 3 blocks, and nets $N_1=\{b_1,b_2\}$ with weight $\lambda_1=2$, $N_2=\{b_2,b_3\}$ with weight $\lambda_2=1$. Then the problem (10) to minimize wire length in x dimension can be stated as follows:

$$\min\{2(R_1-L_1)+(R_2-L_2)\}$$

subject to
$$X_1+4\leq x_2$$
$$X_1+2\geq L_1$$
$$X_1+2\leq R_1$$
$$X_2+1\geq L_1$$
$$X_2+1\leq R_1$$
$$X_2+1\geq L_2$$
$$X_2+1\leq R_2$$
$$X_3+2\geq L_2$$
$$X_3+2\leq R_2$$

Then this can be transformed to min-cost flow problem in the network graph $G_H$ as shown in FIG. 3(a). Similarly, the problem (11) to minimize wire length in y dimension is transformed to min-cost flow problem in the network graph $G_V$ as shown in FIG. 3(b). Then we compute the min-cost flow of amount: 3 (because $\lambda_1+\lambda_2=3$) on the two graphs, $G_H$ and $G_V$. The results are illustrated in FIG. 4(a) and FIG. 4(b) respectively. Based on the flow results, we derive the residual graphs of $G_H$ and $G_V$ in FIG. 5(a) and FIG. 5(b) respectively. Then we apply shortest path algorithm on the residual graphs to compute the positions of blocks by adding a common source node connecting all other nodes. Thus the results are: $x_1=-5$, $x_2=-1$, $x_3=-2$, $y_1=-5$, $y_2=-4$, and $y_3=-1$. Actually, the results of positions are the node potentials (or called "price"). Many of min-cost algorithms compute both edge flows and node potentials at the same time. Thus in this case, the steps of deriving residual graphs and applying short-path algorithm to compute positions can be skipped.

The placement with minimum wire length is shown in FIG. 6. The overall approach is summarized as follows.

Algorithm Min-wire
1. Construct the network graphs $G_H$ and $G_V$
2. Apply min-cost flow algorithm on GH and GV
3. Derive the residual graphs of GH and GV
4. Apply shortest path algorithm on residual graphs to compute positions of blocks

The complexity of the algorithm, Min-wire, is determined by min-cost flow, since other steps are smaller portions compared to min-cost flow algorithm. Finding a min-cost flow in a network is a classical problem for which several polynomial-time optimal algorithms are available R. K. Ahuja, T. L. Magnanti, and J. B. Orlin. Network Flows, Prentice Hall, 1993. The number of vertices in either $G_H$ or $G_V$ is O(m+n) where m is the number of blocks and n is the number of nets. The number of edges on the subgraph, which contains only the vertices representing blocks and the edges between, is O(m log m) on average[10]. The rest of edges includes the edges introduced by net connections, and the edges incident from/to source/sink. The number of edges incident from source and to sink is O(n). The edges introduced by net connections in the graph are proportional to the number of pins in all nets. Typically in practice, we can assume that the number of pins is a constant on average in a net. Thus the number of edges introduced by net connections is typically O(n). In total, the number of edges is O(m

log m+n). Therefore, if we adopt Orlin's algorithm in R. K. Ahuja, T. L. Magnanti, and J. B. Orlin. Network Flows, Prentice Hall, 1993 to compute the min-cost flow, the time complexity of the algorithm Min-wire is typically O(|E| log |V|(|E|+|V| log |V|))=O((m log m+n) log(m+n) (m log m+n+(m+n)log(m+n))). Practically, we can assume that net weight $\lambda_i$ is O(1) (for example, 1-10), which is true in most applications. We observe that too large weight is unnecessary in actual applications. When net weight is beyond some threshold, it behaves the same in minimizing wire length. Then we can apply successive shortest path augmenting algorithm in computing min-cost flow[3], which is faster in the case. Thus, the complexity is O(nS(m,n)) where S(m,n) denotes the time taken to solve a shortest path problem. If we associate each node with an adjusted weight to eliminate negative cost[3], then S(m,n) is the complexity of Dijkstra algorithm. Finally the complexity is O(n(|V| log |V|+|E|))=O (n(m log m+n+(m+n)log(m+n))).

Discussion of Capabilities

It is useful and important in applications that floorplanning handles constraints. As we can see, the approach is capable of handling various constraints without loss of optimality.

Fixed Frame

In some applications, floorplanning is confined in a given frame, W×H, where W and H represent width and height respectively. In addition, if we still want to keep the minimum area in minimizing wire length, we can solve the problem with a frame of minimum area. When a frame is taken into account, we modify the graphs as follows. To horizontal network graph $G_H$, two nodes, $f_L$ and $f_R$, are added where $f_L$ and $f_R$ represent the left and right boundary of the frame respectively. We have $x_i+w_i\leq f_R$, $x_i\geq f_L$ and $f_R-f_L\leq W$. Accordingly, a set of edges are added, $(f_R, x_i)$ with cost $-w_i$ and unlimited capacity, $(x_i, f_L)$ with cost 0 and unlimited capacity, $i=1,2,\ldots,m$, and $(f_L,f_R)$ with cost W and unlimited capacity. Again, the transitive edges in $(f_R,x_i)$ and $(x_i,f_L)$ can be omitted. Similarly, two nodes, $f_L$ and $f_R$ representing the lower and upper boundary of the frame respectively, and the corresponding edges are added to vertical network graph $G_V$. FIG. 7 illustrates the two modified graphs for the example above. The frame is 6×6 (minimum area). Thus the algorithm Min-wire can still be applied to minimize the total wire length and place blocks in the given frame. Note that the node $f_R$ ($f_R$) will act as the source node in the step of shortest path computation in $G_H$ ($G_V$) to obtain the positions of blocks. FIG. 1(b) actually gives the optimal placement within the frame.

IO Pin

Usually there exist IO nets which connect to pins on the boundary of the frame (IO pins or IO pads). Let us consider a net $N_i$ connects an IO pin at location $(p_x,p_y)$. Thus $L_i\leq p_x\leq R_i$, and $L'_i\leq p_y\leq R'_i$. Assume the frame is W×H. Then equivalently, $L_i-f_R\leq p_x-W\leq R_i-f_R$ and $L'_i-f_R\leq p_y-H\leq R'_i-f_R$. As a result, we add two edges, $(f_R,L_i)$ (with cost $p_x-W$ and unlimited capacity) and $(R_i,f_R)$ (with cost $W-p_x$ and unlimited capacity), to graph $G_H$, and add two edges, $(f_R,L'_i)$ (with cost $p_y-H$ and unlimited capacity), and $(R'_i, f_R)$(with cost $H-p_y$ and unlimited capacity), to graph $G_V$. Thus the algorithm Min-wire can be applied. In this way, fixed pin can be handled where the pin location may not be on the boundary of the frame.

Preplaced and Boundary Blocks

In the situation where some blocks are to be placed at fixed location or on the boundary of the frame, the algorithm

can still apply by adding additional edges to graphs. For example, a block $b_i$ is placed at a location $(lx,ly)$, i.e., $x_i=l_x$ and $y_i=l_y$. Thus $x_r-f_x=l_x-W$ and $yi-f_B=ly-H$. Equivalently, $x_r-f_{li}\leq l_x-W$, $x_r-f_R\geq l_x-W$, $y_1-f_B\leq l_y-H$, and $y_r-f_H\geq l_y-H$. These are transformed to edges $(f_R,x_i)$ and $(x_i,f_R)$ on graph $G_H$ and edges $(f_B, y_i$ and $(y_i, f_B)$ on graph $G_V$. Boundary blocks can be handled similarly in the sense that boundary blocks fix locations in x or y coordinate.

### Range Placement

Range constraint specifies that a block is to be placed within a given range. Pre-placed constraint is a special case of range constraint. Similarly, we can add additional edges to graph $G_H$ and $G_V$ to enforce the computation of position in algorithm Min-wire such that the block is placed within the range.

### Alignment and Abutment

Alignment constraint specifies several blocks to be aligned in a row within a range. It can be transformed to a set of difference constraints that keep the relative positions between them. Thus we can add additional edges to the graphs accordingly. Abutment is a special case of alignment.

### Rectilinear Block

Rectilinear block is partitioned into a set of rectangular subblocks. Then a set of constraints is used to keep the relative positions, which can be transformed to the additional edges in the graphs accordingly.

### Cluster Placement

It is useful in applications that several blocks are placed close to each other (cluster placement). In other words, the distance between any two of the blocks should not be too far away. This can be written as a set of constraints that specify the distance bound between any two of the blocks. Thus we can solve the problem by adding the corresponding edges to the graphs.

### Bounded Net Delay

The approach is to minimize the total wire length, which cannot guarantee bounded delay for critical nets. To address bounded net delay, we use a linear function in terms of distance to estimate delay. Although interconnect delay is quadratic in terms of wire length, with appropriate buffer insertions the actual delay is close to linear in terms of source-sink distance. In this way we convert bounded net delay into bounded net wire length. Thus as in X. Tang and D. F. Wong, "Floorplanning with alignment and performance constraints", DAC-02, pp. 848-853, 2002, we impose constraints on the bounding box of the net, which results in the additional edges in the graphs accordingly.

### Composite Cost Function

We have discussed fixed-frame constraint that blocks are con-fined within a given frame. Actually, the method is an exact algorithm to optimize the composite cost function of area and wire length:

$$\text{Min}\left\{\alpha(W+H)+\sum_{i=1}^{k}\lambda_i W_i\right\}$$

Note that existing methods can only minimize area, and use compacted blocks' locations to compute the cost of wire length. To optimize the composite cost, we can modify the graphs, $G_H$ and $G_V$, as follows.

It is similar to the modification that handles fixed-frame constraint, except that there is no edge $(f_L,f_R)$ on graph $G_H$ and no edge $(f_L,f_R)$ on graph $G_V$. Instead, we add edges, $(s,f_R)$ with cost 0 and capacity $\alpha$ and $(f_L,t)$ with cost 0 and capacity $\alpha$, to graph $G_H$, and we add edges, $(s, f_B)$ with cost 0 and capacity $\alpha$ and $(f_L, t)$ with cost 0 and capacity $\alpha$ to graph $G_V$. FIG. 8 illustrates the two modified graphs for the example above to optimize the composite cost function, where $\alpha=3$. Thus the min-cost flow based algorithm can be used to optimally minimize the composite cost. It should be noted that the amount of flow is $\alpha+\sum_{i=1}^{k}\lambda_i$ in the case. We have the following necessary and sufficient condition with respect to all these constraints.

Theorem 2. There exists a feasible placement that satisfies all these constraints if and only if there is no negative cycle in graphs $G_H$ and $G_V$.

When a graph has a negative cycle with unlimited capacity, there does not exist min-cost flow. As we can see, in the graph $G_H$ and $G_V$, the edges except the edges incident from source node or to sink node have unlimited capacity, and the edges incident from source node or to sink node cannot be part of any cycle. Thus any negative cycle will have unlimited capacity. If there is no negative cycle, then the algorithm Min-wire can be used to compute a placement that satisfies all constraints and has the minimum wire length.

Although the condition is similar to that described in "Arbitrary Convex and Concave Rectilinear Block Packing Using Sequence Pair," by K. Fujiyoshi and H. Murata, ISPD-99, pp. 103-100, 1999 (Fujiyoshi, et al.), there exist important differences. (i) The graphs are different. The graph in Fujiyoshi, et al. contains only nodes representing blocks/subblocks. (ii) The approach in Fujiyoshi, et al. operating on its graph thus does area packing only, while our approach can minimize both area and wire length. (iii) Longest path algorithm is used in Fujiyoshi, et al., while longest/shortest path cannot solve our problem and instead main part of our algorithm is min-cost flow.

### Applied to Block Placement

Although we take input of sequence pair in the problem definition, the approach can be applied to any floorplan/block placement. Given a floorplan/block placement, we can first extract the topological relation for any pair of blocks and describe as "left of"/"below". For the pair with diagonal relation, we can choose one of "left of"/"below" based on which of the two distances in x/y dimension is longer. Then we can construct the constraint graphs and network graphs. Thereafter, we can apply the approach to minimize wire length.

For the floorplan specified by representation other than sequence pair (such as slicing, BSG, TCG, CBL, Q-sequence, twin binary tree and twin binary sequence), we can also construct constraint graphs, which are equivalent to the topology specified by the representation. Thus the approach can still be applied. Note that the approach does not change the topology. The topology information in O-tree and B*-tree is incomplete (only x-dimension relation is specified and floorplan is obtained by packing). However, we can derive block placement from O-tree and B*-tree and then build constraint graphs from the placement. We summarize the result as follows.

Theorem 3. The algorithm, Min-wire, is optimal in minimizing total wire length for a given floorplan topology. The topology can be extracted from a floorplan/block placement, or specified by any floorplan representation.

## 11

Experimental Results

We have implemented the algorithm. Our program can also read an existing floorplan and redistribute white space to optimize wire length. Assuming that $\lambda_i=O(1)$, we use successive shortest path augmenting algorithm in min-cost flow computation.

We have tested the program as a post-floorplanning step with two floorplanner, FAST-SP and Parquet. The test problems are derived from MCNC benchmarks for block placement. We first run FAST-SP or Parquet to obtain a floorplan with option of "minimize wire length". Note that both FAST-SP and Parquet compact blocks to the left and bottom. Then the algorithm Min-wire is applied to further optimize wire length. For all tests, we use the center of block as pin's location, and impose a fixed frame constraint. The locations of IO pins (IO pads) are resized proportionally to the frame boundaries, Table 1 below lists the experimental results for minimizing wire length, where all blocks are hard blocks.

## 12

general purpose computer system with a computer program that, when loaded and executed, carries out the respective methods described herein. Alternatively, a specific use computer, containing specialized hardware for carrying out one or more of the functional tasks of the invention, could be utilized.

The present invention can also be embodied in a computer program product, which comprises all the respective features enabling the implementation of the methods described herein, and which—when loaded in a computer system—is able to carry out these methods. Computer program, software program, program, or software, in the present context mean any expression, in any language, code or notation, of a set of instructions intended to cause a system having an information processing capability to perform a particular function either directly or after either or both of the following: (a) conversion to another language, code or notation; and/or (b) reproduction in a different material form.

### TABLE 1

| circuit | block | net | FAST-SP wire(mm) | | | | Parquet wire(mm) | | | |
|---|---|---|---|---|---|---|---|---|---|---|
| | | | original | after | improve | time(s) | original | after | improve | time(s) |
| apte | 9 | 97 | 426.7 | 418.9 | 1.8% | 0.02 | 476.3 | 458.0 | 3.8% | 0.03 |
| xerox | 10 | 203 | 486.1 | 462.8 | 4.8% | 0.07 | 581.6 | 550.6 | 5.3% | 0.06 |
| hp | 11 | 83 | 170.0 | 161.5 | 5.0% | 0.02 | 161.1 | 152.4 | 5.4% | 0.02 |
| ami33 | 33 | 123 | 60.0 | 58.0 | 3.3% | 0.03 | 77.2 | 74.1 | 4.0% | 0.03 |
| ami49 | 49 | 408 | 790.1 | 760.2 | 3.8% | 0.38 | 857.8 | 818.9 | 4.5% | 0.36 |

Results of improving wire length in post-floorplanning of FAST-SP and Parquet.

It should be noted that our program does not change floorplan topology and area. Thus area is omitted from the table. The experiments were carried out on a laptop of Pentium 4 Mobile(2.4 Ghz). As we can see, the algorithm is very efficient in that it takes less than 0.4 seconds for all of the benchmarks. It is also very effective in that it can further improve 4.2% of wire length on average even on very compact floorplans. As illustrations, FIGS. 9 and 10 display the placement results of original and after optimization for ami33 and ami49 in FAST-SP respectively.

The invention provides a novel method to distribute white space in floorplanning. The method optimally distributes white space among blocks and guarantees to obtain the minimum total wire length for a given floorplan topology. It is also an exact algorithm to optimize the composite cost function of area and wire length: min $\{\alpha(W+H)+\Sigma_{i=1}^n \lambda_i W_i\}$. We have also shown that the method can handle various constraints such as fixed-frame, IO pins, pre-placed blocks, boundary blocks, range placement, alignment and abutment, rectilinear blocks, cluster placement, and bounded net delay, without loss of optimality. Experimental results show it is very efficient and effective. Thus it provides an ideal way to refine floorplanning (post-floorplanning). The future work is to extend the method to consider routing congestion and buffer insertion in floorplanning and to apply it in mixed-cell placement.

As will be understood by those of ordinary skill in the art, the present invention can be realized in hardware, software, or a combination of hardware and software. Any kind of computer/server system(s)—or other apparatus adapted for carrying out the methods described herein—is suited. A typical combination of hardware and software could be a

While it is apparent that the invention herein disclosed is well calculated to fulfill the objects stated above, it will be appreciated that numerous modifications and embodiments may be devised by those skilled in the art and it is intended that the appended claims cover all such modifications and embodiments as fall within the true spirit and scope of the present invention.

What is claimed is:

1. A method of redistributing white space within an integrated circuit floorplan to realize an efficiently arranged integrated circuit, comprising the steps of:

providing the integrated circuit floorplan within which are located a plurality of circuit blocks to be efficiently arranged on the integrated circuit;

determining where to place the circuit blocks on the integrated circuit using a min-cost flow based approach such that white space is minimized in the floorplan, said step of determining further comprising constructing a pair of network graphs $G_H$ and $G_V$, applying the min-cost flow algorithm on $G_H$ and $G_V$, deriving residual graphs of $G_H$ and $G_V$ and applying a shortest path algorithm on the residual graphs to compute the positions of the circuit blocks within the integrated circuit floorplan; and

redistributing the circuit blocks within the integrated circuit floorplan to obtain a minimal total wire length and optimized circuit block arrangement for the integrated circuit based on said determining.

2. The method according to claim 1, wherein the step of determining includes first transforming the integrated circuit floorplan to a floorplan form that is efficient for determining using a linear programming procedure.

3. The method according to claim 1, wherein said minimal total wire length is the minimum total wire length in polynomial time for the integrated circuit floorplan topology.

4. The method according to claim 1, wherein:

the redistributing step redistributes the circuit blocks within the integrated circuit floorplan subject to a given set of constraints; and

the given set of constraints include one or more of the following: fixed area, IO pins, pre-placed blocks, boundary blocks, range placement, alignment and abutment, rectilinear blocks, cluster placement, and bounded net delay.

5. The method according to claim 1, wherein the floorplan is represented as a sequence pair comprising a pair of sequences of n elements representing n blocks that specify the geometric relations between each pair of n blocks.

6. The method according to claim 5, wherein the redistributing step includes first deriving a constraint graph from the representation of the integrated circuit floorplan prior to die redistributing to obtain the minimal total wire length and optimized circuit block arrangement.

7. A system for redistributing white space on an integrated circuit floorplan, comprising means for generating the integrated circuit floorplan to include a plurality of circuit blocks to be efficiently arranged on an integrated circuit;

means for determining where to rearrange and place the circuit blocks within the integrated circuit floorplan using a min-cost flow based approach, such that white space is minimized, said means for determining further comprising:

means for constructing a pair of network graphs $G_H$ and $G_V$;

means for applying the min-cost flow algorithm on $G_H$ and $G_V$;

means for deriving residual graphs of $G_H$ and $G_V$; and

means for applying a shortest path algorithm on the residual graphs to compute the positions of the circuit blocks; and

means for redistributing the circuit blocks in the floorplan to generate a redistributed floorplan in accordance with determined min-cost flow data such that the circuit blocks are placed on the integrated circuit in an arrangement to obtain a minimum wire length and optimized circuit block arrangement for the integrated circuit.

8. The system according to claim 7, wherein The means for determining implements a linear programming procedure before using the min-cost flow based approach.

9. The system according to claim 8, wherein:

the means for redistributing operates subject to a given set of constraints which include one or more of The following: fixed area, IO pins, pre-placed blocks, boundary blocks, range placement, alignment and abutment, rectilinear blocks, cluster placement, and bounded net delay.

10. The system according to claim 7, wherein

the means for generating provides the integrated circuit floorplan as a sequence pair comprising a pair of sequences of n elements representing n circuit blocks and specifying the geometric relations between each pair of The n circuit blocks.

11. A program storage device readable by machine, tangibly embodying a program of instructions executable by the machine to perform method steps for redistributing white space on an integrated circuit, The method steps comprising:

providing the integrated circuit floorplan within which are located a plurality of circuit blocks to be efficiently arranged on The integrated circuit;

determining where to place the circuit blocks on the integrated circuit using a min-cost flow based approach such That white space is minimized in The floorplan by;

constructing a air of network graphs $G_H$ and $G_V$;

apppling The min-cost flow algorithm on $G_H$ and $G_V$;

deriving residual graphs of $G_H$ and $G_V$; and

applying a shortest path algorithm on the residual graphs to compute the positions of The circuit blocks within The integrated circuit floorplan; and

redistributing the circuit blocks within the integrated circuit floorplan to obtain a minimal total wire length and optimized circuit block arrangement for the integrated circuit based on said determining.

12. The program storage device according to claim 11, wherein the step of determining includes first transforming the integrated circuit floorplan to a floorplan form that is efficient for determining using a linear programming procedure.

13. The program according to claim 11, wherein:

the redistributing step redistributes the circuit blocks within the integrated circuit floorplan subject to a given set of constraints; and

the given set of constraints include one or more of the following: fixed area, IO pins, pre-placed blocks, boundary blocks, range placement alignment and abutment, rectilinear blocks, cluster placement, and bounded net delay.

14. The program storage device according to claim 11, wherein:

the floorplan is represented as a sequence pair comprising a pair of sequences of n elements representing n circuit blocks and specifying the geometric relations between each pair of the n circuit blocks.

* * * * *

# APPENDIX I

US007301615B2

## (12) United States Patent
### Fukagawa et al.

(10) Patent No.: **US 7,301,615 B2**
(45) Date of Patent: **Nov. 27, 2007**

(54) **OPTICAL APPARATUS, METHOD OF DETERMINING POSITION OF OPTICAL ELEMENT IN OPTICAL SYSTEM, AND DEVICE MANUFACTURING METHOD**

(75) Inventors: **Youzou Fukagawa**, Tochigi-ken (JP); **Toshiyuki Yoshihara**, Tochigi-ken (JP); **Mario Nakamori**, Yokohama (JP), **Yuji Shinano**, Tokyo (JP)

(73) Assignee: **Canon Kabushiki Kaisha**, Tokyo (JP)

(*) Notice: Subject to any disclaimer, the term of this patent is extended or adjusted under 35 U.S.C. 154(b) by 0 days.

(21) Appl. No.: **11/627,125**

(22) Filed: **Jan. 25, 2007**

(65) **Prior Publication Data**

US 2007/0115458 A1    May 24, 2007

**Related U.S. Application Data**

(63) Continuation of application No. 11/080,407, filed on Mar. 16, 2005.

(30) **Foreign Application Priority Data**

Mar. 17, 2004    (JP)    ........................ 2004-077044

(51) **Int. Cl.**
*G01B 9/00*    (2006.01)
(52) **U.S. Cl.** ............................... 356/124; 356/601
(58) **Field of Classification Search** ............... 356/124, 356/399, 400; 359/711, 668, 649, 650, 651, 359/717–718; 355/53, 72–76, 30, 67, 55
See application file for complete search history.

(56) **References Cited**

**U.S. PATENT DOCUMENTS**

6,741,328 B2    5/2004    Yonekawa et al. ............ 355/53

6,924,884 B2    8/2005    Boonman et al. ........... 355/55
2002/0163738 A1    11/2002    Yoshihara ................ 359/711
2005/0030638 A1    2/2005    Yoshihara ................ 359/668

**FOREIGN PATENT DOCUMENTS**

JP    11-176744    7/1999
JP    2002-367886    12/2002

**OTHER PUBLICATIONS**

T. Yoshihara, et al., "Realization of Very-Small Aberration Projection Lenses", Proceedings of SPIE, vol. 4000, pp. 559-566 (2000).

*Primary Examiner*—Gregory J. Toatley, Jr.
*Assistant Examiner*—Tri Ton
(74) *Attorney, Agent, or Firm*—Fitzpatrick, Cella, Harper & Scinto

(57) **ABSTRACT**

An optical apparatus which includes an image forming optical system having a movable optical element, and a driving mechanism configured to move the optical element. The apparatus includes a first block which measures a wavefront aberration of the optical system. A second block obtains a linear evaluation value of an aberration expressed by a linear function of a position of the movable optical element out of aberrations of the optical system, and a quadratic evaluation value of a square of a root mean square of the wavefront aberration measured by the first block expressed by a quadratic function of the position. A third block uses a dummy variable as an upper limit value of the linear evaluation value and obtains a minimum value of the dummy variable by a linear programming. A fourth block determines a position of the optical element to be moved by the driving mechanism.

**12 Claims, 8 Drawing Sheets**

# FIG. 1

# FIG. 2

# F I G. 3

START

MEASURE WAVEFRONT ABERRATION — 101

Zernike COEFFICIENT — 102

CALCULATE ABERRATION AMOUNT — 103

ABERRATION AMOUNTS — 104

NORMALIZE ABERRATION AMOUNT — 105

QUADRATIC EVALUATION VALUE — 107

LINEAR EVALUATION VALUE — 106

LINEAR PROGRAMMING USING DUMMY VARIABLE — 108

MINIMIZE DUMMY VARIABLE t — 109

SET ALLOWABLE ERROR e — 110

RELAXATION AMOUNT d=0 — 111

QUADRATIC PROGRAMMING

ADJUST WEIGHT w OF QUADRATIC EVALUATION VALUE — 113

112

QUADRATIC EVALUATION VALUE < t+d−e? — 116

YES → DECREASE d — 114

NO

INCREASE d — 115

QUADRATIC EVALUATION VALUE > t+d−e? — 117

YES

NO → END

# FIG. 4

START

MEASURE WAVEFRONT ABERRATION ~101

Zernike COEFFICIENT 102

CALCULATE ABERRATION AMOUNT ~103

ABERRATION AMOUNTS 104

NORMALIZE ABERRATION AMOUNT ~105

LINEAR EVALUATION VALUE 106

DUMMY VARIABLE $\delta >$ | Zernike COEFFICIENT | ~116

RMS APPROXIMATE EVALUATION VALUE ~117

LINEAR PROGRAMMING USING DUMMY VARIABLE ~108

MINIMIZE DUMMY VARIABLE t ~109

END

# FIG. 5

# FIG. 6

# F I G.  7

| | | |
|---|---|---|
| DESIGN CIRCUIT ~S1 | | FORM WAFER ~S3 |

↓

FORM MASK ~S2

WAFER PROCESS ~S4

↓

ASSEMBLY ~S5

↓

INSPECTION ~S6

↓

SHIPPING ~S7

# FIG. 8

```
                                    ┌──────────────────────┐
          S11                       │   S15
     ┌─────────────┐                │  ┌──────────────────┐
     │  OXIDATION  │◄───────────────┘  │ RESIST PROCESSING │
     └─────────────┘                   └──────────────────┘
          S12                                  S16
     ┌─────────────┐                   ┌──────────────────┐
     │     CVD     │                   │     EXPOSURE      │
     └─────────────┘                   └──────────────────┘
          S13                                  S17
     ┌─────────────┐                   ┌──────────────────┐
     │FORM ELECTRODE│                  │    DEVELOPING     │
     └─────────────┘                   └──────────────────┘
          S14                                  S18
     ┌─────────────┐                   ┌──────────────────┐
     │ IMPLANT ION │                   │     ETCHING      │
     └─────────────┘                   └──────────────────┘
                                             S19
                                       ┌──────────────────┐
                                       │  REMOVE RESIST   │
                                       └──────────────────┘

                        REPEAT
                    WAFER PROCESS
```

# OPTICAL APPARATUS, METHOD OF DETERMINING POSITION OF OPTICAL ELEMENT IN OPTICAL SYSTEM, AND DEVICE MANUFACTURING METHOD

This application is a continuation application of prior U.S. patent application Ser. No. 11/080,407, filed Mar. 16, 2005.

## FIELD OF THE INVENTION

The present invention relates to a technique for adjusting aberration of an optical system.

## BACKGROUND OF THE INVENTION

As described in "T. Yoshihara et al., "Realization of very-small aberration projection lenses", Proc. SPIE 2000, Vol. 4000-52" and Japanese Patent Laid-Open No. 11-176744, the projection optical system of a semiconductor exposure apparatus is prepared through the first step of measuring optical characteristics, the second step of calculating an adjustment amount for properly correcting various aberrations of the projection optical system on the basis of the measured optical characteristics, and the third step of actually adjusting or processing the projection optical system in accordance with the adjustment amount.

Most of aberrations to be corrected change in proportion to the adjustment amount of each part. In order to minimize the maximum absolute value of each aberration, the adjustment amount of each part is determined by a method to which linear programming is applied (Japanese Patent Laid-Open No. 2002-367886).

However, a change in wavefront aberration which is one of important aberrations cannot be expressed as the linear function of the adjustment amount of each part. The method disclosed in Japanese Patent Laid-Open No. 2002-367886 cannot calculate optimal adjustment amounts for various aberrations including the wavefront aberration.

## SUMMARY OF THE INVENTION

The present invention has been made in consideration of the above drawbacks, and an exemplified object thereof is to provide a novel technique concerning aberration adjustment of an optical system.

According to the first aspect of the present invention, there is provided an optical apparatus including an image forming optical system having a movable optical element, and a driving mechanism which moves the optical element. The apparatus comprises a first block which obtains a linear evaluation value by normalizing, by a first tolerance, an aberration expressed by a linear function of a position of the movable optical element out of aberrations of the optical system, and a quadratic evaluation value by normalizing, by a second tolerance, an aberration expressed by a quadratic function of the position out of the aberrations of the optical system, a second block which obtains a minimum value of a dummy variable by linear programming using an upper limit value of the linear evaluation value as the dummy variable, and a third block which determines a position of the optical element to be moved by the driving mechanism so as to minimize a weighted sum of the quadratic evaluation values with respect to a plurality of image heights by using, as the upper limit value of the linear evaluation value, a value prepared by adding a relaxation amount to the minimum value of the dummy variable that is obtained by the second block. The third block minimizes the weighted sum of the quadratic evaluation values by adjusting the weights assigned to the quadratic evaluation values and the relaxation amount.

According to the second aspect of the present invention, there is provided an optical apparatus including an optical system having a movable optical element, and a driving mechanism which moves the optical element. The apparatus comprises a first block which obtains a linear evaluation value by normalizing, by a tolerance, an aberration expressed by a linear function of a position of the movable optical element out of aberrations of the optical system, a second block which defines, by a first dummy variable, an upper limit of an absolute value of a Zernike coefficient associated with wavefront aberration of the optical system, and obtains a linear evaluation value that approximates root mean square of the wavefront aberration by a linear function of the first dummy variable, and a third block which defines, by a second dummy variable, an upper limit of the linear evaluation values obtained by the first block and the second block, and determines a position of the optical element to be moved by the driving mechanism so as to minimize the second dummy variable by linear programming.

According to the third aspect of the present invention, there is provided a method of determining a position of an optical element in an optical apparatus which includes an image forming optical system having the optical element, and a driving mechanism which moves the optical element. The method comprises a first step of obtaining a linear evaluation value by normalizing, by a first tolerance, an aberration expressed by a linear function of a position of the optical element out of aberrations of the optical system, and a quadratic evaluation value by normalizing, by a second tolerance, an aberration expressed by a quadratic function of the position out of the aberrations of the optical system, a second step of obtaining a minimum value of a dummy variable by linear programming using an upper limit value of the linear evaluation values as the dummy variable, and a third step of determining a position of the optical element to be moved by the driving mechanism so as to minimize a weighted sum of the quadratic evaluation values with respect to a plurality of image heights by using, as the upper limit value of the linear evaluation value, a value prepared by adding a relaxation amount to the minimum value of the dummy variable that is obtained in the second step. In the third step, the weighted sum of the quadratic evaluation values is minimized by adjusting the weights assigned to the quadratic evaluation values and the relaxation amount.

According to the fourth aspect of the present invention, there is provided a method of determining a position of an optical element in an optical apparatus which includes an optical system having the optical element, and a driving mechanism which moves the optical element. The method comprises a first step of obtaining a linear evaluation value by normalizing, by a tolerance, an aberration expressed by a linear function of a position of the optical element out of aberrations of the optical system, a second step of defining, by a first dummy variable, an upper limit of an absolute value of a Zernike coefficient associated with wavefront aberration of the optical system, and obtaining a linear evaluation value which approximates root mean square of the wavefront aberration by a linear function of the first dummy variable, and a third step of defining, by a second dummy variable, an upper limit of the linear evaluation values obtained in the first step and the second step, and determining a position of the optical element to be moved by the driving mechanism so as to minimize the second dummy variable by linear programming.

3

According to the preferred embodiment of the present invention, the apparatus can be an exposure apparatus which transfers a pattern to a substrate using the optical system.

According to the fifth aspect of the present invention, there is provided a device manufacturing method comprising steps of transferring a pattern to a substrate using the above exposure apparatus, and developing the substrate to which the pattern has been transferred.

According to the sixth aspect of the present invention, there is provided a device manufacturing method comprising steps of moving an optical element in an optical system of an exposure apparatus to a position as determined in accordance with the above method, transferring a pattern to a substrate using the exposure apparatus of which the optical element is moved in the moving step, and developing the substrate to which the pattern has been transferred.

According to the present invention, a novel technique concerning aberration adjustment of an optical system is provided.

Other features and advantages of the present invention will be apparent from the following description taken in conjunction with the accompanying drawings, in which like reference characters designate the same or similar parts throughout the figures thereof.

BRIEF DESCRIPTION OF THE DRAWINGS

The accompanying drawings, which are incorporated in and constitute a part of the specification, illustrate embodiments of the invention and, together with the description, serve to explain the principles of the invention.

FIG. 1 is a view schematically showing an arrangement example of an exposure apparatus according to a preferred embodiment of the present invention;

FIG. 2 is a view schematically showing the movable directions of a reticle and optical element whose positions are adjustable;

FIG. 3 is a flowchart for explaining automatic adjustment (configuration or procedures therefor) of a projection optical system according to the first embodiment;

FIG. 4 is a flowchart for explaining automatic adjustment (configuration or procedures therefor) of a projection optical system according to the second embodiment;

FIG. 5 is a graph providing an example in which each aberration is shown for each image height;

FIG. 6 is a graph providing an example in which an evaluation value obtained by normalizing each aberration is shown for each image height;

FIG. 7 is a flowchart showing the flow of the whole manufacturing process of a semiconductor device; and

FIG. 8 is a flowchart showing the detailed flow of a wafer process.

DETAILED DESCRIPTION OF THE
PREFERRED EMBODIMENTS

Preferred embodiments of the present invention will be described below with reference to the accompanying drawings.

FIG. 1 is a view schematically showing an arrangement example of an exposure apparatus according to the preferred embodiments of the present invention. An exposure apparatus 100 comprises a reticle stage 10 which holds a reticle 1, a wafer stage which holds a wafer 2, a projection optical system 3 which projects the pattern of the reticle 1 onto the wafer 2, laser interferometers 5, 6, and 7 which measure the position of a wafer stage 4, and a control unit 11 including

4

an adjusting unit which adjusts the characteristics of the optical system including the projection optical system 3.

The projection optical system 3 is made up of a plurality of optical elements. Some of the optical elements are arranged so that their postures can be adjusted by the adjusting mechanism. A reticle stage 10 is so arranged as to be able to adjust the posture of the reticle 1.

FIG. 2 is a view schematically showing the movable directions of the reticle 1 and optical elements 8 and 9 whose positions are adjustable. The optical elements 8 and 9 are components of the projection optical system 3. The position of the reticle 1 is adjusted by the reticle stage (reticle driving mechanism) 10 in a direction with six degrees of freedom under the control of the control unit 11. The positions of the optical elements 8 and 9 are respectively adjusted by driving mechanisms 8a and 9a in a direction with six degrees of freedom under the control of the control unit 11.

In adjustment of the projection optical system 3 under the control of the control unit 11, the wavefront aberration (optical characteristic) of the projection optical system 3 is measured by PMI (Phase Measurement Interferometer) or the like. The wavefront aberration is expanded by the Zernike function to obtain a Zernike coefficient for each image height. By this method, the following embodiments can attain a Zernike coefficient for each image height.

Two methods will be explained as a method of adjusting aberration such as the wavefront aberration of the projection optical system 3.

FIG. 3 is a flowchart for explaining automatic adjustment of a projection optical system 3 according to the first embodiment. Automatic adjustment is controlled by a control unit 11. A block 101 executes a process of measuring the wavefront aberration of the projection optical system 3. A block 102 expands the wavefront aberration by J Zernike orthogonal functions for image heights at H points to obtain Zernike coefficients $Z_{jh}$.

A block 103 calculates aberration amounts from the optical design values of the projection optical system 3, and obtains main aberration amounts of N types (e.g., coma, curvature of field, astigmatism, distortion, and telecentricity) for evaluating the projection optical system 3 for image heights at H points. A block 104 accumulates pieces of information obtained by the blocks 101 to 103. As shown in FIG. 5, the aberration amount can be given as a wavelength value.

A block 105 divides the aberration amounts by an allowance and normalizes them in order to optimize the aberrations of the projection optical system 3 with good balance in accordance with K adjustment amounts. The normalized aberration amount will be called an evaluation value.

Suffixes h, i, j, and k to be used below are defined by formulas (1) to (4):

$$h = 1, \ldots, H \qquad (1)$$

$$i = 1, \ldots, N \qquad (2)$$

$$j = 1, \ldots, J \qquad (3)$$

$$k = 1, \ldots, K \qquad (4)$$

A block 106 obtains, out of the evaluation values obtained by the block 105, an evaluation value (to be referred to as a linear evaluation value) which is expressed by the linear function of the Zernike coefficient. A block 107 obtains, out of the evaluation values obtained by the block 105, the square (to be referred to as a quadratic evaluation value) of

# EP 2 071 473 A2

## 5

RMS (Root Mean Square) of the wavefront aberration, which is expressed by the quadratic function.

According to this procedure, each aberration becomes permissible for an evaluation value of 1 or less and impermissible for an evaluation value of more than 1. Thus, a plurality of aberrations can be minimized with good balance.

FIG. 6 is a graph showing the evaluation values of aberration (1) and aberration (2) shown in FIG. 5. As given by formula (5), a linear evaluation value $y_{ih}$ can be expressed by the linear sum of Zernike coefficients. When the adjustment amounts of respective components (e.g., optical elements 8 and 9 and a reticle stage 10) are changed, a Zernike coefficient $z_{jh}$ for each image height can also be expressed by the linear sum of adjustment amounts $x_k$ of these components, as given by formula (6).

$$y_{ih} = \frac{1}{Y_i}\sum_{j=1}^{J} a_{ij}z_{jh} \qquad (5)$$

$$z_{jh} = z_{0jh} + \sum_{k=1}^{J} b_{jhk}x_k \qquad (6)$$

Formulas (5) and (6) derive formula (7):

$$y_{ih} = y_{0ih} + \sum_{k=1}^{J} c_{ihk}x_k \qquad (7)$$

for

$$y_{0ih} = \frac{1}{Y_i}\sum_{j=1}^{J} a_{ij}z_{0jh} \qquad (8)$$

$$c_{ihk} = \frac{1}{Y_i}\sum_{j=1}^{J} a_{ij}b_{jhk} \qquad (9)$$

where

$Y_i$: the allowance of the ith aberration

$Y_{ih}$: the evaluation value of the ith aberration at an image height h

$y_{0ih}$: the initial value of the evaluation value of the ith aberration at the image height h

$z_{jh}$: the jth Zernike coefficient at the image height h

$z_{0jh}$: the initial value of the jth Zernike coefficient at the image height h

$x_k$: the kth adjustment amount

$a_{ij}$: the degree of influence of the Zernike coefficient $z_{jh}$ on the ith aberration

$b_{jhk}$: the degree of influence of the adjustment amount $x_k$ of each part on the Zernike coefficient $z_{jh}$

$c_{ihk}$: the degree of influence of the adjustment amount $x_k$ of each part on the evaluation value $y_{ih}$ of the image performance

A block 108 minimizes only the linear evaluation value by applying to it linear programming which has been proposed by Japanese Patent Laid-Open No. 2002-367886 and uses a dummy variable. A block 109 minimizes a dummy variable t serving as the upper limit value of the linear evaluation value.

More specifically, the block 109 uses linear programming given by formulas (10) to (13) to calculate the minimized dummy variable t, and the adjustment amounts $x_k$ of respec-

## 6

tive components (e.g., the optical elements 8 and 9 and the reticle stage 10) that are used to optimize aberrations with good balance.

Minimization: $f_j = t$ $\qquad$ (10)

Constraint conditions:

$$y_{0ih} + \sum_{k=1}^{K} c_{ihk}x_k \leq t \qquad (11)$$

$$-y_{0ih} - \sum_{k=1}^{K} c_{ihk}x_k \leq t \qquad (12)$$

$$t \geq 0 \qquad (13)$$

A quadratic evaluation value $rms^2$ is expressed by the sum of the squares of wavefront aberrations RMS with a weight $w_h$ for respective image heights, as given by formula (14):

$$rms^2 = \frac{1}{RMS^2}\sum_{h=1}^{H} w_h \sum_{j=1}^{J} \alpha_{jh}z_{jh}^2 \qquad (14)$$

$$= \frac{1}{RMS^2}\sum_{h=1}^{H} w_h \sum_{j=1}^{J} \alpha_{jh}\left(z_{0jh} + \sum_{k=1}^{K} b_{jhk}x_k\right)^2$$

where

$RMS^2$: the allowance of the square of the wavefront aberration RMS

$rms^2$: the quadratic evaluation value of the wavefront aberration RMS

$\alpha_{jh}$: the degree of influence of the Zernike coefficient $z_{jh}$ on $rms^2$ at the image height h

The quadratic evaluation value is not always smaller than the dummy variable t, and thus aberrations including the quadratic evaluation value must be minimized separately.

A block 110 sets the value of an allowable error e in order to determine whether the linear evaluation value and quadratic evaluation value have been minimized with good balance. The allowable error e is the allowance of the difference between the linear evaluation value and the quadratic evaluation value.

A block 111 zeros the initial value of a relaxation amount d. A block 112 executes quadratic programming using the maximum value of the linear evaluation value as the sum of the dummy variable t and relaxation amount d. At this time, an objective function to be minimized is a quadratic evaluation value.

Quadratic programming having the constraint conditional expressions of formulas (16) to (18) is applied using the quadratic evaluation value given by formula (15) as an objective function and the sum t+d of the minimized dummy variable t and the relaxation amount d as a threshold. A block 113 compares quadratic evaluation values (wavefront aberrations RMS for image heights at a plurality of points) which are obtained by quadratic programming for the adjustment amounts $x_k$ of respective components, and adjusts the weight $w_k$ to balance the wavefront aberrations RMS of the image heights.

If the value of the minimized quadratic evaluation value is larger than t+d+e, the quadratic evaluation value is larger than the maximum value of the linear evaluation value,

7

Thus, a block 117 causes a block 115 to increase the relaxation amount d and the block 112 to repeat execution of quadratic programming. To the contrary, if the value of the minimized quadratic evaluation value is smaller than r+d−e, the quadratic evaluation value is much smaller than the maximum value of the linear evaluation value. A block 116 causes a block 114 to decrease the relaxation amount d and the block 112 to repeat execution of quadratic programming.

At this time, the values $w_h$ and d are given proper positive real numbers on the basis of a search algorithm such as a hill-climbing method or genetic algorithm.

If the difference between the linear evaluation value and the quadratic evaluation value becomes smaller than e, calculation ends, and respective components (e.g., the optical elements 8 and 9 and the reticle stage 10) are adjusted in accordance with the obtained solution.

Minimization:

$$f_2 = \frac{1}{RMS^2} \sum_{h=1}^{H} w_h \sum_{j=1}^{J} \alpha_{jh} \left( z_{0jh} + \sum_{k=1}^{K} b_{jhk} x_k \right)^2 \qquad (15)$$

Constraint conditions:

$$y_{0ih} + \sum_{k=1}^{K} c_{ihk} x_k \leq r + d \qquad (16)$$

$$-y_{0ih} - \sum_{k=1}^{K} c_{ihk} x_k \leq r + d \qquad (17)$$

$$x_k \geq 0 \qquad (18)$$

where
W$_h$: weight
d: relaxation amount

When H=1, that is, only one wavefront aberration RMS is to be minimized, only the relaxation amount d is searched for, and this search is easy. To the contrary, it is highly likely that search will take a long time for a large H.

After the solutions of the adjustment amounts $x_k$ of respective components (optical elements 8 and 9 and reticle stage 10) are obtained, these components are driven in accordance with the solutions to adjust the projection optical system 3.

FIG. 4 is a flowchart for explaining automatic adjustment of a projection optical system 3 according to the second embodiment. Automatic adjustment is controlled by a control unit 11. A block 101 executes a process of measuring the wavefront aberration of the projection optical system 3. A block 102 expands the wavefront aberration by J Zernike orthogonal functions for image heights at H points to obtain Zernike coefficients $Z_{jh}$.

A block 103 calculates aberration amounts from the optical design values of the projection optical system 3, and obtains main aberration amounts of N types (e.g., coma, curvature of field, astigmatism, distortion, and telecentricity) for evaluating the projection optical system 3 for image heights at H points. A block 104 accumulates pieces of information obtained by the blocks 101 to 103.

A block 105 divides the aberration amounts by an allowance, normalizes them, and obtains normalized evaluation values (normalized aberration amounts) in order to optimize the aberrations of the projection optical system 3 with good

8

balance in accordance with K adjustment amounts. A block 106 obtains a linear evaluation value from the evaluation values obtained by the block 105. The above configuration and procedures are the same as those in the first embodiment.

In the second embodiment, a block 116 defines the upper limit of the absolute value of the Zernike coefficient at the image height h by a dummy variable $s_{jh}$, as given by formula (19):

$$|z_{jh}| \leq s_{jh} \qquad (19)$$

A block 117 expresses, by the linear function of the dummy variable $s_{jh}$, the upper limit of an approximate value calculated by dividing the wavefront aberration RMS by its allowance, as given by formula (20). The resultant value is defined as an RMS approximate evaluation value.

$$\frac{1}{RMS} \sqrt{\sum_{j=1}^{J} \alpha_{jh} z_{jh}^2} \approx \frac{1}{RMS} \sum_{j=1}^{J} \sqrt{\alpha_{jh}} |z_{jh}| \qquad (20)$$

$$\leq \frac{1}{RMS} \sum_{j=1}^{J} \sqrt{\alpha_{jh}} \, s_{jh}$$

$$\alpha_{jh} \geq 0, s_{jh} \geq 0$$

The RMS approximate evaluation value is the linear function of the dummy variable $s_{jh}$, and can be processed similarly to other linear evaluation values (their upper limit values are defined by the dummy variable t). Hence, all aberrations including the wavefront aberration RMS can be optimized with good balance by only linear programming which defines, by the dummy variable t, the upper limit values of all linear evaluation values including the linear function (linear evaluation value) of the dummy variable Sih, as given by formulas (21) to (28).

A block 108 executes linear programming using the dummy variable t in accordance with formulas (21) to (28):

Minimization: $f_1 = t$         (21)

Constraint conditions:

$$x_k \geq 0 \qquad (22)$$

$$s_{jh} \geq 0 \qquad (23)$$

$$z_{jh} \leq s_{jh} \qquad (24)$$

$$-z_{jh} \leq s_{jh} \qquad (25)$$

$$y_{0ih} + \sum_{k=1}^{K} c_{ihk} x_k \leq t \qquad (26)$$

$$-y_{0ih} - \sum_{k=1}^{K} c_{ihk} x_k \leq t \qquad (27)$$

$$\frac{1}{RMS} \sum_{j=1}^{J} \sqrt{\alpha_{jh}} \, s_{jh} \leq t \qquad (28)$$

After the solutions of the adjustment amounts $x_k$ of respective components (optical elements 8 and 9 and a reticle stage 10) are obtained, these components are driven in accordance with the solutions to adjust the projection optical system 3.

## 9

Linear programming using a dummy variable will be explained. Formula (29) shows the relationship between an error $c_i$ before adjustment, an error $c_i'$ after adjustment, an adjustment sensitivity $a_{ij}$, and an adjustment amount $x_j$.

$$c_i' = c_i - \sum_{j=1}^{n} a_{ij} x_j, \quad (i = 1, \ldots, n) \tag{29}$$

A linear programming problem is expressed by the objective function of formula (30) and the conditional expression of formula (31):

$$z = \sum_{j=1}^{n} c_j x_j \tag{30}$$

$$\sum_{j=1}^{n} a_{ij} x_j \le c_i, \quad (i = 1, \ldots, n) \tag{31}$$

Of these formulas, the objective function is defined by the linear expression of a controlled variable, and is to be minimized or maximized. The conditional expression is an equality or inequality expressed by the linear function of a controlled variable. The solvers of some linear programming problems may process only nonnegative controlled variables. However, nonnegative conditions do not inhibit application of linear programming because variable replacement given by formula (32) makes it possible to express an actual controlled variable $x_j$ which does not satisfy a nonnegative condition by two variables $x_j'$ and $x_j''$ which satisfy the nonnegative condition.

$$x_j = x_j' - x_j'' \tag{32}$$

In practice, it may be required that a controlled variable falls within a predetermined range. This condition can be expressed by the conditional expression formula (31).

Linear programming using a dummy variable minimizes the maximum absolute value of $c_i'$, $(i=1, \ldots, n)$. For this purpose, the dummy variable $t$ which satisfies $|c_i'| \le t$, $(i = 1, \ldots, n)$ is introduced, and a linear programming problem which minimizes $t$ is formulated. That is, an objective function which minimizes the controlled variable $t$ is set, as given by formula (33). A linear programming problem which sets the conditional expressions of formulas (34) and (35) is so defined as to adjust the dummy variable $t$ to the limit value of an error and that of a value prepared by inverting the sign of the error. By solving this problem, the maximum absolute value of a residual after adjustment can be minimized.

$$z = t \tag{33}$$

$$c_i - \sum_{j=1}^{n} a_{ij} x_j \le t, \quad (i = 1, \ldots, n) \tag{34}$$

$$-c_i + \sum_{j=1}^{n} a_{ij} x_j \le t, \quad (i = 1, \ldots, n) \tag{35}$$

Minimization of the maximum absolute value by linear programming using a dummy variable includes the first to fifth steps. In the first step, the dummy variable $t$ which makes it a condition that the dummy variable $t$ is equal to or

## 10

larger than an evaluation term (absolute value of an error after adjustment at each point: $|c_i'|$) is defined by an inequality. In the second step, the range of a controlled variable is expressed by an inequality (see formulas (30) and (31)). In the third step, the variable is so converted as to satisfy a nonnegative condition (see formula (32)). In the fourth step, a linear programming model is formulated. In the fifth step, the optimum solution of the controlled variable is calculated on the basis of linear programming (see formulas (33) to (35)).

Since a formulated problem always has a solution, the above calculation method can provide the controlled variable $x_j$ which strictly minimizes the maximum absolute value of an error. In an exposure apparatus according to the embodiments, the number of controlled variables is not large, and even a general linear programming problem solver can finish calculation in a short time. This method is, therefore, effective for real-time adjustment because a high throughput can be stably maintained.

A semiconductor device manufacturing process using the above exposure apparatus will be explained. FIG. 7 is a flowchart showing the flow of the whole manufacturing process of a semiconductor device. In step 1 (circuit design), the circuit of a semiconductor device is designed. In step 2 (mask formation), a mask is formed on the basis of the designed circuit pattern. In step 3 (wafer formation), a wafer is formed using a material such as silicon. In step 4 (wafer process) called a pre-process, an actual circuit is formed on the wafer by lithography using the mask and wafer. Step 5 (assembly) called a post-process is the step of forming a semiconductor chip by using the wafer formed in step 4, and includes an assembly process (dicing and bonding) and packaging process (chip encapsulation). In step 6 (inspection), the semiconductor device manufactured in step 5 undergoes inspections such as an operation confirmation test and durability test. After these steps, the semiconductor device is completed and shipped (step 7).

FIG. 8 is a flowchart showing the detailed flow of the wafer process. In step 11 (oxidation), the wafer surface is oxidized. In step 12 (CVD), an insulating film is formed on the wafer surface. In step 13 (electrode formation), an electrode is formed on the wafer by vapor deposition. In step 14 (ion implantation), ions are implanted in the wafer. In step 15 (resist processing), a photosensitive agent is applied to the wafer. In step 16 (exposure), a circuit pattern is transferred onto the photosensitive agent on the wafer by the above-mentioned exposure apparatus. In step 17 (developing), the exposed wafer is developed. In step 18 (etching), the resist is etched except the developed resist image. In step 19 (resist removal), an unnecessary resist after etching is removed. These steps are repeated to form multiple circuit patterns on the wafer.

As many apparently widely different embodiments of the present invention can be made without departing from the spirit and scope thereof, it is to be understood that the invention is not limited to the specific embodiments thereof except as defined in the claims.

### CLAIM OF PRIORITY

This application claims priority from Japanese Patent application No. 2004-077044 filed on Mar. 17, 2004, the entire contents of which are hereby incorporated by reference herein.

**11**

The invention claimed is:

1. An optical apparatus which includes an image forming optical system having a movable optical element, and a driving mechanism configured to move said optical element, said apparatus comprising:

a first block which measures a wavefront aberration of the optical system;

a second block which obtains a linear evaluation value by normalizing, by a first tolerance, an aberration expressed by a linear function of a position of said movable optical element out of aberrations of said optical system, and a quadratic evaluation value by normalizing, by a second tolerance, a square of a root mean square of the wavefront aberration measured by said first block expressed by a quadratic function of the position;

a third block which uses a dummy variable as an upper limit value of the linear evaluation value and obtains a minimum value of the dummy variable by a linear programming; and

a fourth block which determines a position of said optical element to be moved by said driving mechanism, by a quadratic programming, so as to minimize the quadratic evaluation value under a constraint condition that the upper limit value of the linear evaluation value is a value prepared by adding a relaxation amount to the minimum value of the dummy variable that is obtained by said third block,

wherein said fourth block minimizes the quadratic evaluation value by adjusting the relaxation amount based on the prepared value and the quadratic evaluation value having been obtained using the prepared value, and said driving mechanism is configured to move said optical element in accordance with the determined position.

2. An optical apparatus which includes an optical system having a movable optical element, and a driving mechanism configured to move said optical element, said apparatus comprising:

a first block which measures a wavefront aberration of the optical system;

a second block which obtains a linear evaluation value by normalizing, by a first tolerance, an aberration expressed by a linear function of a position of said movable optical element out of aberrations of said optical system;

a third block which uses a first dummy variable as an upper limit of an absolute value of a Zernike coefficient of the wavefront aberration measured by said first block, and obtains a linear evaluation value by normalizing, by a second tolerance, a root means square of the wavefront aberration and approximating the root mean square by a linear function of the first dummy variable; and

a fourth block which uses a second dummy variable as an upper limit of the linear evaluation values obtained by said second and said third block, and determines a position of said optical element to be moved by said driving mechanism, by a linear programming, so as to minimize the second dummy variable,

wherein said driving mechanism is configured to move said optical element in accordance with the determined position.

3. A method of determining a position of an optical element in an optical apparatus which includes an image forming optical system having the optical element, a driving mechanism configured to move the optical element, and a

**12**

block configured to measure a wavefront aberration of the optical system, said method comprising:

a first step of obtaining a linear evaluation value by normalizing, by a first tolerance, an aberration expressed by a linear function of a position of the optical element out of aberrations of the optical system, and a quadratic evaluation value by normalizing, by a second tolerance, a square of a root mean square of the wavefront aberration measured by the block expressed by a quadratic function of the position;

a second step of using a dummy variable as an upper limit value of the linear evaluation value, obtaining a minimum value of the dummy variable by a linear programming; and

a third step of determining a position of the optical element to be moved by the driving mechanism, by a quadratic programming, so as to minimize the quadratic evaluation value under a constraint condition that the upper limit value of the linear evaluation value is a value prepared by adding a relaxation amount to the minimum value of the dummy variable that is obtained in the second step,

wherein in the third step the quadratic evaluation value is minimized by adjusting the relaxation amount based on the prepared value and the quadratic evaluation value having been obtained using the prepared value, and the driving mechanism is configured to move the optical element in accordance with the determined position.

4. A method of determining a position of an optical element in an optical apparatus which includes an optical system having the optical element, a driving mechanism configured to move the optical element and a block configured to measure a wavefront aberration of the optical system, said method comprising:

a first step of obtaining a linear evaluation value by normalizing, by a tolerance, an aberration expressed by a linear function of a position of the optical element out of aberrations of the optical system;

a second step of using a first dummy variable as an upper limit of an absolute value of a Zernike coefficient of the wavefront aberration measured by the block, and obtaining a linear evaluation value by normalizing, by a second tolerance, a root mean square of the wavefront aberration and approximating the root mean square by a linear function of the first dummy variable; and

a third step of using a second dummy variable as an upper limit of the linear evaluation values obtained in the first step and the second step, and determining a position of the optical element to be moved by the driving mechanism, by a linear programming, so as to minimize the second dummy variable by linear programming,

wherein the driving mechanism is configured to move the optical element in accordance with the determined position.

5. An apparatus according to claim 1, wherein said apparatus is an exposure apparatus which transfers a pattern to a substrate using said optical system.

6. A method according to claim 3, wherein the apparatus is an exposure apparatus which transfers a pattern to a substrate using the optical system.

7. A method of manufacturing a device, said method comprising steps of:

transferring a pattern to a substrate using an apparatus as defined in claim 5;

developing the substrate to which the pattern has been transferred; and

## 13

processing the developed substrate to manufacture the device.

8. A method of manufacturing a device, said method comprising steps of:

moving an optical element in an optical system of an exposure apparatus to a position as determined in accordance with a method as defined in claim 6;

transferring a pattern to a substrate using the exposure apparatus of which the optical element is moved in said moving step;

developing the substrate to which the pattern has been transferred; and

processing the developed substrate to manufacture the device.

9. An apparatus according to claim 2, wherein said apparatus is an exposure apparatus which transfers a pattern to a substrate using said optical system.

10. A method according to claim 4, wherein the apparatus is an exposure apparatus which transfers a pattern to a substrate using the optical system.

## 14

11. A method of manufacturing a device, said method comprising steps of:

transferring a pattern to a substrate using an apparatus as defined in claim 9;

developing the substrate to which the pattern has been transferred; and

processing the developed substrate to manufacture the device.

12. A method of manufacturing a device, said method comprising steps of:

moving an optical element in an optical system of an exposure apparatus to a position as determined in accordance with a method as defined in claim 10;

transferring a pattern to a substrate using the exposure apparatus of which the optical element is moved in said moving step;

developing the substrate to which the pattern has been transferred; and

processing the developed substrate to manufacture the device.

* * * * *

US006546379B1

(12) **United States Patent**
Hong et al.

(10) Patent No.: **US 6,546,379 B1**
(45) Date of Patent: **Apr. 8, 2003**

(54) **CASCADE BOOSTING OF PREDICTIVE MODELS**

(75) Inventors: **Se June Hong**, Yorktown Heights, NY (US); **Barry K. Rosen**, Stormville, NY (US)

(73) Assignee: **International Business Machines Corporation**, Armonk, NY (US)

(*) Notice: Subject to any disclaimer, the term of this patent is extended or adjusted under 35 U.S.C. 154(b) by 0 days.

(21) Appl. No.: **09/427,064**

(22) Filed: **Oct. 26, 1999**

(51) Int. Cl.[7] .......................................... G06F 15/18
(52) U.S. Cl. .................................................... 706/14
(58) Field of Search ........................ 706/14, 25, 47

(56) **References Cited**

U.S. PATENT DOCUMENTS

5,819,247 A * 10/1998 Freund et al. ............... 706/25

OTHER PUBLICATIONS

Zijian Zheng et al; Integrating Boosting and Stochastic attribute selection committees for Further Improving the Performance of Decision tree Learning; Sep. 1998; IEEE; 0-7803-5214-9/98; 216-223.*

David w. Opiz et al; An Empirical Evaluation of Bagging and Boosting for Artificial Neural Networks; Aug. 1997; IEEE; 0-7803-4122-8/97; 1401-1405.*

Yoav Freund; An improved algorithm fan its implications on learning complexity; Aug. 1992; ACM; 0-89791-498-8/92/0007/0391; 391-398.*

S. Weiss et al., "Optimized Rule Induction", IEEE Expert (8:6), Dec. 1993, pp. 61-69.

V. Vapnik, "Statistical Learning Theory", Published by John Wiley & Sons, Inc., 1998.

R. Schapire et al., "Improved Boosting Algorithms Using Confidence-rated Predictions", Proceedings of the 11th Annual Conference on Computational Learning Theory, 1998.

J. Shafer et al., "SPRINT: A Scalable Parallel Classifier for Data Mining", Proceedings of the 22nd VLDB Conference Mumbai (Bombai), India, 1996.

G. Ridgeway, et al., "Interpretable Boosted Naïve Bayes Classification", Proceedings of the 4th International Conference on Knowledge, Discovery and Data Mining, (KDD-98), pp. 101-104, Aug. 1998.

J. Rao, et al., "Visualizing Bagged Decision Tree", Proceedings of the 3rd International Conference on Knowledge, Discovery and Data Mining, (KDD-97), pp. 243-246, Aug. 1997.

(List continued on next page.)

*Primary Examiner*—Wilbert L. Starks, Jr.
*Assistant Examiner*—Joseph P. Hirl
(74) *Attorney, Agent, or Firm*—Whitham, Curtis & Christofferson, P.C.; Stephen C. Kaufman

(57) **ABSTRACT**

A method of boosting of predictive models, called cascade boosting, for resolving the interpretability problem of previous boosting methods while mitigating the fragmentation problem when applied to decision trees. This method of cascade boosting always applies a single weak model to any given data point. An improvement to the common method of boosting lies in how weak models are organized in a decision list rather than a weighted average. Cascade boosting resolves the interpretability problem of previous boosting methods while mitigating the fragmentation problem when applied to decision trees. Cascade boosting is simplest when applied to segmented predictive models but may also be applied to predictive models that do not explicitly segment the space of possible data points. The predictive model resulting from cascade boosting has fewer rules, or tree leaves, thereby enabling a modeler to better understand the correlations among the data.

**15 Claims, 7 Drawing Sheets**

## OTHER PUBLICATIONS

Y. Freund, et al., "Experiments with a New Boosting Algorithm", Proceedings of the International Machine Learning Conference, pp. 148–156 (1996).

E. Frank, et al., "Generating Accurate Rule Sets Without Global Optimization", Machine Learning: Proceedings of the 15$^{th}$ International conference (ICML '98), pp. 144–151, Jul. 1998.

P. Domingos, "Efficient Specific-to-General Rule Induction", Proceedings of the 2$^{nd}$ International Conference on Knowledge, Discovery and Data Mining, (KDD–96), pp. 319–322, Aug. 1996.

P. Clark, et al., "The CN2 Induction Algorithm", Machine Learning (3), pp. 261–283 (1989).

* cited by examiner

FIG. 1

FIG. 2

## FIG. 3

The elephant is like a big snake.

The elephant is like a tree.

35

34

31

32

33

FIG. 4A

FIG. 4B

FIG. 5B

FIG. 5A

FIG. 6

BUILD INITIAL PREDICTIVE MODEL ⌐701

OBSERVE PERFORMANCE OF CURRENT MODEL ON SEGMENTS OF DATA ⌐702

APPLY STATISTICAL LEARNING THEORY TO DERIVE RELIABLE ESTIMATES ⌐703

SORT SEGMENTS BY ESTIMATES ⌐704

SELECT AND RETAIN SEGMENTS AND MODELS WITH BEST ESTIMATES ⌐705

FORM SUBPOPULATIONS OF TRAINING AND OBSERVING POINTS ⌐706

BUILD ANOTHER MODEL ⌐707

708 DONE? NO / YES

709 ARRANGE SEGMENTS AND MODELS IN DECISION LIST

710 TERMINATE DECISION LIST

FIG. 7

# CASCADE BOOSTING OF PREDICTIVE MODELS

## BACKGROUND OF THE INVENTION

### 1. Field of the Invention

The present invention generally relates to methods for building predictive models from a given population of data points, and more particularly to a family of methods known as boosting or adaptive sampling, wherein multiple models are constructed and combined in an attempt to improve upon the performance obtained by building a single model. The invention resolves the interpretability problems of previous boosting methods while mitigating the fragmentation problem when applied to decision trees.

### 2. Background Description

Predictive modeling refers to generating a model from a given set of data points (also called "examples" or "records"), where each point is comprised of fields (also called "attributes" or "features" or "variables"), some of which are designated as target fields (also called "dependent variables") whose values are to be predicted from the values of the others (also called "independent variables").

There are many known methods of building predictive models from data for many different families of models, such as decision trees, decision lists, linear equations, and neural networks. The points used to build a model are known as training points. The performance of a model is judged by comparing the predicted values with the actual values of target fields in various populations of points. It is important to perform well on "new" or "unseen" points that were not used to train the model. In practical applications, the values of target fields become known at later times than the values of other fields. Actions based on accurate predictions can have many benefits. For example, a retailer can mail promotional material to those customers who are likely to respond favorably, while avoiding the costs of mailing the material to all customers. In this example, customer response is a target field. Other fields might include past responses to similar promotions, other past purchases, or demographic information.

Given some method of building predictive models, one could simply apply the method once to the available training points, or to as large a sample from that population as the underlying method can work with. Boosting refers to a family of general methods that seek to improve the performance obtained from any given underlying method of building predictive models by applying the underlying methods more than once and the combining the resulting "weak" models into a single overall model that, although admittedly more complex than any of the "weak" models obtained from the underlying method, may make more accurate predictions. The term "weak", as used in connection with boosting, is a technical term used in the art; a "weak" model is simply a model with imperfect performance that one hopes to improve by somehow combining the "weak" model with other "weak" models built by the same underlying method, but from different samples of the available training points. A model with good performance may still be considered "weak" in this context. Boosting is a process of adaptive resampling that builds a weak model, determines how to choose another training sample by observing the performance of the weak model(s) already built, builds another weak model, and so on.

FIG. 1 illustrates the end result of the common method of boosting. A list of admittedly weak models (1001, 1002, ..., 1099) is available, and every one of those models is applied to any given point for which a prediction is wanted in 1000. The actual number of weak models could be more or less than the 99 indicated in FIG. 1. Tens or hundreds of weak models are commonly used. Such an ensemble of models comprising the final weighted model is not humanly understandable. To return a single prediction, a weighted average of all the weak predictions is computed in block 1100. As commonly practiced (see, for example, Y. Freund and R. Schapire, "Experiments with a New Boosting Algorithm", *Proceedings of the International Machine Learning Conference*, pp. 148–156 (1996), or R. Schapire and Y. Singer, "Improved Boosting Algorithms Using Confidence-Rated Predictions", *Proceedings of the 11th Annual Conference on Computational Learning Theory* (1998)), boosting builds both a list of weak models (1001, 1002, ..., 1099) and a corresponding list of weights for averaging the predictions of those models, as in step 1100.

The method of building the lists is a form of adaptive resampling, as illustrated in FIG. 2. Given a population of training points 2001 and a trivial initial probability distribution D_1 2011 where all points are equally probable, any given model-building method yields a model M_1 2012 to serve as the first weak model. If the given model-building method cannot deal directly with a large population of training points together with a probability distribution on those points, then a sample of any convenient size may be drawn from the population 2001 according to the distribution 2011. To determine the weight of the predictions of M_1 and to build the next weak model, the next probability distribution D_2 2021 is computed by observing the weighted average performance of M_1 on the entire population 2001, with the performance for each point weighted by the probability of that point according to the current distribution 2011. The function that computes the weight of M_1 will reward better performance with the higher weight for M_1, while the function that computes the next probability of each point ensures that points where M_1 performs poorly will be more likely to be chosen than are points with the same current probability where M_1 performs well.

Given the same population 2001 and the new probability distribution 2021, the same given model-building method yields a model M_2 2022 to serve as the second weak model. The process of observing performance and determining both a weight and a new distribution continues for as long as desired, leading eventually to a final distribution D_99 2991 and then a final weak model M_99 2992. The last step in boosting as commonly practiced is a truncation of the repeated process; observed performance determines the weight of M_99, but the computation of a new distribution is omitted. Boosting as commonly practiced will be called "additive boosting" hereafter.

After additive boosting, the final model is of a form unlike that of the models in the list of admittedly weak models, and the list of weights is difficult to interpret. Despite considerable experimental success, additive boosting is, from the viewpoint of the end user, disturbingly like the old fable about a committee of blind men who independently examined various parts of an elephant by touch and could not pool their admittedly limited observations into a consensus about the whole animal, as illustrated in FIG. 3. Man 31 feels the elephant's leg 32 and assumes he has encountered a tree. Man 33 feels the elephant's leg 34 and assumes he has encountered a snake. The two men are unable to conclude that they have both encountered an elephant 35.

This interpretability problem is well-known. A large complex model, such as a typical boosted model, with a whole

ensemble of base models and their weights, is difficult to understand and explain. This limits the scope of practical applications. There have been attempts to mitigate the interpretability problem with visualization tools applied after models have been built (J. S. Rao and W. J. E. Potts, "Visualizing Bagged Decision Trees", *Proceedings of the Third International Conference on Knowledge, Discovery and Data Mining*, (KDD-97), pp. 243-246 (August 1997). The interpretability problem has been addressed for the special case of Naïve Bayes classification as the underlying method of building models and "weight of evidence" as the desired interpretation (G. Ridgeway, D. Madigan, T. Richardson, and J. O'Kane, "Interpretable Boosted Naïve Bayes Classification", *Proceedings of the Fourth International Conference on Knowledge, Discovery and Data Mining*, (KDD-98), pp. 101-104 (August 1998).

SUMMARY OF THE INVENTION

It is therefore an object of the present invention to provide a new method of boosting of predictive models, called cascade boosting, for resolving the interpretability problem of previous boosting methods while mitigating the fragmentation problem when applied to decision trees.

According to the invention, there is provided a method of cascade boosting, a form of adaptive resampling, which always applies a single weak model to any given data point. A significant improvement to the common method of boosting lies in how the weak models are organized into a decision list. The decision list is typically smaller than the lists of models and weights generated by the prior art, thus making it easier to interpret the correlations among data.

Each list item before the last item specifies a (possibly complex) condition that a data point might satisfy, along with a unique (possibly weak) model to be applied to any point that satisfies the condition but does not satisfy any conditions from earlier in the list. The list is terminated by a last item that has no condition and merely specifies the model to be applied if none of the conditions in earlier items are satisfied. Various methods of building decision lists are known. Cascade boosting is a new method for building a decision list when given any method for building (possibly weak) models.

Cascade boosting is simplest when applied to segmented predictive models but may also be applied to predictive models that do not explicitly segment the space of possible data points, for instance neural nets. The word "predictive" is omitted hereafter because all models considered here are predictive.

Cascade boosting of segmented models may be applied to decision trees or any other kind of model that segments the space of possible data points into (possibly intersecting) regions (also known as segments) and utilizes a distinct subordinate model for each region, or segment. The regions are often chosen by various means intended to optimize the performance of the overall model.

Decision trees are the most common kind of segmented model. In the common case of decision trees, the tests performed along paths to regions with models that perform well may fragment the space of possible data points. Fragmentation separates points outside the regions with good models, assigning the fragmented points to disjoint small regions that cannot be modeled well in the presence of noise.

In the common case of decision trees, cascade boosting preserves the relatively successful leaves of the tree while reuniting fragments formed by relatively unsuccessful leaves. In the more general case of a segmented model with possibly intersecting segments, a boosted model may be simpler and/or more predictive than the original model generated by the underlying segmentation process on which cascade boosting has been superimposed.

In the most general case of a model that is treated like a black box, cascade boosting replaces a single black box by a cascade of black boxes, each with a corresponding test to decide whether to apply the model gated by the test or continue to the next stage in the cascade. The boosting process itself applies any of the available methods for segmented classification, so as to identify regions where the last stage in the current state of the evolving cascade performs well.

BRIEF DESCRIPTION OF THE DRAWINGS

The foregoing and other objects, aspects and advantages will be better understood from the following detailed description of a preferred embodiment of the invention with reference to the drawings, in which:

FIG. 1 illustrates the end result of additive boosting;

FIG. 2 illustrates the method of additive boosting;

FIG. 3 illustrates the interpretability problem of additive boosting by analogizing the problem to an old fable about a committee of blind men who could not pool their admittedly limited observations into a consensus; ···

FIGS. 4A and 4B illustrate a decision tree and a less informative decision tree that could results from fragmentation;

FIGS. 5A and 5B illustrate the ability of cascade boosting to mitigate fragmentation;

FIG. 6 illustrates the end result of cascade boosting; and

FIG. 7 is a flow diagram illustrating the method of cascade boosting for segmented base models, such as decision trees, with mutually exclusive segments.

DETAILED DESCRIPTION OF A PREFERRED EMBODIMENT OF THE INVENTION

Cascade boosting of segmented models may be applied to decision trees (see, for example, L. Breiman, J. Friedman, R. Olshen, and S. Stone, *Classification and Regression Trees*, Wadsworth (1984), or J. Shafer, R. Agrawal, and M. Mehta, "SPRINT: A Scalable Parallel Classifier for Data Mining", *Proceedings of the 22nd International Conference of Very Large Databases* (1996)), decision lists (see, for example, P. Clark and T. Niblett, "The CN2 Induction Algorithm", *Machine Learning* (3), pp. 319-322 (1989), or S. Weiss and N. Indurkhya, "Optimized Rule Induction", *IEEE Expert* (8:6), pp. 61-19 (1993)), or any other kind of model that segments the space of possible data points into (possibly intersecting) regions (also known as segments) and utilizes a distinct subordinate model for each region. The regions are chosen by various means intended to optimize the performance of the overall model.

FIG. 4A illustrates a decision tree for a simplified version of a problem faced by manufacturers of personal computers. The manufacturer wishes to predict which PC configurations will be HOT, in that they sell well, and which will be COLD, in that they do not. Each data point specifies values for three fields that record three different attributes of a PC: the SPEED of the processor, which may be FAST or SLOW, the size of the DISK drive, which may be LARGE or SMALL, and the type of DISPLAY, which may be TFT (thin-film transistor) or CRT (cathode ray tube). These fields by themselves do not determine whether a PC will be HOT or COLD, but the manufacturer hopes to learn which combi-

**5**

nations of field values tend to be HOT and which tend to be COLD. For illustrative purposes, we assume that the market is really as indicated in FIG. 4A. All of the SLOW and SMALL machines are also CRT machines, and they are mostly HOT because they are very cheap. The FAST and LARGE machines with TFT tend to be HOT because they appeal to power users, even though they are very costly. Serious users with less money may settle for a SLOW machine that is still LARGE and still has TFT, so those machines are somewhat more likely to be HOT than COLD. The tree displays a straightforward way to select a model that predicts the most likely sales behavior of any PC the manufacturer might choose to make. Each interior node (an oval shape in the figure) specifies a single field to examine and a branch for each of two mutually exclusive sets of values that exhaust all possibilities. Each leaf node (a rectangular shape in the figure) specifies a model that predicts HOT or COLD with some estimated probability, which is not shown.

In the simple example of FIG. 4A, where there are only three fields and each field has only two values, there are only eight possible configurations and it is easy to enumerate them. In actual practice, there are many fields and some of them have many more than two possible values. Complete enumeration is not possible, but the manufacturer may try to build a tree that approximates the market by learning from past experience: a population of PCs in various configurations, each of which is known to be either HOT or COLD. Many ways to build a decision tree from such training data points are known, and they all share a vulnerability to fragmentation. The tree builder may well start with a root node that tests SPEED, as does the root of the tree as shown in FIG. 4A, but thereafter the LARGE points on the FAST branch are separate from the LARGE points on the SLOW branch. There may be so few training points with TFT in each of these two subpopulations of the LARGE points that the relevance of testing DISPLAY is either ignored or considered but rejected, as statistical noise. The tree builder may produce the simpler but less informative tree shown in FIG. 4B, where the model predicting HOT is very often correct but the two models predicting COLD are only correct a little more than half the time.

In the common case of decision trees, cascade boosting preserves the relatively successful leaves of the tree while reuniting fragments formed by relatively unsuccessful leaves. Given a tree builder that produces the tree of FIG. 4B, cascade boosting observes that one of the leaves 401, in this case, the one with the model predicting HOT, performs better than the others. The sequence of the branches to the best performer is remembered as the condition in a decision list item, and then the tree builder is given another opportunity, with the subpopulation of training points defined by those that do not satisfy this condition. With all of the LARGE points together, the tree builder has a better chance of recognizing that testing DISPLAY is really relevant. The resulting decision list, shown in the FIG. 5A, is just as informative as the tree shown in FIG. 4A. If desired, the decision list can easily be converted to a decision DAG (directed acyclic graph), as illustrated in FIG. 5B. Moreover, such a DAG can easily be converted to a decision tree. The redundancy in FIG. 5B is an artifact of the simplicity of this example. Having taken the LARGE branch at 532 in FIG. 5B, the value of DISK is already known and it need not be retested again at node 533. In general, however, the branch at 533 determines which of two different subsets contains the value of DISK.

In the more general case of a segmented model with possibly intersecting segments, a boosted model may be

**6**

simpler and/or more predictive than the original model generated by the underlying segmentation process on which cascade boosting has been superimposed.

In the most general case of a model that is treated like a black box, cascade boosting replaces a single black box by a cascade of black boxes, each with a corresponding test to decide whether to apply the model gated by the test or continue to the next stage in the cascade. The cascade boosting process itself applies any of the available methods for segmented classification, so as to identify regions where the last stage in the current state of the evolving cascade performs well.

In all cases, the end result of cascade boosting is a decision list. Referring now to FIG. 6, the general form of a decision list is shown. The items in the list are blocks 611, 621, 681 and 691. The list could have more or less than the nine items as indicated for purposes of illustration. The first item 611 specifies the gating condition 612 to be tested. If a data point satisfies the gating condition, then the model M_1 613 is to be applied. Otherwise, the next item 621 is to be considered. The next item 621 has the same structure as the first item 611, and the condition 622 is said to gate the application of the model 623. Finally, after item 681 specifies that condition 682 gates application of the model 683, the list is terminated by a final item 691 that is simpler than the others; it merely specifies the model 693 that is to be applied when none of the above conditions are satisfied. For any positive integer J, a decision list of length J can be specified by specifying both a list of J models and a list of J−1 conditions to gate the models. The decision list is terminated by a last item that specifies the J-th model (usually a simple class label itself) for use when none of the J−1 conditions are satisfied. In general, the conditions and models may have their own internal structures. Therefore, a decision list is the end result of cascade boosting, the details depend upon the kind of weak model being used as the base model. In all cases, the sub models, that apply within the specified segment of the example points, are much simpler than the additive boosted tree.

In the common case of decision trees, each condition is the conjunction of the branches taken along the path to a tree leaf with a subordinate model that performs well, and that subordinate model is gated by the condition. The final item specifies a decision tree, as illustrated by the final item 521 that specifies a decision tree 523 in FIG. 5A.

In the more general case of segmented models with possibly intersecting segments, each condition specifies a segment where a segmented weak model performs well. This segment is called S and the weak model is called W. The model gated by the condition is a simplification of W that ignores the examples not in the segment S. The model is the combination of the several segmented weak models built during the cascade boosting process and gating conditions that also routes the examples to be classified to the most appropriate weak model.

In the most general case of models that are treated as black boxes, each condition specifies a segment S from an auxiliary segmented classification model A that attempts to predict where a weak model W will perform well. The model gated by the condition is W itself. The final item specifies one of the several weak models built during the cascade boosting process.

When a decision list is being constructed by appending items one by one to a list, each intermediate state of the evolving list should not, strictly speaking, be called a decision list. The item that is currently the last item specifies

a condition gating a model rather than just a model. A list that will become a decision list, as soon as an appropriate last item is appended, will be called an "open-ended" decision list, hereafter.

In common cases, the whole cascade shown in FIG. 6 can easily be expressed in essentially the same form as that of any of the multitude of admittedly weak models in additive boosting. If the initial model is a decision list, then so is the cascade. If the initial model is a decision tree, then the cascade can easily be expressed as a decision DAG (directed acyclic graph) rather than a tree. A decision DAG is as interpretable as a decision tree.

The fragmentation problem has been cited (see P. Domingos, "Efficient Specific-to-General Rule Induction", *Proceedings of the Second International Conference on Knowledge, Discovery and Data Mining*, (KDD-96), pp. 319-322, August 1996) as one of the motivations for replacing decision trees by systems of rules trained on possibly intersecting segments of training data. The high computational costs of building such models have discouraged their use, especially when the presence of both noise and skewed distributions implies that statistical significance requires scanning large numbers of points. When applied to decision trees, cascade boosting uses the same efficient methods ordinarily used to build decision trees.

The closest method to the present invention that is used today is the PART method found in E. Frank and I. H. Witten, "Generating Accurate Rule Sets Without Global Optimization", *Machine Learning: Proceedings of the 15th International Conference* (ICML '98), pp. 144-151, July 1998, which resembles cascade boosting as applied to decision trees. The present invention cascade boosting process has several advantages over the PART process:

(a) Cascade boosting does not restrict attention to decision trees. (For clarity in comparing with the PART method, items below are stated for decision trees.)

(b) Cascade boosting retains however many leaves are likely to perform well, while the PART method retains just one leaf, in each round.

(c) Cascade boosting uses statistically sound estimates (see V. N. Vapnik, "Statistical Learning Theory", John Wiley and Sons: 1998) to determine which leaves are likely to perform well, while the PART method just retains the leaf covering the most training points.

(d) Cascade boosting is completely independent of the underlying method for constructing decision trees, while the PART method is tied to particular methods of growing and pruning that are said to support discovery of the leaf covering the most training points after growing only part of the tree.

The estimates in item (c) may be derived from performance on either training data or (preferably) separate validation data. Items (b) and (d) are closely related: each round can accomplish more, so there is less concern about the cost of constructing the decision tree for each round.

In a decision tree, the application conditions for the subordinate models are mutually exclusive, i.e., each data point is found in only one segment of the population, a segment being the leaf node and the sub model being the constant class label designation for all points that belong to the leaf node. When exclusivity is not present, an adaptively segmented model needs a process to determine what to predict when several subordinate models are applicable to the same point. Such a process is called "arbitration" hereafter. The simplest kind of arbitration is winner-take-all: one of the applicable models is chosen and applied, while the

rest are ignored. A decision list, as shown in FIG. 4, has winner-take-all arbitration because it applies the first applicable model in a fixed list. Some segmented models use other forms of arbitration, such as a weighted average (as in the extreme case of additive boosting, as shown in FIG. 1 where all sub models are applied to all examples, i.e., there is only one segment) of the predictions made by the subordinate models applicable at any given point.

Referring now to FIG. 7, a flow diagram for cascade boosting of a decision tree is shown. Recall that segments of the population in a decision tree are always mutually exclusive. An initial predictive model is built in block 701 that applies to one or more subordinate models for a set of initial training data points. The accuracy performance of the current model, initially the initial predictive model, is observed in block 702. The observed performance of each subordinate model on its corresponding segment (of either the training data or separate validation data) is used to estimate future accuracy performance. Statistical learning theory (V. N. Vapnik, "Statistical Learning Theory", supra) is applied to derive reliable estimates in light of the varying sizes of the segments in block 703. Good performance on a large segment is more trustworthy than good performance on a small segment, and statistical learning theory is applied to merge observed performance and observed size into a single number that provides a bound on how bad future performance might be. The subordinate models are sorted by their estimated future performance in block 704. Those segments with the best estimates are selected and retained in block 705, along with the associated subordinate models, where "best estimates" can be the top one or two with most accurately best performance.

The next round of resampling of remaining data points may let the underlying method for building models work with as much of the remaining training data as it can, where the remaining points are those not already in segments defined by the application conditions (i.e., gating condition) of the subordinate models with the best estimates. A subpopulation of the remaining points is formed in block 706. Thus, the above process is repeated with only a subset of the data being run through the models. The underlying method for building models produces a new current model trained on the resampled data in block 707 and the performance is observed and estimates derived for this new current model beginning in block 702. The resulting subordinate models are sorted by their estimated future performance, and so on. Each round need only deal with points not already in segments defined by the gating application conditions of the subordinate models retained by previous rounds.

Once the desired number of iterations is complete as determined in decision block 708, the retained segments and models are then arranged in a decision list in blocks 709 and 710. In block 709 an open-ended decision list is built with items ordered in the same order in which segments were selected and retained in block 705. In the list item defined for any one mutually exclusive segment, the model gated by membership in that segment is the corresponding subordinate model. The decision list is terminated in block 710 with one of the weak models that have been built, preferably the last one.

Various stopping criteria may be used in decision block 708. Suppose M_K is the current weak model, for the first positive integer K such that the observed performance of M_K on the K-th population of observing points is nearly as good in performance as the best estimated performance of subsequent M_K+1 candidate models for any segment of that population, stopping at K or earlier is preferred. For

## 9

each positive integer J such that $J \leq K$, stopping at J means building a decision list of length J, using J-1 conditions and J models.

To stop earlier without missing opportunities for improved performance, a straightforward search may be performed after K weak models have been built. For each positive integer J, such that $J \leq K$, the overall performance on the observing points that would result from stopping at J may be computed readily from observations already made at each step and from similar observations that one skilled in the art can readily add to each step.

If K is suitably small when compared to the number of observing points, then the J value with the best observed performance may be chosen. Otherwise, statistical learning theory may be applied to avoid the well-known pitfall of overfitting when choosing among many models by comparing performance on one set of points. Specifically, the principal of structural risk minimization (see V. N. Vapnik, "Statistical Leaning Theory", supra) may be applied A brief explanation follows.

An increasing sequence of sets of J values is chosen such as

$$\{1\}; \{1,2\}; \{1,2,3\}; \ldots; \{1,2,3,\ldots,K\}.$$

Let N be the number of J values that appear in a given set. The J value with the best observed performance is chosen, and the observed performance with J is adjusted to provide a reliable estimate that bounds future performance. The adjustment depends upon N as well as the number of observing points, so the adjustment for J chosen from a set with large N is greater than the adjustment for J chosen from a set with small N. Now there are K tentatively chosen values of J (one for each set in the increasing sequence), and the ordering among estimates bounding future performance may differ from the ordering of observed performance. Among these K values of J, the one with the best estimate is to be chosen.

In the more general case of boosting a segmented model with possibly intersecting segments, i.e. data points fall within more than one segment, and some form of arbitration, the tests appearing in the cascade are those defining the segments where the entire current model performs relatively well, even if the subordinate model associated with such a segment fails to perform well by itself (without the benefit of arbitration). This case is therefore more complicated than the case of a decision tree, as the following example illustrates. Suppose, in the case of census data, the model predicts income. Suppose one weak model correlates age with income and another model correlates occupation with income. Subordinate model M_age predicts high income for a segment defined by a range of age values, while subordinate model M_occ predicts high income for a segment defined by a set of occupation values. If the model as a whole does well on the occupation segment, but it gets the predictions by using both M_age and M_occ, then M_age and the age defined segment to which it applies must be integrated into the boosted model.

Referring to FIG. 7, integration is accomplished by doing somewhat more work in blocks 705 and 709. After the segments with the best estimates have been selected and retained in block 705, all other segments intersecting those best segments are separately selected and retained, along with their corresponding subordinate models.

When a decision list item is constructed in block 709, the condition is still specified to be membership in one of the segments with the best estimates from some execution of block 705. This is to be called segment S. The model gated

## 10

by the condition is no longer just the subordinate model corresponding to S in the then-current weak model from the execution of block 705 that selected and retained S. The model gated by the condition is now a simplification of that then-current weak model. The simplification is obtained by discarding segments disjoint from S. Specifically, the segments of the gated weak model are those segments intersecting S that were selected and retained by the same execution block 705 that selected and retained S. The corresponding subordinate models of the [fated] gated weak model are the corresponding subordinate models of the then-current weak model, which were also selected and retained in block 705. The arbitration method of the gated weak model is whatever arbitration method was used in the then-current weak model.

In the most general case, where the model to be boosted is treated like a black box, the observed performance of the entire current model at each point is compared with the overall observed average performance of the entire current model on the entire pertinent set of points (of either the training data or separate validation data). Here, the black box could be a neural net or some other model that does not explicitly segment the population of points, but only provides a resulting prediction when given a data point. The points where the observed performance is substantially better than the average form one class, while the remaining points form another class in a two-class classification problem, for which an auxiliary classification model is constructed by adaptive segmentation. The segments found by the auxiliary classification model are used as in the less general case. The entire current model plays the role played by a subordinate model in the case of decision trees or by a simplified version of the entire current model in the case of segmented models with arbitration.

Referring to FIG. 7, black box weak models require doing more work in block 702 and somewhat less work in blocks 705 and 709. To obtain segments in block 702, the current population of observing points is taken to be the training data for an auxiliary classification problem. After the average performance over the entire current population of observing points has been observed, each point is labeled either WELL or POOR, depending on whether the current weak model performs relatively well, or relatively poorly when applied to that one point. The auxiliary problem is to predict whether a point is in class WELL or in class POOR without actually applying the current weak model. Any of the existing methods for building segmented classification models may be used for building a model that addresses the auxiliary classification problem, and the actual performance of the current weak model on the segments of the auxiliary model may then be observed, as in block 702 for the case of segmented models.

When a segment is selected and retained in block 705, there is no need to select and retain any subordinate models. The current weak model itself is retained for future use in block 709. When a decision list item is constructed in block 709, the model gated by testing for membership in a segment is simply the same model that was the current weak model when the segment was selected and retained in block 705.

### EXAMPLE

A very preliminary implementation was accomplished using extensions of the ProbE (Probability Estimation) data mining libraries developed by International Business Machine Corp. to implement most major processing steps. The models to be boosted were (binary) decision trees generated by the SPRINT classifier (J. Shafer, R. Agrawal,

and M. Mehta, "SPRINT: A Scalable Parallel Classifier for Data Mining", supra), a well-known method developed by International Business Machine Corp. and marketed by International Business Machine Corp. as part of the Intelligent Miner product. The preliminary implementation deals only with decision trees and with error estimates based on training data. The unpublished IBM Research Report RC-21483, C. Apte, E. Grossman, E. Pednault, B. Rosen, F. Tipu, and B. White, "Probabilistic Estimation Based Data Mining for Discovering Insurance Risks", Aug. 9, 1999, herein incorporated by reference, describes an application that uses the ProbE data mining libraries.

The training and test data were taken from the UCI/adult benchmark (i.e. the "Adult Census Data" benchmark in the public repository at the University of California, Irvine). There are 32561 training points and 16281 test data points. There are 14 fields, representing independent variables in each data point. Predictions were made for the 15$^{th}$ field, a binary dependent variable named "class" with possible values named ">50K" (for income above $50,000) and "<=50K" (for income at most $50,000). The model generated by the SPRINT classifier had an error rate of 13.85% on the test data, and this rate is better (lower) than all of the rates cited in the documentation of the benchmark. Improving upon the SPRINT model was a challenging task.

Imported into ProbE data mining libraries by expressing each tree leaf as a rule, the initial SPRINT model had 83 rules that perform 604 tests. These rules varied widely in how many points they cover and how well they perform. After the rules were sorted by estimated future error rates:

rule 1 covers 678 training points with an observed error rate of 0.4% on those points, yielding an estimated future error rate of 1.2%;

rule 2 covers 13977 training points with an observed error rate of 2.4% on those points, yielding an estimated future error rate of 2.6%;

rule 6 covers 1484 training points with an observed error rate of 5% on those points, yielding an estimated future error rate of 6.0%;

rule 7 covers 318 training points with an observed error rate of 4% on those points, yielding an estimated future error rate of 6.3%; . . .

rule 83 covers 8 training points with an observed error rate of 25% on those points, yielding an estimated future error rate of 83%.

As was explained above in reference to FIG. 5, the estimated error rates are bounds on how badly the rules might perform on new data points in the future, given how they were observed to perform on a limited number of points. In particular, rule 7 has an observed error rate of 4% on 318 points. The actual error rate on any other points is unknown, but statistical learning theory (see V. N. Vapnik, "Statistical Learning Theory", supra) implies that a rule with an actual rate as high as 6.3% could still perform as well as 4% by chance on that many points.

Round 1 of cascade boosting retained the first six (6) rules, which covered half of the training points. (Under the stipulations of the PART method, on the other hand, only rule 2 would be chosen.) All of these rules had estimates below half of the observed rate on the training data as a whole, even though each rule's estimate was adjusted upward from the rule's observed rate by an amount dependent on the number of points involved. Subsequent rounds were less dramatic.

After 25 rounds, the cascade had 65 rules that perform 289 tests, so the resulting cascade was about half the size of

the original model. The cascade's observed error rate of 13.89% on the test data is not significantly different from the original 13.85% and was still below all of the rates cited in the documentation of the benchmark. This reduction in model size is important in the interpretation of the overall model as discussed above with respect to interpretation problems.

## CONCLUSION

The resampling done by the preliminary implementation is deterministic. Each point in a segment where the evolving cascade performs well is invisible to the next round, which trains on all of the points that are still visible. Deterministic resampling is recommended when (as is the case with the SPRINT classifier on most data sets) the underlying model-building method can work with all the data. Cascade boosting can also be implemented with any of the resampling schemes used in additive boosting. As many points as the underlying model-building method can handle at once may be chosen at random, subject to the condition that points where the evolving cascade performs well are much less unlikely to be chosen than points where it performs poorly. Any point-weighting function used in additive boosting may be used. Deterministic resampling is the limiting case where each point is weighted either 0 or 1.

While the invention has been described in terms of a single preferred embodiment, those skilled in the art will recognize that the invention can be practiced with modification within the spirit and scope of the appended claims.

Having thus described our invention, what we claim as new and desire to secure by Letters Patent is as follows:

1. A computer implemented method of boosting of predictive models that apply subordinate models to data points in mutually exclusive segments, called cascade boosting, for resolving an interpretability problem of previous boosting methods, while mitigating a fragmentation problem when applied to decision trees, said method comprising the steps:

(a) building an initial predictive model, which initially is a current model, that applies at least one subordinate model to a plurality of data points in mutually exclusive segments, the initial predictive model being built from an initial population of training data points;

(b) observing performance of the current model, which is initially the initial predictive model, when applied to each mutually exclusive segment of a current population of observing data points, which is initially either the initial population of training data points or a separate initial population of data points reserved for observing performance;

(c) applying statistical learning theory to derive a reliable estimate bounding future performance of the current model on each mutually exclusive segment, the reliable estimate being derived for each mutually exclusive segment from the observed performance together with a number of observing data points falling within a mutually exclusive segment;

(d) sorting mutually exclusive segments by estimates;

(e) selecting and retaining a fraction of the mutually exclusive segments, and also retaining each subordinate model associated with the mutually exclusive segment, the selection resulting in retention of segments with better estimates;

(f) forming a subpopulation of training points by sampling from the current population of training points so as to exclude, either with certainty or with high probability, each point falling within the selected and retained segments;

(g) forming a subpopulation of observing data points by sampling from the current population of observing data points so as to exclude, either with certainty or with high probability, each point falling within the selected and retained segments;

(h) building another predictive model which becomes the current model, the current model applying at least one subordinate model to a plurality of data points in mutually exclusive segments, and being built from the subpopulation of training points formed in step (f);

(i) repeating steps (b) to (h) a desired number of times, with the subpopulation of training points as the current population of training points and with the subpopulation of observing data points as the current population of observing data points;

(j) arranging selected and retained mutually exclusive segments having better estimates in an open-ended decision list, where each item in the open-ended decision list specifies a test for membership in one of the selected and retained segments having better estimates and specifies that, if a point passes the membership test, then a prediction for the point is to be obtained by using the prediction of the subordinate model corresponding to the retained mutually exclusive segment; and

(k) terminating the open-ended decision list with one of the models built in step (a) or step (h) and resulting in a terminated decision list, thereby solving the problem of model interpretability while mitigating the fragmentation problem.

2. A computer implemented method as recited in claim 1, wherein the step (b) of observing performance further comprises the step of observing performance of the current model when applied to an entire current population of observing points; and

wherein the step (d) of sorting further comprises the step of comparing the observed performance of the current model when applied to the entire current population of observing points, as determined in step (b) with sorted estimates as derived in step (d) and continuing with step (j), if an estimate as derived in step (d) is not substantially better than the observed performance.

3. A computer implemented method as recited in claim 2, wherein a counter K is initialized to a value of 1 in step (a) and incremented to K+1 in step (h) when a new predictive model is built so that the current model is called a K-th current model for each value of counter K, the arranging step (j) further comprising the steps:

selecting a value J in a range of 1 to the value of counter K;

discarding segments and subordinate models that were selected and retained in step (e) for the K-th current model, for all repetitions where K is greater than J;

discarding the K-th current model that was built in step (a) or (h), for all repetitions where K is not equal to J,

wherein the terminated decision list as generated in step (k) is terminated with the K-th current model, where K is equal to J, as selected in the selecting step, thereby choosing a number of repetitions from an adaptively determined range of possibilities.

4. A computer implemented method as recited in claim 3, wherein the number of repetitions J is chosen from an ad adaptively determined range of possibilities by optimizing observed performance when applied to an initial population of observing points and the step of selecting a value J in the arranging step (j) further comprises the steps:

combining, for each possible choice of values for J in a range of 1 to K, the observed performance of the K-th

current model when applied to every mutually exclusive segment of a K-th population of observing points selected and retained in step (e), where the value of counter K is less than J, with the observed performance of the K-th current model when applied to an entire K-th population of observing points, where the value of counter K is equal to J, thereby determining the observed performance when applied to the initial population of observing points that would result from choosing a value for J; and

choosing a value for J to optimize observed performance as determined in step (a), and choosing the number of repetitions J from an adaptively determined range of possibilities by optimizing observed performance when applied to the initial population of observing points.

5. A computer implemented method as recited in claim 3, wherein the number of repetitions J is chosen from an adaptively determined range of possibilities by optimizing a reliable statistical estimate bounding future performance, and the step of selecting a value J in the arranging step (j) further comprises the steps:

combining, for each possible choice for J in a range from 1 to the value of counter K as selected in step (j), the observed performance of the K-th current model when applied to every mutually exclusive segment of an entire K-th population of observing points that was selected and retained in step (e), where the value of counter K is less than J, with the observed performance of the K-th current model when applied to the entire K-th population of observing points, where the value of counter K is equal to J, thereby determining the observed performance when applied to the initial population of observing points that would result from choosing a value for J;

forming an increasing sequence of sets of possible choices for the value J in a range from 1 to the value of counter K and ending the sequence of sets with a set comprising all possible choices;

selecting, for each set of possible choices formed in the forming step, the value of J that optimizes observed performance for the set, as determined in the combining step;

deriving a reliable estimate bounding future performance with the value of J selected in the selecting step by applying statistical learning theory, for each set of possibilities formed in the forming step, the estimate being derived from parameters, wherein the parameters are selected from a group consisting of the observed performance with J, the number of possibilities in the set, and the number of observing points; and

selecting the value of J to optimize estimated performance as determined in the deriving step.

6. A computer implemented method of boosting of predictive models that apply subordinate models to data points in possibly intersecting segments and arbitrate among the predictions of applicable subordinate models whenever a point falls within two or more segments, called cascade boosting, for resolving an interpretability problem of previous boosting methods, said method comprising the steps:

(a) building an initial predictive model, which initially is a current model, that applies at least one subordinate model to a plurality of data points in possibly intersecting segments and arbitrates among the predictions of the applicable subordinate models whenever a point falls within two or more segments, the initial predictive model being built from an initial population of training data points;

(b) observing performance of the current model, which is initially the initial predictive model, when applied to each segment of a current population of observing data points, which is initially either the initial population of training data points or a separate initial population of data points reserved for observing performance;

(c) applying statistical learning theory to derive a reliable estimate bounding future performance of the current model on each segment, the estimate being derived for each segment from the observed performance together with a number of the observing data points falling within the segment;

(d) sorting the segments by the estimates;

(e) selecting and retaining a fraction of the segments, and also retaining each subordinate model associated with the segment, the selection resulting in retention of segments with better estimates, while separately selecting and retaining each additional segment intersecting the segments with better estimates, and also retaining each subordinate model associated with each additional segment;

(f) forming a subpopulation of training points by sampling from the current population of training points so as to exclude, either with certainty or with high probability, each point falling within selected and retained segments having better estimates and the additional segments;

(g) forming a subpopulation of observing data points by sampling from the current population of observing data points so as to exclude, either with certainty or with high probability, each point falling within the selected and retained segments having better estimates and the additional segments;

(h) building another predictive model which becomes the current model, the current model applying at least one subordinate model to a plurality of data points in possibly intersecting segments and arbitrating among predictions of applicable subordinate models whenever a point falls within two or more segments, and being built from the subpopulation of training points;

(i) repeating steps (b) to (h) a desired number of times, with the subpopulation of training points as the current population of training points and with the subpopulation of observing data points as the current population of observing data points;

(j) arranging the selected and retained segments having better estimates in an open-ended decision list, where each item in the open-ended decision list specifies a test for membership in one of the selected and retained segments having better estimates and specifies that, if a point passes a membership test, then a prediction for the point is to be obtained by arbitrating among predictions of all pertinent models, the pertinent models being subordinate models corresponding to selected and retained segments within which the point falls, the selected and retained segments having been selected and retained in execution of step (e) that selected and retained the segment in the membership test as one of the segments having better estimates;

(k) terminating the open-ended decision list with one of the models built in step (a) or step (h) and resulting in a terminated decision list, thereby solving the problem of model interpretability.

7. A computer implemented method as recited in claim 6, wherein the step (b) of observing performance further comprises the step of observing performance of the current model when applied to an entire current population of observing points; and

wherein the step (d) of sorting further comprises the step of comparing the observed performance of the current model when applied to the entire current population of observing points, as determined in step (b) with the sorted estimates as derived in step (d) and continuing with step (j), if an estimate as derived in step (d) is not substantially better than an observed performance.

8. A computer implemented method as recited in claim 7, wherein a counter K is initialized to a value of 1 in step (a) and incremented to K+1 in step (h) when a new predictive model is built so that the current model is called a K-th current model for each value of counter K, the arranging step (j) further comprising the steps:

selecting a value J in a range of 1 to the value of counter K;

discarding segments and subordinate models that were selected and retained in step (e) for the K-th current model, for all repetitions where K is greater than J;

discarding the K-th current model that was built in step (a) or (h), for all repetitions where K is not equal to J,

wherein the terminated decision list as generated in step (k) is terminated with the K-th current model, where K is equal to J, as selected in the selecting step, thereby choosing a number of repetitions from an adaptively determined range of possibilities.

9. A computer implemented method as recited in claim 8, wherein the number of repetitions J is chosen from an adaptively determined range of possibilities by optimizing observed performance when applied to an initial population of observing points and the step of selecting a value J in the arranging step (j) further comprises the steps:

combining, for each possible choice of values for J in a range of 1 to K, the observed performance of the K-th current model when applied to every segment of a K-th population of observing points selected and retained in step (e) as a segment with a better estimate, where the value of counter K is less than J, with the observed performance of the K-th current model when applied to an entire K-th population of observing points, where the value of counter K is equal to J, thereby determining the observed performance when applied to the initial population of observing points that would result from choosing a value for J; and

choosing a value for J to optimize observed performance as determined in step (a), and choosing the number of repetitions J from an adaptively determined range of possibilities by optimizing observed performance when applied to the initial population of observing points.

10. A computer implemented method as recited in claim 8, wherein the number of repetitions J is chosen from an adaptively determined range of possibilities by optimizing a reliable statistical estimate bounding future performance, and the step of selecting a value J in the arranging step (j) further comprises the steps:

combining, for each possible choice for J in a range from 1 to the value of counter K as selected in step (j), the observed performance of the K-th current model when applied to every mutually exclusive segment of an entire K-th population of observing points that was selected and retained in step (e), where the value of counter K is less than J, with the observed performance of the K-th current model when applied to the entire K-th population of observing points, where the value of counter K is equal to J, thereby determining the

## 17

observed performance when applied to the initial population of observing points that would result from choosing a value for J;

forming an increasing sequence of sets of possible choices for the value J in a range from 1 to the value of counter K and ending the sequence of sets with a set comprising all possible choices;

selecting, for each set of possible choices formed in the forming step, the value of J that optimizes observed performance for the set, as determined in the combining step;

deriving a reliable estimate bounding future performance with the value of J selected in the selecting step by applying statistical learning theory, for each set of possibilities formed in the forming step, the estimate being derived from parameters, wherein the parameters are selected from a group consisting of the observed performance with J, the number of possibilities in the set, and the number of observing points; and

selecting the value of J to optimize estimated performance as determined in the deriving step.

11. A computer implemented method of boosting of black box predictive models, called cascade boosting, for resolving an interpretability problem of previous boosting methods, said method comprising the steps:

(a) building an initial black box predictive model, the initial black box predictive model being built from an initial population of training data points;

(b) observing performance of a current model, which is initially the initial black box predictive model, when applied to each point in a current population of observing data points, which is initially either the initial population of training data points or a separate initial population of data points reserved for observing performance;

(c) classifying each point in the current population of observing data points as being in one of two classes, a first class for points where the current model performs well and a second class for points where the current model does not perform well;

(d) building a current auxiliary model, the auxiliary model being a segmented predictive model for classification into either the first or second class as specified in step (c), and built from the current population of observing data points, which may utilize either mutually exclusive segments, or intersecting segments;

(e) applying statistical learning theory to derive a reliable estimate bounding future performance of the current model on each segment, the estimate being derived for each segment from the observed performance together with a number of the observing data points falling within the segment;

(f) sorting the segments by the estimates;

(g) selecting and retaining a fraction of the segments, and also retaining each auxiliary model associated with selected segments, the selection resulting in retention of segments with better estimates;

(h) forming a subpopulation of training points by sampling from the current population of training points so as to exclude, either with certainty or with high probability, each point falling within selected and retained segments;

(i) forming a subpopulation of observing data points by sampling from the current population of observing data points so as to exclude, either with certainty or with

## 18

high probability, each point falling within the selected and retained segments;

(j) building another black box predictive model which becomes the current model, the current model being built from the subpopulation of training points;

(k) repeating steps (b) to (j) a desired number of times, with the subpopulation of training points as the current population of training points and with the subpopulation of observing data points as the current population of observing data points;

(l) arranging the selected and retained segments having better estimates in an open-ended decision list, where each item in the open-ended decision list specifies a test for membership in one of the selected and retained segments having better estimates and specifies that, if a point passes the membership test, then the prediction for the point is to be obtained by using the prediction of the black box predictive model retained in the same execution of step (g) that selected and retained the segment in the membership test as one of the segments having better estimates;

(m) terminating the open-ended decision list with one of the models built in step (a) or step (j) and resulting in a terminated decision list, thereby solving the problem of model interpretability.

12. A computer implemented method as recited in claim 11, wherein the step (b) of observing performance further comprises the step of observing performance of the current model when applied to the entire current population of observing points; and

wherein the step (f) of sorting further comprises the step of comparing the observed performance of the current model when applied to an entire current population of observing points, as determined in step (b) with the sorted estimates as derived in step (f) and continuing with step (l), if an estimate as derived in step (f) is not substantially better than observed performance.

13. A computer implemented method as recited in claim 12, wherein a counter K is initialized to a value of 1 in step (a) and incremented to K+1 in step (j) when a new predictive model is built so that the current model is called a K-th current model for each value of counter K, the arranging step (l) further comprising the steps:

selecting a value J in a range of 1 to the value of counter K;

discarding segments that were selected and retained in step (g) for the K-th current model, for all repetitions where K is greater than J;

discarding the K-th current model that was built in step (a) or (j), for all repetitions where K is not equal to J,

wherein the terminated decision list as generated in step (m) is terminated with the K-th current model, where K is equal to J, as selected in the selecting step, thereby choosing a number of repetitions from an adaptively determined range of possibilities.

14. A computer implemented method as recited in claim 12, wherein the number of repetitions J is chosen from an adaptively determined range of possibilities by optimizing observed performance when applied to an initial population of observing points and the step of selecting a value J in the arranging step (l) further comprises the steps:

combining, for each possible choice of values for J in a range of 1 to K, the observed performance of a K-th model when applied to every segment of a K-th population of observing points selected and retained in step

## 19

(g) as a segment with a better estimate, where the value of counter K is less than J, with the observed performance of the K-th model when applied to an entire K-th population of observing points, where the value of counter K is equal to J, thereby determining the observed performance when applied to the initial population of observing points that would result from choosing a value for J; and

choosing a value for J to optimize observed performance as determined in step (a), and choosing the number of repetitions J from an adaptively determined range of possibilities by optimizing observed performance when applied to the initial population of observing points.

15. A computer implemented method as recited in claim 12, wherein the number of repetitions J is chosen from an adaptively determined range of possibilities by optimizing a reliable statistical estimate bounding future performance, and the step of selecting a value J in the arranging step (l) further comprises the steps:

combining, for each possible choice for J in a range from 1 to the value of counter K as selected in step (l), the observed performance of the K-th current model when applied to every mutually exclusive segment of the entire K-th population of observing points that was selected and retained in step (g), where the value of counter K is less than J, with the observed performance

## 20

of a K-th current model when applied to an entire K-th population of observing points, where the value of counter K is equal to J, thereby determining the observed performance when applied to the initial population of observing points that would result from choosing a value for J;

forming an increasing sequence of sets of possible choices for the value J in a range from 1 to the value of counter K and ending the sequence of sets with a set comprising all possible choices;

selecting, for each set of possible choices formed in the forming step, the value of J that optimizes observed performance for the set, as determined in the combining step;

deriving a reliable estimate bounding future performance with the value of J selected in the selecting step by applying statistical learning theory, for each set of possibilities formed in the forming step, the estimate being derived from parameters, wherein the parameters are selected from a group consisting of the observed performance with J, a number of possibilities in the set, and the number of observing points; and

selecting the value of J to optimize estimated performance as determined in the deriving step.

* * * * *

## Claims

1. A method for providing an approximate solution **x***, **y*** to a minimax problem for a predetermined system having a plurality of possible configurations, wherein the minimax problem is representable by an *m* by *n* matrix **A** = [$a_{i,j}$], $1 \leq i \leq m$ and $1 \leq j \leq n$, wherein a duality gap for the matrix **A** is reduced, comprising:

accessing data representing the matrix **A** from a data store operatively communicating with one or more computer processors, wherein data representing the entries of **A** are representative of evaluations for the plurality of possible configurations;

storing in the data store data representing an initial candidate of **x** = ($x_1$, $x_2$, ... $x_n$) which is an approximation of **x***, and data representing an initial candidate **y** = ($y_1$, $y_2$, ..., $y_m$) which is an approximation of **y*** for reducing the duality gap;

repeating steps A through G following with data representing a previously determined candidate approximation **x** for **x***, and data representing a previously determined candidate approximation **y** for **y***;

A: first determining at least one estimate v for an equilibrium point of the minimax problem, the estimate being dependent upon the data representing each of **x**, **y**, and **A**;

B: first obtaining the data representing for x, data representing at least one adjustment $\Delta$**x** = ($\Delta x_1$ $\Delta x_2$, $\Delta x_3$, ..., $\Delta x_n$), wherein at least some $\Delta x_j$, $1 \leq j \leq n$, are dependent upon a difference between: a function dependent upon v, and a result that is dependent upon the data representing members of the matrix **A** and the data representing y;

C: second obtaining the data representing for y, data representing at least one adjustment $\Delta$**y** = ($\Delta y_1$, $\Delta y_2$, $\Delta y_3$ ..., $\Delta y_m$), wherein at least some $\Delta y_i$, $1 \leq i \leq m$, are dependent upon a difference between: a function dependent upon v, and a result that is dependent upon the data representing members of the matrix **A** and the data representing x;

D: second determining, using at least one of the computer processors, data representing an additional candidate approximation for **x*** as a combination of the data representing **x** and the data representing $\Delta$**x**;

E: third determining, using at least one of the computer processors, data representing an additional candidate approximation for **y*** as a combination of the data representing **y** and the data representing $\Delta$**y**;

F: updating the approximation of **x*** with the data representing the additional candidate approximation for **x\*** when a predetermined relationship holds between:

F-1: a result of a predetermined function dependent upon data representing **Ax**, and,
F-2: a result of a predetermined function dependent upon data representing a matrix product of: the data representing **A** and the data representing the additional candidate approximation for **x\***; and

**G**: updating the approximation of **y\*** with the additional candidate approximation for **y\*** when a predetermined relationship holds between:

G-1: a result of a predetermined function dependent upon data representing **y'A**, wherein **y'** is a transpose of **y**, and
G-2: a result of a predetermined function dependent upon data representing a matrix product of: the data representing the additional candidate approximation for **y\***, and the data representing **A**;

wherein after the repeating step, resulting values for **x\*** and **y\*** provide the approximate solution to the minimax problem represented by the data for the matrix A; and
using the resulting values for **x\*** and **y\*** are for determining one of the plurality of possible configurations.

2. The method of Claim 1, wherein the step of using the resulting values for **x\*** and **y\*** includes a step of providing, from at least one of the computer processors, the resulting values for **x\*** and **y\*** for use in at least one of:

i: configuring the predetermined system to which one or more of constraints apply by one of: allocating resources of the predetermined system to satisfy the constraints, arranging physical components of the system to satisfy the constraints,
ii: changing a computer display for representing the one possible configuration,
iii: configuring the predetermined system which includes a financial portfolio, wherein the system is configured according to a history of a plurality of investment possibilities for the portfolio,
iv: configuring the predetermined system which includes an expert system or decision support system, wherein at least one operational parameter of the expert system or decision support system is determined,
v: configuring the predetermined system which includes a machine learning technique, wherein at least one parameter for an ensemble classifier of the learning technique is determined, and
vi: configuring the predetermined system which includes a zero sum game.

3. The method of Claim 1, wherein the data representing $\Delta$**x** is dependent on at least one positive difference

$$\left(\sum_{i=1}^{m} a_{ij} \cdot y_j\right) - v$$ for 1≤j≤n, and the data representing $\Delta$**y** is dependent on at least one positive difference

$$v - \left(\sum_{j=1}^{n} a_{ij} \cdot x_j\right)$$ for 1≤i≤m.

4. The method of Claim 1, wherein a convex combination of the data representing each of **x** and $\Delta$**x** is obtained for determining the data representing the additional candidate approximation for x\*, wherein the convex combination includes data representing a result of (1-*d*)**x** + *d*$\Delta$**x** where *d* is dependent upon one of: data representing max **y'A** - min**Ax**, and 1/*t* where *t* represents a current number of iterations of the repeating step.

5. The method of Claim 1, wherein prior to a repetition of the first obtaining step, the data representing the additional candidate approximation for **x\*** is provided as the data representing **x**.

6. The method of Claim 1, wherein a convex combination of the data representing **y** and the data representing $\Delta$**y** is obtained for determining the data representing the additional candidate approximation for **y\***, wherein the convex combination includes data representing a result of (1- *d*)*y* + d$\Delta y$ where *d* is dependent upon one of: data representing max**y'A** - min**Ax**, and 1/*t* where *t* represents a current number of iterations of the repeating step.

7. The method of Claim 6, wherein prior to a repetition of the second obtaining step, a most recent instance of the data representing the additional candidate approximation for **y\*** is provided as the data representing **y**.

8. The method of Claim 1, wherein the first determining step includes estimating *v* in a manner that is dependent upon the data representing each of **x, A,** and **y.**

9. The method of Claim 1, wherein the second determining step D includes determining the data representing the additional candidate approximation for **x\*** by determining $(1 - \gamma + \rho) \cdot \mathbf{x} + (\gamma - \rho) \cdot \frac{\Delta \mathbf{x}}{\sum_{j=1}^{n} \Delta \dot{x}_j}$, and wherein the third determining step E includes determining the data representing the additional candidate approximation for **y\*** by determining $(1 - \gamma + \rho) \cdot \mathbf{y} + (\gamma - \rho) \cdot \frac{\Delta \mathbf{y}}{\sum_{j=1}^{n} \Delta y_j}$, where $p$ is dependent upon data representing a minimum of **Ax**, and **y** is dependent upon data representing a maximum of **y'A**.

10. The method of Claim 1, wherein the predetermined relationship of the updating step F includes determining whether data representing a minimum of **Ax** is greater than data representing **Az**, where **z** is determined from a prior instance of the data representing the additional candidate approximation for **x\***.

11. The method of Claim 1, wherein the predetermined relationship of the updating step G includes determining whether data representing a maximum of **y'A** is less than data representing **z'A**, where **z** is determined from a prior instance of the data representing the additional candidate approximation for **y\***.

12. The method of Claim 1, wherein prior to a repetition of the first obtaining step, a step of updating the data representing **x** to a convex combination of the data representing **x** and the data representing Δ**x** is performed.

13. The method of Claim 1, wherein prior to a repetition of the second obtaining step, a step of updating the data representing y to a convex combination of the data representing y, and the data representing Ay is performed.

14. The method of Claim 1, further including, prior to a repetition of the step A, a step of updating v, wherein the updating of $v$ is dependent upon: the data representing Ax, and the data representing **y'A** where **y'** is the transpose of **y**.

15. A system for providing an approximate solution **x\*, y\*** to a minimax problem for a predetermined system having a plurality of possible configurations, wherein the minimax problem is representable by an m by n matrix **A** = $[a_i,j]$, $1 \leq i \leq m$ and $1 \leq j \leq n$, wherein a duality gap for the matrix **A** is reduced, comprising:

means for accessing data representing the matrix **A** from a data store operatively communicating with one or more computer processors, wherein data representing the entries of **A** are representative of evaluations for the plurality of possible configurations;
means for storing in the data store data representing an initial candidate of **x** = $(x_1, x_2, ... x_n)$ which is an approximation of **x\***, and data representing an initial candidate **y** = $(y_1, y_2, ..., y_m)$ which is an approximation of **y\*** for reducing the duality gap;
means for repeating processes A through G following with data representing a previously determined candidate approximation **x** for **x\***, and data representing a previously determined candidate approximation **y** for **y\***;

**A**: first determining at least one estimate $v$ for an equilibrium point of the minimax problem, the estimate being dependent upon the data representing each of **x, y,** and **A**;
**B**: first obtaining the data representing for x, data representing at least one adjustment Δ**x** = $(\Delta x_1, \Delta x_2, \Delta x_3, ..., \Delta x_n)$, wherein at least some $\Delta x_j$, $1 \leq j \leq n$, are dependent upon a difference between: a function dependent upon $v$, and a result that is dependent upon the data representing members of the matrix **A** and the data representing **y**;
**C**: second obtaining the data representing for **y**, data representing at least one adjustment Δ**y** = $(\Delta y_1, \Delta y_2, \Delta y_3 ..., \Delta y_m)$, wherein at least some $\Delta y_i$, $1 \leq i \leq m$, are dependent upon a difference between: a function dependent upon $v$, and a result that is dependent upon the data representing members of the matrix **A** and the data representing **x**;
**D**: second determining, using at least one of the computer processors, data representing an additional candidate approximation for **x\*** as a combination of the data representing **x** and the data representing Ax;
**E**: third determining, using at least one of the computer processors, data representing an additional candidate approximation for **y\*** as a combination of the data representing y and the data representing Δ**y**;
**F**: updating the approximation of **x\*** with the data representing the additional candidate approximation for **x\*** when a predetermined relationship holds between:

F-1: a result of a predetermined function dependent upon data representing **Ax**, and,

F-2: a result of a predetermined function dependent upon data representing a matrix product of: the data representing **A** and the data representing the additional candidate approximation for **x***; and

**G:** updating the approximation of **y*** with the additional candidate approximation for **y*** when a predetermined relationship holds between:

G-1: a result of a predetermined function dependent upon data representing **y'A,** wherein **y'** is a transpose of **y**, and

G-2: a result of a predetermined function dependent upon data representing a matrix product of: the data representing the additional candidate approximation for **y***, and the data representing **A**;

wherein after the repeating step, resulting values for **x*** and **y*** provide the approximate solution to the minimax problem represented by the data for the matrix A; and

means for using the resulting values for **x*** and **y*** are for determining one of the plurality of possible configurations.

Fig. 1

Fig. 2

304

START

OBTAIN INPUTS FOR A PREDETERMINED PROCESS WHEREIN THE INPUTS ARE EVALUATIONS REPRESENTATIVE OF OUTCOMES OF THE PROCESS SUCH THAT EACH EVALUATION CAN REPRESENTED AS AN ENTRY IN A MATRIX $A = [a_{i,j}], 1 \leq i \leq m$ AND $1 \leq j \leq n$ WHEREIN:

1. EACH ROW **R** OF **A** IS REPRESENTATIVE OF A CONDITION $C_R$ FOR THE PROCESS THAT IS DISTINCT FROM ALL OTHER ROWS OF **A**;
2. FOR EACH ROW **R** OF **A**, EACH ENTRY IN THE ROW REPRESENTS AN EVALUATION OF A CONFIGURATION OF THE PROCESS, AND FOR EACH SUCH ENTRY, THE CONDITION $C_R$ OCCURS FOR THE PROCESS CONFIGURATIONS WHOSE EVALUATIONS ARE IN THE ROW **R**;
3. EACH COLUMN **C** OF **A** IS REPRESENTATIVE OF A CONDITION $C_C$ FOR THE PROCESS THAT IS DISTINCT FROM ALL OTHER COLUMNS OF **A**;
4. FOR EACH COLUMN **C** OF **A**, EACH ENTRY IN THE COLUMN REPRESENTS AN EVALUATION OF A CONFIGURATION OF THE PROCESS, AND FOR EACH SUCH ENTRY, THE CORRESPONDING CONDITION $C_C$ OCCURS FOR THE PROCESS CONFIGURATIONS WHOSE EVALUATIONS ARE IN THE COLUMN **C**;
5. IT IS DESIRABLE TO OBTAIN A MINIMAX SOLUTION, I.E., TWO VECTORS OF POSITIVE WEIGHTS $\mathbf{x^*}, \mathbf{y^*}$ WHOSE MEMBERS SUM TO ONE SUCH THAT:
$$\max(\mathbf{y^*})'\mathbf{A} = (\mathbf{y^*})'\mathbf{A}\mathbf{x^*} = \min \mathbf{A}\mathbf{x^*}.$$

306

SCALE MATRIX ELEMENTS SO THAT $0 \leq a_{i,j} \leq 1$ FOR ALL $1 \leq i \leq m, 1 \leq j \leq n$.

308

PERFORM BLUEBIT ALGORITHM FOR DETERMINING APPROXIMATIONS TO $\mathbf{x^*}, \mathbf{y^*}$ WHEREIN $v^* = (\mathbf{y^*})'\mathbf{A}\mathbf{x^*}$.

312

OUTPUT APPROXIMATIONS FOR AT LEAST ONE OF $\mathbf{x^*}, \mathbf{y^*}$ FOR AT LEAST ONE OF CONTROLLING THE PROCESS, CONFIGURING THE PROCESS, PREDICTING A PERFORMANCE OF THE PROCESS, AND/OR SIMULATING THE PROCESS.

END

Fig. 3

START

**404** OBTAIN INPUTS FOR A PREDETERMINED PROCESS WHEREIN THE INPUTS DEFINE A LINEAR PROGRAMMING PROBLEM (**LP**), E.G., FOR CONTROLLING A PROCESS, CONFIGURING A PROCESS, PREDICTING A PERFORMANCE OF A PROCESS, AND/OR SIMULATING A PROCESS, WHEREIN THE LINEAR PROGRAMMING PROBLEM CAN BE REPRESENTED AS FOLLOWS:

$$\text{minimize} \quad \mathbf{c'x}$$
$$\text{subject to} \quad \mathbf{Ax} \geq \mathbf{b}$$

WHERE $\mathbf{A}$ IS A $m \times n$ MATRIX, $\mathbf{c}$, $\mathbf{x}$ ARE $n$-DIMENSIONAL VECTORS (i.e., $\mathbf{c} = (c_1, c_2, \ldots, c_n)$ AND $\mathbf{x} = (x_1, x_2, \ldots x_n)$), $\mathbf{b}$, $\mathbf{y}$ are $m$-DIMENTIONAL VECTORS (i.e., $\mathbf{b} = (b_1, b_2, \ldots, b_m)$ AND $\mathbf{y} = (y_1, y_2, \ldots y_m)$), WHEREIN $\mathbf{b}$, $\mathbf{c} > \mathbf{0}$.

**408** TRANSFORM THE LINEAR PROGRAMMING PROBLEM **LP** INTO A MINIMAX PROBLEM DEFINED BY THE MATRIX $\mathbf{A_0} = \mathbf{BAC}$ WHERE

$\mathbf{B}$ IS THE $m \times m$ DIAGONAL MATRIX:

$$\mathbf{B} = \begin{vmatrix} 1/b_1 & & & \\ & 1/b_2 & & \\ & & \ddots & \\ & & & 1/b_m \end{vmatrix}$$

AND $\mathbf{C}$ IS THE $n \times n$ DIAGONAL MATRIX:

$$\mathbf{C} = \begin{vmatrix} 1/c_1 & & & \\ & 1/c_2 & & \\ & & \ddots & \\ & & & 1/c_n \end{vmatrix}$$

**412** PERFORM A MINIMAX SOLVING ALGORITHM (E.G., THE BLUEBIT ALGORITHM) TO DETERMINE A SOLUTION $\mathbf{x^*}$, $\mathbf{y^*}$ TO THE MINIMAX PROBLEM DEFINED BY THE

**416** CONVERT THE MINIMAX SOLUTION INTO A SOLUTION $\mathbf{x}$ TO THE **LP** PROBLEM AND $\mathbf{y}$ IS A SOLUTION TO THE DUAL **LP** PROBLEM AS FOLLOWS:

$$\mathbf{x} = \mathbf{x^*}\mathbf{C}/v^*$$
$$\mathbf{y} = \mathbf{y^*}\mathbf{B}/v^*$$

WHERE

$$v^* = (\mathbf{y^*})'\mathbf{A_0}\mathbf{x^*}$$

**420** OUTPUT APPROXIMATIONS FOR AT LEAST ONE OF $\mathbf{x}, \mathbf{y}$ FOR AT LEAST ONE OF CONTROLLING THE PROCESS, CONFIGURING THE PROCESS (E.G., OPTIMIZING), PREDICTING A PERFORMANCE OF THE PROCESS, AND/OR SIMULATING THE

# Fig. 4

END

Fig. 5

Fig. 6

Fig. 7

Fig. 8

Fig. 9

**Fig. 10**

INPUT DEVICE — 401

402 — MEMORY 403

CPU 404

OUTPUT DEVICE — 401

**Fig. 11**

SELECT A TYPE OF LEARNING MACHINE — 501

RECEIVE INPUT PATTERNS — 502

RETRIEVE TRAINING PATTERNS — 503

DERIVE WEIGHTED SUM OF ONE OR MORE SELECTED ASSOCIATIONS BETWEEN THE INPUT PATTERNS AND THE TRAINING PATTERNS — 504

DETERMINE DECISION FUNCTION BY IDENTIFYING WEIGHING PARAMETERS FOR WEIGHTED SUM — 505

CLASSIFY THE INPUT PATTERNS — 506

Fig. 12

Start

Input Set of Training Examples, A Prescribed Maximum Number of Weak Classifiers, A Cost Function Capable of Measuring the Overall Cost and A Maximum Cost. — 202

Compute A Set of Weak Classifiers, Each Classifier Being Associated to a Particular Feature of the Training Examples. — 204

Determine the Most Significant Classifier of the Set of Weak Classifiers. — 206

C

Add the Most Significant Classifier to A Set of Optimal Weak Classifiers. — 208

Determine Which of the Current Set of Optimal Weak Classifiers is the Least Significant Classifier. — 210

A

**Fig. 13**

Compute the Overall Cost for the Current Set of Optimal Weak Classifiers Using the Cost Function. — 212

Conditionally Remove the Least Significant Classifier from the Current Set of Optimal Weak Classifiers. — 214

Compute the Overall Cost for the Current Set of Optimal Weak Classifiers Less the Least Significant Classifier Using the Cost Function. — 216

Determine Whether the Removal of The Least Significant Classifier Results in a Lower Overall Cost. — 218

Does Removal of Least Significant Classifier Result in Lower Overall Cost? — 220

Recompute Each Remaining Classifier in the Set of Optimal Classifiers that was Introduced After the Eliminated Classifier. — 224

Eliminate the Least Significant Classifier. — 222

Yes

No

A

B

Fig. 14

199

```
                              ( B )
                                │
                                │
                                ▼
        ┌─────────────────────────────────────────┐
        │  Reinstate the Last Identified Least Significant  │──── 226
        │  Classifier to the Set of Optimal Weak Classifiers.  │
        └─────────────────────────────────────────┘
                                │
                                ▼
        ┌─────────────────────────────────────────┐
        │  Determine if the Number of Weak Classifiers in the  │
        │  Current Set of Optimal Weak Classifiers Equals the  │
        │  Prescribed Maximum Number of Weak Classifiers or  │──── 228
        │  the Last Computed Overall Cost for the Current Set  │
        │  of Optimal Weak Classifiers Exceeds the Acceptable  │
        │                Maximum Cost.                │
        └─────────────────────────────────────────┘
                                │
                                ▼
                          230
                    ◇─────────────────◇
          No. of Weak                         No
    Classifiers in Set Equals Max No. or Last ────────( C )
        Overall Cost Exceeds Acceptable
               Maximum Cost?
                    ◇─────────────────◇
                                │
                               Yes
                                │
                                ▼
        ┌─────────────────────────────────────────┐
        │  Output the Sum of the Individual Weak Classifiers as  │──── 232
        │            the Trained Strong Classifier.          │
        └─────────────────────────────────────────┘
                                │
                                ▼
                          (  End  )
```

## Fig. 15

Fig. 16

Fig. 17

Fig. 18

Fig. 19

Fig. 20

Fig. 21

Fig. 22A

Fig. 22B

Fig. 22C

Fig. 23A

Fig. 23B

Fig. 23C

Fig. 23D

Fig. 24A

Fig. 24B

Fig. 25A

Fig. 25B

Fig. 25C

Fig. 25D

Fig. 26A

Fig. 26B

Fig. 26C

Fig. 26D

Fig. 27A

Fig. 27B

Fig. 27C

Fig. 28

Fig. 29A

Fig. 29B

Fig. 30A

Fig. 30B

Magnetic Stimulation constraint

Current constraints

Safe operation area

Fig. 31

Voltage constraints

Time

**EP 2 071 473 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5649068 A
- US 20070104222 A
- US 20050192865 A
- US 5325445 A
- US 6510746 B
- US 6546379 B
- US 7099505 B
- US 20070053563 A
- US 20030110147 A
- US 6714893 B
- US 7305641 B
- US 7301615 B
- US 7301341 B

**Non-patent literature cited in the description**

- **S. Ramesh ; I. Rhee ; K. Guo.** Multicast with Cache (Mcache): An Adaptive Zero-DelayVideo-on-Demand Service. *IEEE Transactions on Circuits and Systems for Video Technology,* 2001, vol. 11, 440-456
- **B. Li ; J. Liu.** Multirate Video Multicast Over the Internet: An Overview. *IEEE Network,* 2003, vol. 24-29
- **K. A. Hua ; M. A. Tantaoui ; W. Tavanapong.** Video Delivery Technologies for Large- Scale Deployment of Multimedia Applications. *Proceedings of the IEEE,* September 2004, vol. 92, 14391451
- **H. Luss.** On Equitable Resource Allocation Problems: A Lexicographic Minimax approach. *Operations Research,* 1999, vol. 47, 361-378
- **L. M. Betts ; J. R. Brown ; H. Luss.** Minimax Resource Allocation for Problems with Ordering Constraints. *Naval Research Logistics,* 1994, vol. 41, 719-738
- **R. S. Klein ; H. Luss ; D. R. Smith.** A Lexicographic Minimax Algorithm for Multiperiod Resource Allocation. *Mathematical Programming,* vol. 55, 213-234
- **H. Luss.** On Equitable Resource Allocation Problems: A Lexicographic Minimax Approach. *Operations Research,* 1999, vol. 47, 361-378
- Quantitative Methods for Business. Quantitative Methods for Business. West Publishing Company, 1995

211